(19) Europäisches Patentamt
European Patent Office
Office européen des brevets

(11) EP 3 604 481 B1

(12) **EUROPEAN PATENT SPECIFICATION**

(45) Date of publication and mention of the grant of the patent:
**26.05.2021 Bulletin 2021/21**

(21) Application number: **19188757.9**

(22) Date of filing: **29.07.2019**

(51) Int Cl.:
*C09K 19/32* (2006.01) *C09K 19/30* (2006.01)
*C09K 19/04* (2006.01) *C09K 19/34* (2006.01)
*C09K 19/12* (2006.01)

# (54) LIQUID-CRYSTAL MEDIUM

FLÜSSIGKRISTALLMEDIUM

SUPPORT À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2018 EP 18186498**

(43) Date of publication of application:
**05.02.2020 Bulletin 2020/06**

(73) Proprietor: **Merck Patent GmbH**
**64293 Darmstadt (DE)**

(72) Inventors:
- **Park, Hye-Ryung**
**SUWON-SI, GYEONGGI-DO 16564 (KR)**
- **Jeong, Ji-Won**
**GIMPO-SI, GYEONGGI-DO 10073 (KR)**
- **Lee, Eun-Kyu**
**PYEONGTAEK-SI, GYEONGGI-DO, 17931 (KR)**
- **Park, Jin-Soon**
**SUWON-SI, GYEONGGI-DO 16700 (KR)**

(56) References cited:
**EP-A1- 2 937 401** **WO-A1-2016/146245**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 604 481 B1

Printed by Jouve, 75001 PARIS (FR)

## Description

The present invention relates to a liquid crystal (LC) medium comprising a polymerisable compound, to a process for its preparation, to its use for optical, electro-optical and electronic purposes, in particular in LC displays, especially in an LC display of the polymer sustained alignment (PSA) type, and to an LC display, especially a PSA display, comprising it.

Background of the Invention

A liquid crystal display mode which has meanwhile found widespread interest and commercial use is the so-called PS ("polymer sustained") or PSA ("polymer sustained alignment") mode, for which the term "polymer stabilised" is also occasionally used. In PSA displays an LC medium is used that contains an LC mixture (hereinafter also referred to as "host mixture") and a small amount, typically < 1% by weight, for example 0.2 to 0.4% by weight, of one or more polymerisable compounds, preferably polymerisable monomeric compounds. After filling the LC medium into the display, the polymerisable compounds are polymerised or crosslinked in situ, usually by UV photopolymerisation, optionally while a voltage is applied to the electrodes of the display. The polymerisation is carried out at a temperature where the LC medium exhibits a liquid crystal phase, usually at room temperature. The addition of polymerisable mesogenic or liquid-crystalline compounds, also known as reactive mesogens or "RMs", to the LC host mixture has proven particularly suitable.

The PS(A) mode is meanwhile used in various conventional LC display types. Thus, for example, PS-VA ("vertically aligned"), PS-OCB ("optically compensated bend"), PS-IPS ("in-plane switching"), PS-FFS ("fringe-field switching"), PS-UB-FFS ("Ultra Brightness FFS) and PS-TN ("twisted nematic") displays are known. The polymerisation of the RMs preferably takes place with an applied voltage in the case of PS-VA and PS-OCB displays, and with or without, preferably without, an applied voltage in the case of PS-IPS displays. As a result a pretilt angle of the LC molecules is generated in the display cell. In case of PS-OCB displays, for example, it is possible for the bend structure to be stabilised so that an offset voltage is unnecessary or can be reduced. In case of PS-VA displays, the pretilt has a positive effect on the response times. For PS-VA displays, a standard MVA ("multidomain VA") or PVA ("patterned VA") pixel and electrode layout can be used. It is also possible to use only one structured electrode without protrusions, which significantly simplifies production and improves contrast and transparency.

Furthermore, the so-called posi-VA mode ("positive VA") has proven to be particularly suitable. Like in conventional VA and PS-VA displays, the initial orientation of the LC molecules in posi-VA displays is homeotropic, i.e. substantially perpendicular to the substrates, in the initial state when no voltage is applied. However, in contrast to conventional VA and PS-VA displays, in posi-VA displays LC media with positive dielectric anisotropy are used. Like in IPS and PS-IPS displays, the two electrodes in posi-VA displays are arranged only on one of the two substrates, and preferably exhibit intermeshed, comb-shaped (interdigital) structures. Upon application of a voltage to the interdigital electrodes, which create an electrical field that is substantially parallel to the layer of the LC medium, the LC molecules are switched to an orientation substantially parallel to the substrates. In posi-VA displays, a polymer stabilisation by addition of RMs to the LC medium, which are then polymerised in the display, has also proven to be advantageous. Thereby a significant reduction of the switching times can be achieved.

PS-VA displays are described for example in EP1170626 A2, US6861107, US7169449, US2004/0191428A1, US2006/0066793A1 and US2006/0103804A1. PS-OCB displays are described for example in T.-J-Chen et al., Jpn. J. Appl. Phys. 45, 2006, 2702-2704 and S. H. Kim, L.-C-Chien, Jpn. J. Appl. Phys. 43, 2004, 7643-7647. PS-IPS displays are described for example in US 6177972 and Appl. Phys. Lett. 1999, 75(21), 3264. PS-TN displays are described for example in Optics Express 2004, 12(7), 1221.

PSA displays can be operated as either active-matrix or passive-matrix displays. In case of active-matrix displays individual pixels are usually addressed by integrated, non-linear active elements like for example transistors (such as thin-film transistors or "TFTs"), whereas in passive-matrix displays individual pixels are usually addressed by the multiplex method as known from prior art.

A PSA display may also comprise an alignment layer on one or both of the substrates forming the display cell. The alignment layer is usually applied on the electrodes (in case such electrodes are present) such that it is in contact with the LC medium and induces initial alignment of the LC molecules. The alignment layer may comprise or consist of, for example, a polyimide, which may also be rubbed or prepared by a photoalignment method.

In particular for monitor and especially TV applications optimisation of the response times, but also of the contrast and luminance (and thus transmission) of the LC display is still desired. The PSA method can provide significant advantages here. Especially in case of PS-VA, PS-IPS, PS-FFS and PS-posi-VA displays, a shortening of the response times, which correlate with a measurable pretilt in test cells, can be achieved without significant adverse effects on other parameters.

Prior art has suggested biphenyl diacrylates or dimethacrylates, which are optionally fluorinated, as RMs for use in PSA displays

However, the problem arises that not all combinations of LC host mixture and RM(s) are suitable for use in PSA displays because, for example, only inadequate tilt angles or no tilt angles at all could be generated or because, for example, the voltage holding ratio (VHR) is inadequate for TFT display applications. In addition, it has been found that the LC mixtures and RMs known from prior art still have some disadvantages when used in PSA displays. Thus, not every known RM which is soluble in the LC host mixture is suitable for use in PSA displays. In addition, it is often difficult to find a suitable selection criterion for the RM besides direct measurement of the pretilt in the PSA display. The choice of suitable RMs becomes even smaller if UV photopolymerisation without the addition of photoinitiators is desired, which is advantageous for certain applications.

In addition, the selected combination of LC host mixture/RM should have a low rotational viscosity and good electrical properties, in particular a high VHR. In PSA displays, a high VHR after irradiation with UV light is particularly important, because UV exposure does not only occur as normal exposure during operation of the finished display, but is also a necessary part of the display production process.

In particular, it is desirable to have available improved materials for PSA displays which produce a particularly small pretilt angle. Preferred materials are those which, compared to prior art materials, can generate a lower pretilt angle after the same exposure time, and/or can generate at least the same pretilt angle after a shorter exposure time. This would allow to reduce the display production time ("tact time") and production costs.

A further problem in the production of PSA displays is the presence and removal of residual amounts of unpolymerised RMs after the polymerisation step that is necessary for generation of the pretilt angle in the display. Unreacted RMs may adversely affect the properties of the display, for example by polymerising in an uncontrolled manner during display operation.

Thus, the PSA displays known from prior art often exhibit the undesired effect of so-called "image sticking" or "image burn", i.e. the image produced in the LC display by temporary addressing of individual pixels still remains visible even after the electric field in these pixels has been switched off, or after other pixels have been addressed.

Image sticking can occur for example if LC host mixtures having a low VHR are used. The UV component of daylight or the display backlight can cause undesired decomposition reactions of the LC molecules and initiate the production of ionic or free-radical impurities. These can accumulate in particular at the electrodes or the alignment layers, where they reduce the effective applied voltage. This effect can also be observed in conventional LC displays without a polymer component.

An additional image sticking effect caused by the presence of unpolymerised RMs is often observed in PSA displays. Uncontrolled polymerisation of the residual RMs is initiated by UV light from the environment or the backlight. In the switched display areas, this changes the tilt angle after a number of addressing cycles. As a result, a change in transmission in the switched areas may occur, while it remains unchanged in the unswitched areas.

During production of the PSA display it is therefore desirable that polymerisation of the RMs proceeds as completely as possible and the presence of unpolymerised RMs in the display can be excluded or reduced to a minimum. Thus, RMs and LC host mixtures are required which enable or support quick and complete polymerisation of the RMs. In addition, a controlled reaction of the residual RM amounts is desirable. This could be achieved by providing improved RMs that polymerise quicker and more effectively than the RMs of prior art.

A further problem that has been observed in the operation of PSA displays is the stability of the pretilt angle. Thus, it was observed that the pretilt angle, which is generated during display manufacture by polymerising the RMs, does not remain constant but can deteriorate after the display was subjected to voltage stress during display operation. This can negatively affect the display performance, e.g. by increasing the black state transmission and hence lowering the contrast.

Another problem to be solved is that the RMs of prior art do often have high melting points, and do only show limited solubility in many commonly used LC mixtures. As a result the RMs tend to spontaneously crystallise out of the LC mixture. In addition, the risk of spontaneous polymerisation prevents that the LC host mixture can be warmed in order to better dissolve the RMs, so that a high solubility even at room temperature is required. In addition, there is a risk of phase separation, for example when filling the LC medium into the LC display (chromatography effect), which may greatly impair the homogeneity of the display. This is further aggravated by the fact that the LC media are usually filled in the display at low temperatures in order to reduce the risk of spontaneous polymerisation (see above), which in turn has an adverse effect on the solubility.

Another problem observed in prior art is that the use of conventional LC media in LC displays, including but not limited to displays of the PSA type, often leads to the occurrence of mura in the display, especially when the LC medium is filled in the display by using the one drop filling (ODF) method. This phenomenon is also known as "ODF mura". It is therefore desirable to provide LC media which lead to reduced ODF mura.

Another problem observed in prior art is that LC media for use in PSA displays, including but not limited to displays of the PSA type, do often exhibit high viscosities and, as a consequence, high switching times. In order to reduce the viscosity and response time of the LC medium, it has been suggested in prior art to add LC compounds with an alkenyl group. However, it was observed that LC media containing alkenyl compounds often show a decrease of the

reliability and stability, and a decrease of the VHR especially after exposure to UV radiation. Especially for use in PSA displays this is a considerable disadvantage, because the photo-polymerisation of the RMs in the PSA display is usually carried out by exposure to UV radiation, which may cause a VHR drop in the LC medium.

It is also desirable, especially for use in high resolution devices like 8K and 4K TV sets, to have available PSA displays and LC media with a fast response time and a low rotational viscosity.

It is therefore another problem to provide LC mixtures and LC media for PSA displays which show a reduced viscosity, good reliability and high VHR, while at the same time enabling quick and complete polymerisation of the RMs and a quick and strong pretilt generation.

There is thus still a great demand for PSA displays and LC media and polymerisable compounds for use in such displays, which do not show the drawbacks as described above, or only do so to a small extent, and have improved properties.

In particular, there is a great demand for PSA displays, and LC mixtures and RMs for use in such PSA displays, which enable a high specific resistance at the same time as a large working-temperature range, short response times, even at low temperatures, a low threshold voltage, a low pretilt angle, a multiplicity of grey shades, high contrast and a broad viewing angle, high reliability and high values of the VHR after UV exposure, and, in case of the RMs, have low melting points and a high solubility in the LC host mixture. In PSA displays for mobile applications, it is especially desired to have available LC media that show low threshold voltage and high birefringence.

The invention is based on the object of providing novel suitable materials, in particular RMs, LC host mixtures, and LC media comprising the same, for use in PSA displays, which do not have the disadvantages indicated above or do so to a reduced extent.

In particular, the invention is based on the object of providing LC media for use in PSA displays, which enable very high specific resistance values, high VHR values, high reliability, low threshold voltages, short response times, high birefringence, show good UV absorption especially at longer wavelengths, allow quick and complete polymerisation of the RMs contained therein, allow the generation of a low pretilt angle as quickly as possible, enable a high stability of the pretilt even after longer time and/or after UV exposure, reduce or prevent the occurrence of image sticking in the display, and reduce or prevent the occurrence of ODF mura in the display.

Another object of the invention is to solve the problem of providing LC mixtures and LC media for PSA displays which show a reduced viscosity and a high VHR while enabling quick and complete polymerisation of the RMs and a quick and strong pretilt generation.

The above objects have been achieved in accordance with the present invention by materials and processes as described and claimed in the present application.

It has surprisingly been found that at least some of the above-mentioned problems can be solved by using an LC medium comprising a polymerisable component and an LC host mixture containing compounds of formula CLY and a small amount of compounds of formula B as disclosed and claimed hereinafter.

Thus it was found that, when using an LC medium as disclosed and claimed hereinafter in PSA displays, it is possible to lower the viscosity of the LC host mixture while still maintaining high VHR, high UV absorption which is needed for quick and complete polymerisation, and a strong tilt angle generation.

The use of LC media according to the present invention facilitates a quick and complete UV-photopolymerisation reaction in particular at low UV energy and/or longer UV wavelengths in the range from 300-380nm and especially above 340nm, which are considerable advantages for the display manufacturing process. Besides, the use of LC media according to the present invention allows a fast generation of large and stable pretilt angles, reduces image sticking and ODF mura in the display, leads to a high VHR value after UV photopolymerisation, and enables to achieve fast response times, a low threshold voltage and a high birefringence.

EP 3284803 A1 discloses LC media for use in PSA displays which contain compounds of formula B. WO 2016/146245 A1 discloses LC media for use in VA displays which contain compounds of formula B. However, these documents do not disclose LC media or PSA displays as described and claimed hereinafter.

## Summary of the Invention

The invention relates to a liquid crystal (LC) medium, as in claim 1 and defined below, comprising

- a polymerisable component A) comprising, preferably consisting of, one or more polymerisable compounds selected from formula I, and

- a liquid-crystalline component B), hereinafter also referred to as "LC host mixture", comprising, preferably consisting of, one or more mesogenic or liquid-crystalline compounds,

wherein component B) comprises one or more compounds of formula B1 and one or more compounds of formula CLY1

as defined in claim 1 and below, and wherein the proportion of compounds of formula B1 in component B) of the LC medium is from >0 to <5% by weight, and the proportion of compounds of formula CLY1 in component B) of the LC medium is from 0.1 to 3% by weight.

Also disclosed herein are compounds of formula B and compounds of formula CLY

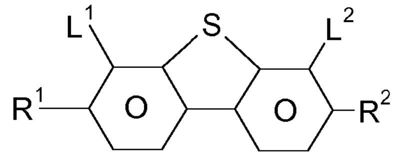

B

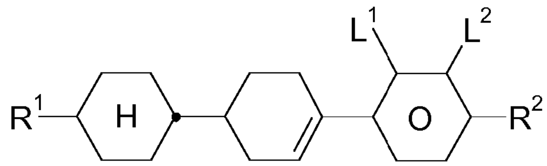

CLY

in which the individual radicals, on each occurrence identically or differently, and each, independently of one another, have the following meaning:

$R^1$, $R^2$ alkyl, alkoxy, oxaalkyl or alkoxyalkyl having 1 to 9 C atoms or alkenyl or alkenyloxy having 2 to 9 C atoms, all of which are optionally fluorinated,

$L^1$, $L^2$ F or Cl, preferably F.

The liquid-crystalline component B) of an LC medium according to the present invention is hereinafter also referred to as "LC host mixture", and preferably contains only LC compounds that are selected from low-molecular-weight compounds which are unpolymerisable, like those of formula B1 and CLY1, and optionally contains additives like polymerisation initiators, inhibitors etc.

The invention furthermore relates to an LC medium or LC display as described above and below, wherein the polymerisable compounds of component A) are polymerised.

The invention furthermore relates to a process for preparing an LC medium as described above and below, comprising the steps of mixing one or more compounds of formula B1 and one or more compounds of formula CLY1, or an LC host mixture or LC component B) as described above and below, with one or more poylmerisable compounds, and optionally with further LC compounds and/or additives.

The invention further relates to the use of LC medium in LC displays, especially in PSA displays.

The invention furthermore relates to the use of LC medium according to the invention in PSA displays, in particular the use in PSA displays containing an LC medium, for the production of a tilt angle in the LC medium by in-situ polymerisation of the polymerisable compound(s) of component B) in the PSA display, preferably in an electric or magnetic field.

The invention furthermore relates to an LC display comprising one or more compounds of formula I or an LC medium according to the invention, which is preferably a PSA display, very preferably a PS-VA, PS-IPS or PS-UB-FFS display.

The invention furthermore relates to an LC display comprising a polymer obtainable by polymerisation of one or more compounds of formula I or of a polymerisable component A) as described above, or comprising an LC medium according to the invention, which is preferably a PSA display, very preferably a PS-VA, PS-IPS or PS-UB-FFS display The invention furthermore relates to an LC display of the PSA type comprising two substrates, at least one which is transparent to light, an electrode provided on each substrate or two electrodes provided on only one of the substrates, and located between the substrates a layer of an LC medium that comprises one or more polymerisable compounds and an LC component as described above and below, wherein the polymerisable compounds are polymerised between the substrates of the display.

The invention furthermore relates to a process for manufacturing an LC display as described above and below, comprising the steps of filling or otherwise providing an LC medium, which comprises one or more polymerisable compounds as described above and below, between the substrates of the display, and polymerising the polymerisable compounds.

The PSA displays according to the invention have two electrodes, preferably in the form of transparent layers, which are applied to one or both of the substrates. In some displays, for example in PS-VA displays, one electrode is applied to each of the two substrates. In other displays, for example in PS-IPS or PS-UB-FFS displays, both electrodes

are applied to only one of the two substrates.

In a preferred embodiment the polymerisable component is polymerised in the LC display while a voltage is applied to the electrodes of the display.

The polymerisable compounds of the polymerisable compoment are preferably polymerised by photo-polymerisation, very preferably by UV photo-polymerisation.

Detailed Description of the Invention

Unless stated otherwise, the polymerisable compounds are preferably selected from achiral compounds.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "tilt" and "tilt angle" will be understood to mean a tilted alignment of the LC molecules of an LC medium relative to the surfaces of the cell in an LC display (here preferably a PSA display). The tilt angle here denotes the average angle (< 90°) between the longitudinal molecular axes of the LC molecules (LC director) and the surface of the plane-parallel outer plates which form the LC cell. A low value for the tilt angle (i.e. a large deviation from the 90° angle) corresponds to a large tilt here. A suitable method for measurement of the tilt angle is given in the examples. Unless indicated otherwise, tilt angle values disclosed above and below relate to this measurement method.

As used herein, the terms "reactive mesogen" and "RM" will be understood to mean a compound containing a mesogenic or liquid crystalline skeleton, and one or more functional groups attached thereto which are suitable for polymerisation and are also referred to as "polymerisable group" or "P".

Unless stated otherwise, the term "polymerisable compound" as used herein will be understood to mean a polymerisable monomeric compound.

As used herein, the term "low-molecular-weight compound" will be understood to mean to a compound that is monomeric and/or is not prepared by a polymerisation reaction, as opposed to a "polymeric compound" or a "polymer".

As used herein, the term "unpolymerisable compound" will be understood to mean a compound that does not contain a functional group that is suitable for polymerisation under the conditions usually applied for the polymerisation of the RMs.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerisable group(s) in a polymerisable mesogenic compound.

Above and below,

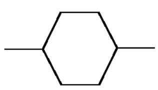, 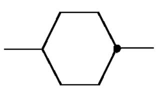, 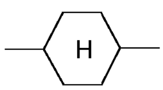 and 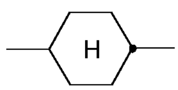

denote a trans-1,4-cyclohexylene ring, and

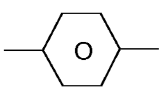 and 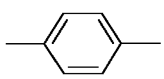

denote a 1,4-phenylene ring.

Above and below "organic group" denotes a carbon or hydrocarbon group.

"Carbon group" denotes a mono- or polyvalent organic group containing at least one carbon atom, where this either contains no further atoms (such as, for example, -C≡C-) or optionally contains one or more further atoms, such

as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, Cl, Br or I.

-CO-, -C(=O)- and -C(O)- denote a carbonyl group, i.e.

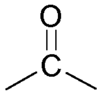

.

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms, preferably selected from N, O, S, Se, Te, Si and Ge.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are $C_1$-$C_{20}$ alkyl, $C_2$-$C_{20}$ alkenyl, $C_2$-$C_{20}$ alkynyl, $C_3$-$C_{20}$ allyl, $C_4$-$C_{20}$ alkyldienyl, $C_4$-$C_{20}$ polyenyl, $C_6$-C20 cycloalkyl, C4-C15 cycloalkenyl, $C_6$-$C_{30}$ aryl, $C_6$-$C_{30}$alkylaryl, $C_6$-$C_{30}$ arylalkyl, $C_6$-$C_{30}$ alkylaryloxy, $C_6$-$C_{30}$ arylalkyloxy, $C_2$-$C_{30}$ heteroaryl, $C_2$-$C_{30}$ heteroaryloxy.

Particular preference is given to $C_1$-$C_{12}$ alkyl, $C_2$-$C_{12}$ alkenyl, $C_2$-$C_{12}$ alkynyl, C6-C25 aryl and $C_2$-$C_{25}$ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, Cl, Br, I or CN and in which one or more non-adjacent $CH_2$ groups may each be replaced, independently of one another, by -C($R^x$)=C($R^x$)-, -C≡C-, -N($R^x$)-, -O-, -S-, - CO-, -CO-O-, -O-CO-, -O-CO-O- in such a way that O and/or S atoms are not linked directly to one another.

$R^x$ preferably denotes H, F, Cl, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or Cl, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

Aryl and heteroaryl groups can be monocyclic or polycyclic, i.e. they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene,

pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups.

The aryl and heteroaryl groups mentioned above and below may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent $CH_2$ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, hereinafter also referred to as "L", are F, Cl, Br, I, -CN, $-NO_2$, -NCO, -NCS, -OCN, -SCN, $-C(=O)N(R^x)_2$, $-C(=O)Y^1$, $-C(=O)R^x$, $-N(R^x)_2$, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or Cl, optionally substituted silyl having 1 to 20 Si atoms, or optionally substituted aryl having 6 to 25, preferably 6 to 15, C atoms,

wherein $R^x$ denotes H, F, Cl, CN, or straight chain, branched or cyclic alkyl having 1 to 25 C atoms, wherein one or more non-adjacent $CH_2$-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F, Cl, P- or P-Sp-, and

$Y^1$ denotes halogen.

"Substituted silyl or aryl" preferably means substituted by halogen, -CN, $R^0$, $-OR^0$, $-CO-R^0$, $-CO-O-R^0$, $-O-CO-R^0$ or $-O-CO-O-R^0$, wherein $R^0$ denotes H or alkyl with 1 to 20 C atoms.

Particularly preferred substituents L are, for example, F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, furthermore phenyl.

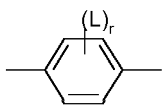

is preferably

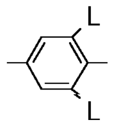 , 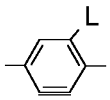 , 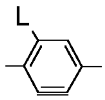 or 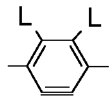 ,

in which L has one of the meanings indicated above.

A polymerisable group P is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P are selected from the group consisting of $CH_2=CW^1-COO-$, $CH_2=CW^1-CO-$,

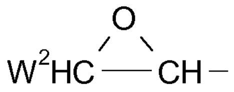 , 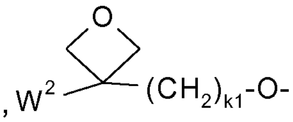 , 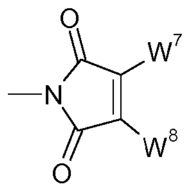 ,

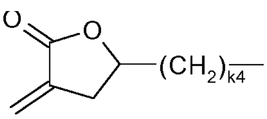 ,

$CH_2=CW^2-(O)_{k3}-$, $CW^1=CH-CO-(O)_{k3}-$, $CW^1=CH-CO-NH-$, $CH_2=CW^1-CO-NH-$, $CH_3-CH=CH-O-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $HO-CW^2W^3-$, HS-CW$^2$\N$^3$-, $HW^2N-$, $HO-CW^2W^3-NH-$, $CH_2=CW^1-CO-NH-$, $CH_2=CH-(COO)_{k1}-Phe-(O)_{k2}-$, $CH_2=CH-(CO)_{k1}-Phe-(O)_{k2}-$, Phe-CH=CH-, HOOC-, OCN- and $W^4W^5W^6Si-$, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each, independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, which is optionally substituted by one or more radicals L as defined above which are other than P-Sp-, $k_1$, $k_2$ and $k_3$ each, independently of one another, denote 0 or 1, $k_3$ preferably denotes 1, and $k_4$ denotes an integer from 1 to 10.

Further groups P are selected from the group consisting of $CH_2=CW^1-CO-O-$, $CH_2=CW^1-CO-$,

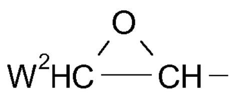 , 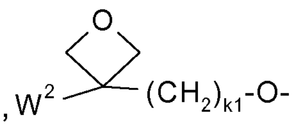 , 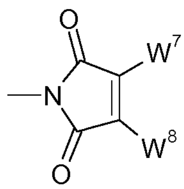 ,

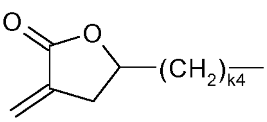 ,

$CH_2=CW^2-O-$, $CH_2=CW^2-$, $CW^1=CH-CO-(O)_{k3}-$, $CW^1=CH-CO-NH-$, $CH_2=CW^1-CO-NH-$, $(CH_2=CH)_2CH-OCO-$, $(CH_2=CH-CH_2)_2CH-OCO-$, $(CH_2=CH)_2CH-O-$, $(CH_2=CH-CH_2)_2N-$, $(CH_2=CH-CH_2)_2N-CO-$, $CH_2=CW^1-CO-NH-$, $CH_2=CH-(COO)_{k1}-Phe-(O)_{k2}-$, CH$_2$=CH-(CO)k1-Phe-(O)k2-, Phe-CH=CH- and $W^4W^5W^6Si-$, in which $W^1$ denotes H, F, Cl, CN, $CF_3$, phenyl or alkyl having 1 to 5 C atoms, in particular H, F, Cl or $CH_3$, $W^2$ and $W^3$ each, independently of one another, denote H or alkyl having 1 to 5 C atoms, in particular H, methyl, ethyl or n-propyl, $W^4$, $W^5$ and $W^6$ each,

independently of one another, denote Cl, oxaalkyl or oxacarbonylalkyl having 1 to 5 C atoms, $W^7$ and $W^8$ each, independently of one another, denote H, Cl or alkyl having 1 to 5 C atoms, Phe denotes 1,4-phenylene, $k_1$, $k_2$ and $k_3$ each, independently of one another, denote 0 or 1, $k_3$ preferably denotes 1, and $k_4$ denotes an integer from 1 to 10.

Other groups P are selected from the group consisting of $CH_2$=$CW^1$-CO-O-, in particular $CH_2$=CH-CO-O-, $CH_2$=C($CH_3$)-CO-O- and $CH_2$=CF-CO-O-, furthermore $CH_2$=CH-O-, ($CH_2$=CH)$_2$CH-O-CO-, ($CH_2$=CH)$_2$CH-O-,

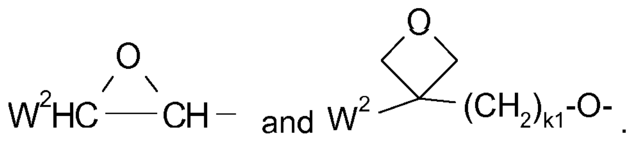

According to the invention, polymerisable groups P are selected from the group consisting of vinyloxy, acrylate, methacrylate, fluoroacrylate, chloroacrylate, oxetane and epoxide, most preferably from acrylate and methacrylate.

If Sp is different from a single bond, it is preferably of the formula Sp"-X", so that the respective radical P-Sp-conforms to the formula P-Sp"-X"-, wherein

Sp" denotes alkylene having 1 to 20, preferably 1 to 12, C atoms, which is optionally mono- or polysubstituted by F, Cl, Br, I or CN and in which, in addition, one or more non-adjacent $CH_2$ groups may each be replaced, independently of one another, by -O-, -S-, -NH-, -N($R^0$)-, -Si($R^0R^{00}$)-, - CO-, -CO-O-, -O-CO-, -O-CO-O-, -S-CO-, -CO-S-, -N($R^{00}$)-CO-O-, -O-CO-N($R^0$)-, -N($R^0$)-CO-N($R^{00}$-, -CH=CH- or -C=C- in such a way that O and/or S atoms are not linked directly to one another,

X" denotes -O-, -S-, -CO-, -CO-O-, -O-CO-, -O-CO-O-, -CO-N($R^0$)-, -N($R^0$)-CO-, -N($R^0$)-CO-N($R^{00}$)-, -$OCH_2$-, -$CH_2O$-, -$SCH_2$-, -$CH_2S$-, -$CF_2O$-,-$OCF_2$-, -$CF_2S$-, -$SCF_2$-, -$CF_2CH_2$-, -$CH_2CF_2$-, -$CF_2CF_2$-, -CH=N-,-N=CH-, -N=N-, -CH=CR°-, -$CY^2$=$CY^3$-, -C≡C-, -CH=CH-CO-O-, -O-CO-CH=CH- or a single bond,

$R^0$ and $R^{00}$ each, independently of one another, denote H or alkyl having 1 to 20 C atoms, and

$Y^2$ and $Y^3$ each, independently of one another, denote H, F, Cl or CN.

X" is preferably -O-, -S-, -CO-, -COO-, -OCO-, -O-COO-, -CO-N$R^0$-, -N$R^0$-CO-, -N$R^0$-CO-N$R^{00}$- or a single bond.

Typical spacer groups Sp and -Sp"-X"- are, for example, -($CH_2$)$_{p1}$-, -($CH_2CH_2O$)$_{q1}$-$CH_2CH_2$-, -$CH_2CH_2$-S-$CH_2CH_2$-, -$CH_2CH_2$-NH-$CH_2CH_2$-or -(Si$R^0R^{00}$-O)$_{p1}$-, in which p1 is an integer from 1 to 12, q1 is an integer from 1 to 3, and $R^0$ and $R^{00}$ have the meanings indicated above.

Particularly preferred groups Sp and -Sp"-X"- are -($CH_2$)$_{p1}$-, -($CH_2$)$_{p1}$-O-, -($CH_2$)$_{p1}$-O-CO-, -($CH_2$)$_{p1}$-CO-O-, -($CH_2$)$_{p1}$-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methylimino-ethylene, 1-methylalkylene, ethenylene, propenylene and butenylene.

The compounds of formula B1

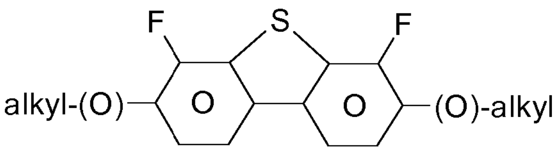

B1

wherein alkyl denotes a straight-chain alkyl radical having 1-6 C atoms, and (O) denotes an oxygen atom or a single bond. Very preferred are compounds of formula B1 wherein both groups (O) denote an oxygen atom and alkyl is methyl, ethyl, propyl, butyl, pentyl or hexyl, which are preferably straight-chained. Very preferably one alkyl is ethyl and the other is n-pentyl.

The proportion of the compounds of formula B, or B1 respectively, in component B) of the LC medium is from >0 to ≤5%, preferably from 0.05 to 5%, very preferably from 0.1 to 4%, more preferably from 0.1 to <4%, most preferably from 0.5 to 3.5%, by weight.

Preferably the LC medium contains 1, 2 or 3 compounds of formula B or B1.

Preferably the LC medium does not contain a compound of formula BO

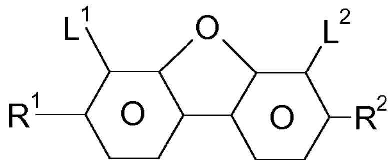

BO

wherein $R^1$, $R^2$, $L^1$ and $L^2$ are as defined above and below.

Preferred compounds of formula CLY are those wherein $L^1$ and $L^2$ are F.

Further preferred compounds of formula CLY are those wherein $R^1$ is $(O)C_vH_{2v+1}$, wherein (O) is an O atom or a single bond and v is 1, 2, 3, 4, 5 or 6.

The compounds of formula CLY are preferably selected from the following subformulae

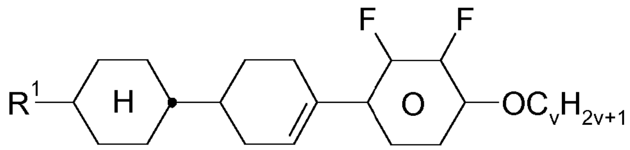

CLY1

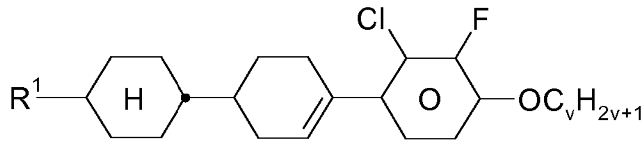

CLY2

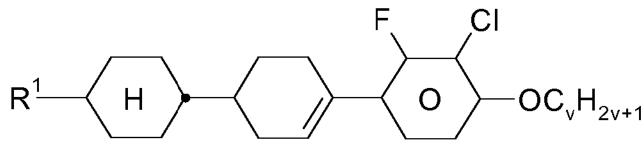

CLY3

wherein $R^1$ and v have the meanings given above or one of their preferred meanings given above and below, and $R^1$ is preferably ethyl, n-propyl or n-butyl.

Especially preferred are compounds of formula CLY1, in particular those wherein $R^1$ is n-propyl and v is 2.

The proportion of the compounds of formula CLY1 in component B) of the LC medium is from 0.1 to 3% by weight. Preferably the proportion of further compounds of formula CLY in component B) of the LC medium is from >0 to ≤10%, more preferably from 0.05 to 5%, very preferably from 0.1 to 3%, most preferably from 0.1 to 1.5%, by weight.

Preferably the LC medium contains 1 to 5, preferably 1 or 2 compounds of formula CLY.

In the LC medium according to the present invention, the use of an LC host mixture comprising compounds of formula B and CLY together with the use of a polymerisable component comprising preferably direactive and/or trireactive RMs, leads to advantageous properties in PSA displays. In particular, one or more of the following advantages could be achieved:

- good UV absorption also at longer wavelengths,
- quick and complete polymerisation of the RMs,
- quick generation of a low pretilt angle, especially already at low UV energy and/or at longer UV wavelengths,
- high UV absorption,
- increased UV stability,
- high pretilt angle stability after UV exposure,
- reduced image sticking,
- reduced ODF mura,
- high reliability and high VHR value after UV exposure and/or heat treatment,
- high birefringence,
- reduced rotational viscosity
- faster response times.

In particular the combination of a low amount of a compound of formula B with, preferably a low amount of, a compound of formula CLY leads to LC media with high VHR values after UV exposure and low rotational viscosity, thus

enabling PSA displays with high reliability and fast response times.

Moreover, the LC medium according to the present invention shows high absorption at longer UV wavelengths, and thus enables using longer UV wavelengths for polymerisation, which is advantageous for the display manufacturing process.

The polymerisable compounds are selected from formula I

$$R^a\text{-}B^1\text{-}(Z^b\text{-}B^2)_m\text{-}R^b \qquad \text{I}$$

in which the individual radicals, on each occurrence identically or differently, and each, independently of one another, have the following meaning:

$R^a$ and $R^b$ P, P-Sp-, H, F, Cl, Br, I, -CN, $-NO_2$, -NCO, -NCS, -OCN, -SCN, $SF_5$ or straight-chain or branched alkyl having 1 to 25 C atoms, in which, in addition, one or more non-adjacent $CH_2$ groups may each be replaced, independently of one another, by $-C(R^0)=C(R^{00})-$, -C≡C-, $-N(R^{00)}-$, -O-, -S-, -CO-, -CO-O-, -O-CO-, -O-CO-O- in such a way that O and/or S atoms are not linked directly to one another, and in which, in addition, one or more H atoms may be replaced by F, Cl, Br, I, CN, P or P-Sp-, where, if $B^1$ and/or $B^2$ contain a saturated C atom, $R^a$ and/or $R^b$ may also denote a radical which is spiro-linked to this saturated C atom,

wherein at least one of the radicals $R^a$ and $R^b$ denotes or contains a group P or P-Sp-,
a polymerisable group selected from the group consisting of vinyloxy, acrylate, methacrylate, fluoroacrylate, chloroacrylate, oxetane and epoxide,

Sp a spacer group or a single bond,

$B^1$ and $B^2$ an aromatic, heteroaromatic, alicyclic or heterocyclic group having 4 to 25 ring atoms, which may also contain fused rings, and which is unsubstituted, or mono- or polysubstituted by L,

$Z^b$ -O-, -S-, -CO-, -CO-O-, -OCO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -C≡C-, -CH=CH-COO-, -OCO-CH=CH-, $CR^0R^{00}$ or a single bond,

$R^0$ and $R^{00}$ each, independently of one another, denote H or alkyl having 1 to 12 C atoms,

m denotes 0, 1, 2, 3 or 4,

n1 denotes 1, 2, 3 or 4,

L P, P-Sp-, OH, $CH_2OH$, F, Cl, Br, I, -CN, $-NO_2$,--NCO, -NCS,-OCN, -SCN, $-C(=O)N(R^x)_2$, $-C(=O)Y^1$, $-C(=O)R^x$, $-N(R^x)_2$, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F, Cl, P or P-Sp-,

P and Sp have the meanings indicated above,

$Y^1$ denotes halogen,

$R^x$ denotes P, P-Sp-, H, halogen, straight-chain, branched or cyclic alkyl having 1 to 25 C atoms, in which, in addition, one or more non-adjacent $CH_2$ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms.

Preferred compounds of the formula I are those in which $B^1$ and $B^2$ each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups

in these groups may be replaced by N, cyclohexane-1,4-diyl, in which, in addition, one or more non-adjacent $CH_2$ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Particularly preferred compounds of the formula I are those in which $B^1$ and $B^2$ each, independently of one another, denote 1,4-phenylene, 1,3-phenylene, naphthalene-1,4-diyl or naphthalene-2,6-diyl.

Very preferred compounds of formula I are selected from the following formulae:

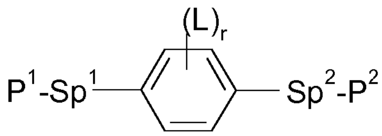

M1

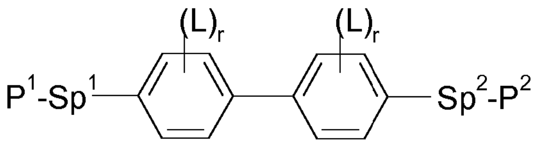

M2

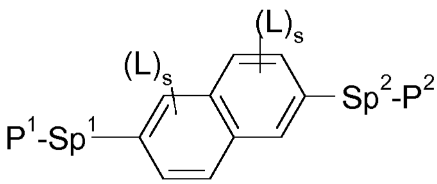

M3

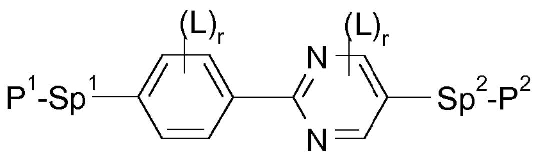

M4

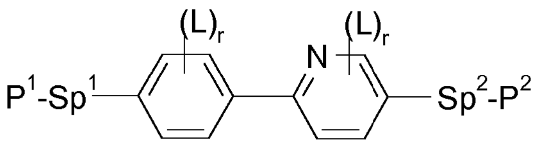

M5

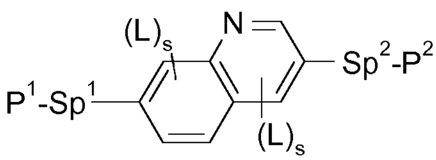

M6

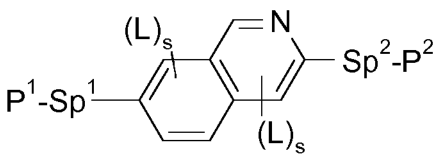

M7

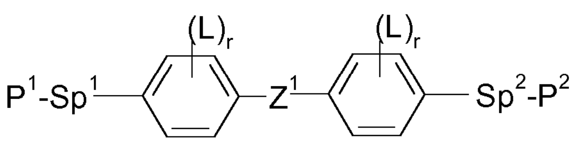

M8

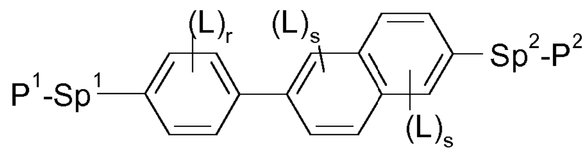

M9

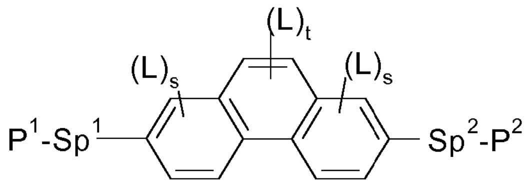

M10

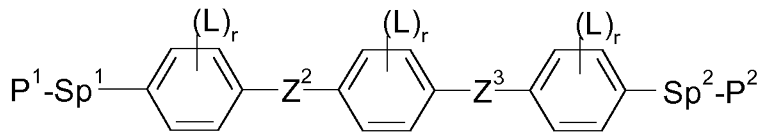

M11

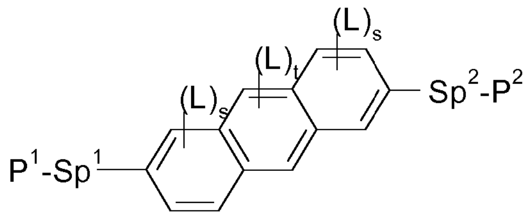

M12

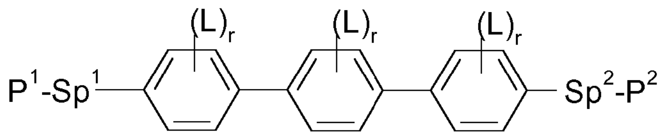

M13

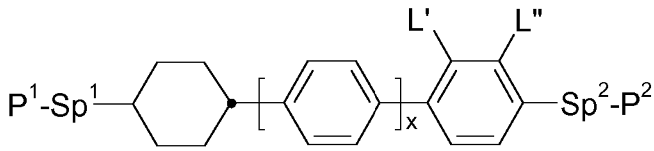

M14

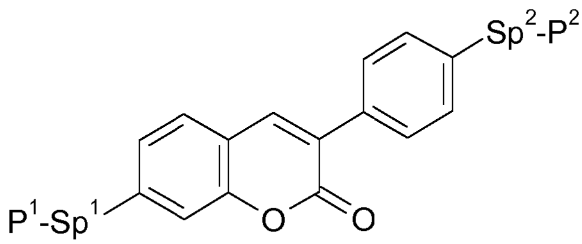

M15

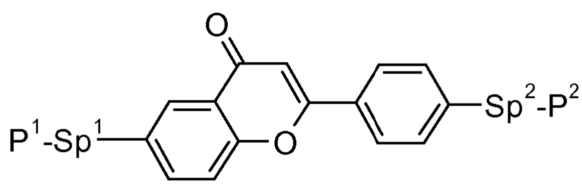

M16

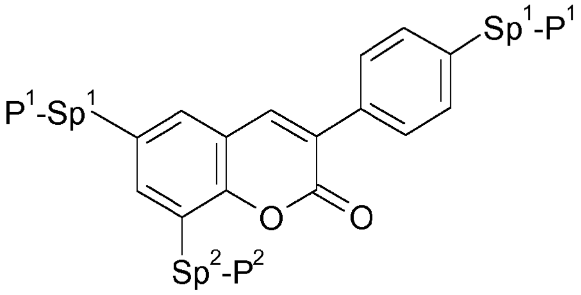

M17

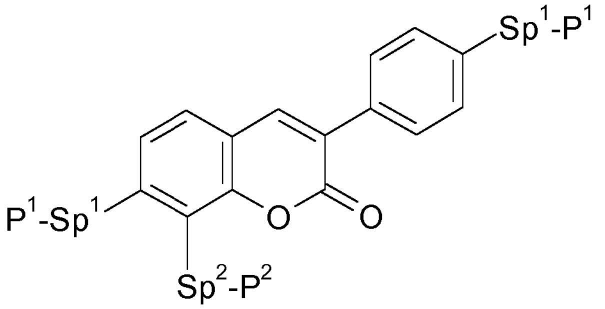

M18

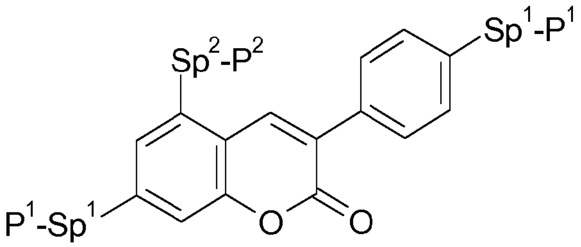

M19

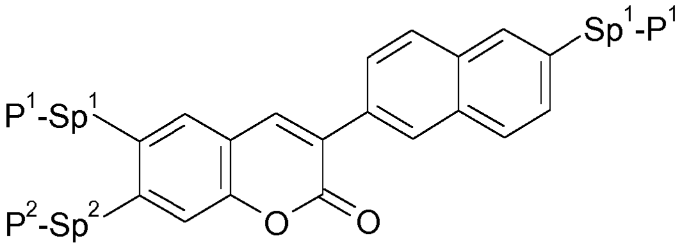

M20

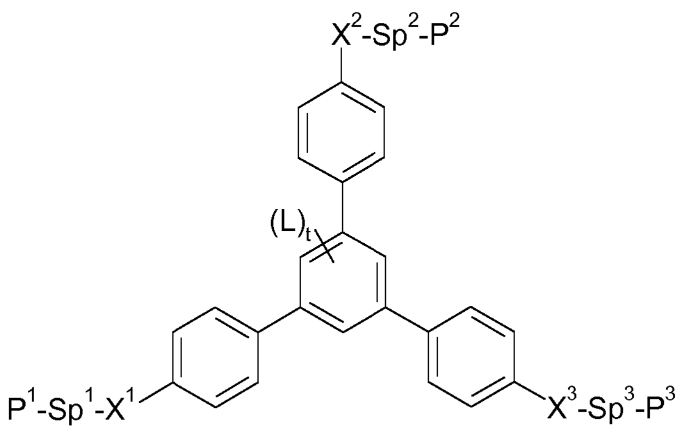

M21

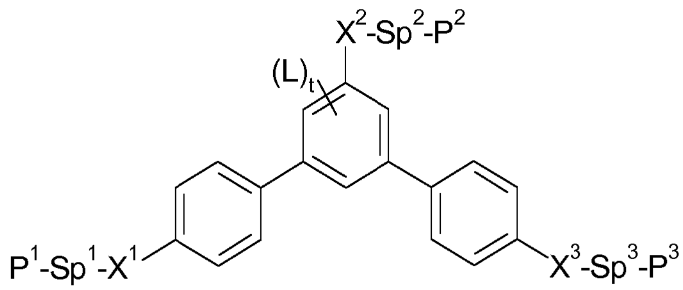

M22

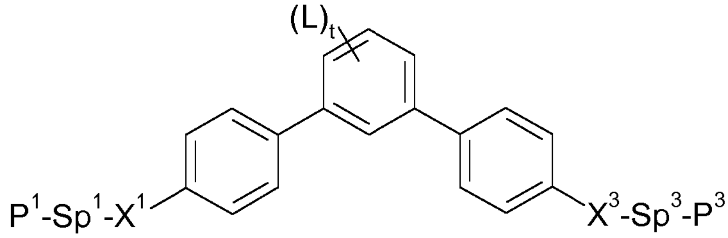

M23

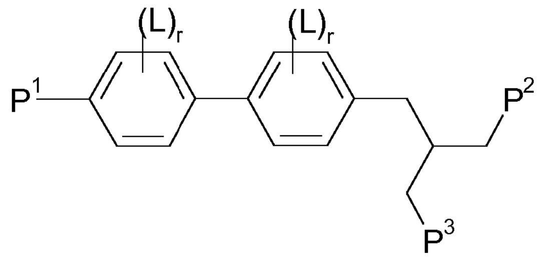

M24

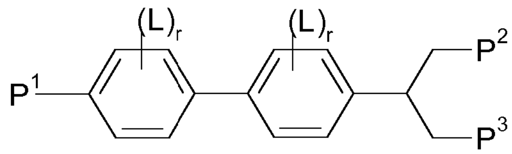

M25

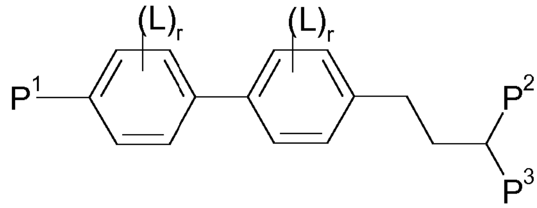

M26

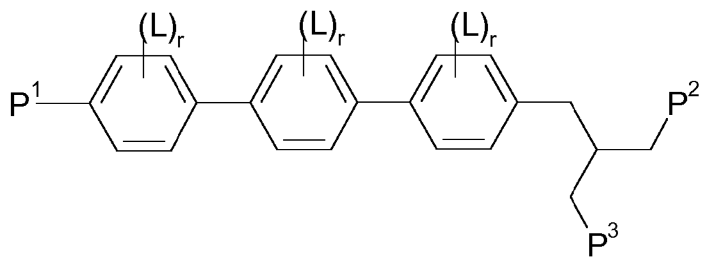

M27

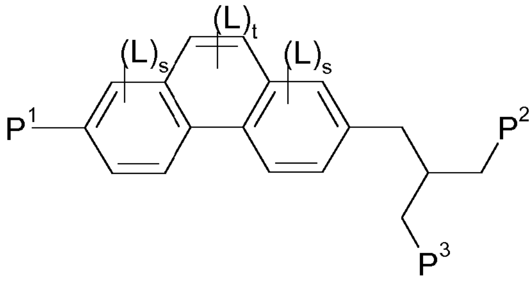

M28

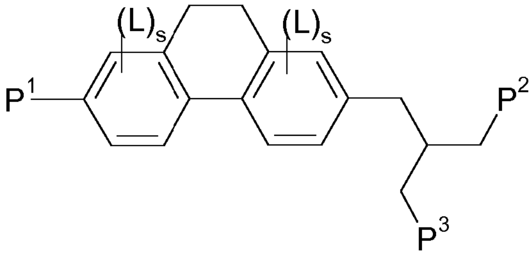

M29

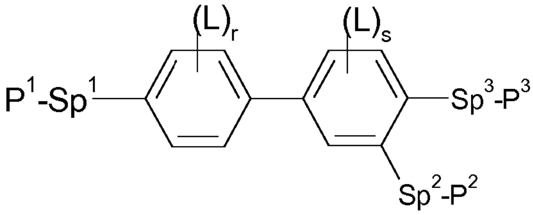

M30

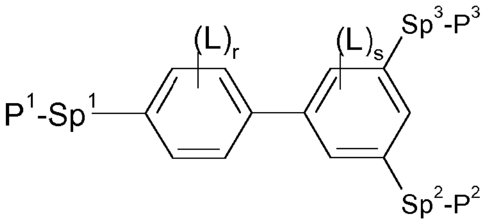

M31

in which the individual radicals, on each occurrence identically or differently, and each, independently of one another, have the following meaning:

$P^1$, $P^2$, $P^3$ a vinyloxy, acrylate, methacrylate, fluoroacrylate, chloroacrylate, oxetane or epoxy group,

$Sp^1$, $Sp^2$, $Sp^3$ a single bond or a spacer group where, in addition, one or more of the radicals $P^1$-$Sp^1$-, $P^1$-$Sp^2$- and $P^3$-$Sp^3$- may denote $R^{aa}$, with the proviso that at least one of the radicals $P^1$-$Sp^1$-, $P^2$-$Sp^2$ and $P^3$-$Sp^3$- present is different from $R^{aa}$,

$R^{aa}$ H, F, Cl, CN or straight-chain or branched alkyl having 1 to 25 C atoms, in which, in addition, one or more non-adjacent $CH_2$ groups may each be replaced, independently of one another, by $C(R^0)=C(R^{00})$-, -C≡C-, -$N(R^0)$-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or $P^1$-$Sp^1$-, particularly preferably straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms (where the alkenyl and alkynyl radicals have at least two C atoms and the branched radicals have at least three C atoms),

$R^0$, $R^{00}$ H or alkyl having 1 to 12 C atoms,

$R^y$ and $R^z$ H, F, $CH_3$ or $CF_3$,

| | |
|---|---|
| $X^1$, $X^2$, $X^3$ | -CO-O-, -O-CO- or a single bond, |
| $Z^1$ | -O-, -CO-, -C($R^yR^z$)- or -$CF_2CF_2$-, |
| $Z^2$, $Z^3$ | -CO-O-, -O-CO-, -$CH_2O$-, -$OCH_2$-, -$CF_2O$-, -$OCF_2$- or -$(CH_2)_n$-, where n is 2, 3 or 4, |
| L | F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms, |
| L', L" | H, For Cl, |
| r | 0, 1, 2, 3 or 4, |
| s | 0, 1, 2 or 3, |
| t | 0, 1 or 2, |
| x | 0 or 1. |

Very preferred are compounds of formulae M2 and M13, especially direactive compounds containing exactly two polymerizable groups $P^1$ and $P^2$.

Further preferred are compounds M15 to M31, in particular M17, M18, M19, M22, M23, M24, M25, M26, M30 and M31, especially trireactive compounds containing exactly three polymerizable groups $P^1$, $P^2$ and/or $P^3$.

In the compounds of formulae M1 to M31 the group

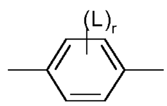

is preferably

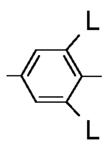 , 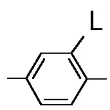 , 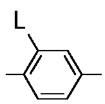 ,

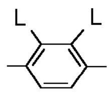 , 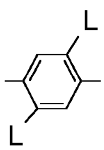 or 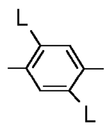 ,

wherein L on each occurrence, identically or differently, has one of the meanings given above or below, and is preferably F, Cl, CN, $NO_2$, $CH_3$, $C_2H_5$, $C(CH_3)_3$, $CH(CH_3)_2$, $CH_2CH(CH_3)C_2H_5$, $OCH_3$, $OC_2H_5$, $COCH_3$, $COC_2H_5$, $COOCH_3$, $COOC_{2H5}$, $CF_3$, $OCF_3$, $OCHF_2$, $OC2F_5$ or P-Sp-, very preferably F, Cl, CN, $CH_3$, $C_2H_5$, $OCH_3$, $COCH_3$, $OCF_3$ or P-Sp-, more preferably F, Cl, $CH_3$, $OCH_3$, $COCH_3$ oder $OCF_3$, especially F or $CH_3$.

Preferred compounds of formulae M1 to M30 are those wherein $P^1$, $P^2$ and $P^3$ denote an acrylate, methacrylate, oxetane or epoxy group, very preferably an acrylate or methacrylate group.

Further preferred compounds of formulae M1 to M31 are those wherein $Sp^1$, $Sp^2$ and $Sp^3$ are a single bond.

Further preferred compounds of formulae M1 to M31 are those wherein one of $Sp^1$, $Sp^2$ and $Sp^3$ is a single bond and another one of $Sp^1$, $Sp^2$ and $Sp^3$ is different from a single bond.

Further preferred compounds of formulae M1 to M31 are those wherein those groups $Sp^1$, $Sp^2$ and $Sp^3$ that are different from a single bond denote - $(CH_2)_{s1}$-X"-, wherein s1 is an integer from 1 to 6, preferably 2, 3, 4 or 5, and X" is X" is the linkage to the benzene ring and is -O-, -O-CO-, -CO-O, -O-COO- or a single bond.

Particular preference is given to LC media comprising one, two or three polymerisable compounds of formula I.

Preferably the proportion of compounds of formula I in the LC medium is from 0.01 to 5%, very preferably from

0.05 to 1%, most preferably from 0.1 to 0.5%.

It was observed that, the combination of polymerisable compounds of formulae M1 to M31 with the compounds of formula B and CLY leads to advantageous behaviour of the LC medium, where a quick and complete polymerisation, the quick generation of a low pretilt angle which is stable after UV exposure, at the same time a high reliability and high VHR value after UV exposure can be achieved together with a high birefringence. Besides, the LC medium shows high absorption at longer UV wavelengths, so that it is possible to use such longer UV wavelengths for polymerisation, which is advantageous for the display manufacturing process.

For the production of PSA displays, the polymerisable compounds contained in the LC medium are polymerised or crosslinked (if one compound contains two or more polymerisable groups) by in-situ polymerisation in the LC medium between the substrates of the LC display, optionally while a voltage is applied to the electrodes.

The structure of the PSA displays according to the invention corresponds to the usual geometry for PSA displays, as described in the prior art cited at the outset. Geometries without protrusions are preferred, in particular those in which, in addition, the electrode on the colour filter side is unstructured and only the electrode on the TFT side has slots. Particularly suitable and preferred electrode structures for PS-VA displays are described, for example, in US 2006/0066793 A1.

A preferred PSA type LC display of the present invention comprises:

- a first substrate including a pixel electrode defining pixel areas, the pixel electrode being connected to a switching element disposed in each pixel area and optionally including a micro-slit pattern, and optionally a first alignment layer disposed on the pixel electrode,

- a second substrate including a common electrode layer, which may be disposed on the entire portion of the second substrate facing the first substrate, and optionally a second alignment layer,

- an LC layer disposed between the first and second substrates and including an LC medium comprising a polymerisable component A and a liquid crystal component B as described above and below, wherein the polymerisable component A may also be polymerised.

The first and/or second alignment layer controls the alignment direction of the LC molecules of the LC layer. For example, in PS-VA displays the alignment layer is selected such that it imparts to the LC molecules homeotropic (or vertical) alignment (i.e. perpendicular to the surface) or tilted alignment. Such an alignment layer may for example comprise a polyimide, which may also be rubbed, or may be prepared by a photoalignment method.

The LC layer with the LC medium can be deposited between the substrates of the display by methods that are conventionally used by display manufacturers, for example the so-called one-drop-filling (ODF) method. The polymerisable component of the LC medium is then polymerised for example by UV photopolymerisation. The polymerisation can be carried out in one step or in two or more steps.

The PSA display may comprise further elements, like a colour filter, a black matrix, a passivation layer, optical retardation layers, transistor elements for addressing the individual pixels, etc., all of which are well known to the person skilled in the art and can be employed without inventive skill.

The electrode structure can be designed by the skilled person depending on the individual display type. For example for PS-VA displays a multi-domain orientation of the LC molecules can be induced by providing electrodes having slits and/or bumps or protrusions in order to create two, four or more different tilt alignment directions.

Upon polymerisation the polymerisable compounds form a crosslinked polymer, which causes a certain pretilt of the LC molecules in the LC medium. Without wishing to be bound to a specific theory, it is believed that at least a part of the crosslinked polymer, which is formed by the polymerisable compounds, will phase-separate or precipitate from the LC medium and form a polymer layer on the substrates or electrodes, or the alignment layer provided thereon. Microscopic measurement data (like SEM and AFM) have confirmed that at least a part of the formed polymer accumulates at the LC/substrate interface.

The polymerisation can be carried out in one step. It is also possible firstly to carry out the polymerisation, optionally while applying a voltage, in a first step in order to produce a pretilt angle, and subsequently, in a second polymerisation step without an applied voltage, to polymerise or crosslink the compounds which have not reacted in the first step ("end curing").

Suitable and preferred polymerisation methods are, for example, thermal or photopolymerisation, preferably photopolymerisation, in particular UV induced photopolymerisation, which can be achieved by exposure of the polymerisable compounds to UV radiation.

Optionally one or more polymerisation initiators are added to the LC medium. Suitable conditions for the polymerisation and suitable types and amounts of initiators are known to the person skilled in the art and are described in the literature. Suitable for free-radical polymerisation are, for example, the commercially available photoinitiators

Irgacure651®, Irgacure184®, Irgacure907®, Irgacure369® or Darocure11730 (Ciba AG). If a polymerisation initiator is employed, its proportion is preferably 0.001 to 5% by weight, particularly preferably 0.001 to 1% by weight.

The polymerisable compounds according to the invention are also suitable for polymerisation without an initiator, which is accompanied by considerable advantages, such, for example, lower material costs and in particular less contamination of the LC medium by possible residual amounts of the initiator or degradation products thereof. The polymerisation can thus also be carried out without the addition of an initiator. In a preferred embodiment, the LC medium thus does not contain a polymerisation initiator.

The LC medium may also comprise one or more stabilisers in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers from the Irganox® series (Ciba AG), such as, for example, Irganox® 1076. If stabilisers are employed, their proportion is preferably 10-500,000 ppm, more preferably 50-5,000 ppm, very preferably 50-1,000 ppm. Preferably the LC medium contains one or more stabilisers selected from Table C below, very preferably the compound S1, at a concentration of 0.0005 to 0.05%, more preferably 0.001 to 0.01%, most preferably 0.002 to 0.006 % by weight.

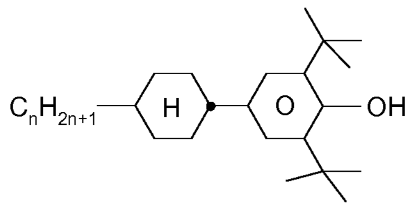

S1

n=3

The polymerisable compounds of formula I do in particular show good UV absorption in, and are therefore especially suitable for, a process of preparing a PSA display including one or more of the following features:

- the polymerisable medium is exposed to UV light in the display in a 2-step process, including a first UV exposure step ("UV-1 step") to generate the tilt angle, and a second UV exposure step ("UV-2 step") to finish polymerisation,
- the polymerisable medium is exposed to UV light in the display generated by an energy-saving UV lamp (also known as "green UV lamps"). These lamps are characterized by a relative low intensity (1/100-1/10 of a conventional UV1 lamp) in their absorption spectra from 300-380nm, and are preferably used in the UV2 step, but are optionally also used in the UV1 step when avoiding high intensity is necessary for the process.
- the polymerisable medium is exposed to UV light in the display generated by a UV lamp with a radiation spectrum that is shifted to longer wavelengths, preferably 340nm or more, to avoid short UV light exposure in the PS-VA process.

Both using lower intensity and a UV shift to longer wavelengths protect the organic layer against damage that may be caused by the UV light.

A preferred embodiment of the present invention relates to a process for preparing a PSA display as described above and below, comprising one or more of the following features:

- the polymerisable LC medium is exposed to UV light in a 2-step process, including a first UV exposure step ("UV-1 step") to generate the tilt angle, and a second UV exposure step ("UV-2 step") to finish polymerisation,
- the polymerisable LC medium is exposed to UV light generated by a UV lamp having an intensity of from 0.5 $mW/cm^2$ to 10 $mW/cm^2$ in the wavelength range from 300-380nm, preferably used in the UV2 step, and optionally also in the UV1 step,
- the polymerisable LC medium is exposed to UV light having a wavelength of 340 nm or more, and preferably 400 nm or less.

This preferred process can be carried out for example by using the desired UV lamps or by using a band pass filter and/or a cut-off filter, which are substantially transmissive for UV light with the respective desired wavelength(s) and are substantially blocking light with the respective undesired wavelengths. For example, when irradiation with UV light of wavelengths $\lambda$ of 300-400nm is desired, UV exposure can be carried out using a wide band pass filter being substantially transmissive for wavelengths 300nm $< \lambda <$ 400nm. When irradiation with UV light of wavelength $\lambda$ of more than 340 nm is desired, UV exposure can be carried out using a cut-off filter being substantially transmissive for wavelengths $\lambda >$ 340 nm.

"Substantially transmissive" means that the filter transmits a substantial part, preferably at least 50% of the intensity, of incident light of the desired wavelength(s). "Substantially blocking" means that the filter does not transmit a

substantial part, preferably at least 50% of the intensity, of incident light of the undesired wavelengths. "Desired (undesired) wavelength" e.g. in case of a band pass filter means the wavelengths inside (outside) the given range of λ, and in case of a cut-off filter means the wavelengths above (below) the given value of λ.

This preferred process enables the manufacture of displays by using longer UV wavelengths, thereby reducing or even avoiding the hazardous and damaging effects of short UV light components.

UV radiation energy is in general from 6 to 100 J, depending on the production process conditions.

Preferably the LC medium according to the present invention does essentially consist of a polymerisable component A) and an LC component B) (or LC host mixture) as described above and below. However, the LC medium may additionally comprise one or more further components or additives, preferably selected from the list including but not limited to co-monomers, chiral dopants, polymerisation initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

Preference is given to LC media in which the polymerisable component A) consists exclusively of polymerisable compounds of formula I*.

In another preferred embodiment the polymerisable component A) contains, in addition to the compounds of formula I*, one or more further polymerisable compounds ("co-monomers"), preferably selected from RMs.

Preferably the proportion of the polymerisable component A) in the LC medium is from >0 to <5%, very preferably from >0 to ≤1 %, most preferably from 0.01 to 0.5%.

Preferably the proportion of the LC component B) in the LC medium is from 95 to <100%, very preferably from 99 to <100%.

Besides the polymerisable component A) as described above, the LC media according to the present invention comprise an LC component B), or LC host mixture, comprising one or more, preferably two or more LC compounds which are selected from low-molecular-weight compounds that are unpolymerisable. These LC compounds are selected such that they stable and/or unreactive to a polymerisation reaction under the conditions applied to the polymerisation of the polymerisable compounds.

Examples of these compounds are the aforementioned compounds of formulae B and CLY.

Preference is given to LC media in which the LC component B), or the LC host mixture, has a nematic LC phase, and preferably has no chiral liquid crystal phase.

Preference is furthermore given to achiral compounds of formula I, and to LC media in which the compounds of component A and/or B are selected exclusively from the group consisting of achiral compounds.

The LC component B), or LC host mixture, is preferably a nematic LC mixture.

In a preferred embodiment of the present invention the LC component B), or LC host mixture, of the LC medium comprises, in addition to the compounds of formula CLY, one or more further mesogenic or LC compounds comprising a straight-chain, branched or cyclic alkenyl group (hereinafter also referred to as "alkenyl compounds"), wherein said alkenyl group is stable to a polymerisation reaction under the conditions used for polymerisation of the polymerisable compounds contained in the LC medium.

These further alkenyl compounds are preferably selected from formula AN and AY and which are different from formula CLY:

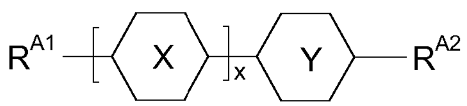 AN

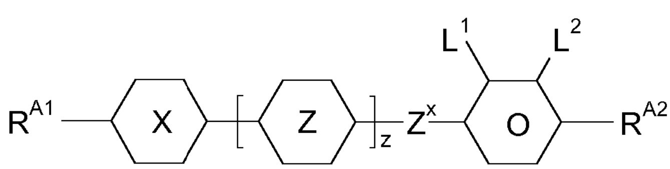 AY

in which the individual radicals, on each occurrence identically or differently, and each, independently of one another, have the following meaning:

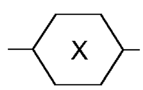 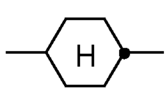 , 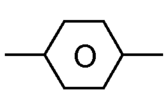 , 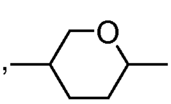 , 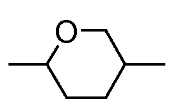 ,

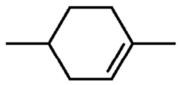 or 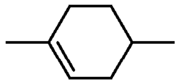,

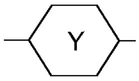 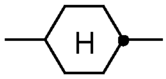, 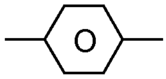, 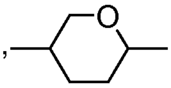, 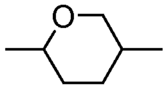,

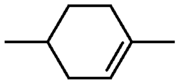 or 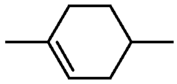,

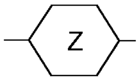 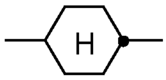, 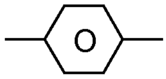, 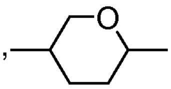, 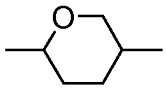,

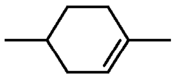, 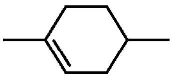 or 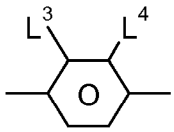

$R^{A1}$ alkenyl having 2 to 9 C atoms or, if at least one of the rings X, Y and Z denotes cyclohexenyl, also one of the meanings of $R^{A2}$,

$R^{A2}$ alkyl having 1 to 12 C atoms, in which, in addition, one or two non-adjacent $CH_2$ groups may be replaced by -O-, -CH=CH-, -CO-, -OCO- or -COO- in such a way that O atoms are not linked directly to one another,

$Z^x$ $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$, or a single bond, preferably a single bond,

$L^{1-4}$ H, F, Cl, $OCF_3$, $CF_3$, $CH_3$, $CH_2F$ or $CHF_2H$, preferably H, F or Cl,

x 1 or 2,

z 0 or 1.

Preferred compounds of formula AN and AY are those wherein $R^{A2}$ is selected from ethenyl, propenyl, butenyl, pentenyl, hexenyl and heptenyl.

Further preferred compounds of formula AN and AY are those wherein $L^1$ and $L^2$ denote F, or one of $L^1$ and $L^2$ denotes F and the other denotes Cl, and $L^3$ and $L^4$ denote F, or one of $L^3$ and $L^4$ denotes F and the other denotes Cl.

The compounds of the formula AN are preferably selected from the following sub-formulae:

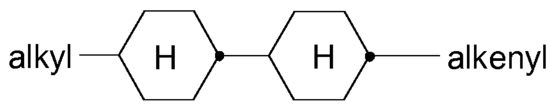 AN1

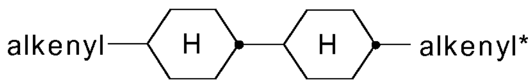 AN2

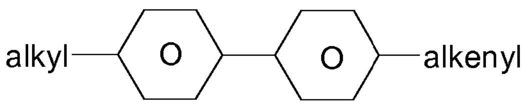 AN3

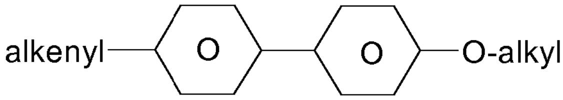

AN4

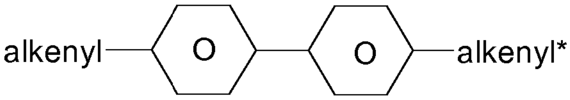

AN5

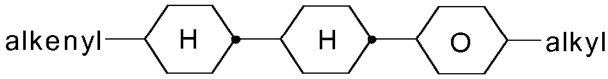

AN6

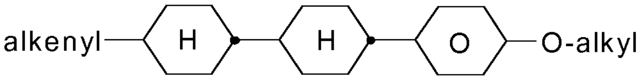

AN7

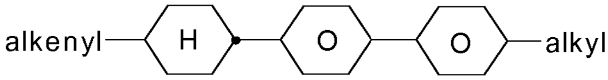

AN8

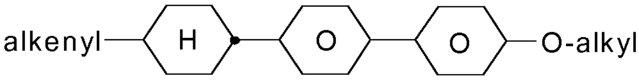

AN9

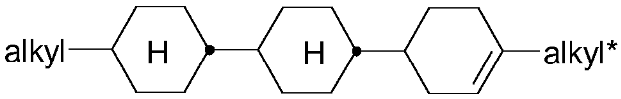

AN10

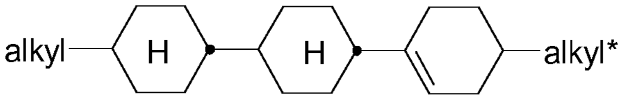

AN11

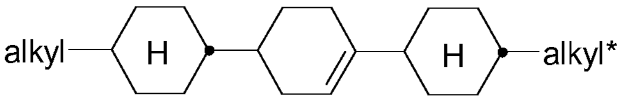

AN12

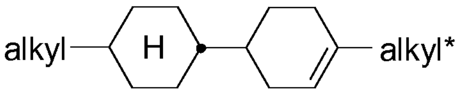

AN13

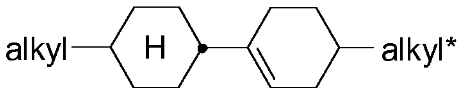

AN14

in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Very preferred compounds of the formula AN are selected from the following sub-formulae:

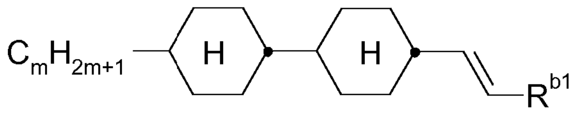
AN1a

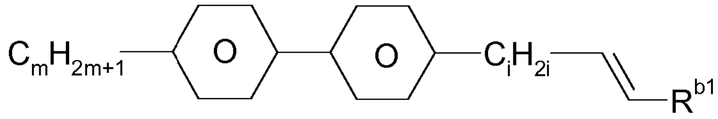
AN3a

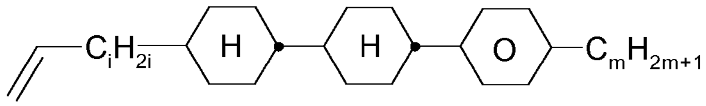
AN6a

in which m denotes 1, 2, 3, 4, 5 or 6, i denotes 0, 1, 2 or 3, and $R^{b1}$ denotes H, $CH_3$ or $C_2H_5$.

Very particularly preferred compounds of the formula AN are selected from the following sub-formulae:

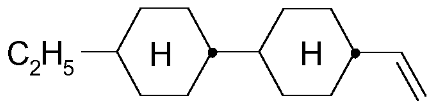
AN1a1

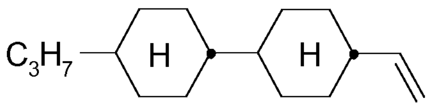
AN1a2

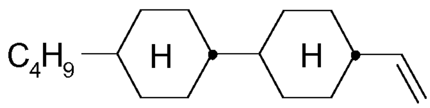
AN1a3

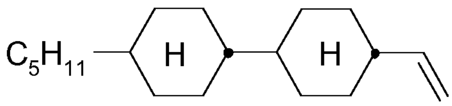
AN1a4

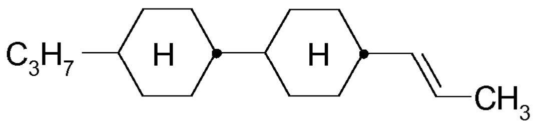
AN1a5

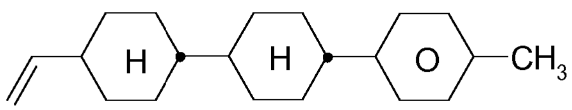
AN6a1

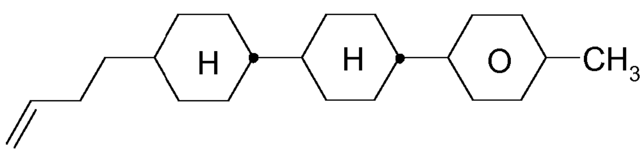
AN6a2

Most preferred are compounds of formula AN1a2, AN1a5, AN6a1 and AN6a2.

The compounds of the formula AY are preferably selected from the following sub-formulae:

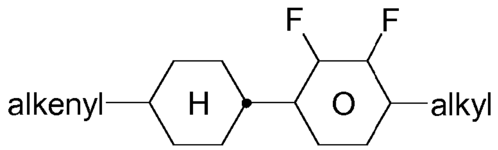

AY1

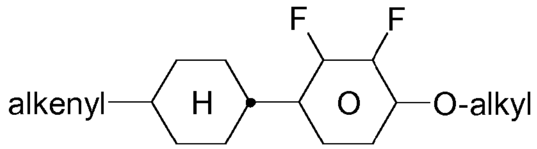

AY2

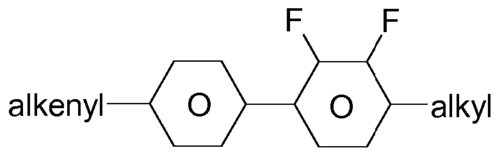

AY3

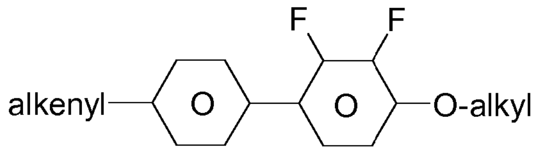

AY4

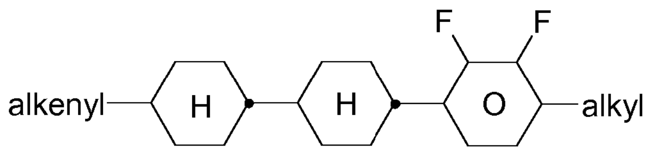

AY5

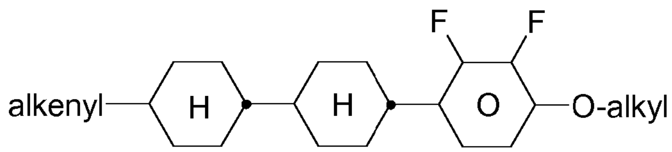

AY6

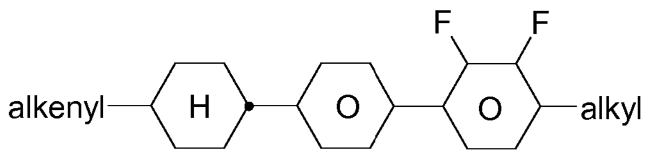

AY7

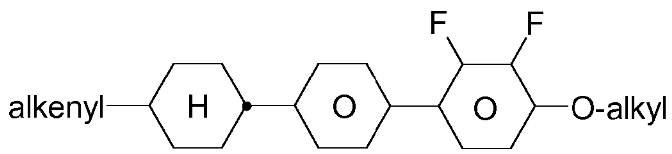

AY8

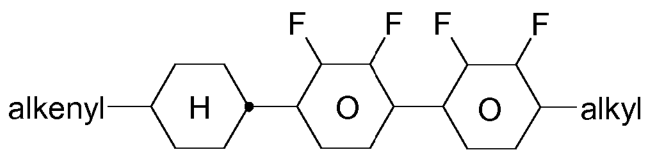

AY9

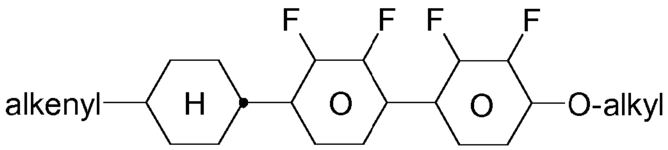
AY10

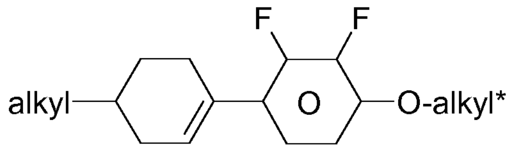
AY11

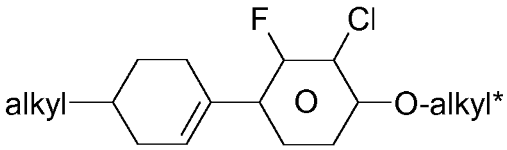
AY12

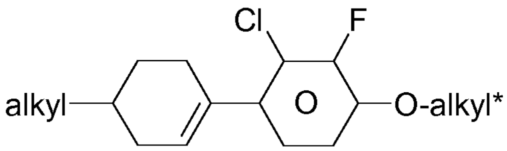
AY13

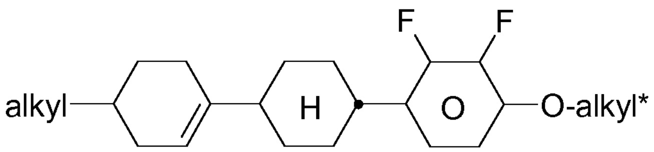
AY14

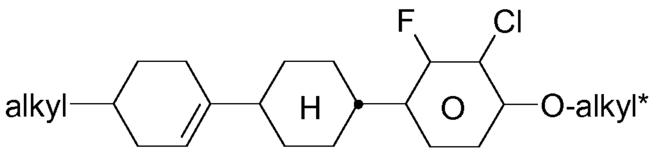
AY15

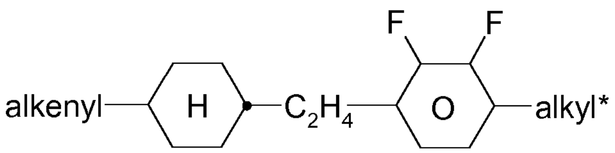
AY16

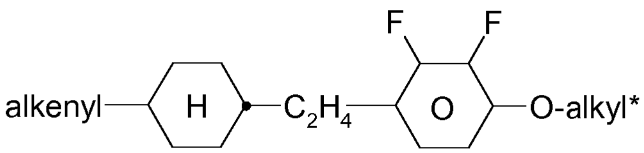
AY17

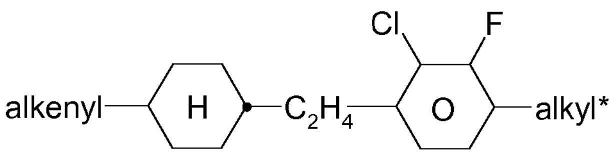
AY18

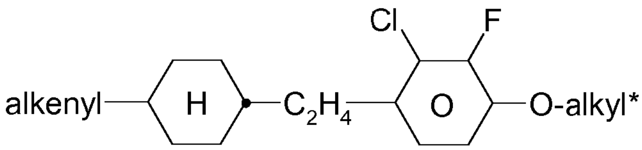

AY19

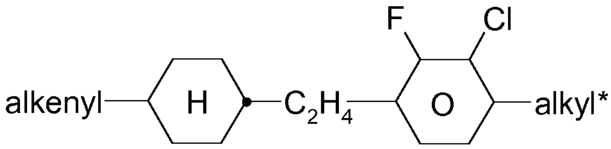

AY20

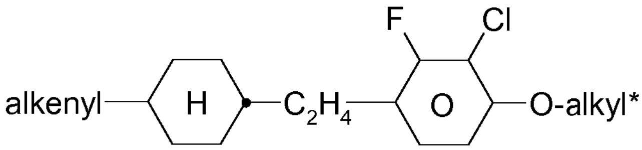

AY21

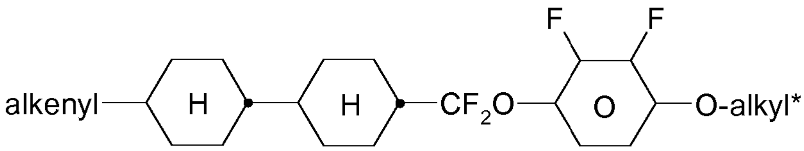

AY22

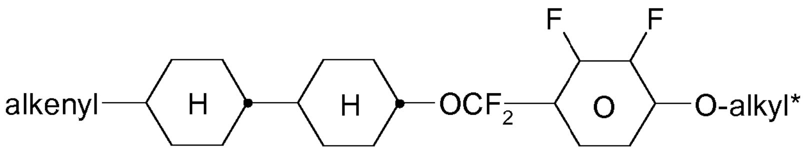

AY23

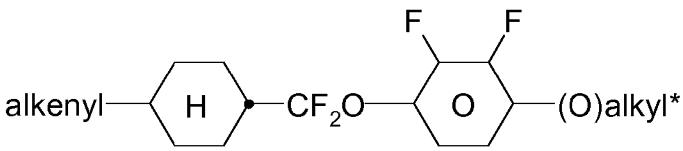

AY24

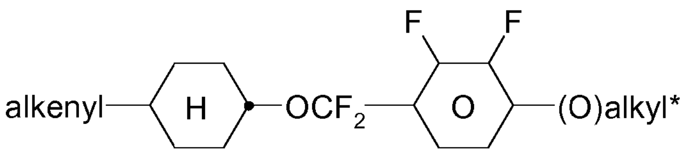

AY25

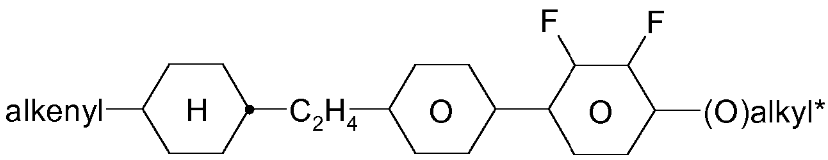

AY26

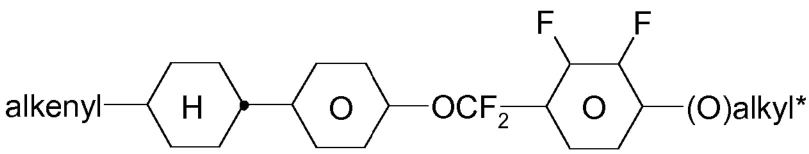

AY27

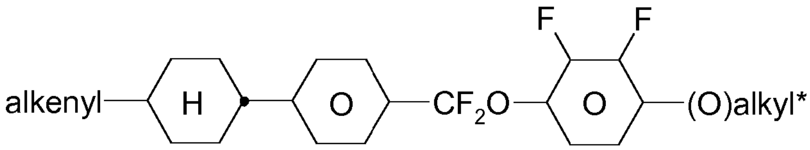

AY28

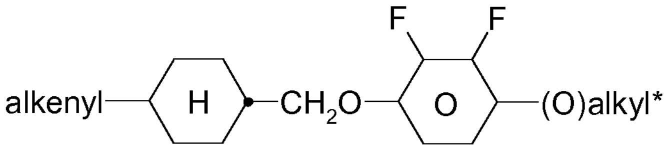

AY29

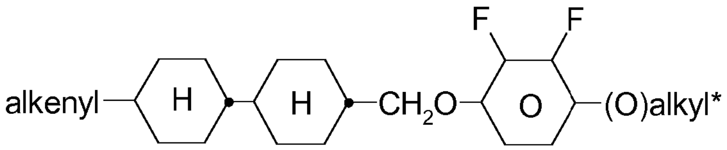

AY30

in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote $CH_2=CH-$, $CH_2=CHCH_2CH_2-$, $CH_3-CH=CH-$, $CH_3-CH_2-CH=CH-$, $CH_3-(CH_2)_2-CH=CH-$, $CH_3-(CH_2)_3-CH=CH-$ or $CH_3-CH=CH-(CH_2)_2-$.

Very preferred compounds of the formula AY are selected from the following sub-formulae:

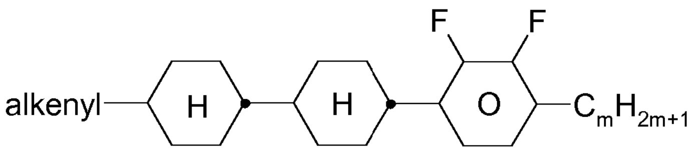

AY5a

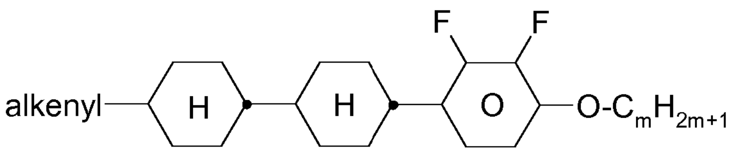

AY6a

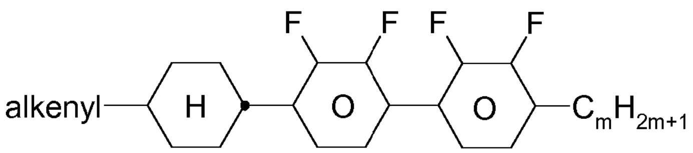

AY9a

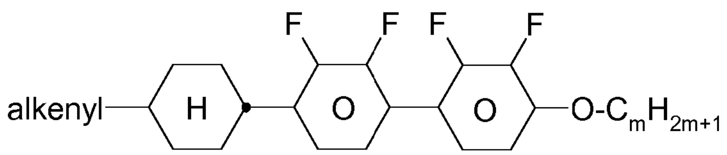

AY10a

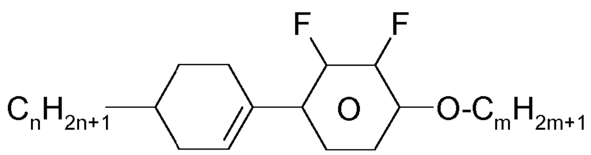

AY11a

in which m and n each, independently of one another, denote 1, 2, 3, 4, 5 or 6, and alkenyl denotes $CH_2=CH-$, $CH_2=CHCH_2CH_2-$, $CH_3-CH=CH-$, $CH_3-CH_2-CH=CH-$, $CH_3-(CH_2)_2-CH=CH-$, $CH_3-(CH_2)_3-CH=CH-$ or $CH_3-CH=CH-(CH_2)_2-$.

The LC medium preferably comprises no compounds containing a terminal vinyloxy group ($-O-CH=CH_2$), in

particular no compounds of the formula AN or AY in which $R^{A1}$ or $R^{A2}$ denotes or contains a terminal vinyloxy group ($-O-CH=CH_2$).

In a preferred embodiment the LC medium contains an LC component B), or LC host mixture, based on compounds with negative dielectric anisotropy. Such LC media are especially suitable for use in PS-VA and PS-UB-FFS displays. Particularly preferred embodiments of such an LC medium, and of the corresponding LC component B) or LC host mixture, are those of sections a)-y) below:

a) The LC medium or LC host mixture comprises one or more compounds of the formulae CY and/or PY:

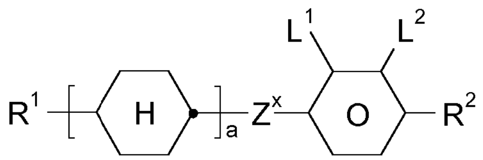

CY

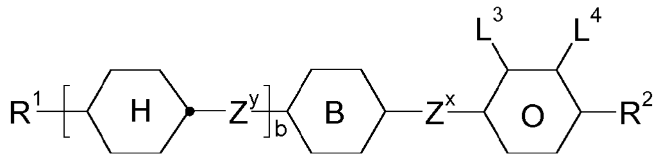

PY

wherein

a denotes 1 or 2,

b denotes 0 or 1,

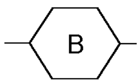

denotes

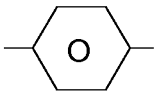 or 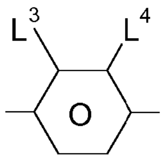

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, preferably alkyl or alkoxy having 1 to 6 C atoms,

$Z^x$ and $Z^y$ each, independently of one another, denote $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ or a single bond, preferably a single bond,

$L^{1-4}$ each, independently of one another, denote F, Cl, $OCF_3$, $CF_3$, $CH_3$, $CH_2F$, $CHF_2$.

Preferably, both $L^1$ and $L^2$ denote F or one of $L^1$ and $L^2$ denotes F and the other denotes Cl, or both $L^3$ and $L^4$ denote F or one of $L^3$ and $L^4$ denotes F and the other denotes Cl. The compounds of the formula CY are preferably selected from the group consisting of the following sub-formulae:

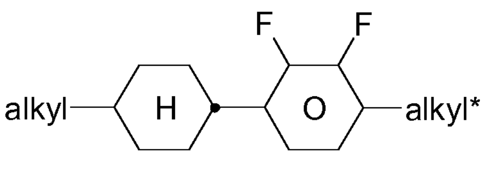

CY1

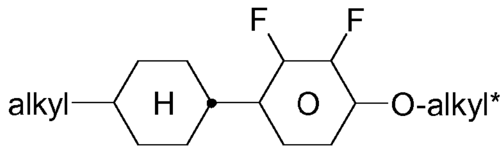

CY2

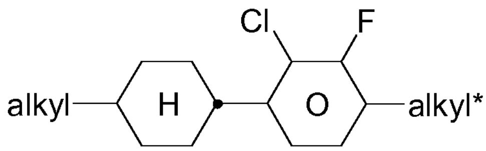

CY3

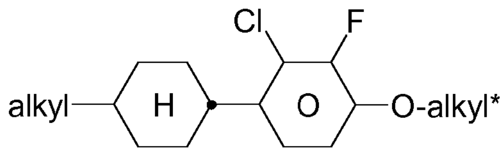

CY4

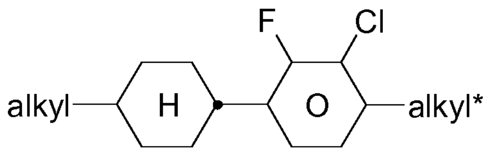

CY5

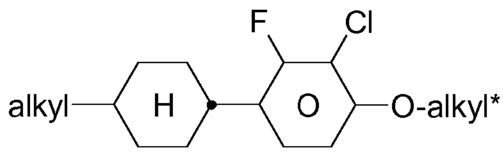

CY6

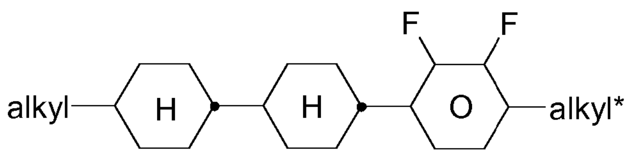

CY7

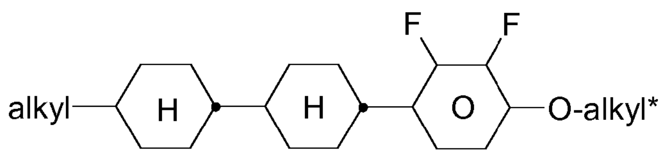

CY8

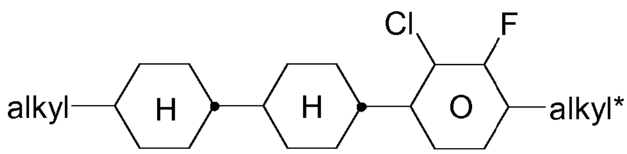

CY9

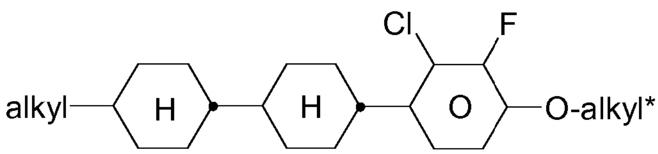

CY10

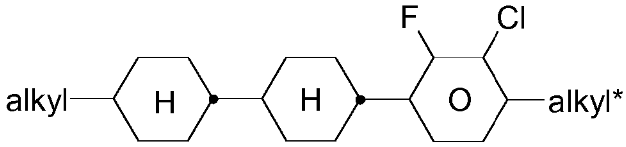
CY11

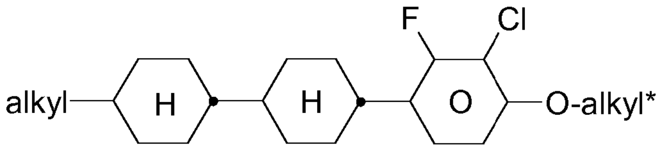
CY12

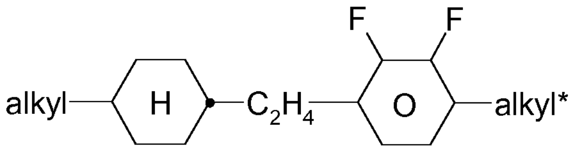
CY13

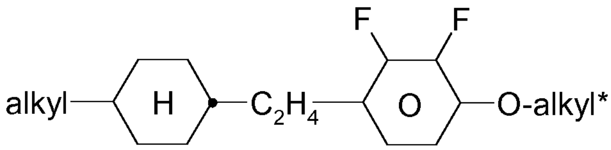
CY14

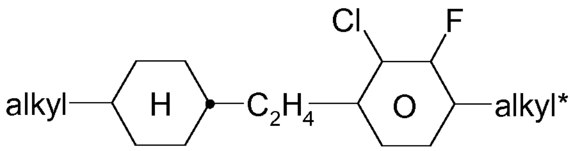
CY15

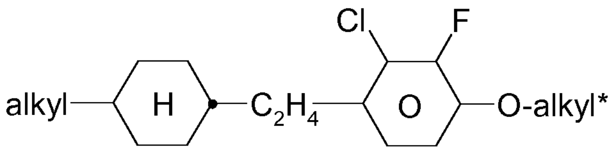
CY16

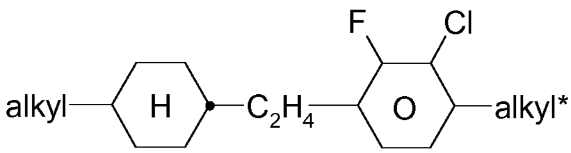
CY17

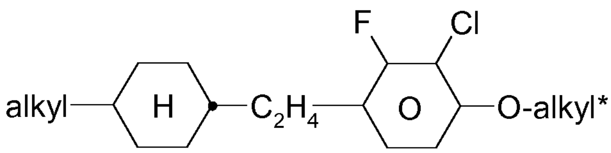
CY18

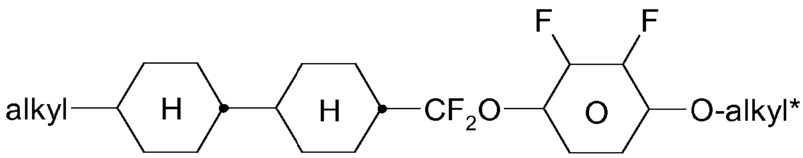
CY19

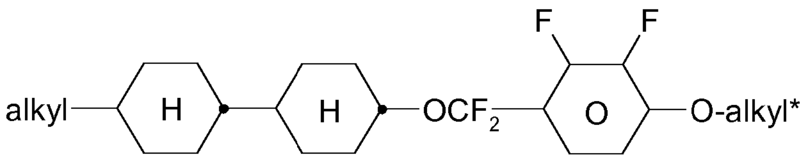

CY20

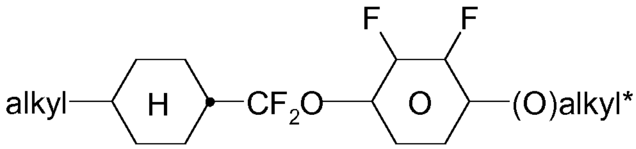

CY22

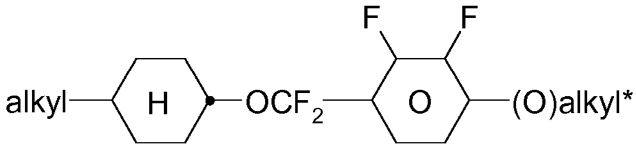

CY23

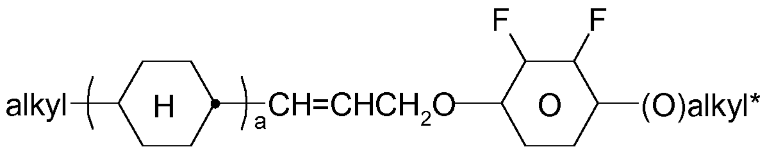

CY24

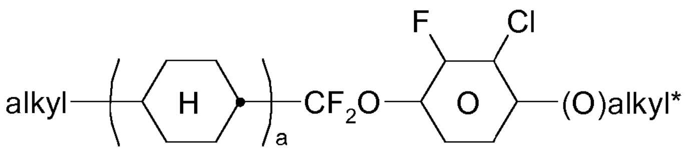

CY25

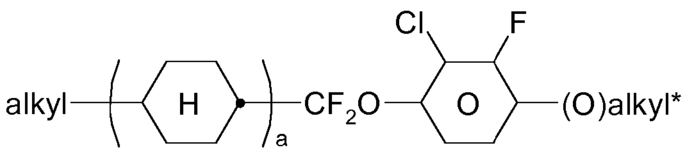

CY26

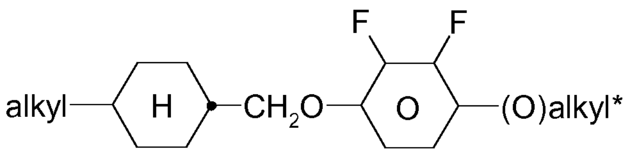

CY29

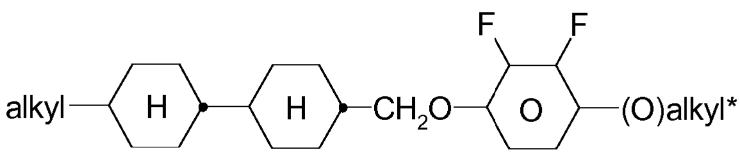

CY30

in which a denotes 1 or 2, alkyl and alkyl* each, independently of one another, denote a straight-chain alkyl radical having 1-6 C atoms, and (O) denotes an oxygen atom or a single bond.

The compounds of the formula PY are preferably selected from the group consisting of the following sub-formulae:

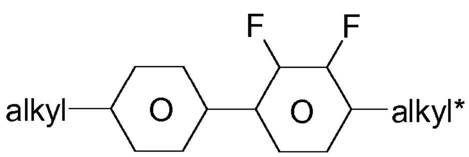

PY1

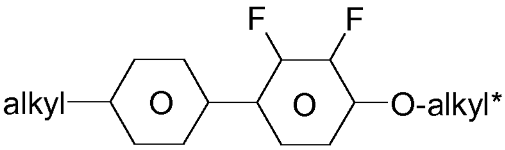

PY2

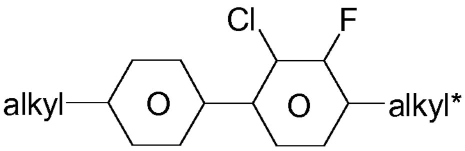

PY3

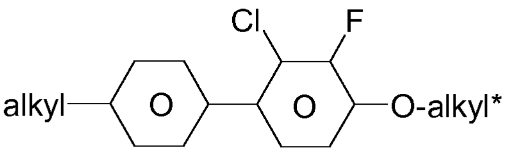

PY4

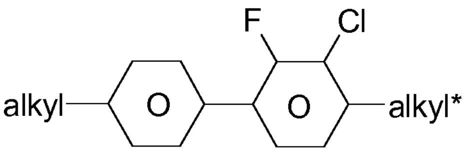

PY5

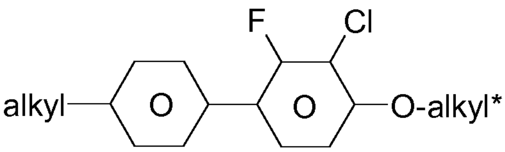

PY6

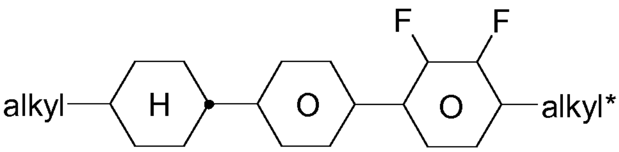

PY7

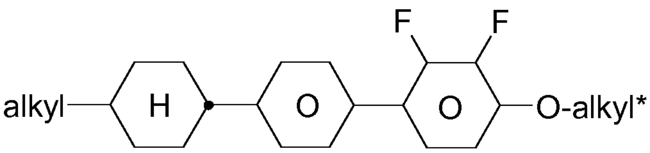

PY8

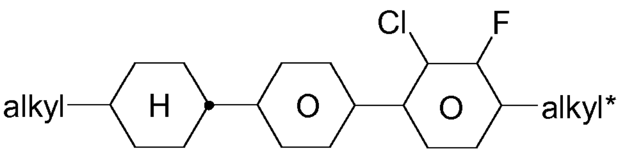

PY9

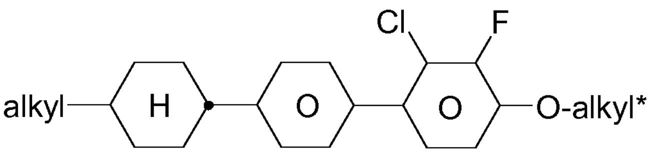

PY10

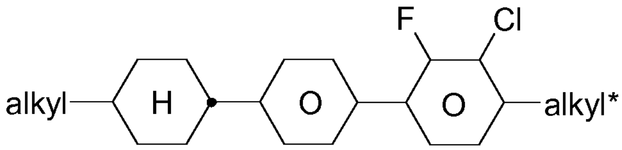

PY11

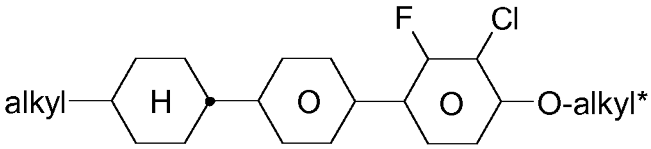

PY12

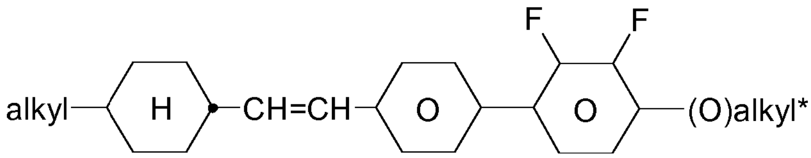

PY13

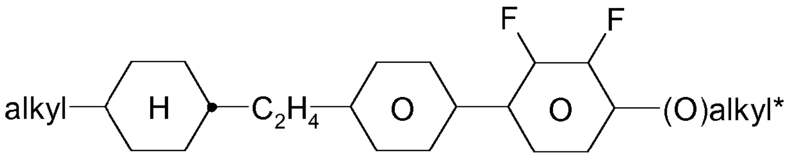

PY14

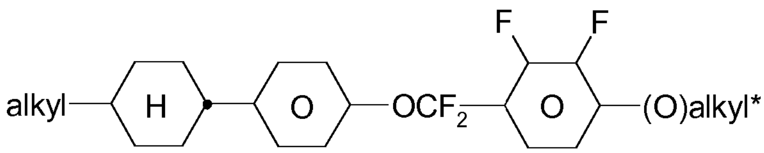

PY15

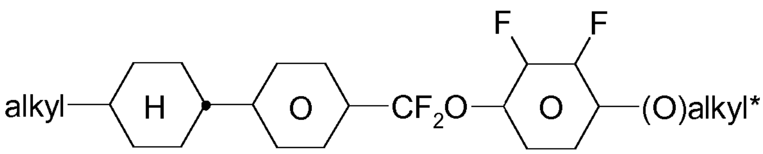

PY16

in which alkyl and alkyl* each, independently of one another, denote a straight-chain alkyl radical having 1-6 C atoms, and (O) denotes an oxygen atom or a single bond.

b) The LC medium or LC host mixture comprises one or more compounds of the following formula:

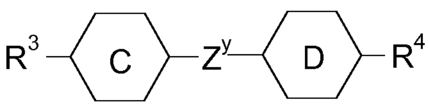

ZK

in which the individual radicals have the following meanings:

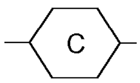

denotes

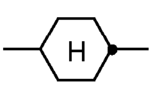 , 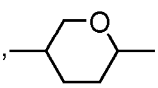 or 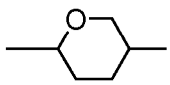 ,

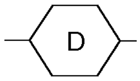

denotes

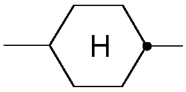 or 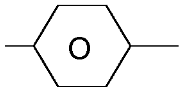 ,

| | |
|---|---|
| $R^3$ and $R^4$ | each, independently of one another, denote alkyl having 1 to 12 C atoms, in which, in addition, one or two non-adjacent $CH_2$ groups may be replaced by -O-, -CH=CH-, -CO-, -O-CO- or -CO-O- in such a way that O atoms are not linked directly to one another, |
| $Z^Y$ | denotes $-CH_2CH_2-$,-CH=CH-, $-CF_2O-$, $-OCF_2-$, $-CH_2O-$, - $OCH_2-$, -CO-O-, -O-CO-, $-C_2F_4-$, -CF=CF-, $-CH=CH-CH_2O-$ or a single bond, preferably a single bond. |

The compounds of the formula ZK are preferably selected from the group consisting of the following sub-formulae:

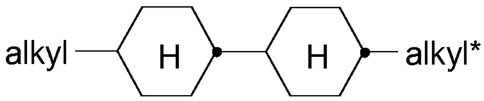 ZK1

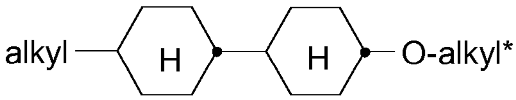 ZK2

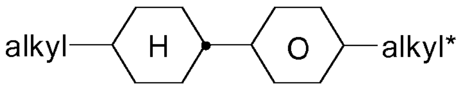 ZK2

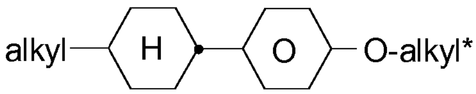 ZK3

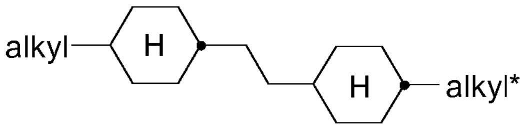 ZK4

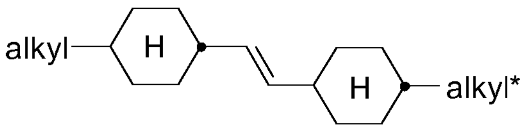 ZK5

in which alkyl and alkyl* each, independently of one another, denote a straight-chain alkyl radical having 1-6 C atoms. Especially preferred are compounds of formula ZK1. Particularly preferred compounds of formula ZK are selected from the following sub-formulae:

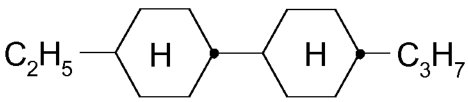 ZK1a

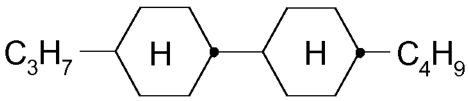

ZK1b

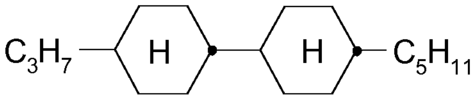

ZK1c

wherein the propyl, butyl and pentyl groups are straight-chain groups.
Most preferred are compounds of formula ZK1a.

c) The LC medium or LC host mixture comprises one or more compounds of the following formula:

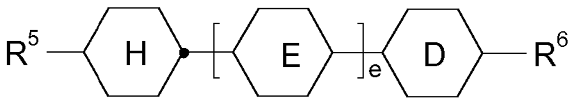

DK

in which the individual radicals on each occurrence, identically or differently, have the following meanings:

$R^5$ and $R^6$ each, independently of one another, denote alkyl having 1 to 12 C atoms, where, in addition, one or two non-adjacent $CH_2$ groups may be replaced by -O-, -CH=CH-, -CO-,-OCO- or -COO- in such a way that O atoms are not linked directly to one another, preferably alkyl or alkoxy having 1 to 6 C atoms,

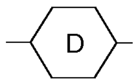

denotes

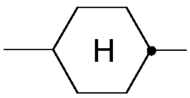

or

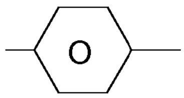

,

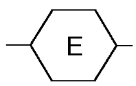

denotes

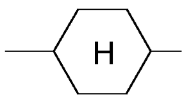

,

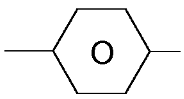

or

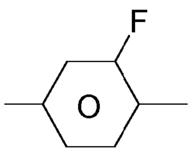

,

e denotes 1 or 2.

The compounds of the formula DK are preferably selected from the group consisting of the following sub-formulae:

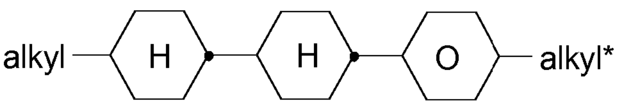

DK1

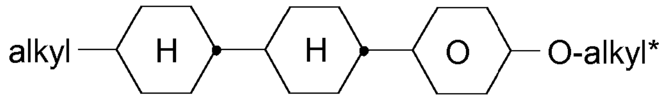
DK2

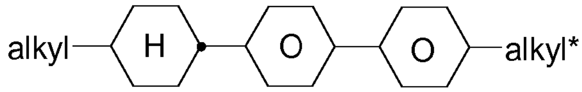
DK3

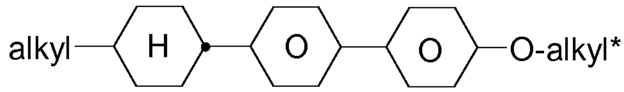
DK4

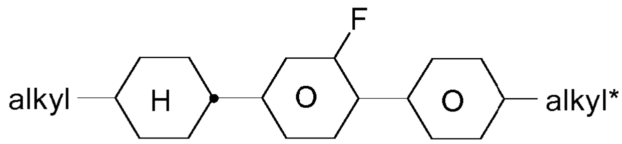
DK5

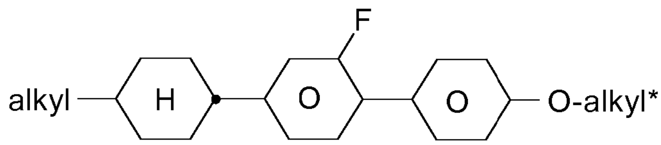
DK6

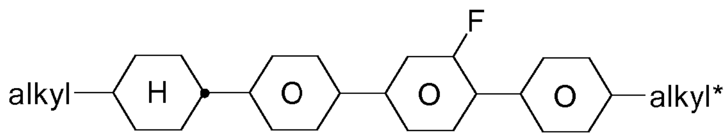
DK7

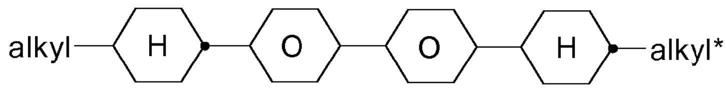
DK8

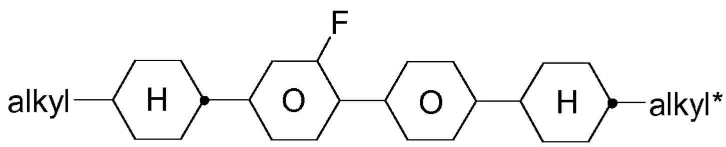
DK9

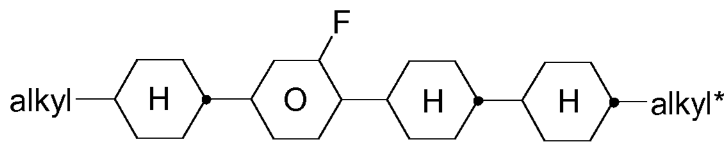
DK10

in which alkyl and alkyl* each, independently of one another, denote a straight-chain alkyl radical having 1-6 C atoms.

d) The LC medium or LC host mixture comprises one or more compounds of the following formula DY:

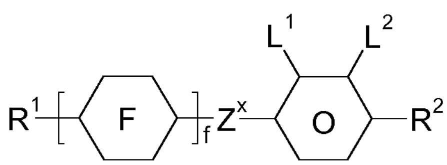
DY

in which the individual radicals have the following meanings:

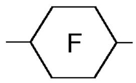

denotes

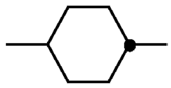, 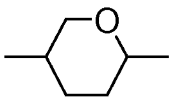 or 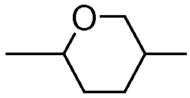,

with at least one ring F being different from cyclohexylene,

| | |
|---|---|
| f | denotes 1 or 2, |
| $R^1$ and $R^2$ | each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, |
| $Z^x$ | denotes $-CH_2CH_2-$,-CH=CH-, $-CF_2O-$, $-OCF_2-$, $-CH_2O-$,$-OCH_2-$, -CO-O-, -O-CO-, $-C_2F_4-$, -CF=CF-, $-CH=CH-CH_2O-$ or a single bond, preferably a single bond. |
| $L^1$ and $L^2$ | each, independently of one another, denote F, Cl, $OCF_3$, $CF_3$, $CH_3$, $CH_2F$, $CHF_2$. |

Preferably, both radicals $L^1$ and $L^2$ denote F or one of the radicals $L^1$ and $L^2$ denotes F and the other denotes Cl. The compounds of the formula DY are preferably selected from the group consisting of the following sub-formulae:

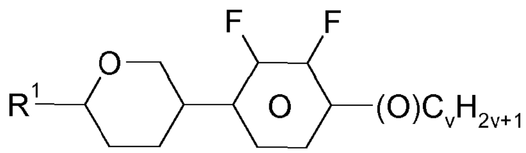 DY1

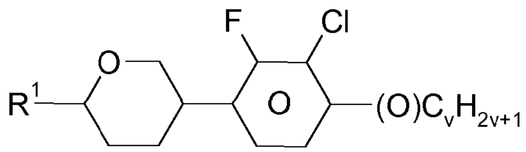 DY2

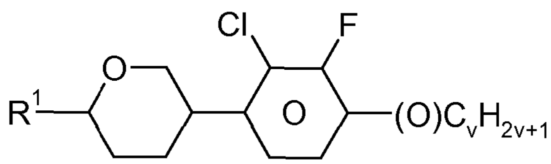 DY3

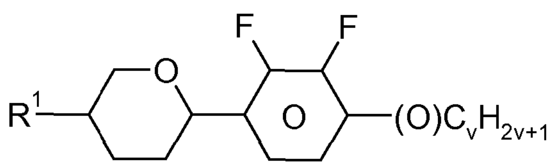 DY4

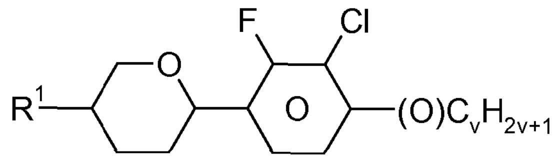

DY5

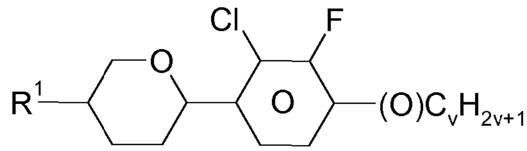

DY6

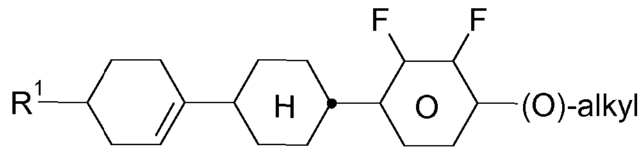

DY7

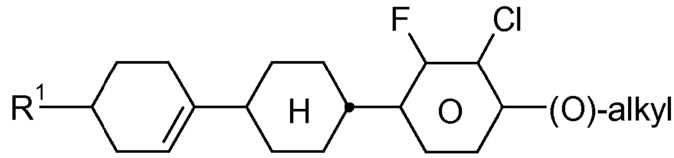

DY8

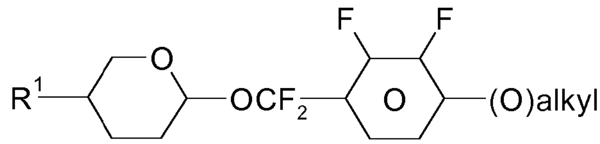

DY9

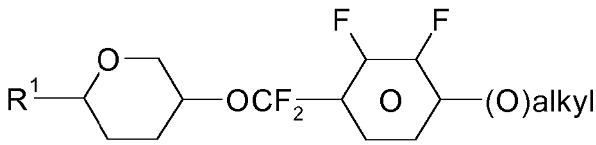

DY10

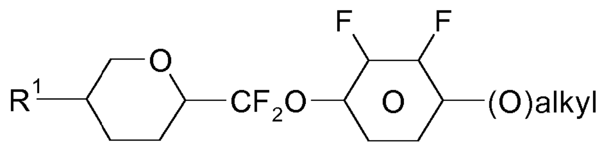

DY11

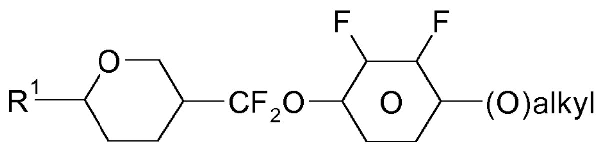

DY12

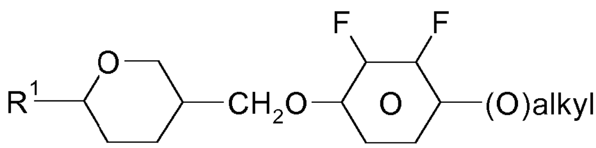

DY13

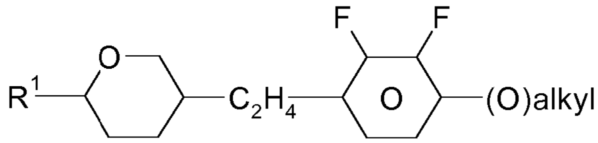

DY14

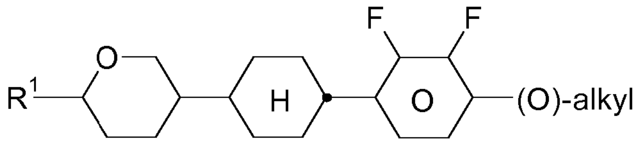

DY15

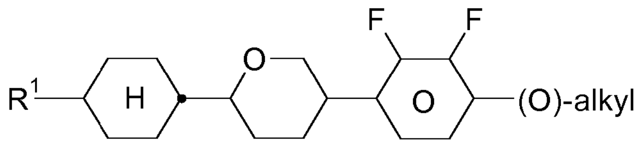

DY16

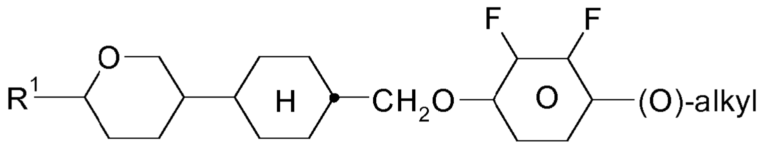

DY17

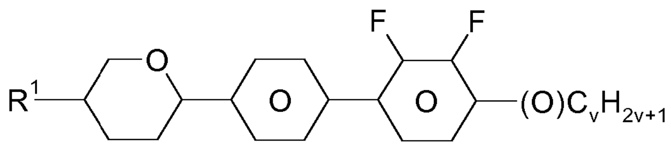

DY18

in which $R^1$ has the meaning indicated above, alkyl denotes a straight-chain alkyl radical having 1-6 C atoms, (O) denotes an oxygen atom or a single bond, and v denotes an integer from 1 to 6. $R^1$ preferably denotes straight-chain alkyl having 1 to 6 C atoms or straight-chain alkenyl having 2 to 6 C atoms, in particular $CH_3$, $C_2H_5$, $n\text{-}C_3H_7$, $n\text{-}C_4H_9$, $n\text{-}C_5H_{11}$, $CH_2=CH-$, $CH_2=CHCH_2CH_2-$, $CH_3-CH=CH-$, $CH_3-CH_2-CH=CH-$, $CH_3-(CH_2)_2-CH=CH-$, $CH_3-(CH_2)_3-CH=CH-$ or $CH_3-CH=CH-(CH_2)_2-$.

e) The LC medium or LC host mixture comprises one or more compounds of the following formula:

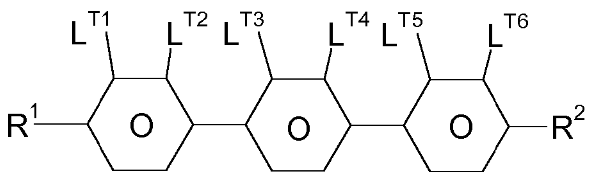

T

in which the individual radicals, on each occurrence identically or differently, and each, independently of one another, have the following meaning:

$R^1$, $R^2$ alkyl, alkoxy, oxaalkyl or alkoxyalkyl having 1 to 9 C atoms or alkenyl or alkenyloxy having 2 to 9 C atoms, all of which are optionally fluorinated,

$L^{T1}$-$L^{T6}$ H, F or Cl, with at least one of $L^{T1}$ to $L^{T6}$ being F or Cl,

The compounds of the formula T are preferably selected from the group consisting of the following sub-formulae:

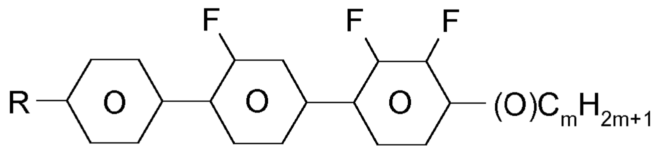
T1

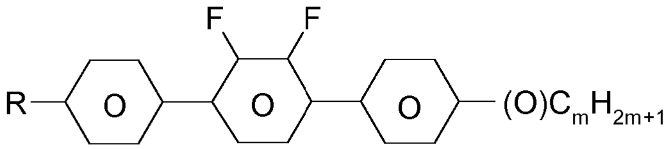
T2

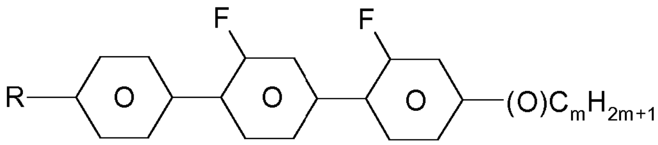
T3

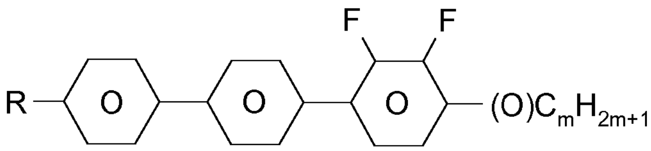
T4

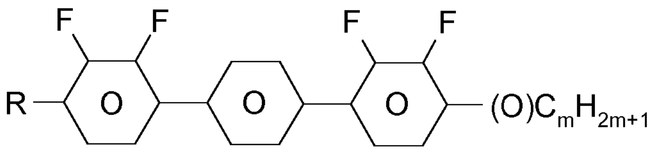
T5

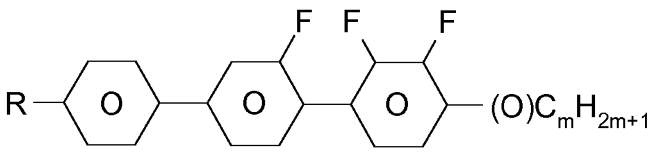
T6

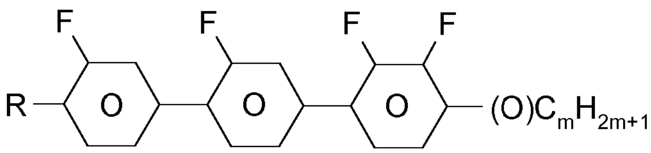
T7

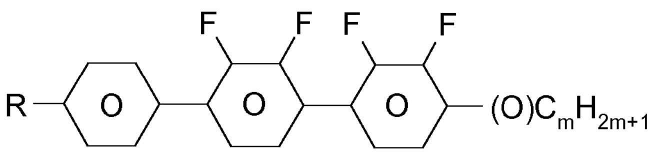
T8

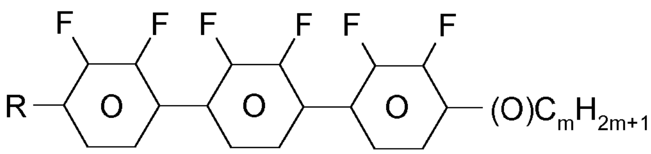
T9

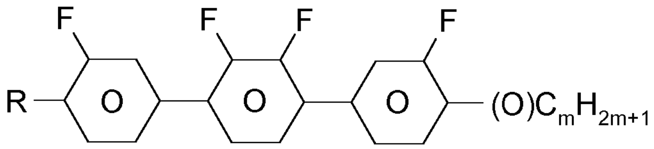

T10

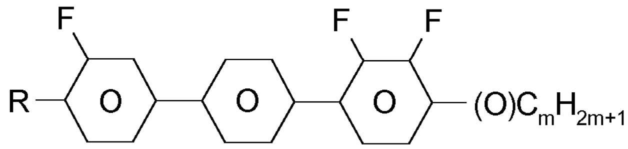

T11

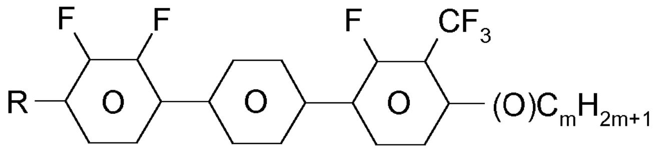

T12

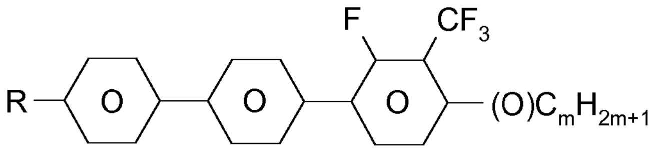

T13

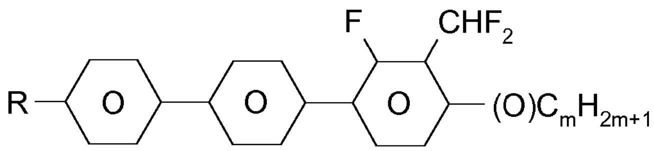

T14

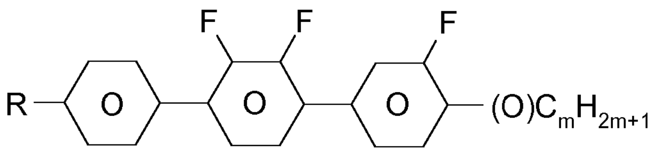

T15

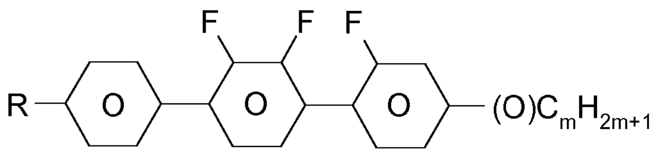

T16

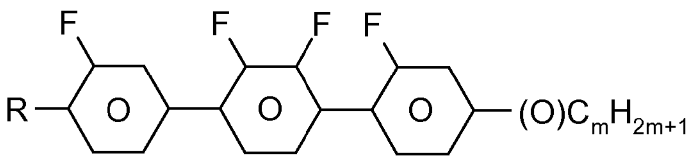

T17

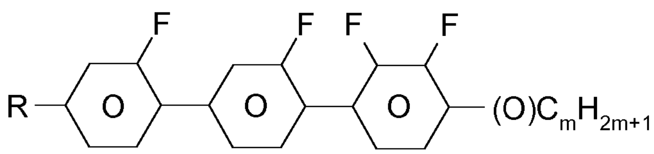

T18

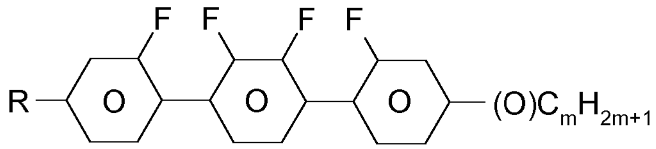 T19

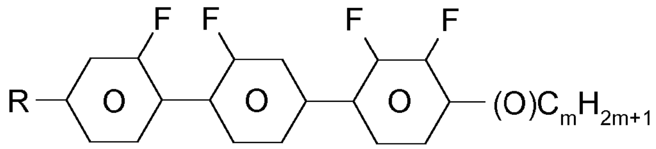 T20

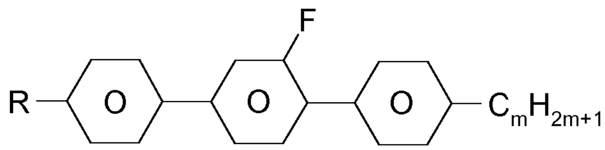 T21

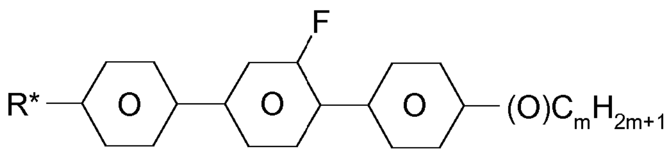 T22

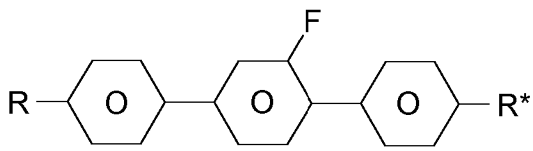 T23

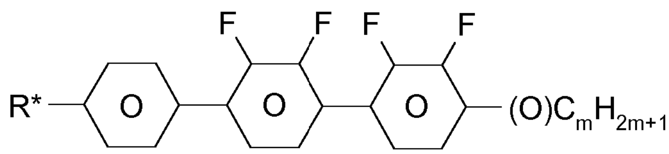 T24

in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

R and R* preferably denote methyl, ethyl, propyl, butyl, pentyl, hexyl, methoxy, ethoxy, propoxy, butoxy or pentoxy.

Very preferred are compounds of formulae T1, T2 and T3, especially those of formula T1 and T2.

Very preferred are compounds of formula T1-T24 wherein (O) denotes an oxygen atom, m is 1, 2, 3, 4 or 5 and R is methyl, ethyl, propyl, butyl of pentyl or hexyl, which are preferably straight-chained.

Preferably, the LC medium does not contain more than 15% of compounds of formula T or T1-T24 or any other compounds with a terphenyl group.

Preferably the proportion of compounds of formula T or T1-T24 or any other compounds with a terphenyl group in the LC medium is at least 5%, very preferably from 5 to 15%, most preferably from 5 to 10%.

Preferably the LC medium contains 1 to 5, very preferably 1 or 2 compounds of formula T or T1-T24.

f) The LC medium or LC host mixture comprises one or more compounds selected from the group consisting of the following formulae:

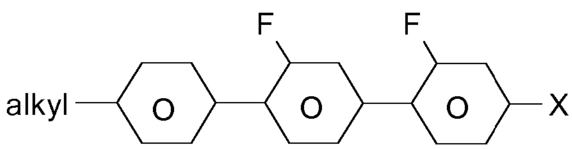 G1

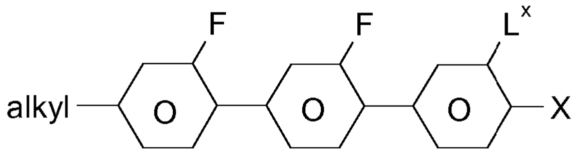

G2

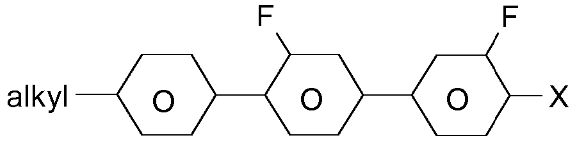

G3

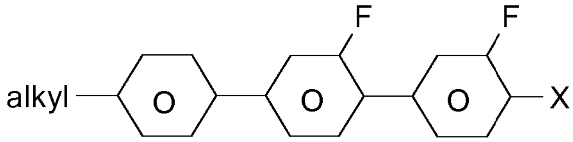

G4

in which alkyl denotes $C_{1-6}$-alkyl, $L^x$ denotes H or F, and X denotes F, Cl, $OCF_3$, $OCHF_2$ or $OCH=CF_2$. Particular preference is given to compounds of the formula G1 in which X denotes F.

g) The LC medium or LC host mixture comprises one or more compounds selected from the group consisting of the following formulae:

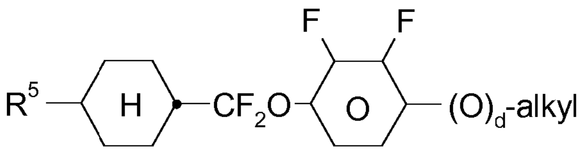

YC1

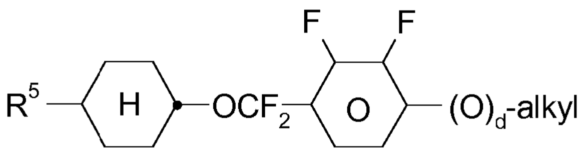

YC2

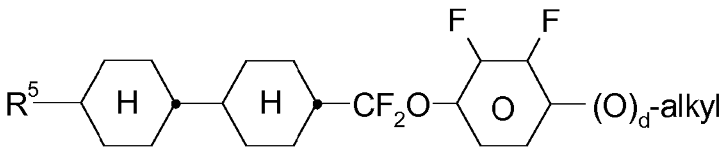

YC3

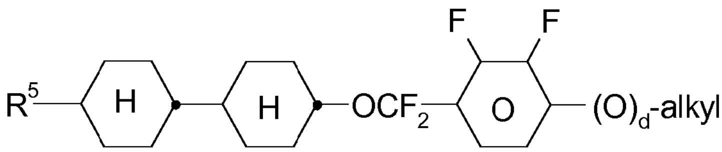

YC4

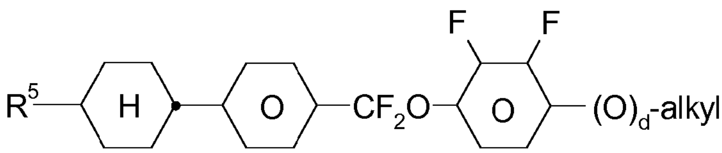

YC5

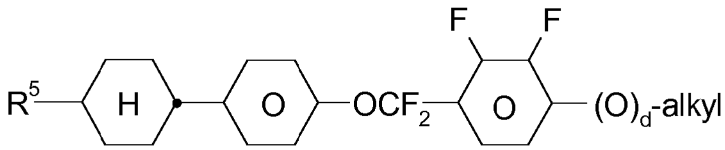 YC6

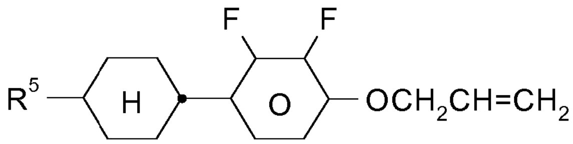 YC7

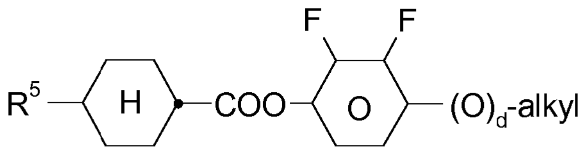 YC8

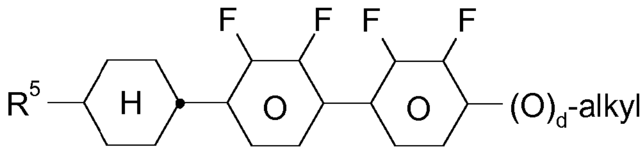 YC9

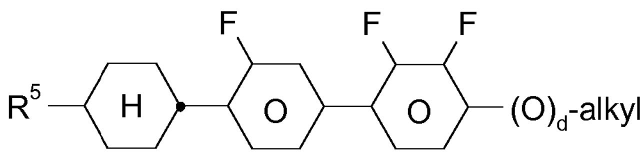 YC10

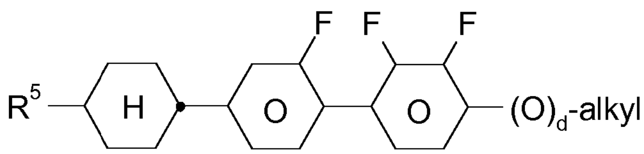 YC11

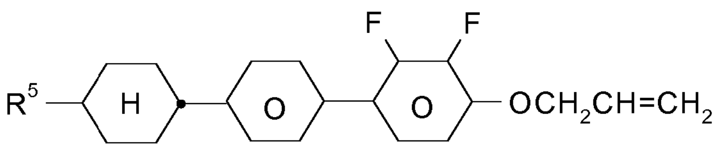 YC12

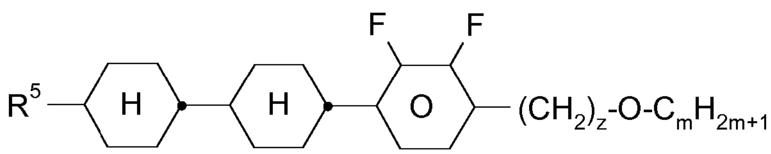 YC13

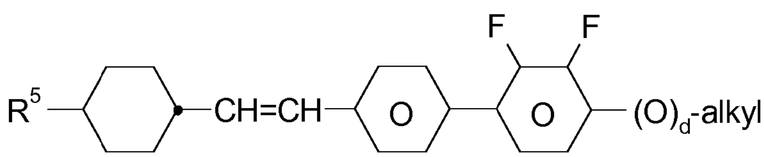 YC14

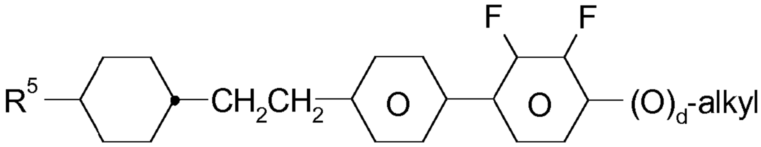

YC15

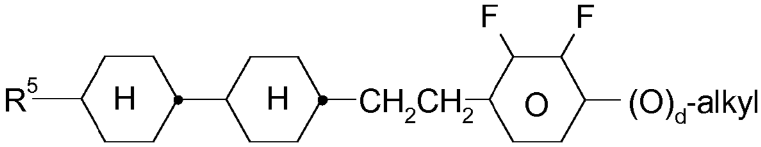

YC16

in which $R^5$ has one of the meanings indicated above for $R^1$, alkyl denotes $C_{1-6}$-alkyl, d denotes 0 or 1, and z and m each, independently of one another, denote an integer from 1 to 6. $R^5$ in these compounds is particularly preferably $C_{1-6}$-alkyl or -alkoxy or $C_{2-6}$-alkenyl, d is preferably 1. The LC medium according to the invention preferably comprises one or more compounds of the above-mentioned formulae in amounts of ≥ 5% by weight.

h) The LC medium or LC host mixture comprises one or more biphenyl compounds selected from the group consisting of the following formulae:

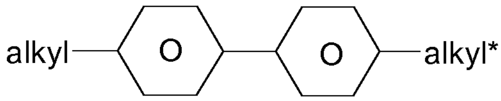

B1

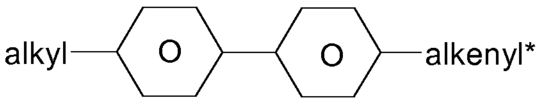

B2

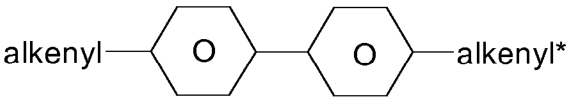

B3

in which alkyl and alkyl* each, independently of one another, denote a straight-chain alkyl radical having 1-6 C atoms, and alkenyl and alkenyl* each, independently of one another, denote a straight-chain alkenyl radical having 2-6 C atoms. Alkenyl and alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

The proportion of the biphenyls of the formulae B1 to B3 in the LC mixture is preferably at least 3% by weight, in particular ≥ 5% by weight.

The compounds of the formula B2 are particularly preferred. The compounds of the formulae B1 to B3 are preferably selected from the group consisting of the following sub-formulae:

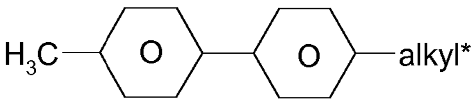

B1a

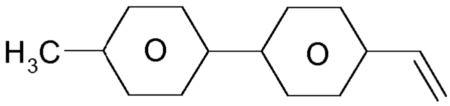

B2a

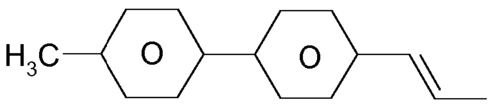

B2b

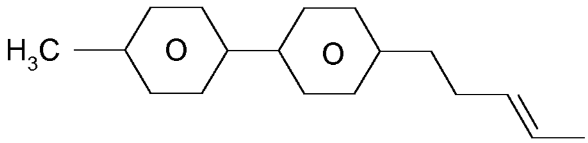

B2c

in which alkyl* denotes an alkyl radical having 1-6 C atoms. The medium according to the invention particularly preferably comprises one or more compounds of the formulae B1a and/or B2c.

i) The LC medium or LC host mixture comprises one or more compounds selected from the group consisting of the following formulae:

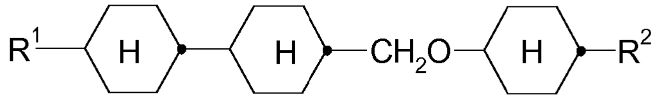

O1

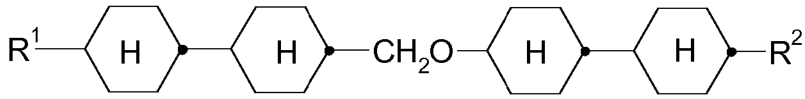

O2

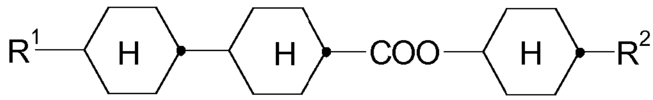

O3

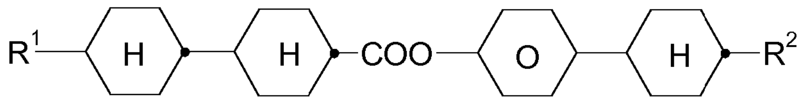

O4

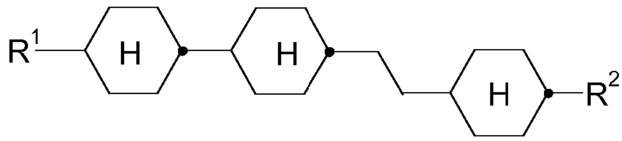

O5

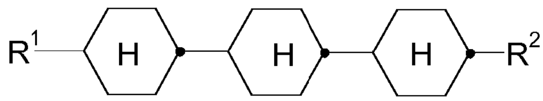

O6

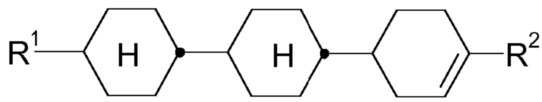

O7

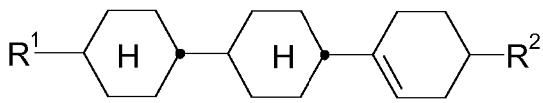

O8

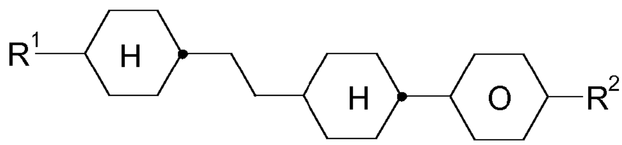

O9

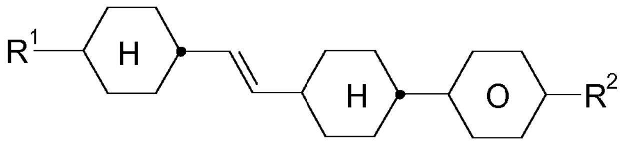

O10

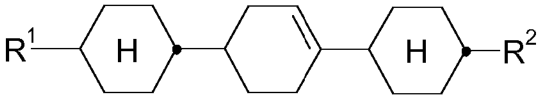

O11

in which $R^1$ and $R^2$ have the meanings indicated above and preferably each, independently of one another, denote straight-chain alkyl having 1 to 6 C atoms or straight-chain alkenyl having 2 to 6 C atoms.
Preferred media comprise one or more compounds selected from the formulae O1, O3 and O4.

k) The LC medium or LC host mixture comprises one or more compounds of the following formula:

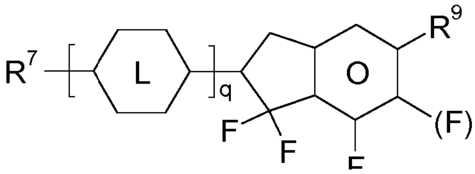

FI

in which

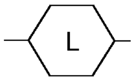

denotes

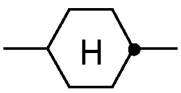 , 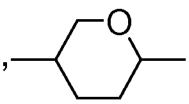 , 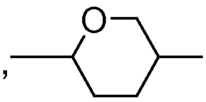 , 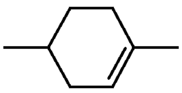

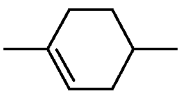 , 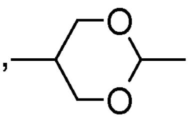 , 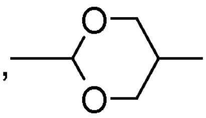 , 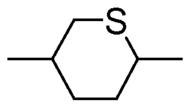

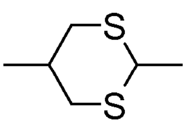 , 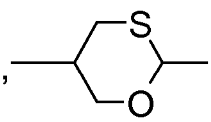 ,

$R^9$ denotes H, $CH_3$, $C_2H_5$ or n-$C_3H_7$, (F) denotes an optional fluorine substituent, and q denotes 1, 2 or 3, and $R^7$ has one of the meanings indicated for $R^1$, preferably in amounts of > 3% by weight, in particular ≥ 5% by weight and very particularly preferably 5-30% by weight.
Particularly preferred compounds of the formula FI are selected from the group consisting of the following sub-formulae:

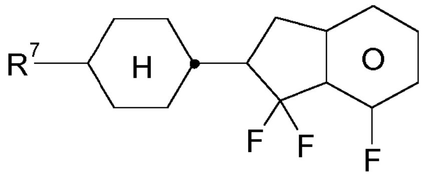

FI1

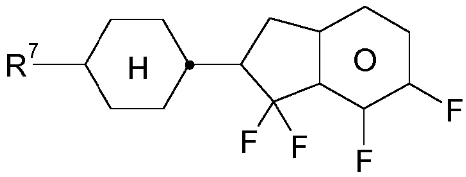

FI2

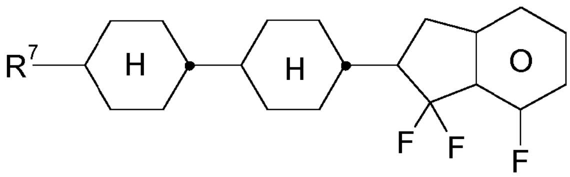

FI3

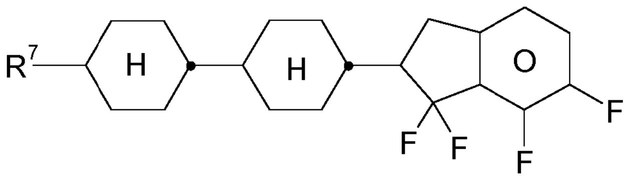

FI4

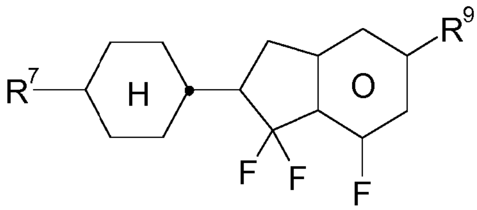

FI5

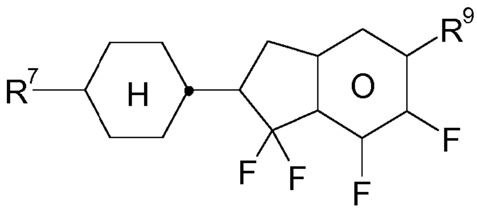

FI6

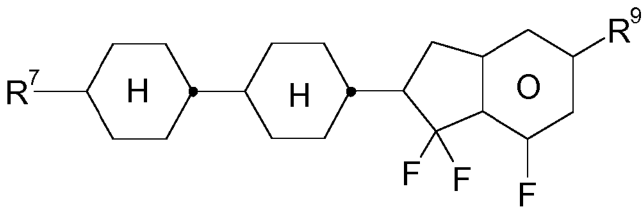

FI7

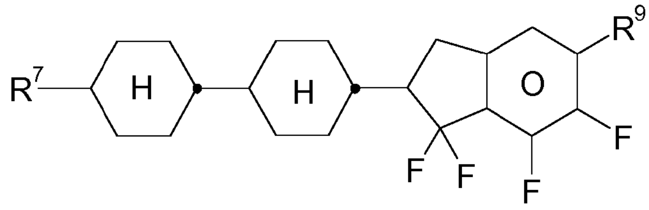

FI8

in which $R^7$ preferably denotes straight-chain alkyl, and $R^9$ denotes $CH_3$, $C_2H_5$ or n-$C_3H_7$. Particular preference is given to the compounds of the formulae FI1, FI2 and FI3.

l) The LC medium or LC host mixture comprises one or more compounds selected from the group consisting of the following formulae:

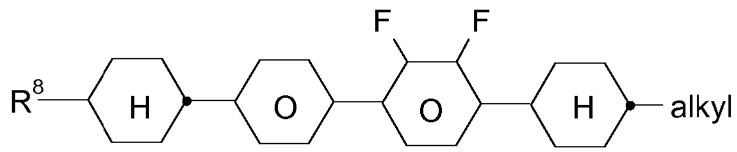

VK1

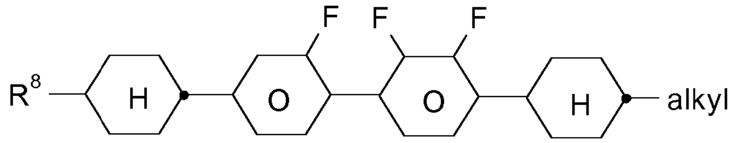

VK2

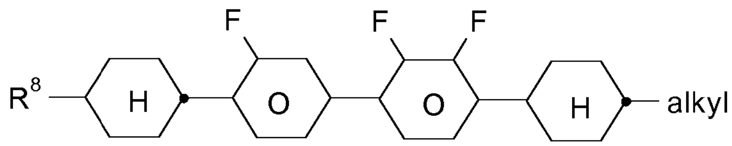

VK3

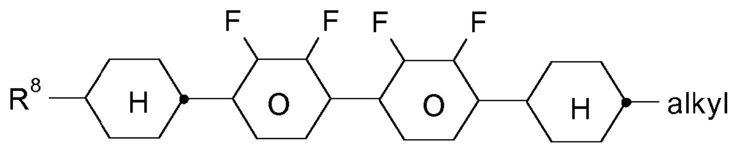

VK4

in which $R^8$ has the meaning indicated for $R^1$, and alkyl denotes a straight-chain alkyl radical having 1-6 C atoms.

m) The LC medium or LC host mixture comprises one or more compounds which contain a tetrahydronaphthyl or naphthyl unit, such as, for example, the compounds selected from the group consisting of the following formulae:

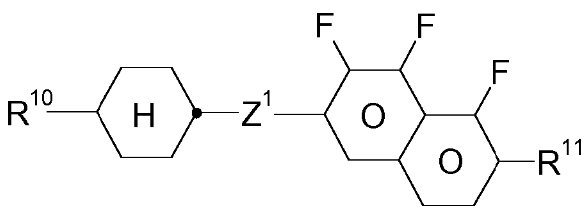

N1

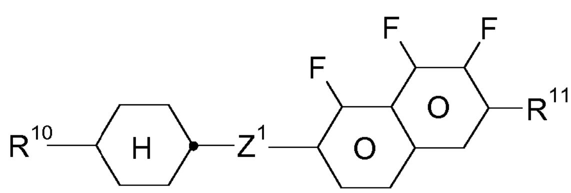

N2

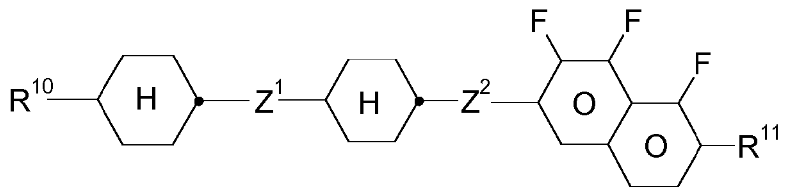

N3

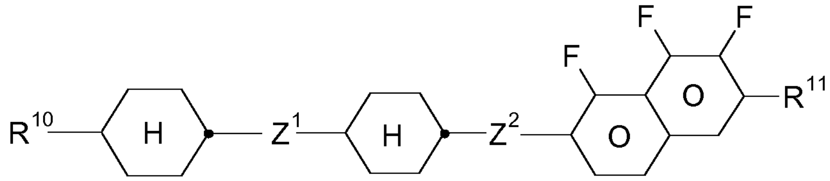

N4

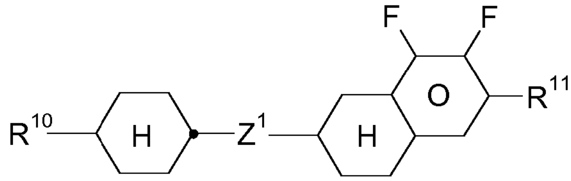

N5

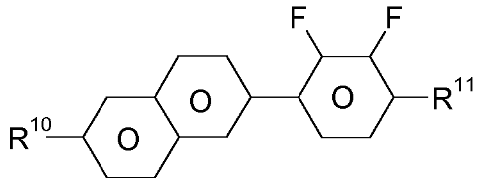

N6

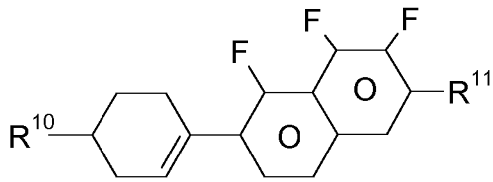

N7

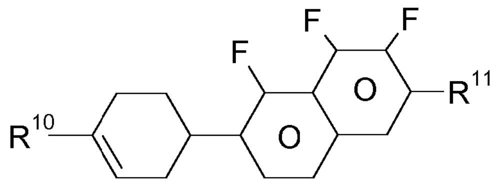

N8

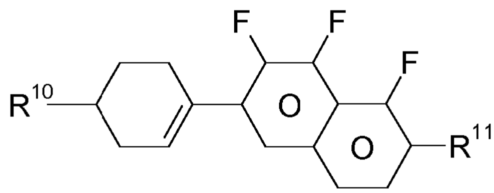

N9

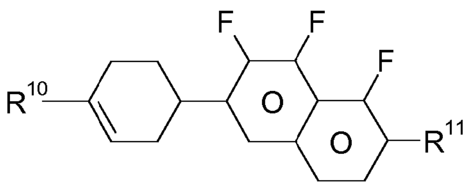

N10

in which

$R^{10}$ and $R^{11}$ each, independently of one another, denote alkyl having 1 to 12 C atoms, where, in addition, one or two non-adjacent $CH_2$ groups may be replaced by -O-, -CH=CH-, -CO-, - OCO- or -COO- in such a way that O atoms are not linked directly to one another, preferably alkyl or alkoxy having 1 to 6 C atoms,

and $R^{10}$ and $R^{11}$ preferably denote straight-chain alkyl or alkoxy having 1 to 6 C atoms or straight-chain alkenyl having 2 to 6 C atoms, and

$Z^1$ and $Z^2$ each, independently of one another, denote $-C_2H_4-$, - CH=CH-, $-(CH_2)_4-$, $-(CH_2)_3O-$, $-O(CH_2)_3-$, -CH=CH- $CH_2CH_2-$, $-CH_2CH_2CH=CH-$, $-CH_2O-$, $-OCH_2-$, -CO-O-, -O- CO-, $-C_2F_4-$, -CF=CF-, -CF=CH-, -CH=CF-, $-CH_2-$ or a single bond.

n) The LC medium or LC host mixture comprises one or more difluoro-dibenzochromans and/or chromans of the following formulae:

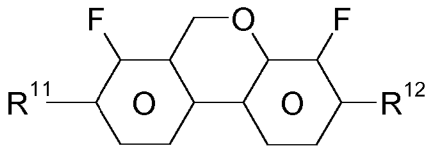

BC

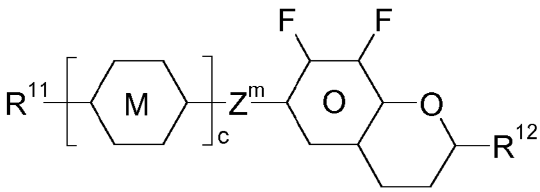

CR

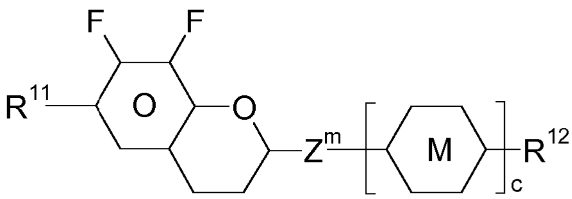

RC

in which

| | |
|---|---|
| $R^{11}$ and $R^{12}$ | each, independently of one another, have one of the meanings indicated above for $R^{11}$, |
| ring M | is trans-1,4-cyclohexylene or 1,4-phenylene, |
| $Z^m$ | $-C_2H_4-$, $-CH_2O-$, $-OCH_2-$, -CO-O- or -O-CO-, |
| c | is 0, 1 or 2, |

preferably in amounts of 3 to 20% by weight, in particular in amounts of 3 to 15% by weight.
Particularly preferred compounds of the formulae BC, CR and RC are selected from the group consisting of the following sub-formulae:

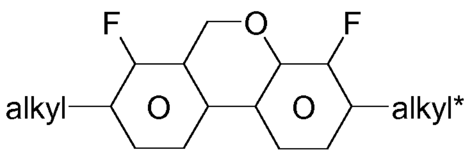

BC1

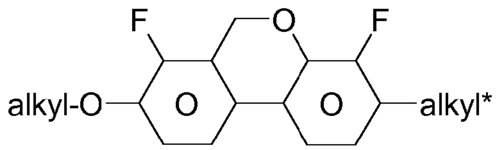

BC2

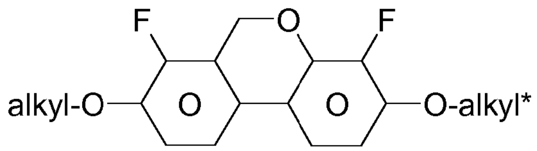

BC3

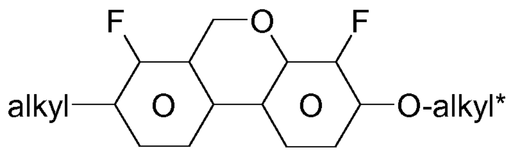

BC4

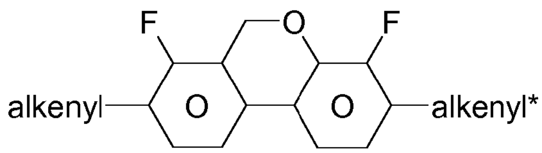

BC5

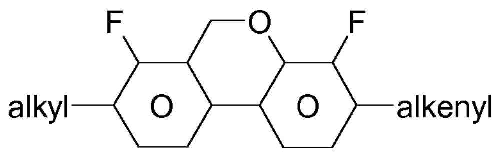

BC6

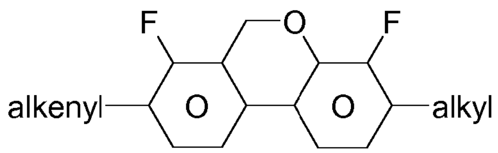

BC7

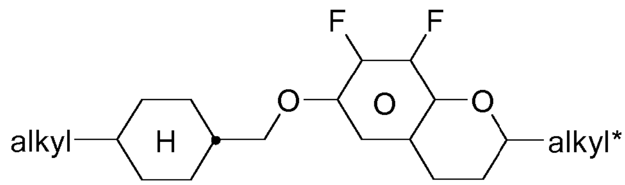

CR1

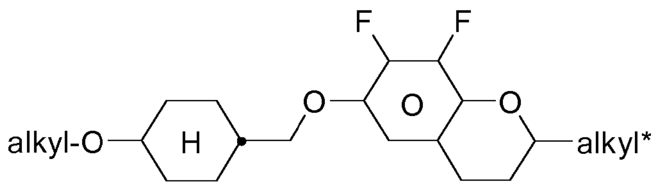

CR2

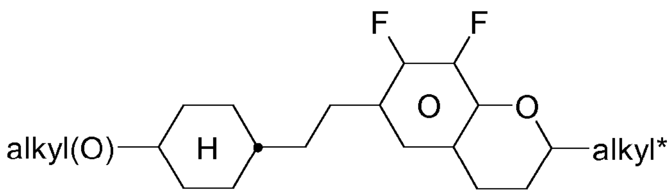

CR3

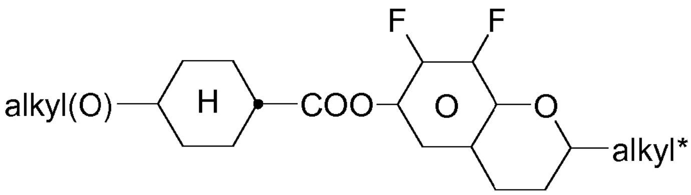

CR4

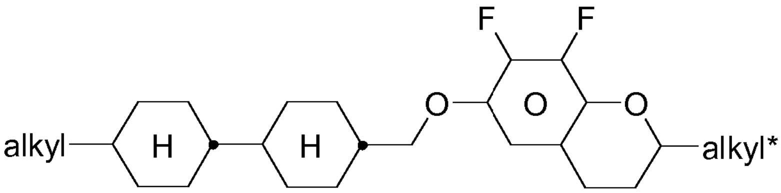

CR5

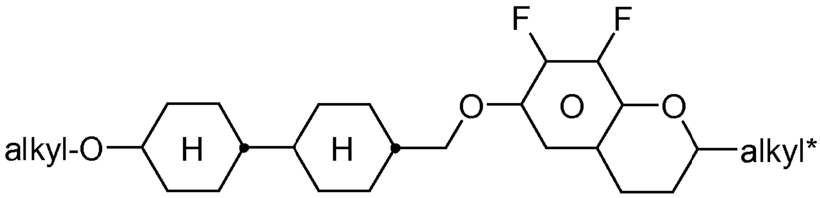

CR6

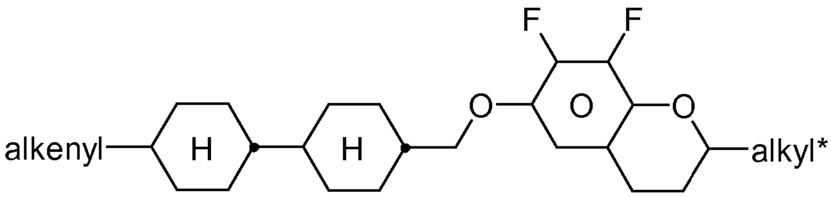

CR7

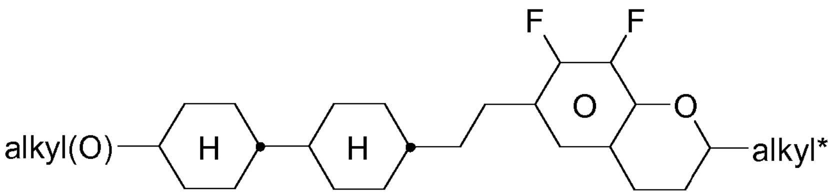

CR8

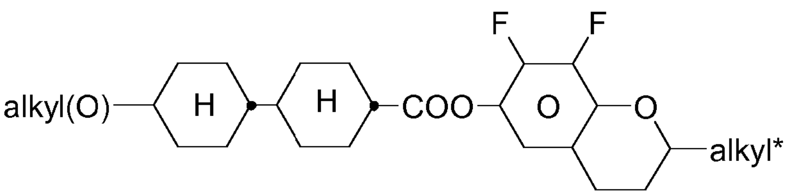

CR9

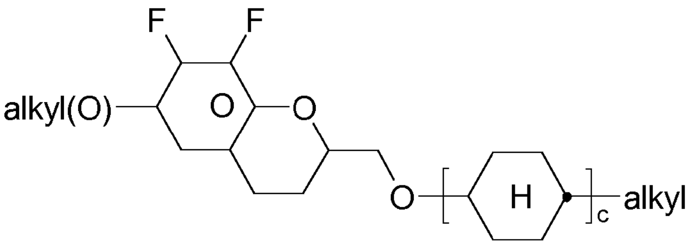

RC1

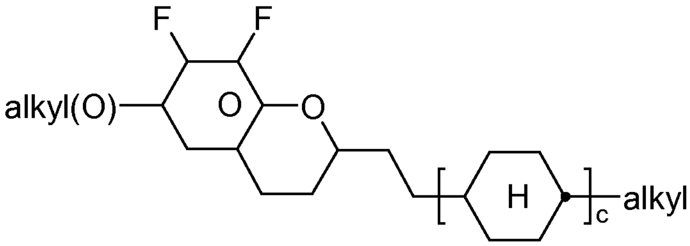

RC2

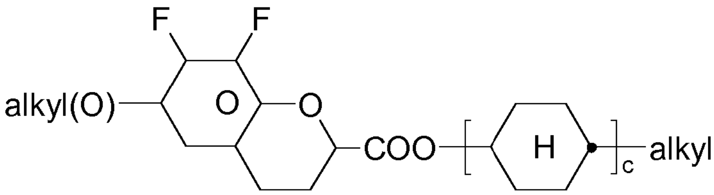

RC3

in which alkyl and alkyl* each, independently of one another, denote a straight-chain alkyl radical having 1-6 C atoms, (O) denotes an oxygen atom or a single bond, c is 1 or 2, and alkenyl and alkenyl* each, independently of one another, denote a straight-chain alkenyl radical having 2-6 C atoms. Alkenyl and alkenyl* preferably denote $CH_2=CH-$, $CH_2=CHCH_2CH_2-$, $CH_3-CH=CH-$, $CH_3-CH_2-CH=CH-$, $CH_3-(CH_2)_2-CH=CH-$, $CH_3-(CH_2)_3-CH=CH-$ or $CH_3-CH=CH-(CH_2)_2-$.
Very particular preference is given to mixtures comprising one, two or three compounds of the formula BC-2.

o) The LC medium or LC host mixture comprises one or more fluorinated phenanthrenes and/or dibenzofurans of the following formulae:

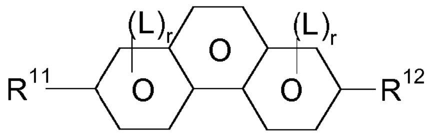

PH

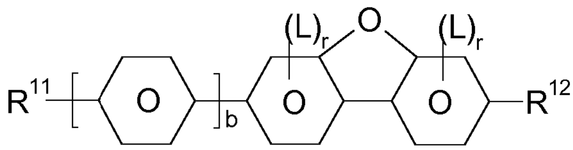

BF

in which $R^{11}$ and $R^{12}$ each, independently of one another, have one of the meanings indicated above for $R^{11}$, b denotes 0 or 1, L denotes F, and r denotes 1, 2 or 3.
Particularly preferred compounds of the formulae PH and BF are selected from the group consisting of the following sub-formulae:

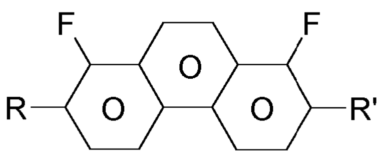

PH1

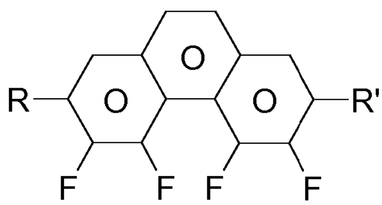

PH2

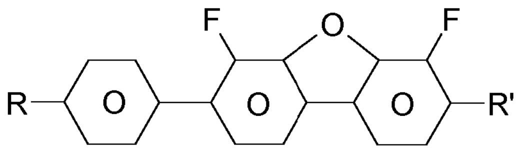

BF1

in which R and R' each, independently of one another, denote a straight-chain alkyl or alkoxy radical having 1-7 C atoms.

p) The LC medium or LC host mixture comprises one or more monocyclic compounds of the following formula

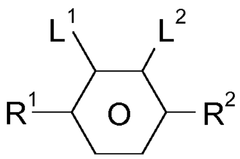

Y

wherein

$R^1$ and $R^2$ each, independently of one another, denote alkyl having 1 to 12 C atoms, where, in addition, one or two non-adjacent $CH_2$ groups may be replaced by -O-, -CH=CH-, -CO-, -OCO- or -COO- in such a way that O atoms are not linked directly to one another, preferably alkyl or alkoxy having 1 to 6 C atoms,

$L^1$ and $L^2$ each, independently of one another, denote F, Cl, $OCF_3$, $CF_3$, $CH_3$, $CH_2F$, $CHF_2$.

Preferably, both $L^1$ and $L^2$ denote F or one of $L^1$ and $L^2$ denotes F and the other denotes Cl,
The compounds of the formula Y are preferably selected from the group consisting of the following sub-formulae:

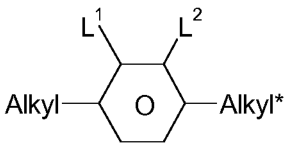

Y1

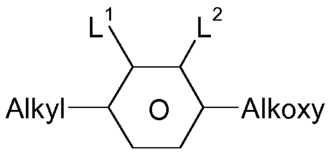

Y2

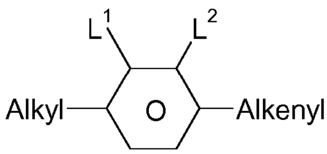

Y3

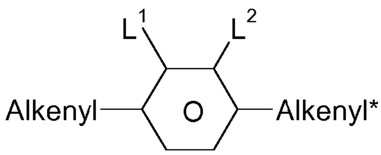

Y4

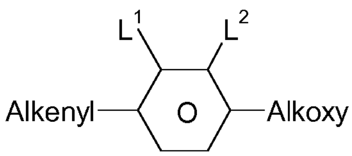

Y5

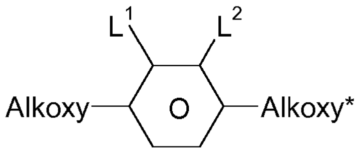

Y6

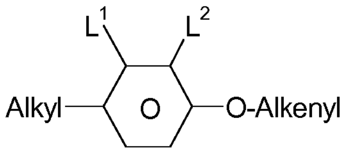

Y7

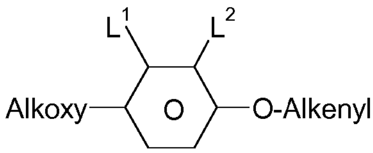

Y8

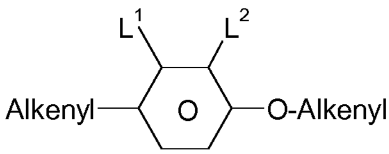

Y9

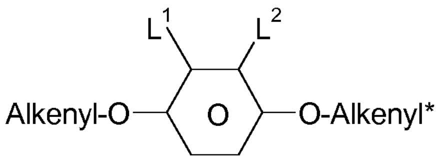

Y10

in which, Alkyl and Alkyl* each, independently of one another, denote a straight-chain alkyl radical having 1-6 C atoms, Alkoxy denotes a straight-chain alkoxy radical having 1-6 C atoms, and Alkenyl and Alkenyl* each, independently of one another, denote a straight-chain alkenyl radical having 2-6 C atoms. Alkenyl and Alkenyl* preferably denote $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- or $CH_3$-CH=CH-$(CH_2)_2$-.

Particularly preferred compounds of the formula Y are selected from the group consisting of the following sub-formulae:

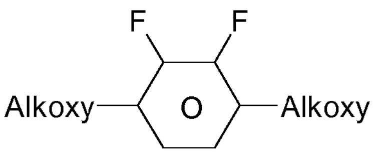

Y6A

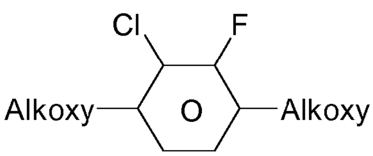

Y6B

wherein Alkoxy preferably denotes straight-chain alkoxy with 3, 4, or 5 C atoms.

q) The LC medium does not contain a compound which contains a terminal vinyloxy group (-O-CH=$CH_2$).

r) The LC medium comprises 1 to 5, preferably 1, 2 or 3, polymerisable compounds, preferably selected from formula I or sub-formulae thereof.

s) In the LC medium the proportion of polymerisable compounds, in particular of formula I or sub-formulae thereof, in the mixture as a whole is 0.05 to 5%, preferably 0.1 to 1%.

t) The LC medium comprises 1 to 8, preferably 1 to 5, compounds of the formulae CY1, CY2, PY1 and/or PY2. The proportion of these compounds in the mixture as a whole is preferably 5 to 60%, particularly preferably 10 to 35%. The content of these individual compounds is preferably in each case 2 to 20%.

u) The LC medium comprises 1 to 8, preferably 1 to 5, compounds of the formulae CY9, CY10, PY9 and/or PY10. The proportion of these compounds in the mixture as a whole is preferably 5 to 60%, particularly preferably 10 to 35%. The content of these individual compounds is preferably in each case 2 to 20%.

v) The LC medium comprises 1 to 10, preferably 1 to 8, compounds of the formula ZK, in particular compounds of the formulae ZK1, ZK2 and/or ZK6. The proportion of these compounds in the mixture as a whole is preferably 3 to 25%, particularly preferably 5 to 45%. The content of these individual compounds is preferably in each case 2 to 20%.

w) In the LC medium the proportion of compounds of formulae CY, PY and ZK in the mixture as a whole is greater than 70%, preferably greater than 80%.

x) The LC medium or LC host mixture contains one or more compounds containing an alkenyl group, preferably selected from the group consisting of formula CY, PY and DY, wherein one or both of $R^1$ and $R^2$ denote straight-chain alkenyl having 2-6 C atoms, formula ZK and DK, wherein one or both of $R^3$ and $R^4$ or one or both of $R^5$ and $R^6$ denote straight-chain alkenyl having 2-6 C atoms, and formula B2 and B3, very preferably selected from formulae CY15, CY16, CY24, CY32, PY15, PY16, ZK3, ZK4, DK3, DK6, B2 and B3. The concentration of these compounds in the LC host mixture is preferably from 2 to 70%, very preferably from 3 to 55%.

y) The LC medium contains one or more, preferably 1 to 5, compounds selected of formula PY1-PY8, very preferably of formula PY2. The proportion of these compounds in the mixture as a whole is preferably 1 to 30%, particularly preferably 2 to 20%. The content of these individual compounds is preferably in each case 1 to 20%.

The combination of compounds of the preferred embodiments mentioned above with the polymerised compounds described above causes low threshold voltages, low rotational viscosities and very good low-temperature stabilities in the LC media according to the invention at the same time as constantly high clearing points and high HR values, and allows the rapid establishment of a particularly low pretilt angle in PSA displays. In particular, the LC media exhibit significantly shortened response times, in particular also the grey-shade response times, in PSA displays compared with the media from the prior art.

The LC media and LC host mixtures according to the invention, while retaining the nematic phase down to -20°C and preferably down to -30°C, particularly preferably down to -40°C, and the clearing point ≥ 70°C, preferably ≥ 74°C, at the same time allow rotational viscosities $\gamma_1$ of ≤ 120 mPa·s, preferably ≤ 110 mPa·s to be achieved, enabling excellent MLC displays having fast response times to be achieved.

The LC media and LC host mixtures of the present invention preferably have a nematic phase range of at least 80 K, particularly preferably at least 100 K, and a rotational viscosity ≤ 130 mPa·s, preferably ≤ 110 mPa·s, at 20°C.

In the VA-type displays according to the invention, the molecules in the layer of the LC medium in the switched-off state are aligned perpendicular to the electrode surfaces (homeotropically) or have a a tilted homeotropic alignment. On application of an electrical voltage to the electrodes, a realignment of the LC molecules takes place with the longitudinal molecular axes parallel to the electrode surfaces.

The LC media according to the invention, in particular for use in displays of the PS-VA and PS-UB-FFS type, preferably have a negative dielectric anisotropy $\Delta\varepsilon$, very preferably from -0.5 to -10, most preferably from -2.5 to -7.5, at 20°C and 1 kHz.

The birefringence $\Delta n$ in LC media according to the invention, in particular for use in displays of the PS-VA and PS-UB-FFS type is preferably below 0.16, very preferably from 0.06 to 0.14, most preferably from 0.07 to 0,12.

In order to increase the anchoring force, polymerisable compounds, so-called "reactive mesogens", may also additionally be added to the mixtures according to the invention. Preferred polymerisable compounds are listed in Table D.

The LC media according to the invention may also comprise further additives which are known to the person skilled in the art and are described in the literature, such as, for example, polymerisation initiators, inhibitors, stabilisers, surface-active substances or chiral dopants. These additives may be polymerisable or non-polymerisable. Polymerisable additives are accordingly ascribed to the polymerisable component or component A). Non-polymerisable additives are accordingly ascribed to the non-polymerisable component or component B).

The LC media according to the present invention may, for example, also comprise one or more UV stabilisers,

such as Tinuvin® from Ciba Chemicals, in particular Tinuvin® 770, antioxidants, free-radical scavengers, nanoparticles, etc. Suitable stabilisers are mentioned below in Tables C.

The LC media according to the present invention may, for example, also comprise one or more chiral dopants, preferably in a concentration from 0.01 to 1%, very preferably from 0.05 to 0.5%. Suitable chiral dopants are mentioned below in Table B. Preferred chiral dopants are for example selected from R- or S-1011, R- or S-2011, R- or S-3011, R- or S-4011, or R- or S-5011.

In another preferred embodiment the LC media contain a racemate of one or more chiral dopants, which are preferably selected from the chiral dopants mentioned in the previous paragraph.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The individual components of the preferred embodiments a)-y) of the LC media according to the invention are either known or methods for the preparation thereof can readily be derived from the prior art by the person skilled in the relevant art, since they are based on standard methods described in the literature. Compounds of the formula CY are described, for example, in EP-A-0 364 538. Compounds of the formula ZK are described, for example, in DE-A-26 36 684 and DE-A-33 21 373.

It goes without saying to the person skilled in the art that the LC media according to the invention may also comprise compounds in which, for example, H, N, O, Cl, F have been replaced by the corresponding isotopes like deuterium etc.

The LC media which can be used in accordance with the invention are prepared in a manner conventional per se, for example by mixing one or more compounds of the formula B and CLY with one or more compounds of the above-mentioned preferred embodiments and/or with further liquid-crystalline compounds and/or additives, like polymerisable compounds or RMs. In general, the desired amount of the components used in the smaller amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing.

It goes without saying that, through a suitable choice of the components of the LC mixtures according to the invention, it is also possible for higher clearing points (for example above 100°C) to be achieved at higher threshold voltages or lower clearing points to be achieved at lower threshold voltages with retention of the other advantageous properties. At viscosities correspondingly increased only slightly, it is likewise possible to obtain mixtures having higher $\Delta\varepsilon$ and thus low thresholds. The MLC displays according to the invention preferably operate at the first Gooch and Tarry transmission minimum [C.H. Gooch and H.A. Tarry, Electron. Lett. 10, 2-4, 1974; C.H. Gooch and H.A. Tarry, Appl. Phys., Vol. 8, 1575-1584, 1975], where, besides particularly favourable electro-optical properties, such as, for example, high steepness of the characteristic line and low angle dependence of the contrast (German patent 30 22 818), lower dielectric anisotropy is sufficient at the same threshold voltage as in an analogous display at the second minimum. This enables significantly higher specific resistance values to be achieved using the mixtures according to the invention at the first minimum than in the case of mixtures comprising cyano compounds. Through a suitable choice of the individual components and their proportions by weight, the person skilled in the art is able to set the birefringence necessary for a pre-specified layer thickness of the MLC display using simple routine methods.

The construction of an LC display according to the invention from polarisers, electrode base plates and surface-treated electrodes corresponds to the usual design for displays of this type. The term usual design is broadly drawn here and also encompasses all derivatives and modifications of the LC display, in particular including matrix display elements based on poly-Si TFTs or MIM.

The following examples are intended to explain the invention without limiting it. Above and below, percentage data denote per cent by weight; all temperatures are indicated in degrees Celsius.

Throughout the patent application and in the working examples, the structures of the liquid-crystal compounds are indicated by means of acronyms. Unless indicated otherwise, the transformation into chemical formulae takes place in accordance with Tables I-III. All radicals $C_nH_{2n+1}$, $C_mH_{2m+1}$, $C_nH_{2n}$, $C_mH_{2m}$ and $C_kH_{2k}$ are straight-chain alkyl radicals or alkenyl radicals respectively, in each case having n, m or k C atoms; n and m each, independently of one another, denote 1, 2, 3, 4, 5, 6, 7, 8, 9, 10, 11 or 12, preferably 1, 2, 3, 4, 5 or 6, and k is 0, 1, 2, 3, 4, 5 or 6. In Table I the ring elements of the respective compound are coded, in Table II the bridging members are listed and in Table III the meanings of the symbols for the left-hand and right-hand side chains of the compounds are indicated.

Table I: Ring elements

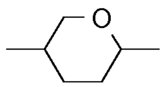

A

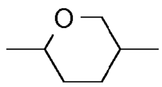

AI

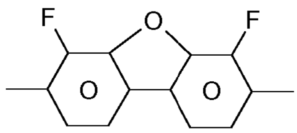

B

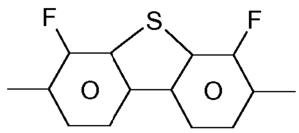

B(S)

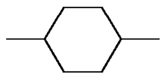

C

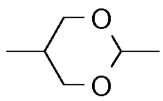

D

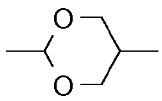

DI

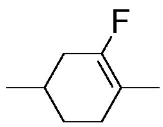

F

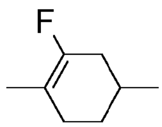

FI

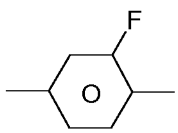

G

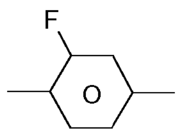

GI

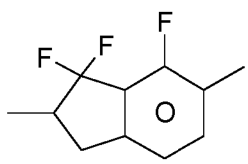

K

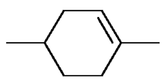

L

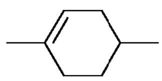

LI

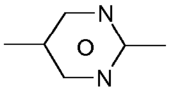
**M**

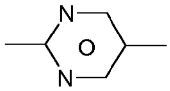
**MI**

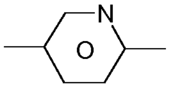
**N**

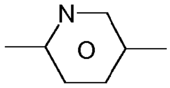
**NI**

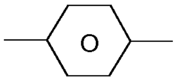
**P**

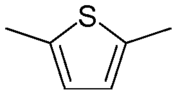
**S**

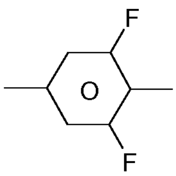
**U**

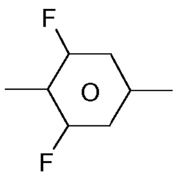
**UI**

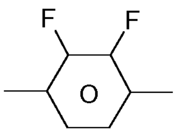
**Y**

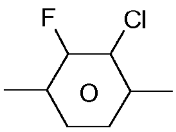
**Y(F,Cl)**

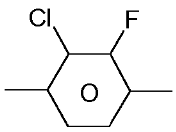
**Y(Cl,F)**

Table II: Bridging members

| | | | |
|---|---|---|---|
| **E** | $-CH_2CH_2-$ | | |
| **V** | -CH=CH- | | |
| **T** | -C≡C- | | |
| **W** | $-CF_2CF_2-$ | | |
| **Z** | -COO- | **ZI** | -OCO- |
| **O** | $-CH_2O-$ | **OI** | $-OCH_2-$ |
| **Q** | $-CF_2O-$ | **QI** | $-OCF_2-$ |

Table III: Side chains

| Left-hand side chain | | Right-hand side chain | |
|---|---|---|---|
| **n-** | $C_nH_{2n+1}$- | **-n** | -$C_nH_{2n+1}$ |
| **nO-** | $C_nH_{2n+1}$-O- | **-On** | -O-$C_nH_{2n+1}$ |
| **V-** | $CH_2$=CH- | **-V** | -CH=$CH_2$ |
| **nV-** | $C_nH_{2n+1}$-CH=CH- | **-nV** | -$C_nH_{2n}$-CH=$CH_2$ |
| **Vn-** | $CH_2$=CH-$C_nH_{2n}$- | **-Vn** | -CH=CH-$C_nH_{2n+1}$ |
| **nVm-** | $C_nH_{2n+1}$-CH=CH-$C_mH_{2m}$- | **-nVm** | - $C_nH_{2n}$-CH=CH-$C_mH_{2m+1}$ |
| **N-** | N≡C- | **-N** | -C≡N |
| **F-** | F- | **-F** | -F |
| **Cl-** | Cl- | **-Cl** | -Cl |
| **M-** | $CFH_2$- | **-M** | -$CFH_2$ |
| **D-** | $CF_2H$- | **-D** | -$CF_2H$ |
| **T-** | $CF_3$- | **-T** | -$CF_3$ |
| **MO-** | $CFH_2O$- | **-OM** | -$OCFH_2$ |
| **DO-** | $CF_2HO$- | **-OD** | -$OCF_2H$ |
| **TO-** | $CF_3O$- | **-OT** | -$OCF_3$ |
| **T-** | $CF_3$- | **-T** | -$CF_3$ |
| **A-** | H-C≡C- | **-A** | -C≡C-H |
| **FXO-** | $CF_2$=CHO- | **-OXF** | -OCH=$CF_2$ |

Preferred mixture components are shown in Table A.

**Table A**

In the formulae below m and n are independently of each other an integer from 1 to 12, preferably 1, 2, 3, 4, 5 or 6, k is 0, 1, 2, 3, 4, 5 or 6, and (O)$C_mH_{2m+1}$ means $C_mH_{2m+1}$ or $OC_mH_{2m+1}$.

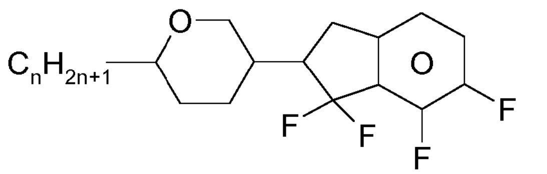

**AIK-n-F**

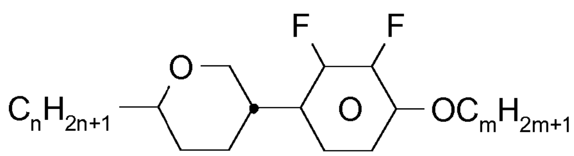

**AIY-n-Om**

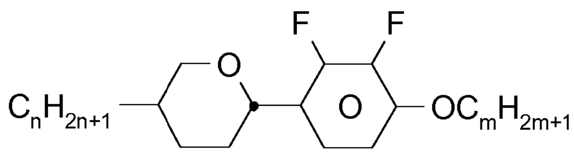

**AY-n-Om**

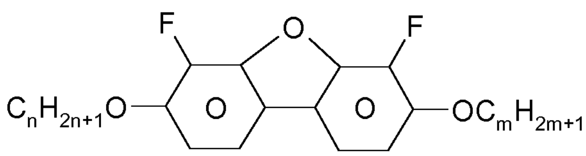

**B-nO-Om**

(continued)

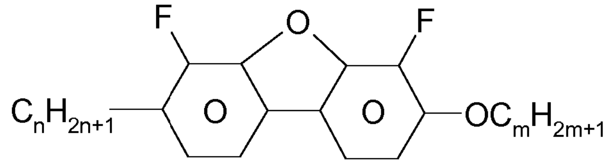

**B-n-Om**

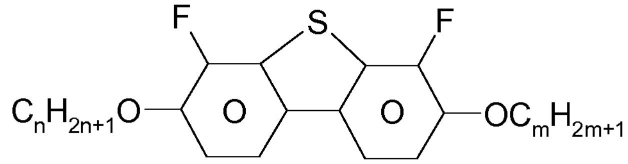

**B(S)-nO-Om**

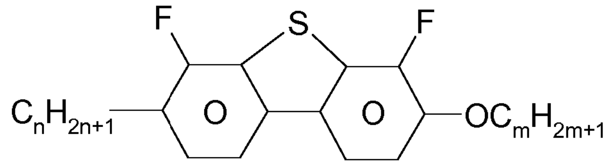

**B(S)-n-Om**

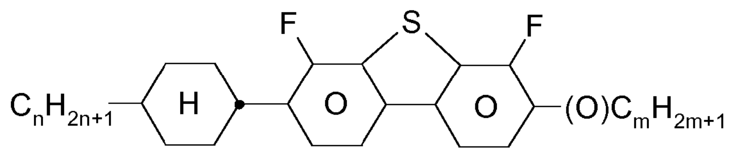

**CB(S)-n-(O)m**

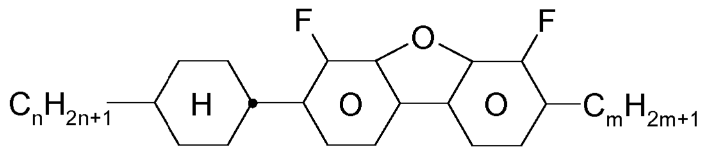

**CB-n-m**

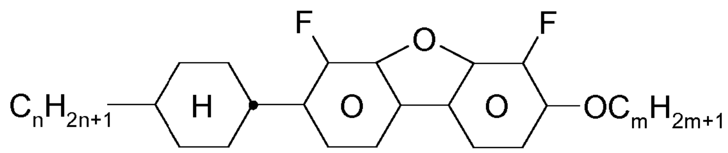

**CB-n-Om**

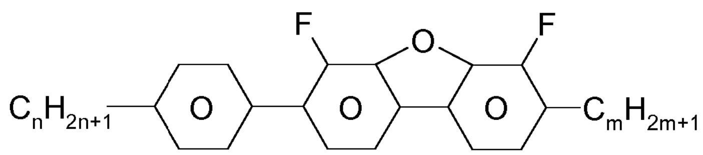

**PB-n-m**

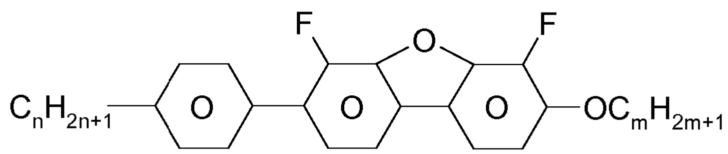

**PB-n-Om**

(continued)

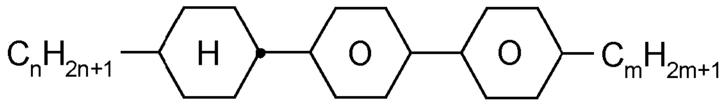

**BCH-nm**

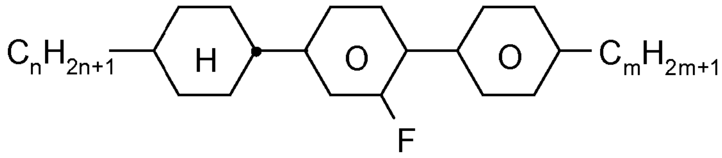

**BCH-nmF**

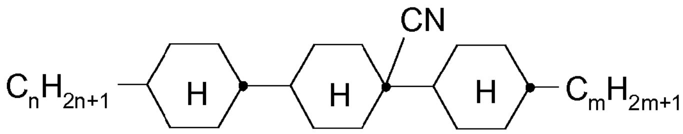

**BCN-nm**

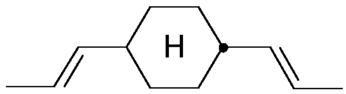

**C-1V-V1**

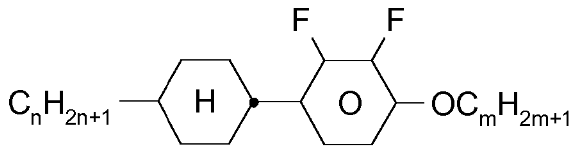

**CY-n-Om**

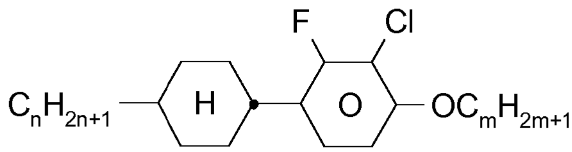

**CY(F,Cl)-n-Om**

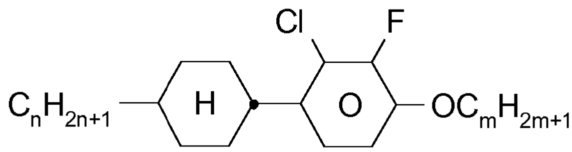

**CY(Cl,F)-n-Om**

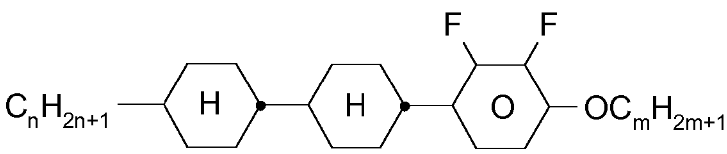

**CCY-n-Om**

(continued)

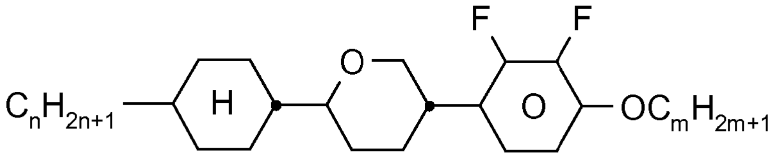

**CAIY-n-Om**

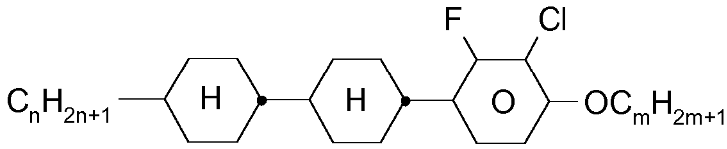

**CCY(F,Cl)-n-Om**

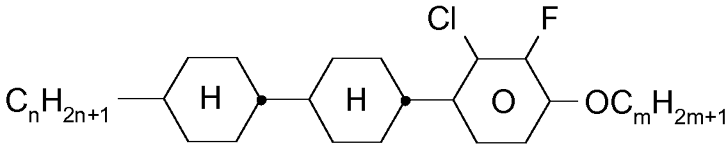

**CCY(Cl,F)-n-Om**

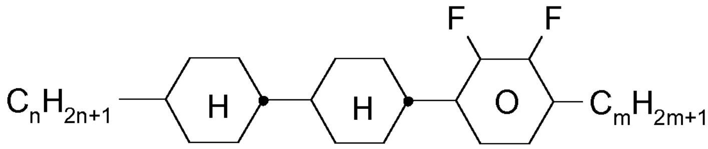

**CCY-n-m**

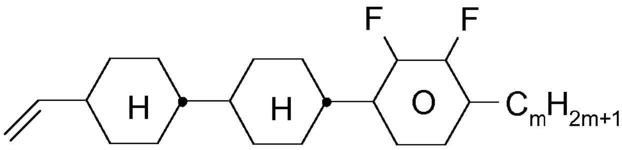

**CCY-V-m**

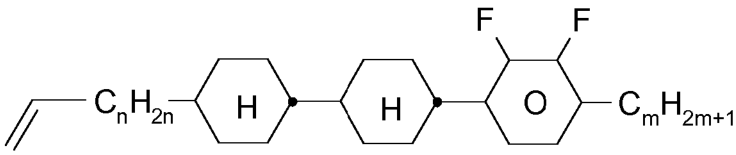

**CCY-Vn-m**

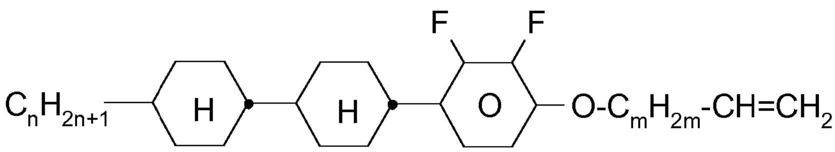

**CCY-n-OmV**

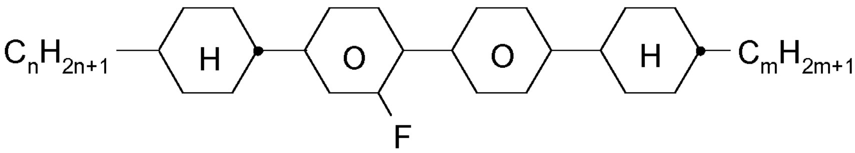

**CBC-nmF**

(continued)

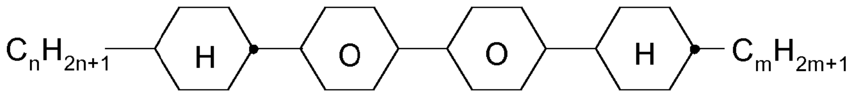

**CBC-nm**

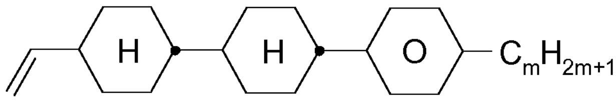

**CCP-V-m**

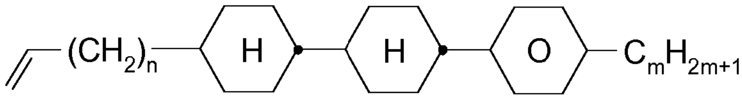

**CCP-Vn-m**

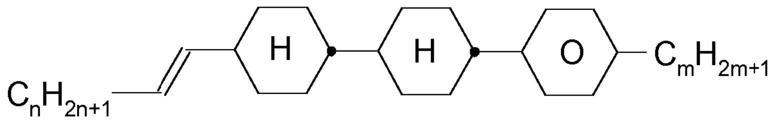

**CCP-nV-m**

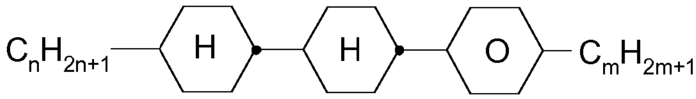

**CCP-n-m**

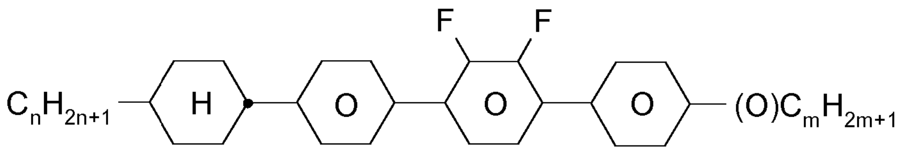

**CPYP-n-(O)m**

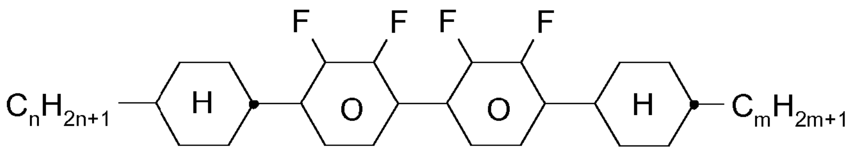

**CYYC-n-m**

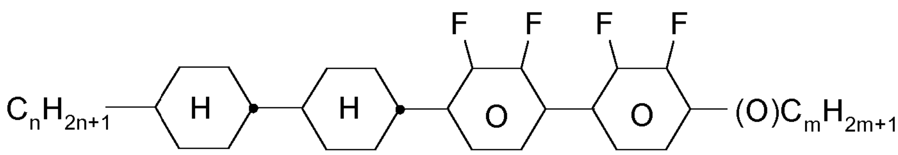

**CCYY-n-(O)m**

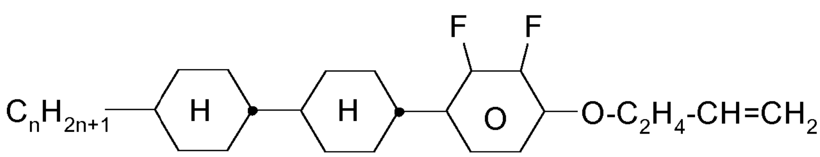

(continued)

**CCY-n-O2V**

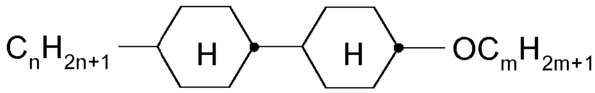

**CCH-nOm, CC-n-Om**

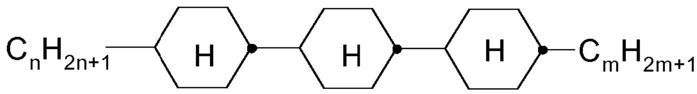

**CCC-n-m**

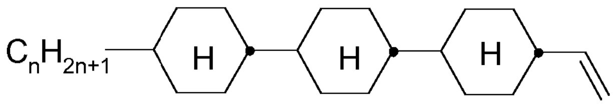

**CCC-n-V**

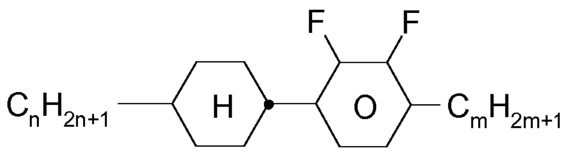

**CY-n-m**

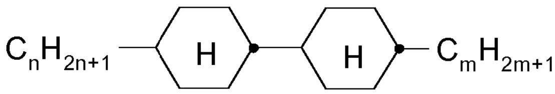

**CCH-nm, CC-n-m**

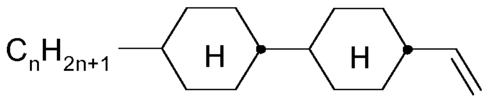

**CC-n-V**

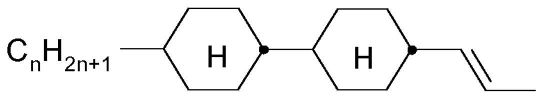

**CC-n-V1**

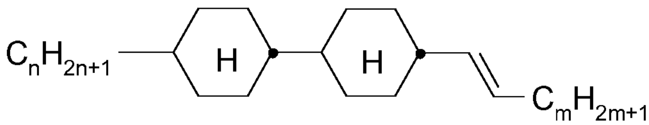

**CC-n-Vm**

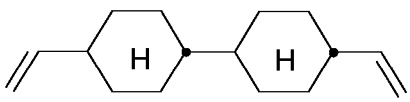

**CC-V-V**

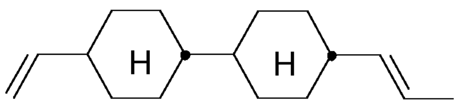

**CC-V-V1**

(continued)

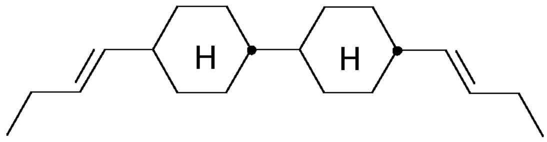

**CC-2V-V2**

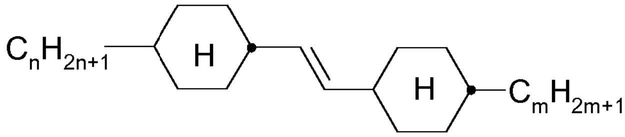

**CVC-n-m**

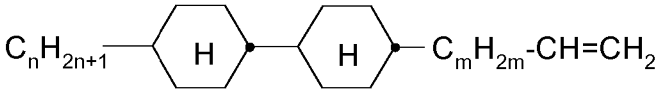

**CC-n-mV**

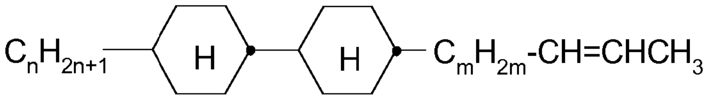

**CC-n-mV1**

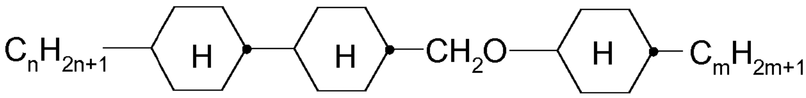

**CCOC-n-m**

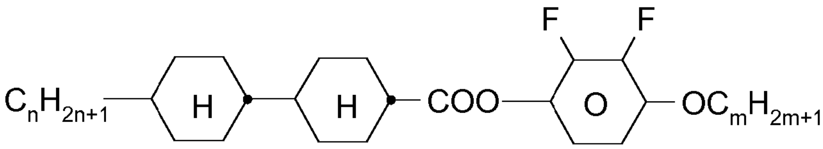

**CP-nOmFF**

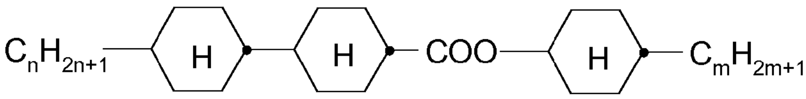

**CH-nm**

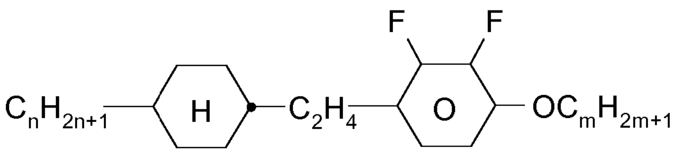

**CEY-n-Om**

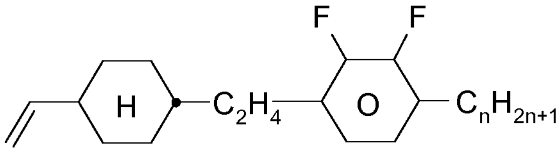

**CEY-V-n**

(continued)

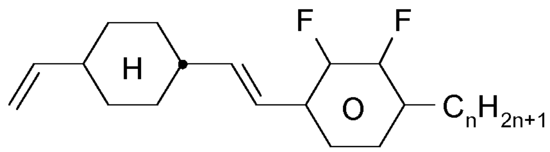

**CVY-V-n**

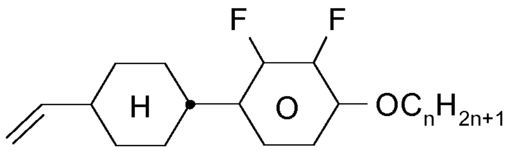

**CY-V-On**

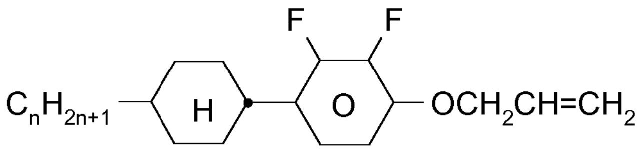

**CY-n-O1V**

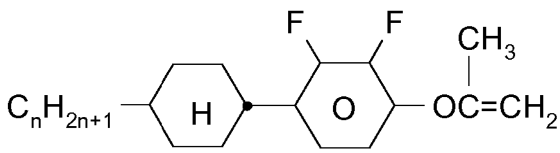

**CY-n-OC($CH_3$)=$CH_2$**

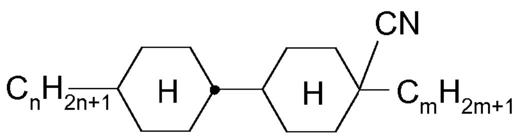

**CCN-nm**

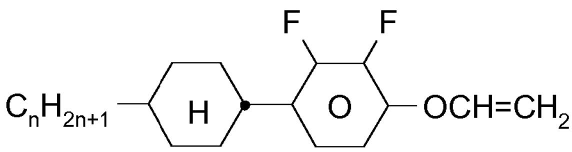

**CY-n-OV**

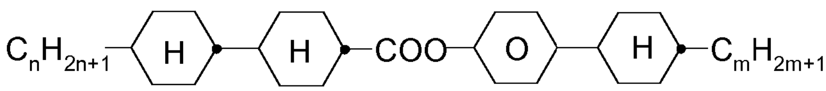

**CCPC-nm**

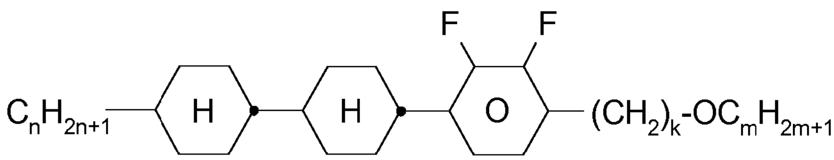

**CCY-n-kOm**

(continued)

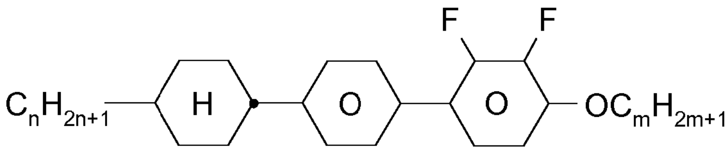

**CPY-n-Om**

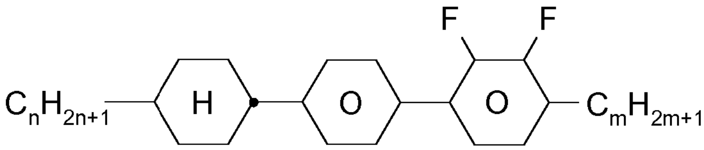

**CPY-n-m**

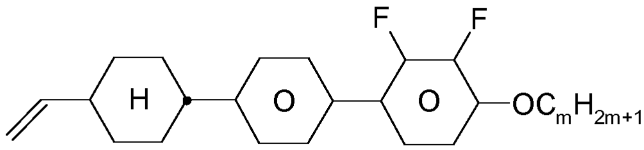

**CPY-V-Om**

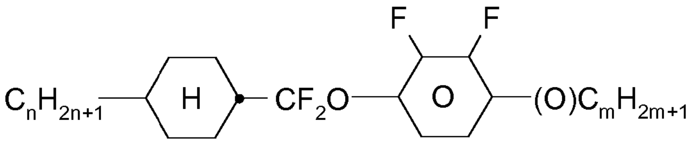

**CQY-n-(O)m**

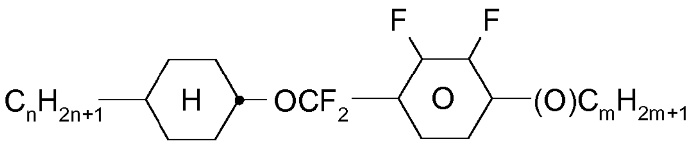

**CQIY-n-(O)m**

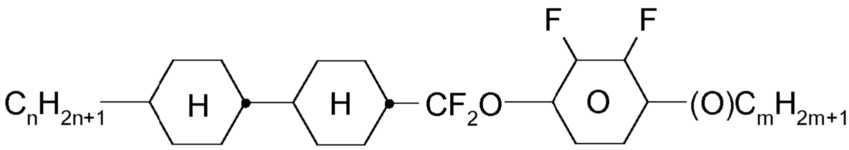

**CCQY-n-(O)m**

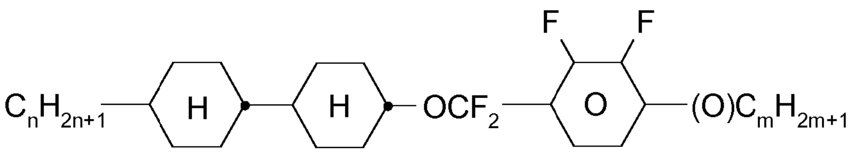

**CCQIY-n-(O)m**

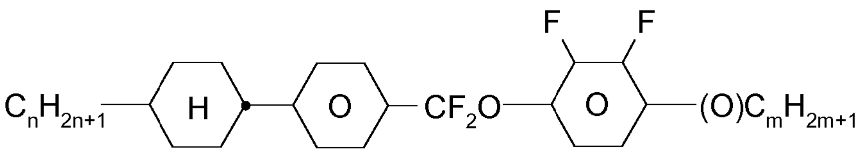

**CPQY-n-(O)m**

(continued)

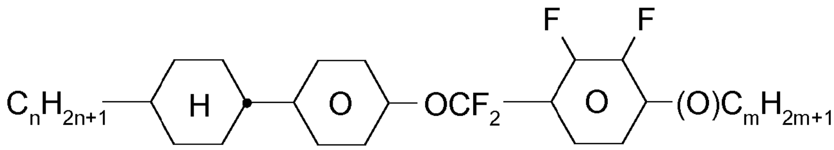

**CPQIY-n-(O)m**

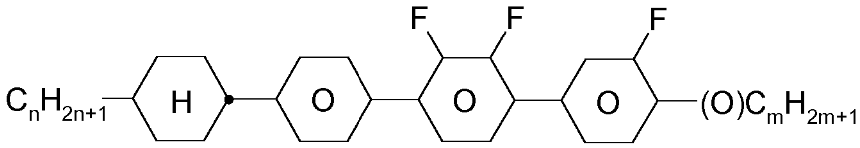

**CPYG-n-(O)m**

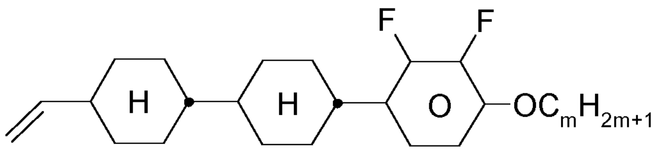

**CCY-V-Om**

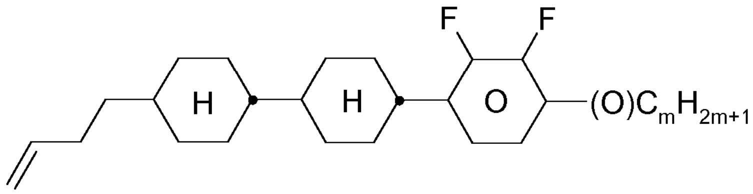

**CCY-V2-(O)m**

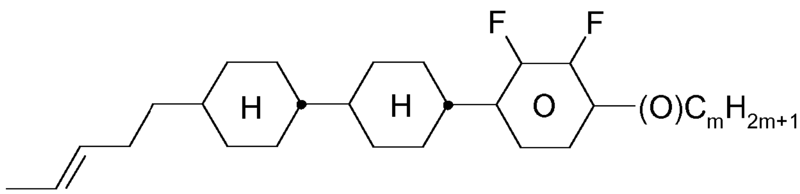

**CCY-1V2-(O)m**

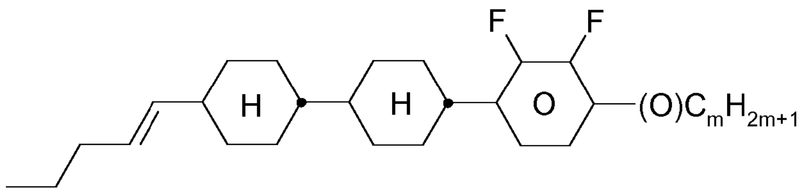

**CCY-3V-(O)m**

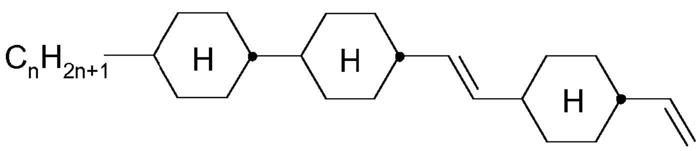

**CCVC-n-V**

(continued)

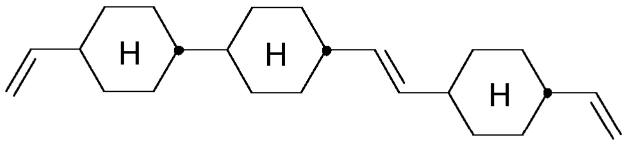

**CCVC-V-V**

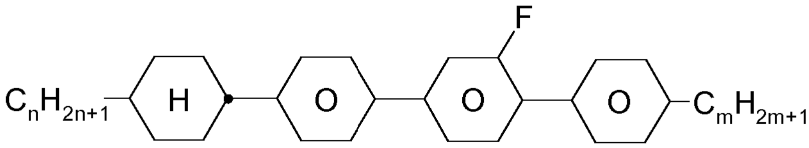

**CPGP-n-m**

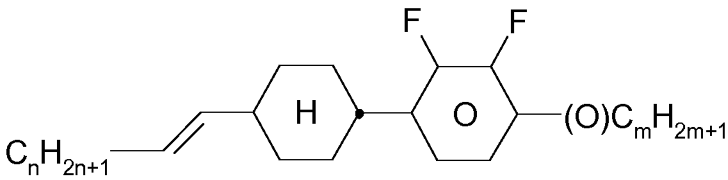

**CY-nV-(O)m**

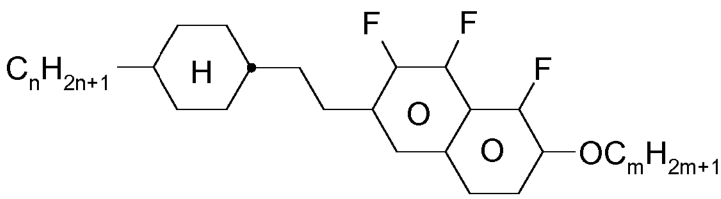

**CENaph-n-Om**

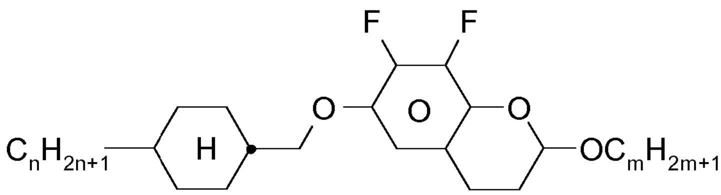

**COChrom-n-Om**

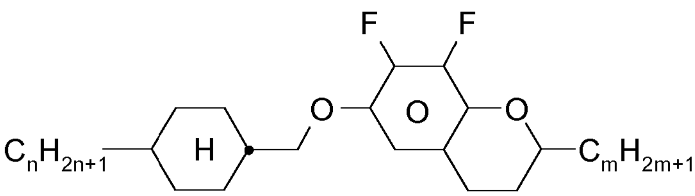

**COChrom-n-m**

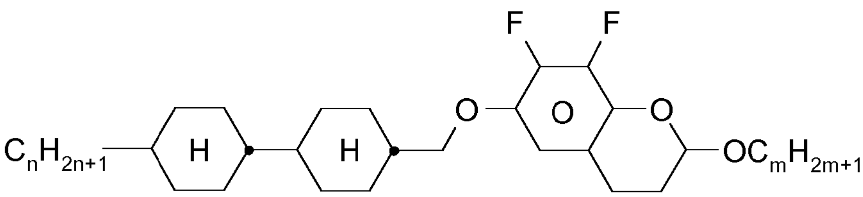

**CCOChrom-n-Om**

(continued)

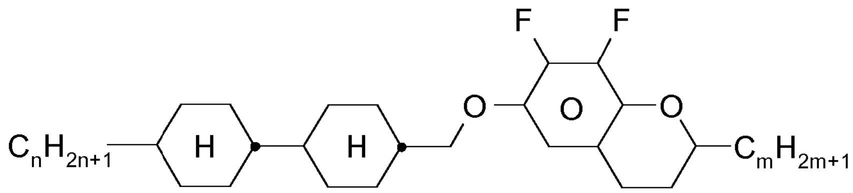

**CCOChrom-n-m**

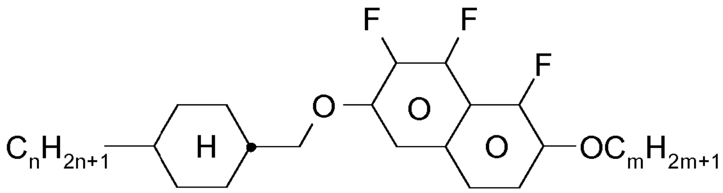

**CONaph-n-Om**

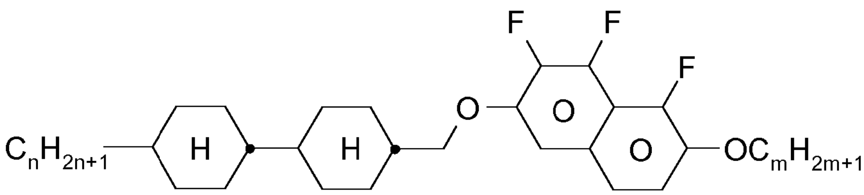

**CCONaph-n-Om**

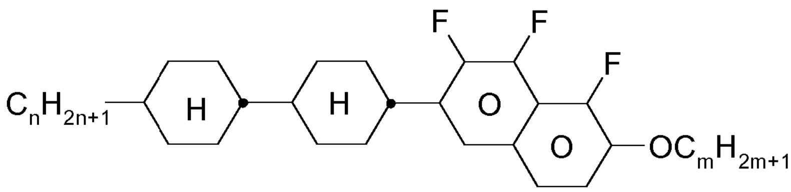

**CCNaph-n-Om**

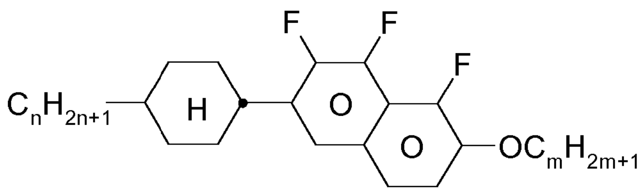

**CNaph-n-Om**

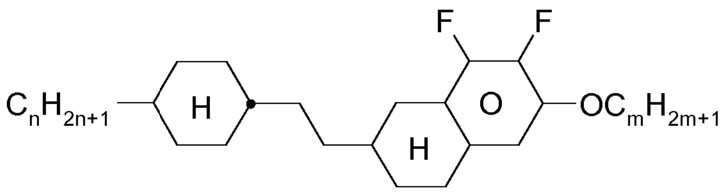

**CETNaph-n-Om**

(continued)

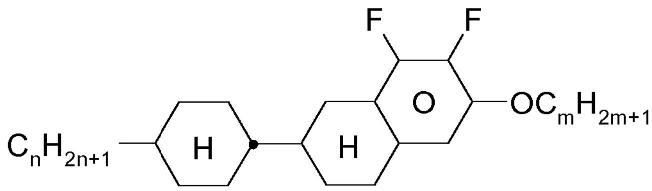

**CTNaph-n-Om**

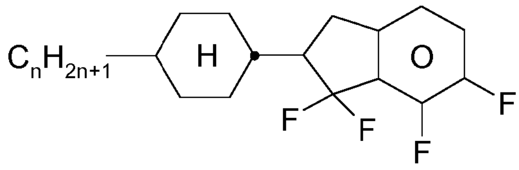

**CK-n-F**

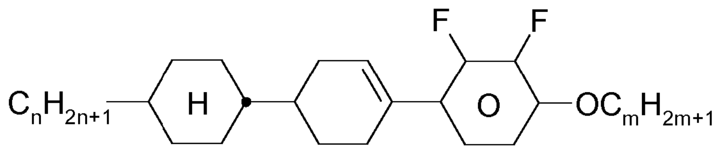

**CLY-n-Om**

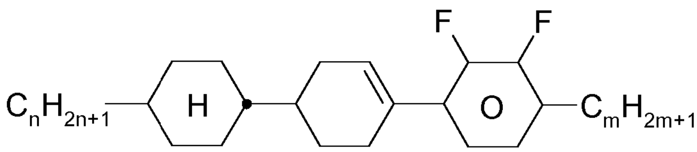

**CLY-n-m**

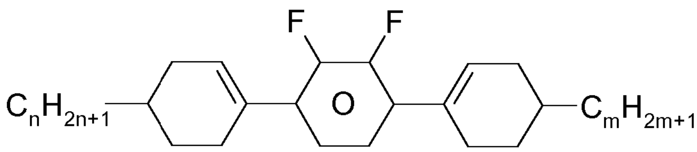

**LYLI-n-m**

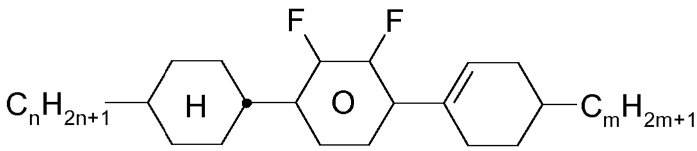

**CYLI-n-m**

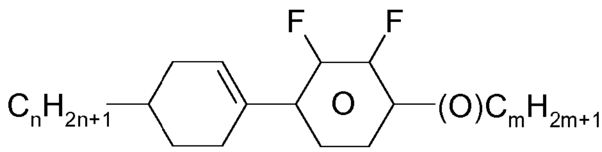

**LY-n-(O)m**

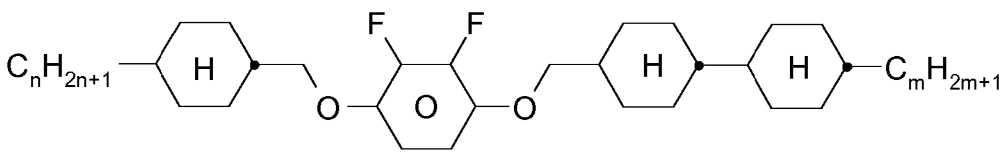

**COYOICC-n-m**

(continued)

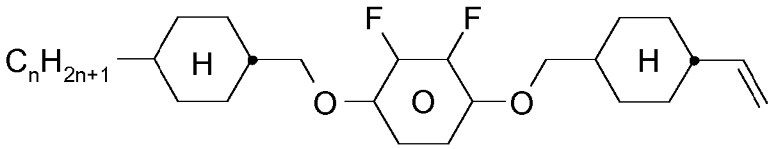

**COYOIC-n-V**

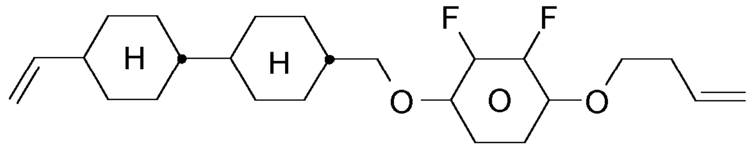

**CCOY-V-O2V**

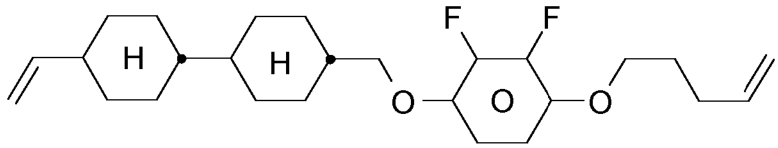

**CCOY-V-O3V**

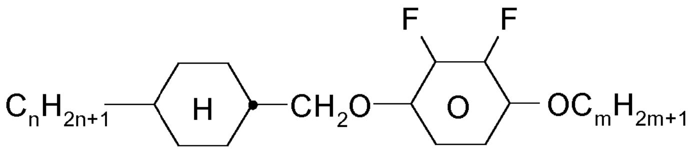

**COY-n-Om**

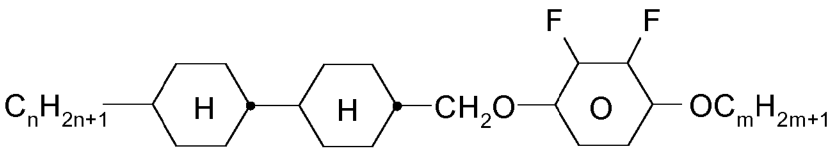

**CCOY-n-Om**

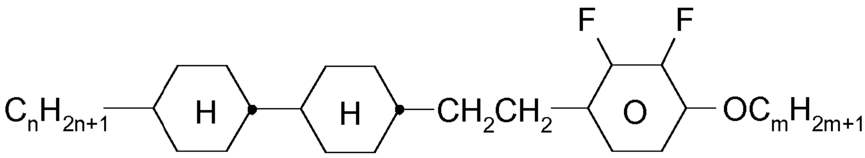

**CCEY-n-Om**

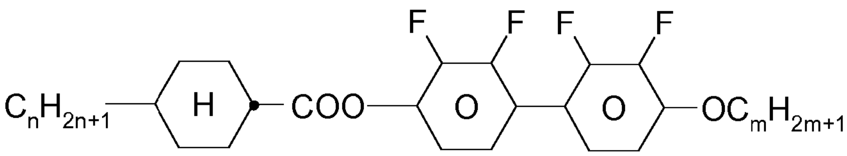

**CZYY-n-Om**

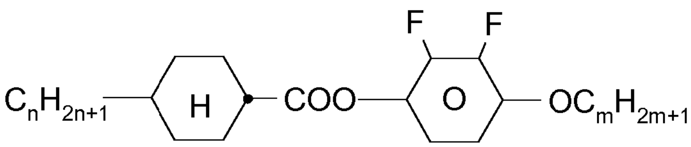

**D-nOmFF**

(continued)

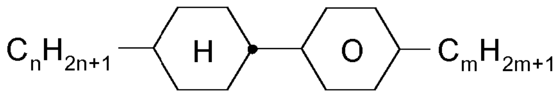

**PCH-nm, CP-n-m**

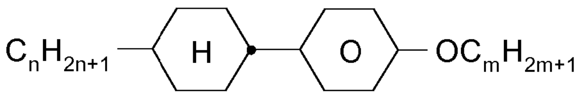

**PCH-nOm, CP-n-Om**

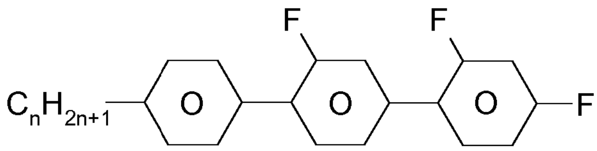

**PGIGI-n-F**

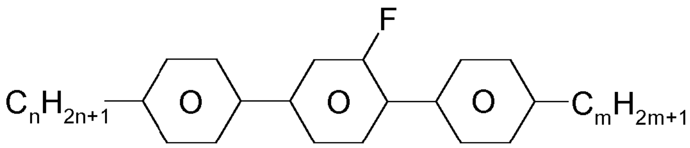

**PGP-n-m**

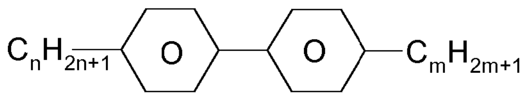

**PP-n-m**

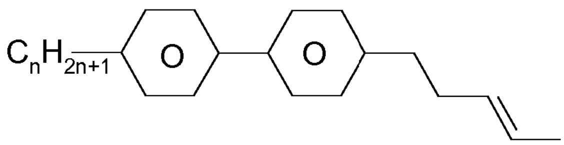

**PP-n-2V1**

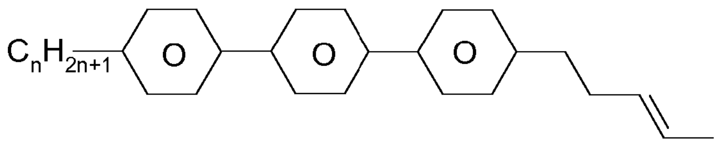

**PPP-n-2V1**

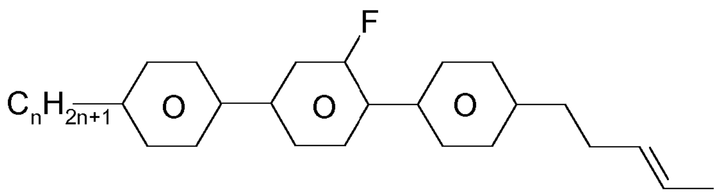

**PGP-n-2V1**

(continued)

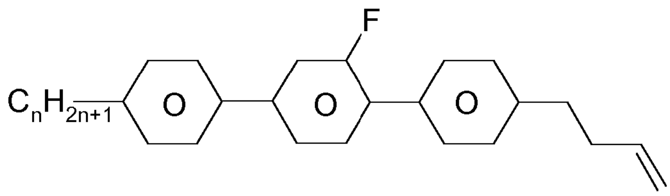

**PGP-n-2V**

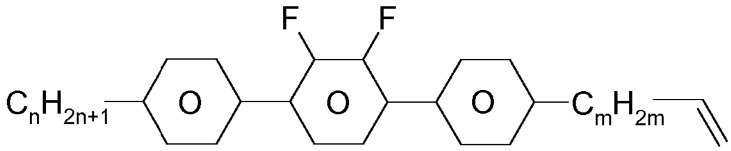

**PYP-n-mV**

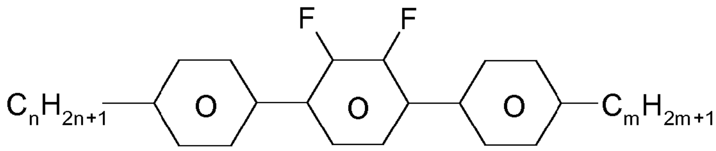

**PYP-n-m**

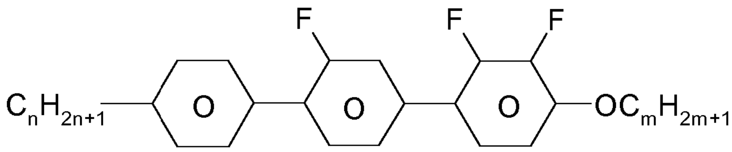

**PGIY-n-Om**

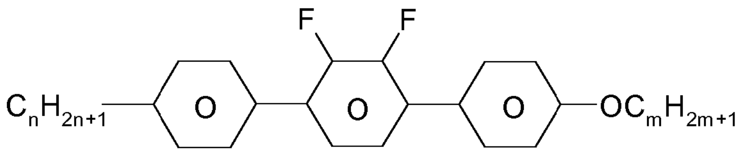

**PYP-n-Om**

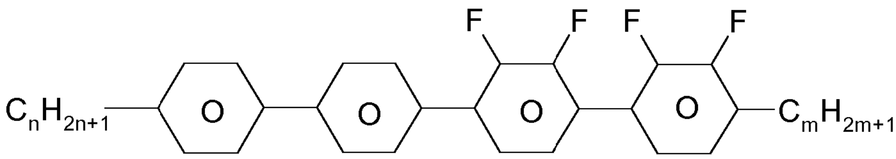

**PPYY-n-m**

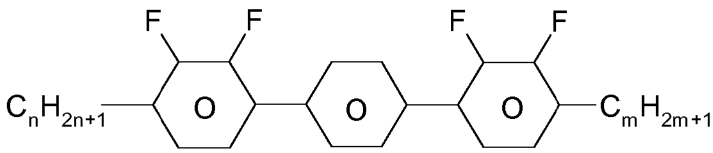

**YPY-n-m**

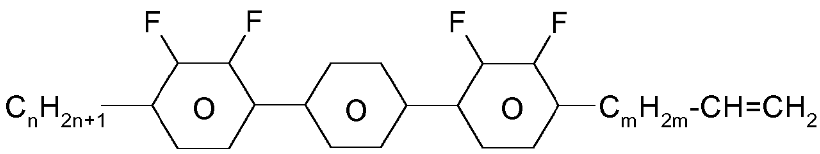

**YPY-n-mV**

(continued)

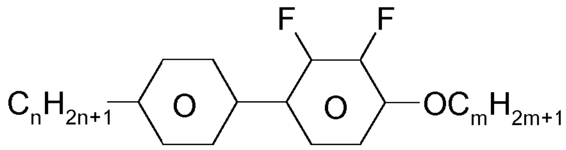

**PY-n-Om**

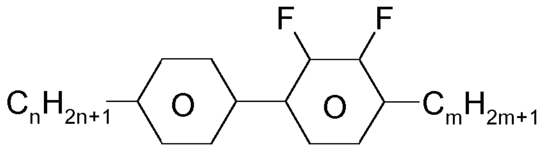

**PY-n-m**

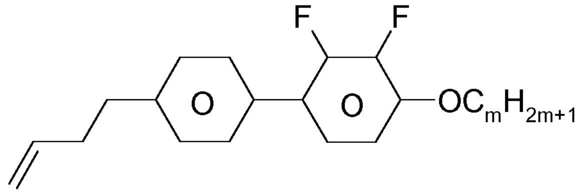

**PY-V2-Om**

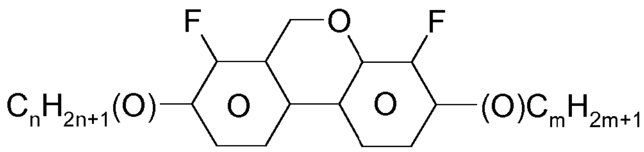

**DFDBC-n(O)-(O)m**

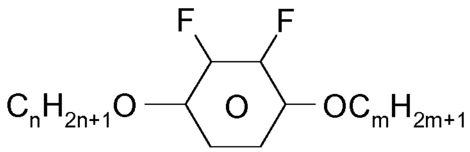

**Y-nO-Om**

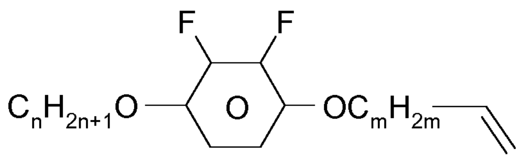

**Y-nO-OmV**

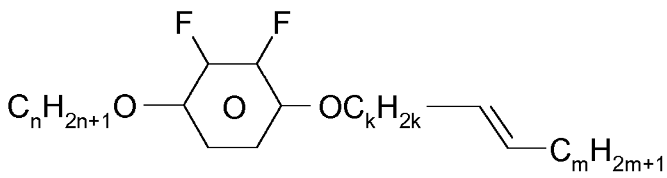

**Y-nO-OkVm**

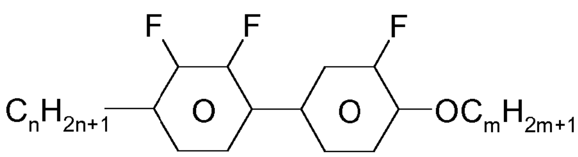

**YG-n-Om**

(continued)

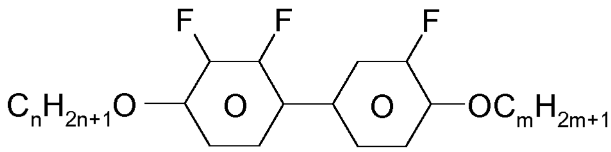

**YG-nO-Om**

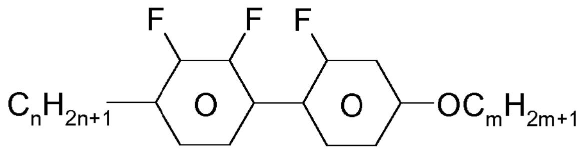

**YGI-n-Om**

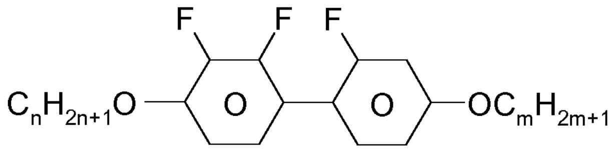

**YGI-nO-Om**

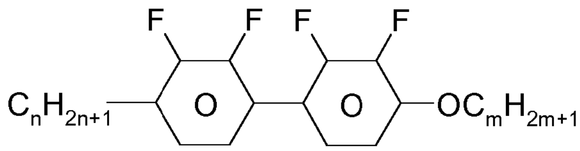

**YY-n-Om**

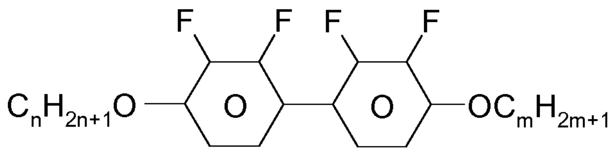

**YY-nO-Om**

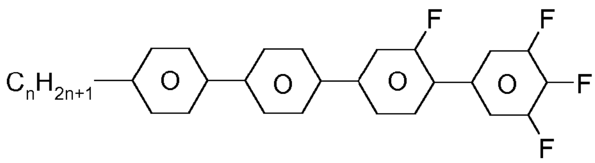

**PPGU-n-F**

Particular preference is given to liquid-crystalline mixtures which comprise at least one, two, three, four or more compounds from Table A.

Table B indicates possible dopants which are generally added to the mixtures according to the invention. The mixtures preferably comprise 0-10% by weight, in particular 0.001-5% by weight and particularly preferably 0.001-3% by weight, of dopants.

## Table B

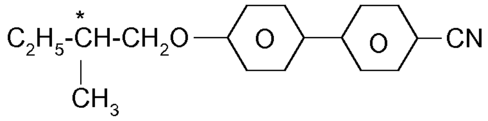

C 15

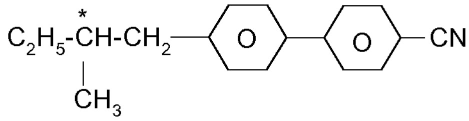

CB 15

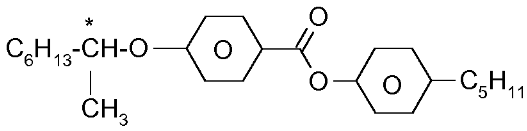

CM 21

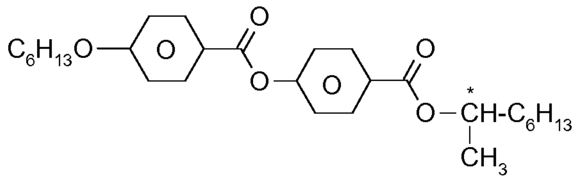

R/S-811

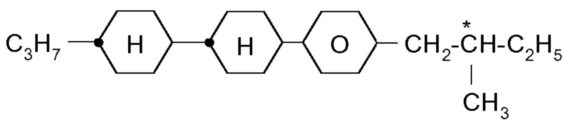

CM 44

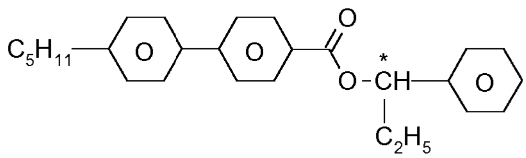

CM 45

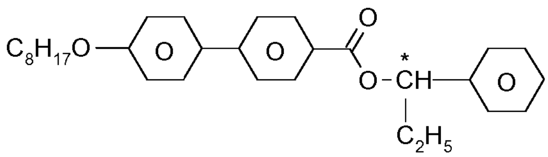

CM 47

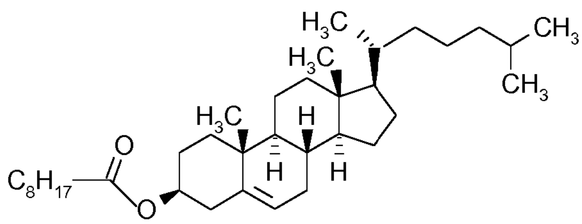

CN

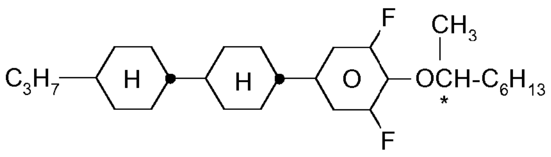

**R/S-2011**

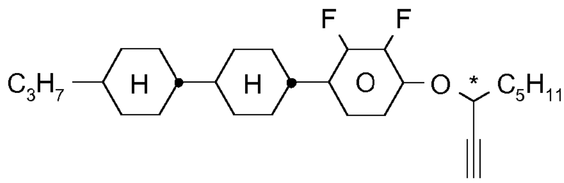

**R/S-3011**

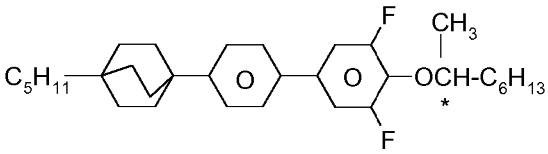

**R/S-4011**

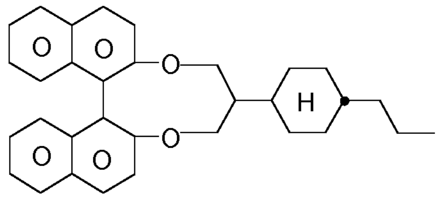

**R/S-5011**

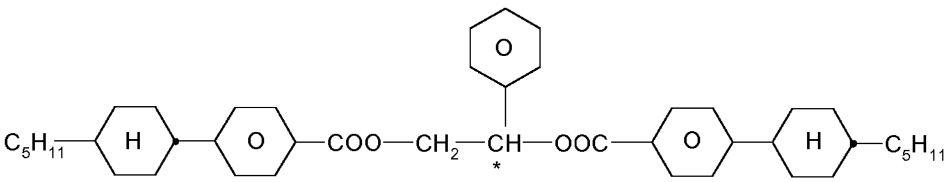

**R/S-1011**

Table C

Stabilisers which can be added, for example, to the mixtures according to the invention in amounts of 0-10% by weight are mentioned below.

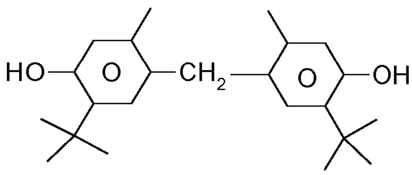

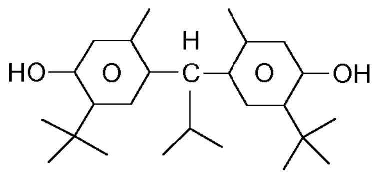

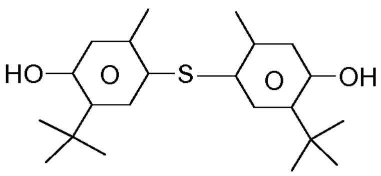

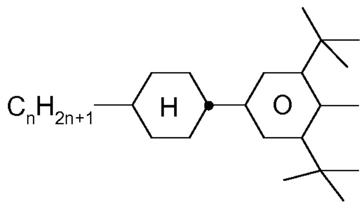

n = 1, 2, 3, 4, 5, 6 or 7

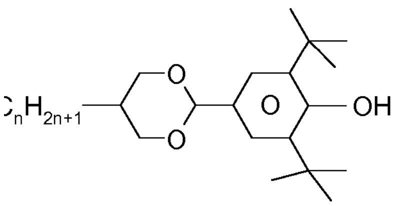

n = 1, 2, 3, 4, 5, 6 or 7

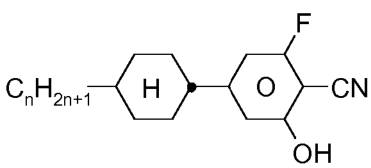

(continued)

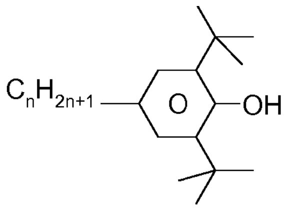

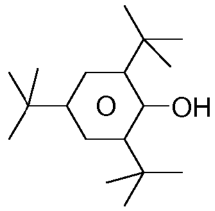

n = 1, 2, 3, 4, 5, 6 or 7

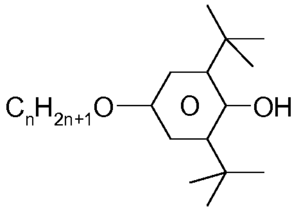

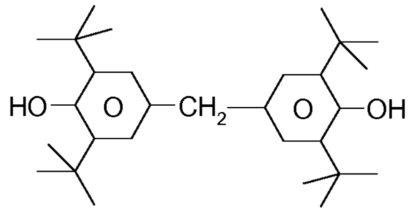

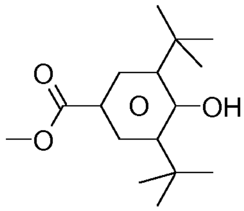

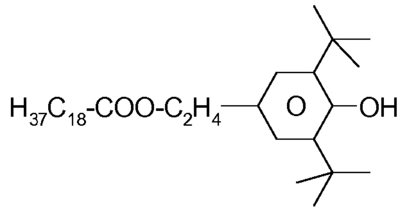

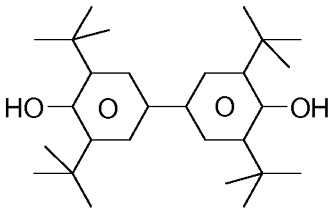

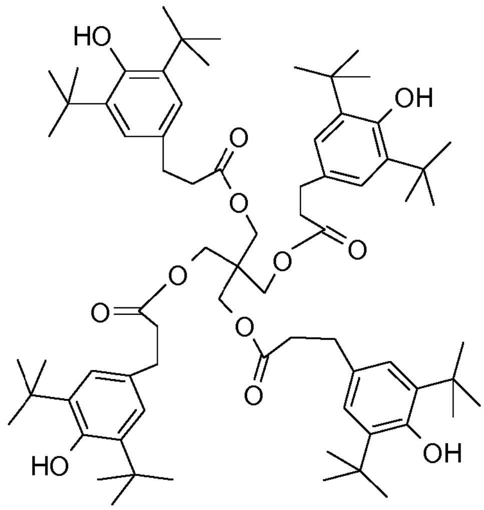

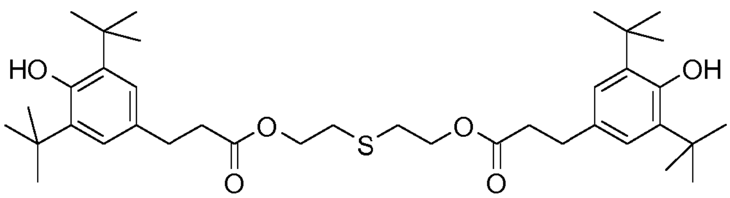

(continued)

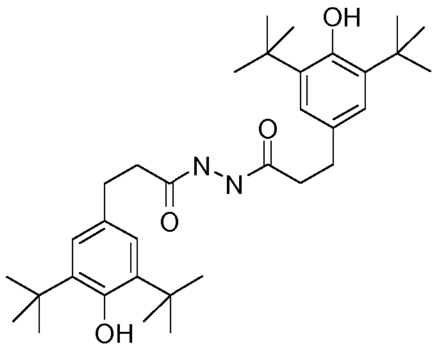

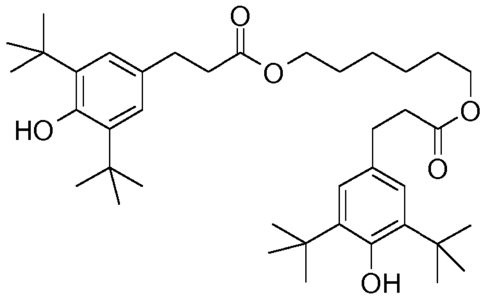

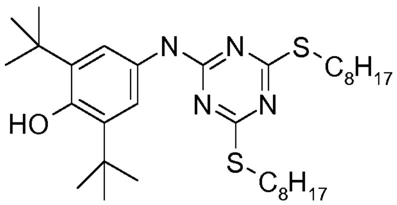

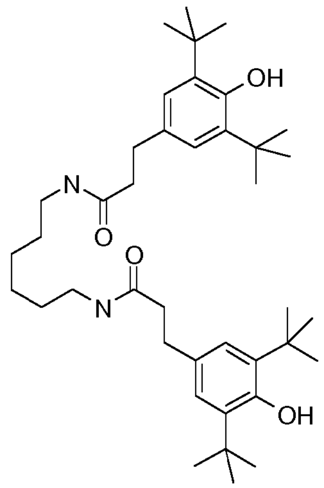

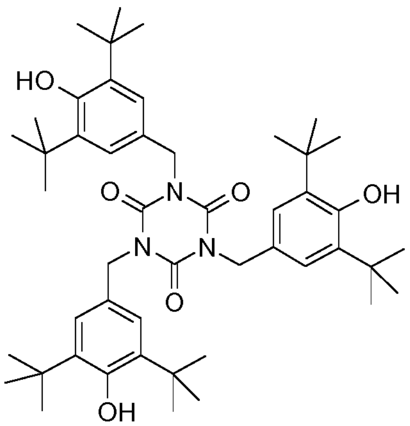

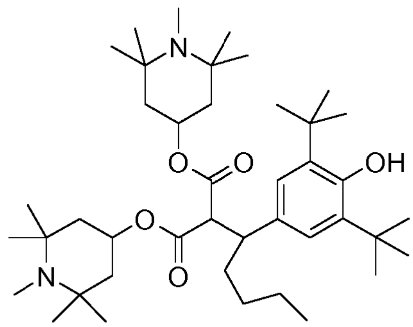

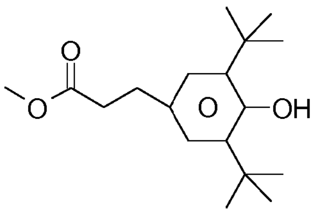

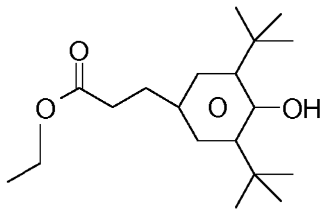

(continued)

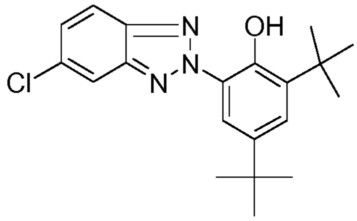

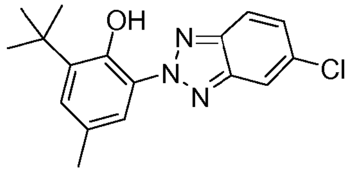

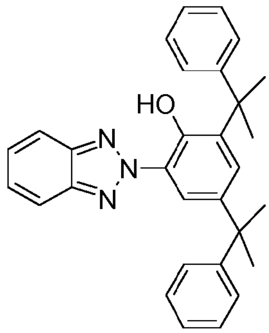

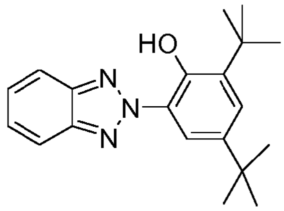

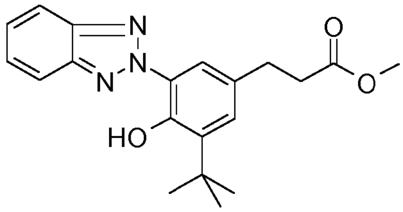

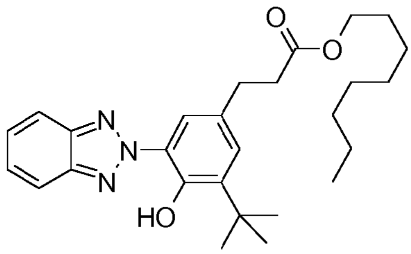

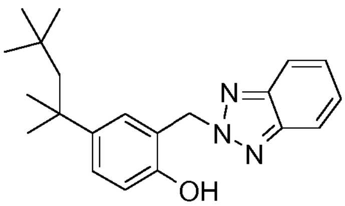

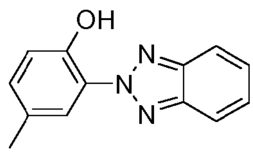

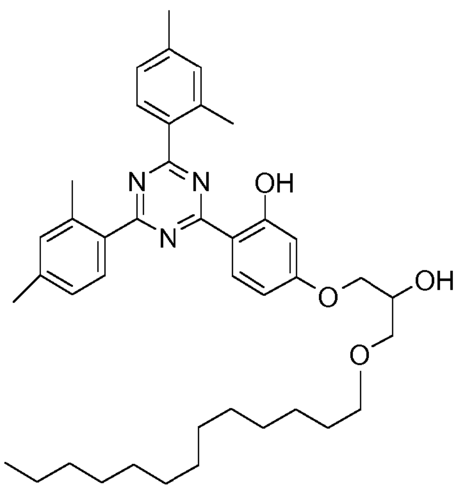

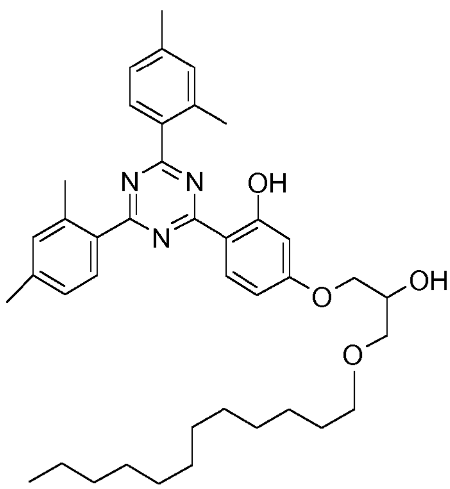

(continued)

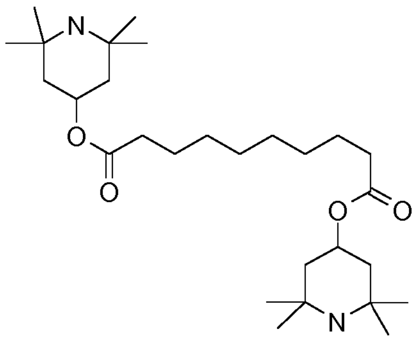

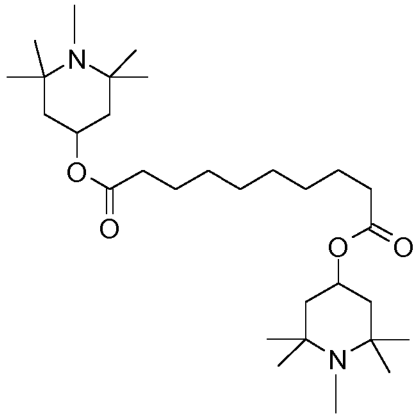

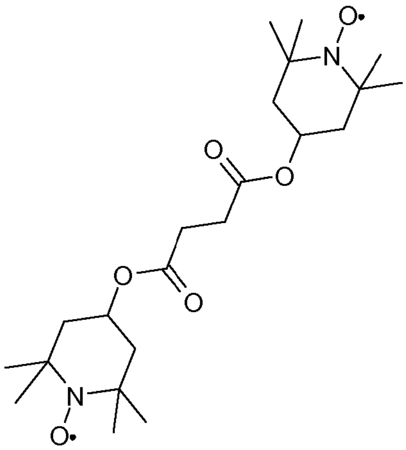

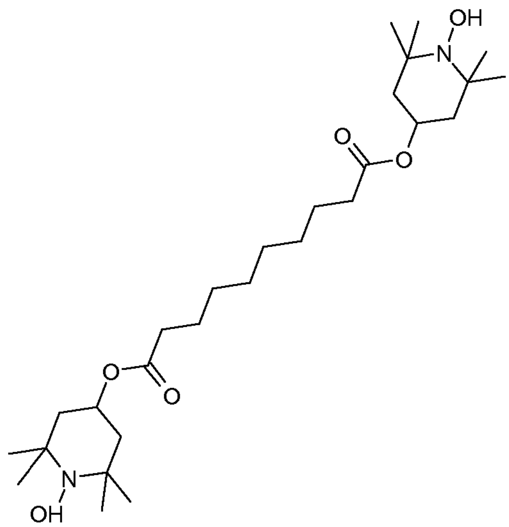

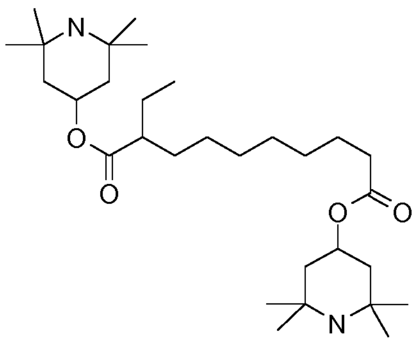

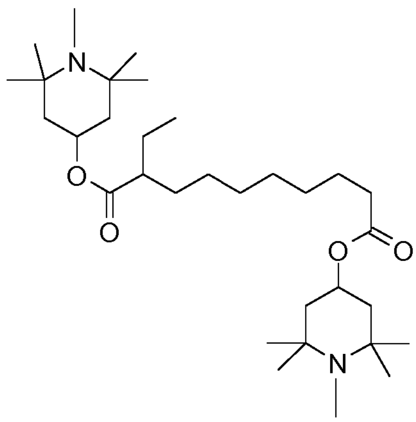

(continued)

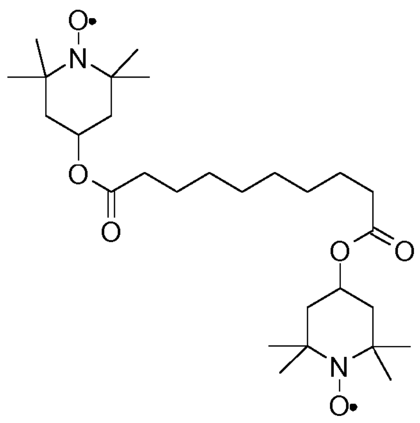

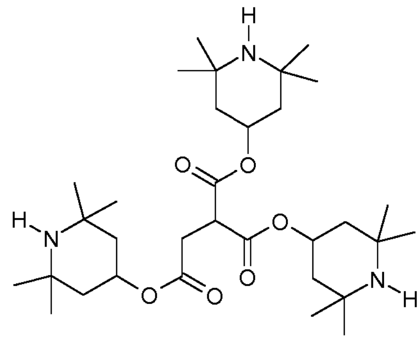

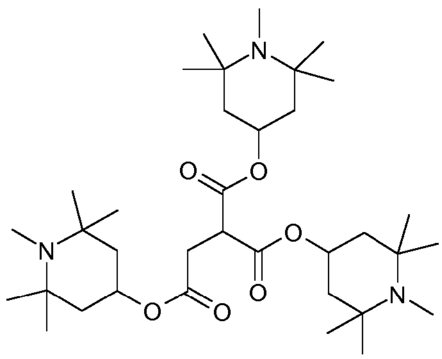

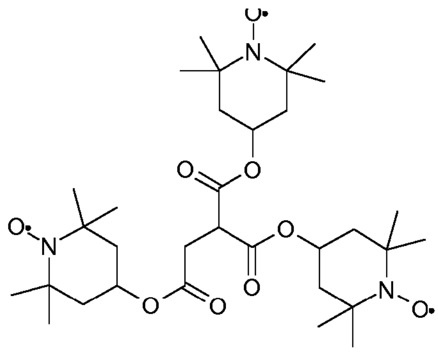

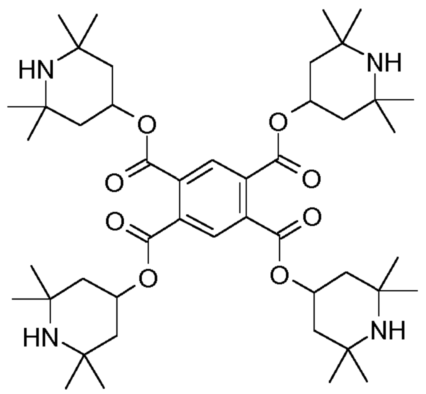

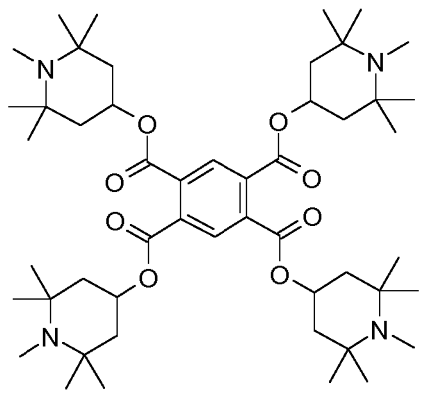

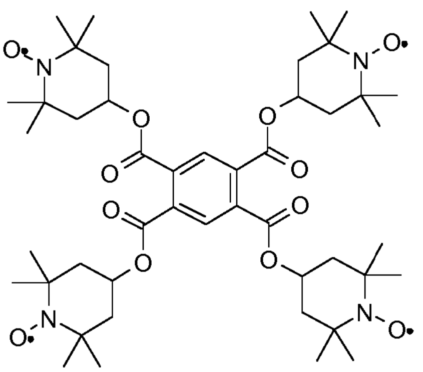

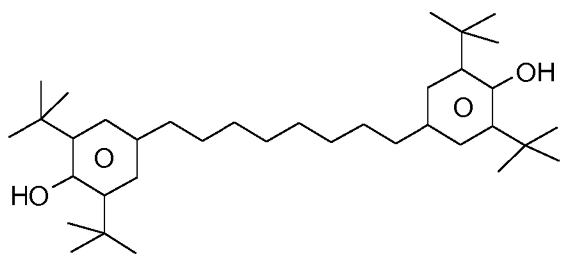

**Table D**

Table D shows illustrative reactive mesogenic compounds which can be used in the LC media in accordance with the present invention.

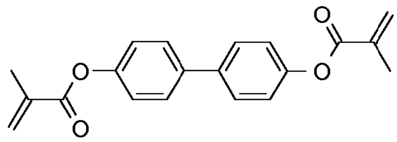

RM-1

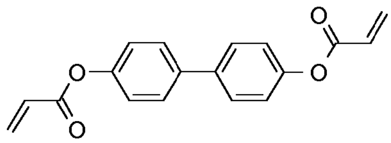

RM-2

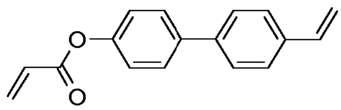

RM-3

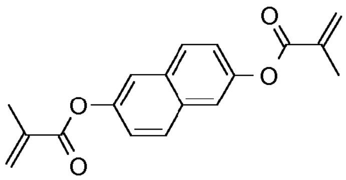

RM-4

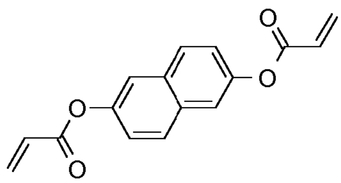

RM-5

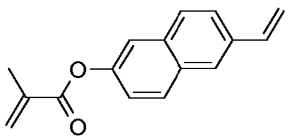

RM-6

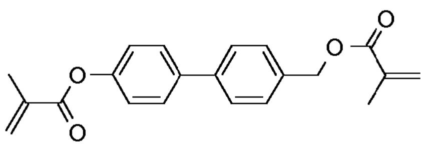

RM-7

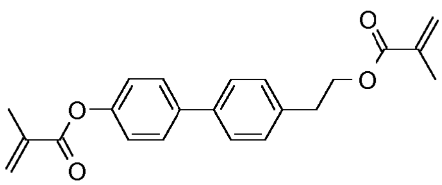

RM-8

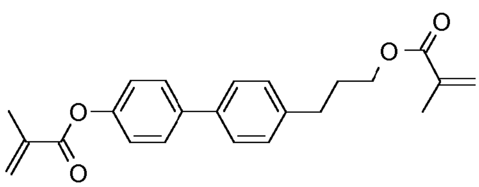

RM-9

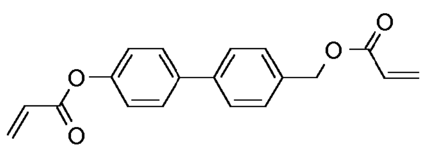

RM-10

(continued)

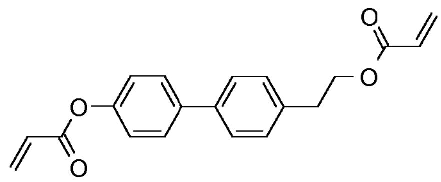
RM-11

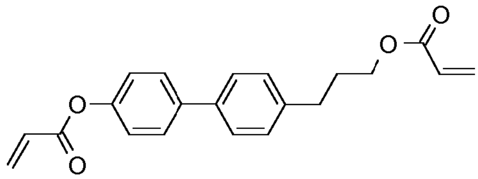
RM-12

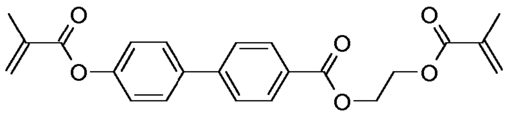
RM-13

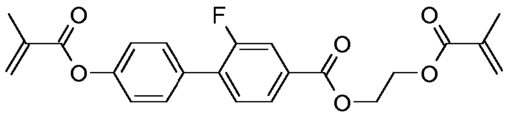
RM-14

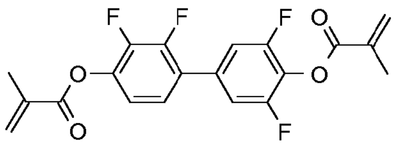
RM-15

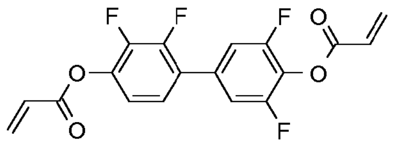
RM-16

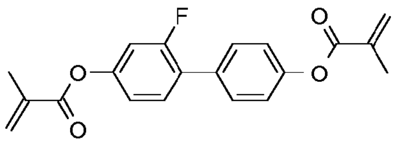
RM-17

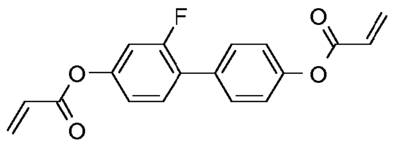
RM-18

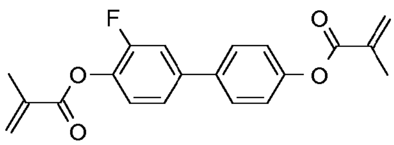
RM-19

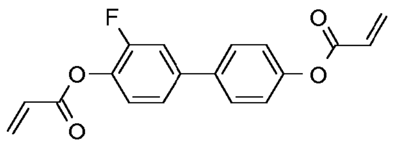
RM-20

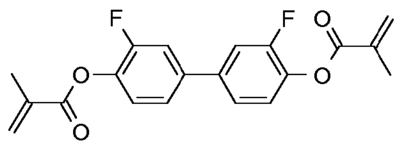
RM-21

(continued)

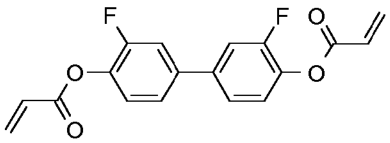

RM-22

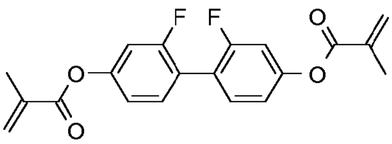

RM-23

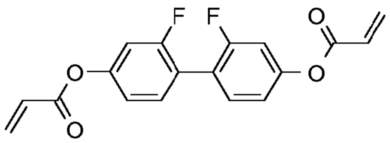

RM-24

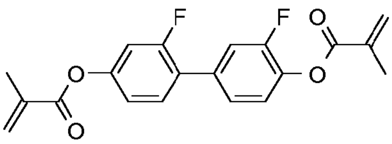

RM-25

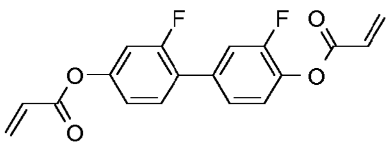

RM-26

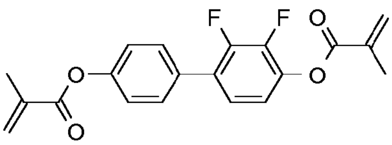

RM-27

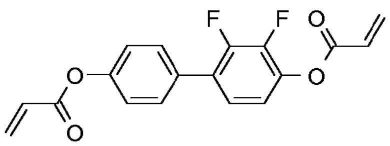

RM-28

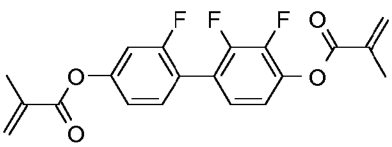

RM-29

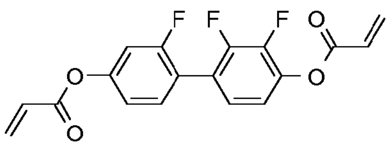

RM-30

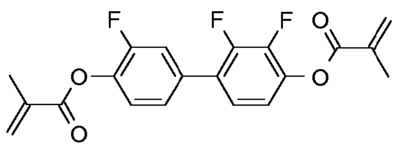

RM-31

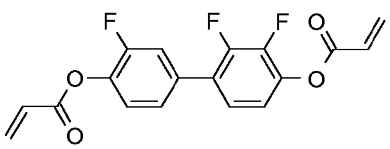

RM-32

(continued)

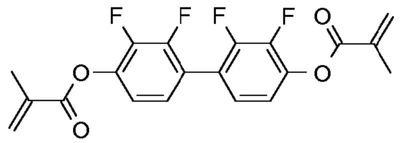
RM-33

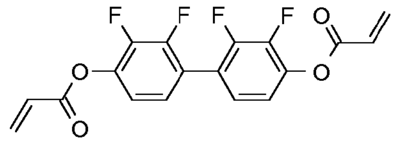
RM-34

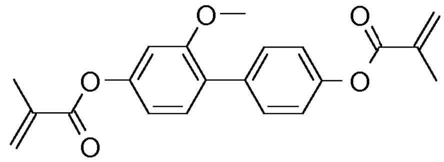
RM-35

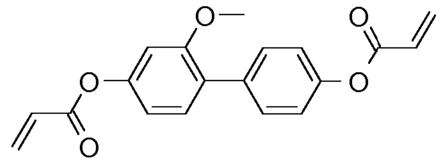
RM-36

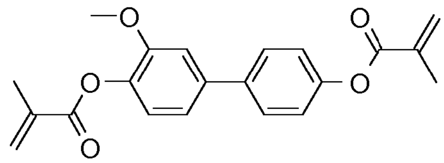
RM-37

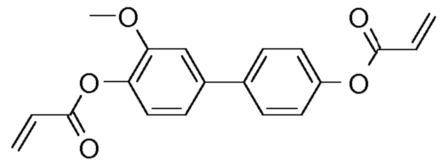
RM-38

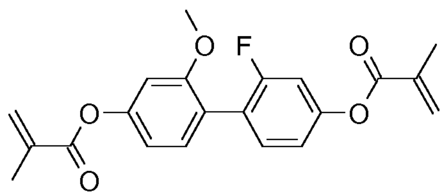
RM-39

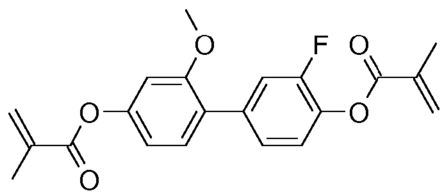
RM-40

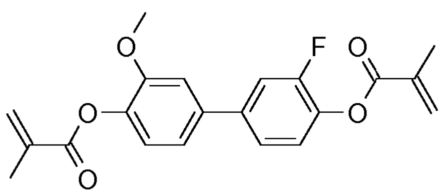
RM-41

(continued)

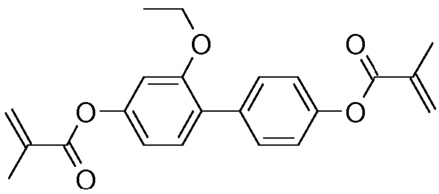

RM-42

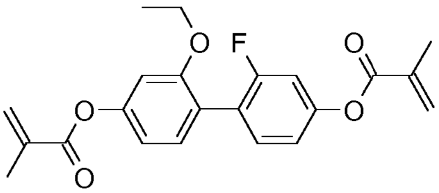

RM-43

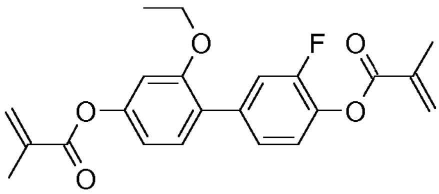

RM-44

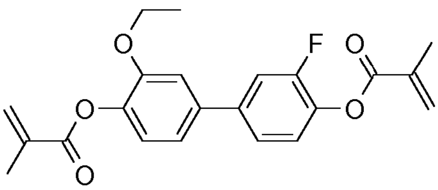

RM-45

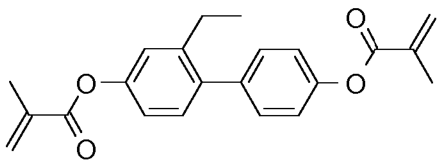

RM-46

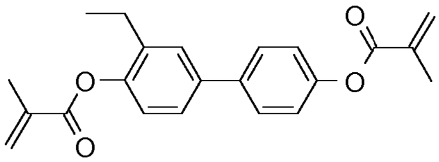

RM-47

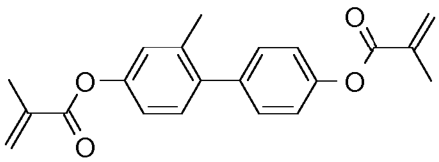

RM-48

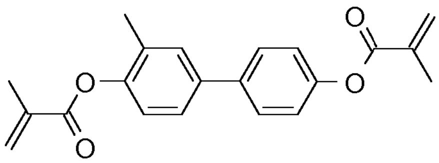

RM-49

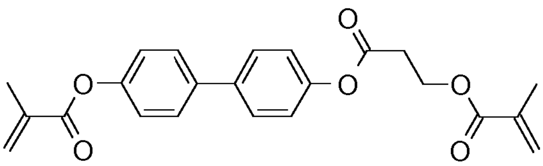

RM-50

(continued)

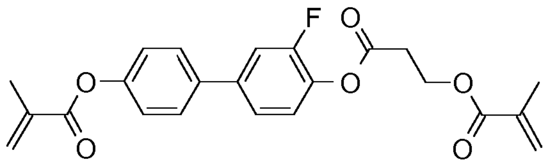

RM-51

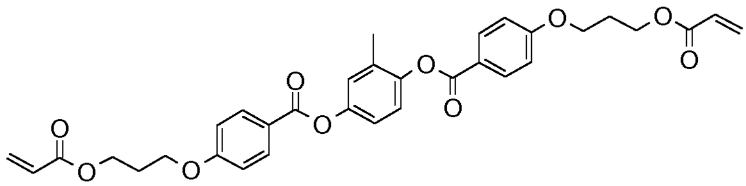

RM-52

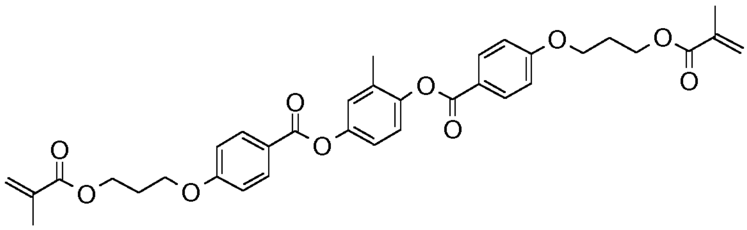

RM-53

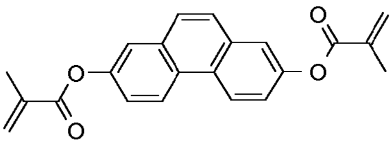

RM-54

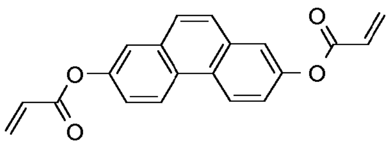

RM-55

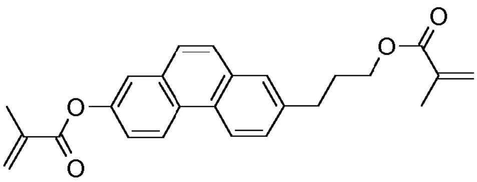

RM-56

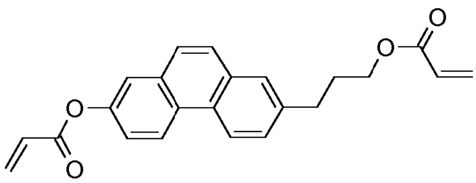

RM-57

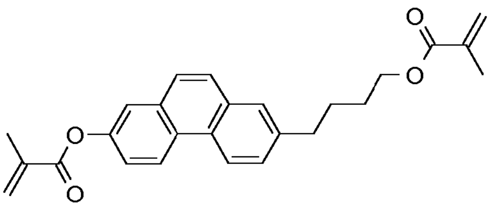

RM-58

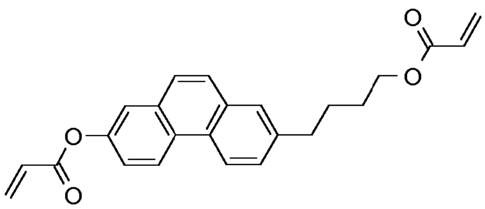

RM-59

(continued)

RM-60

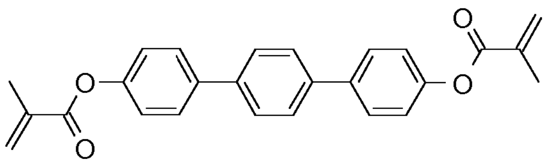

RM-61

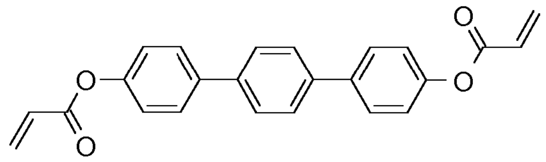

RM-62

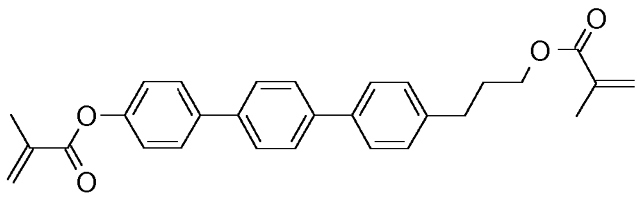

RM-63

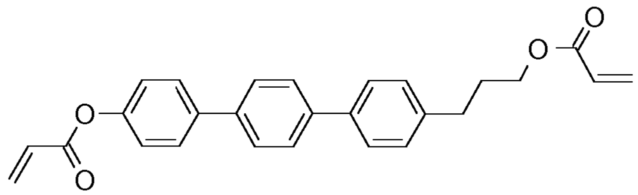

RM-64

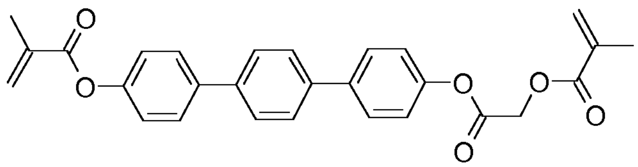

RM-65

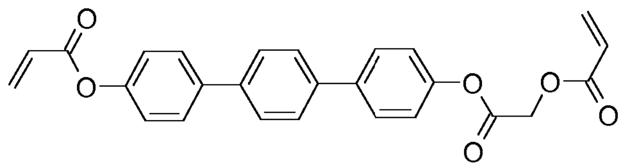

RM-66

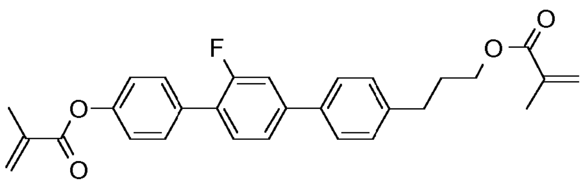

RM-67

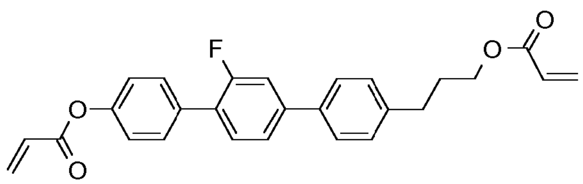

RM-68

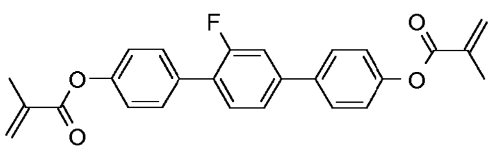

(continued)

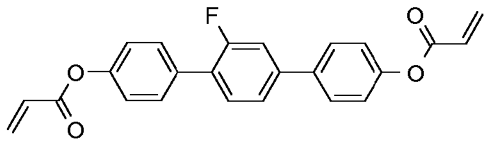
RM-69

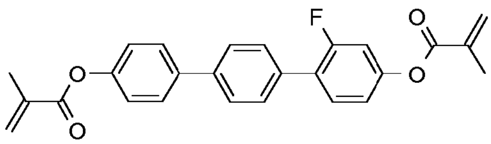
RM-70

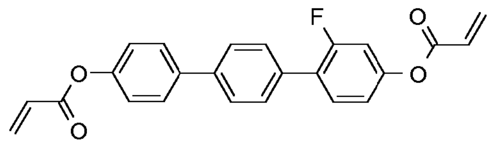
RM-71

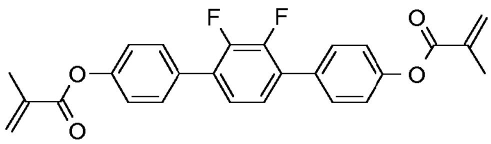
RM-72

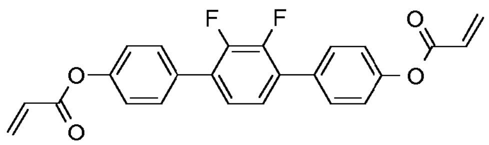
RM-73

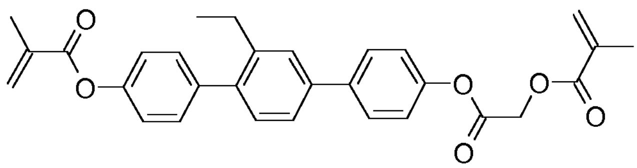
RM-74

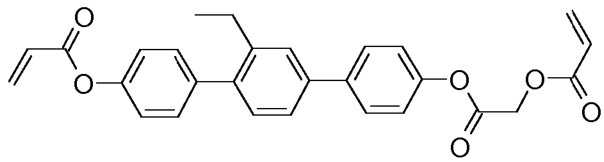
RM-75

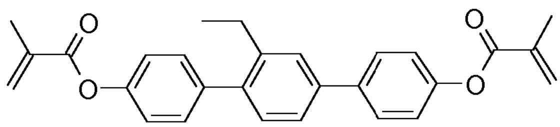
RM-76

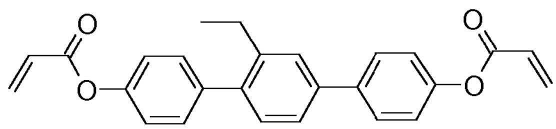
RM-77

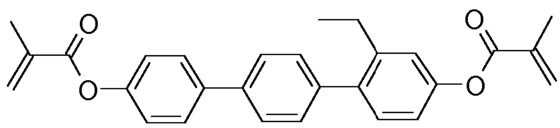
RM-78

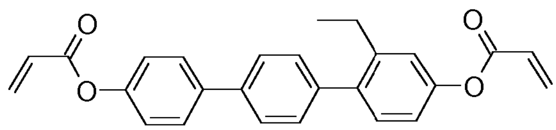
RM-79

(continued)

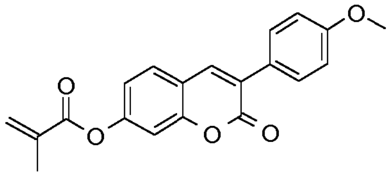

RM-80

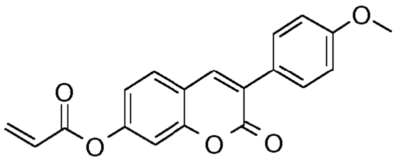

RM-81

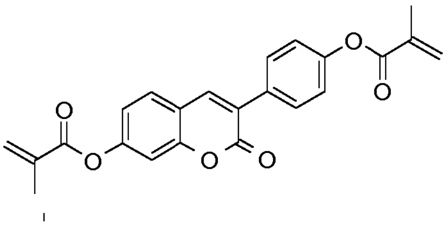

RM-82

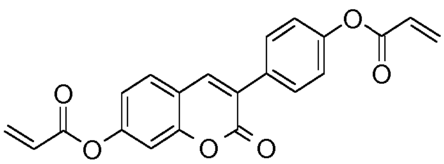

RM-83

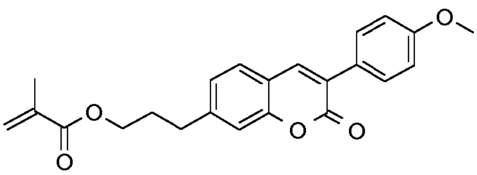

RM-84

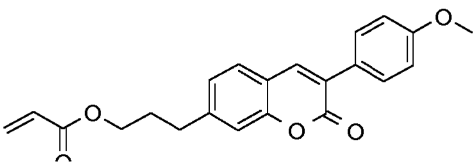

RM-85

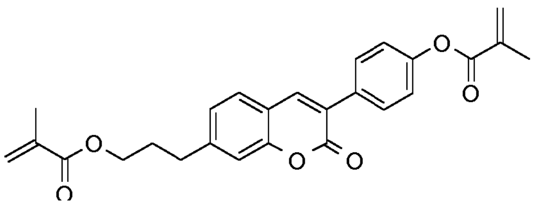

RM-86

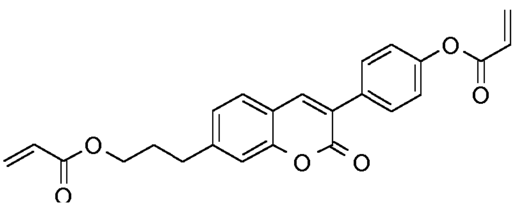

RM-87

(continued)

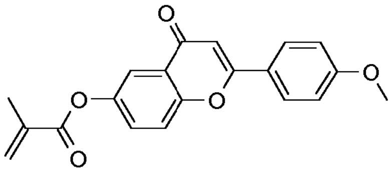

RM-88

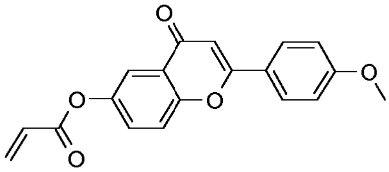

RM-89

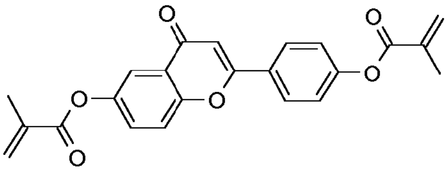

RM-90

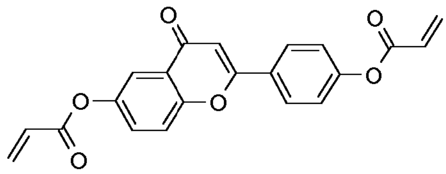

RM-91

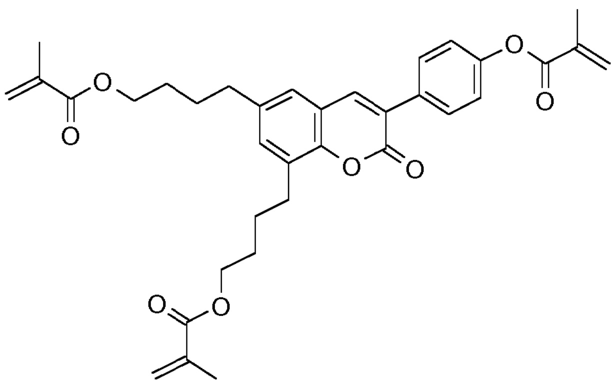

RM-92

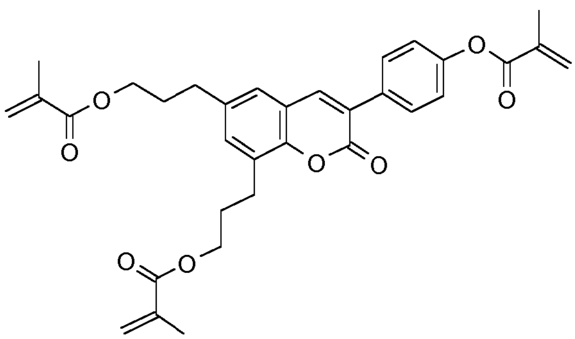

RM-93

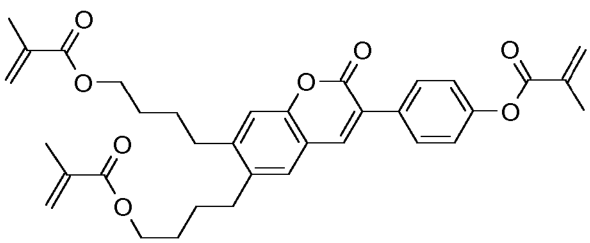

RM-94

(continued)

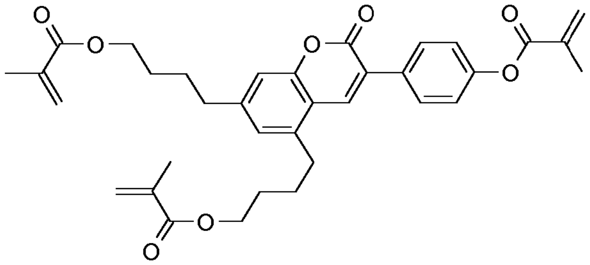

RM-95

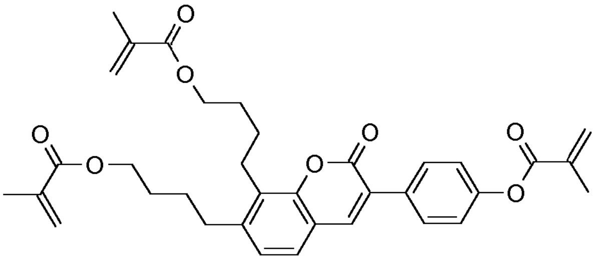

RM-96

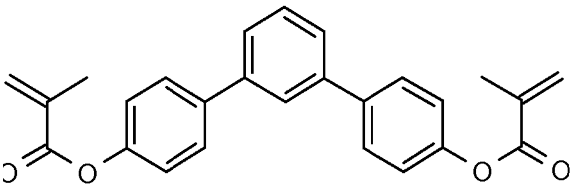

RM-97

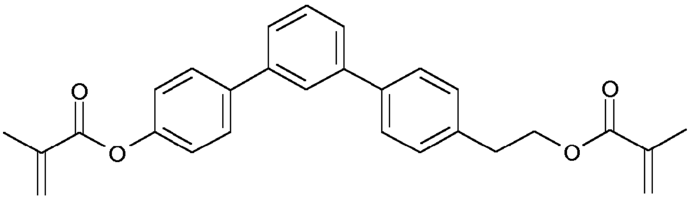

RM-98

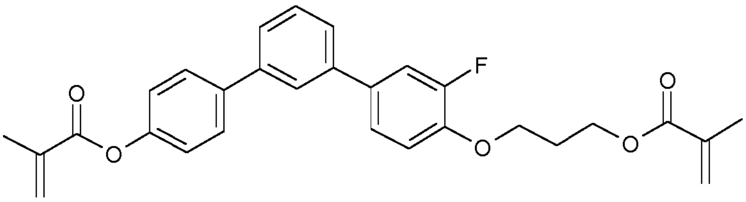

RM-99

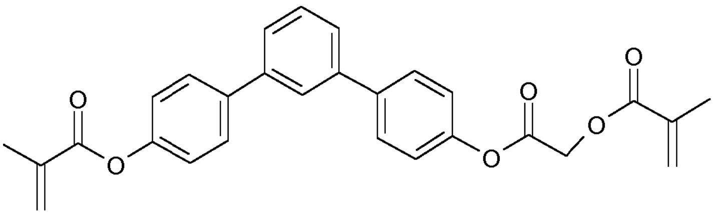

RM-100

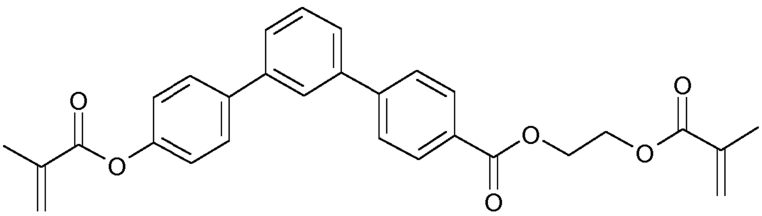

RM-101

(continued)

RM-102

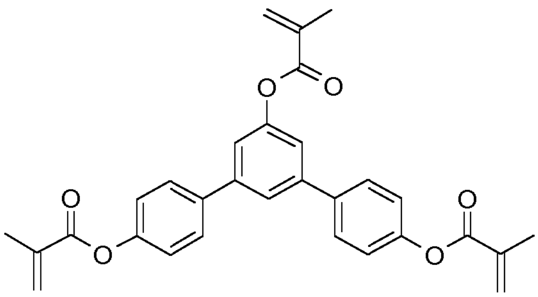

RM-103

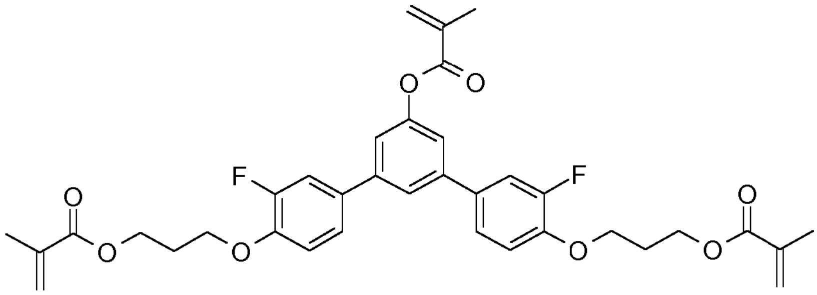

RM-104

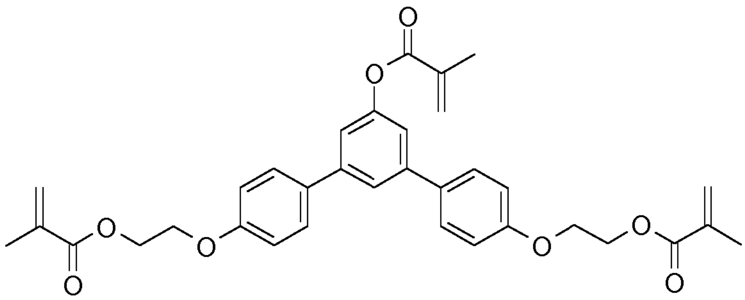

RM-105

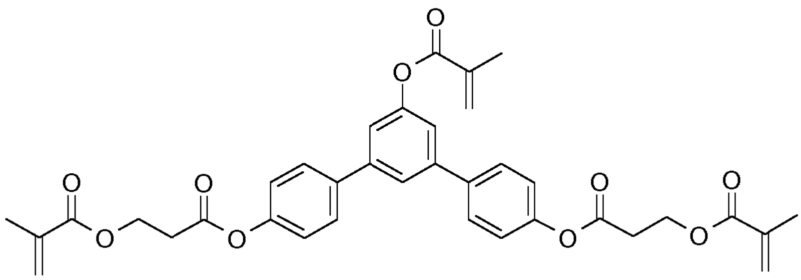

RM-106

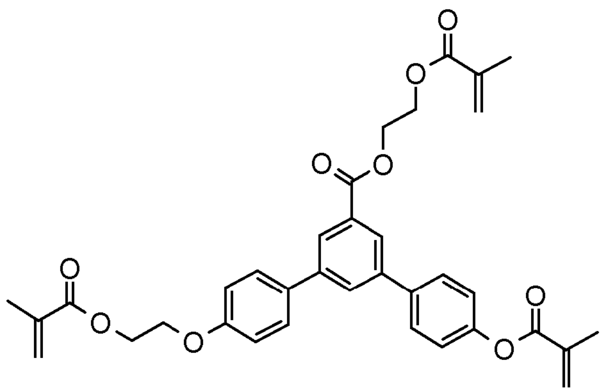

(continued)

RM-107

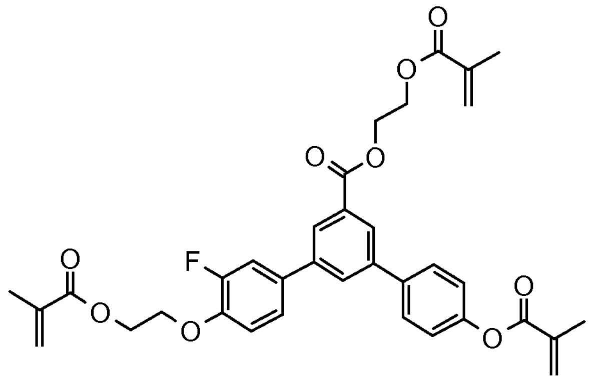

RM-108

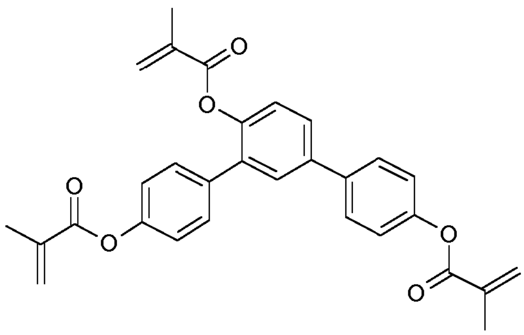

RM-109

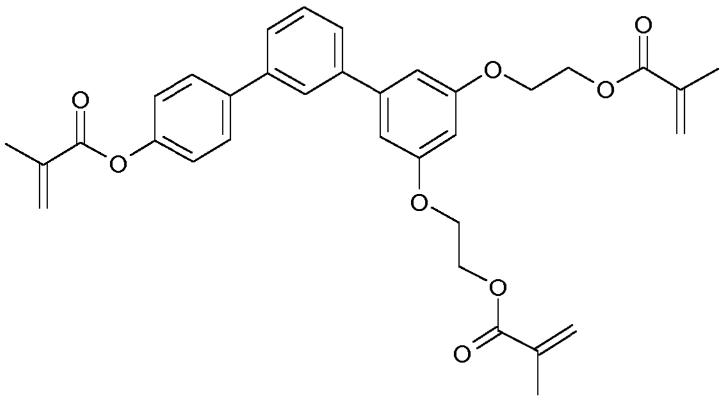

RM-110

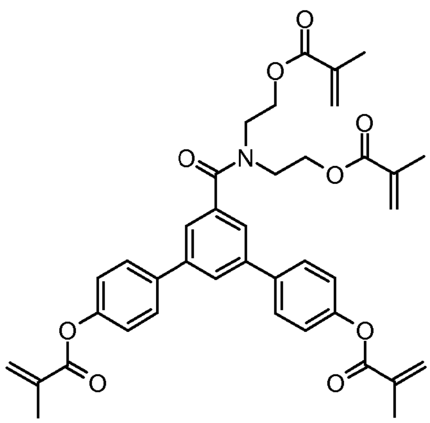

(continued)

RM-111

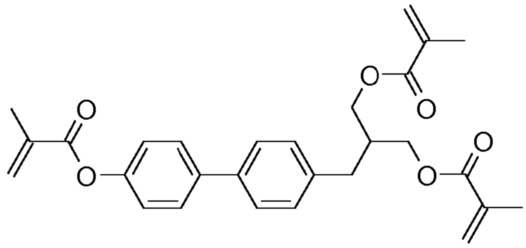

RM-112

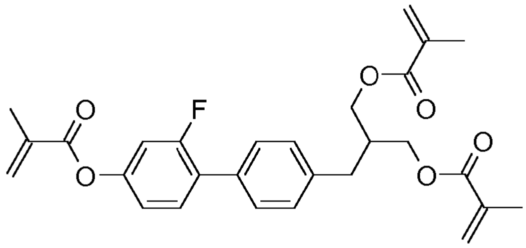

RM-113

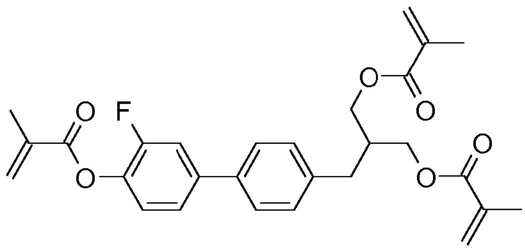

RM-114

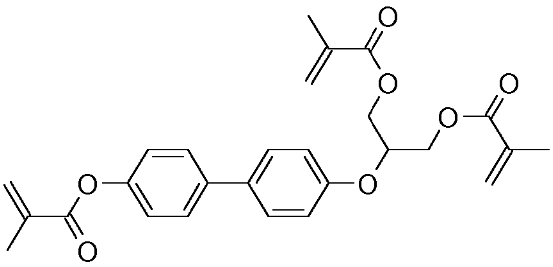

RM-115

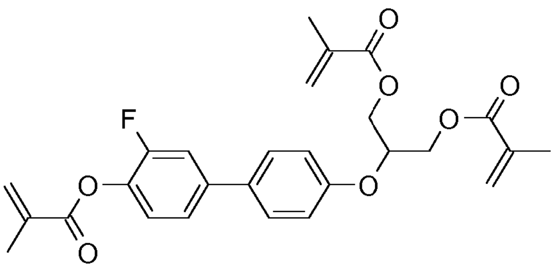

RM-116

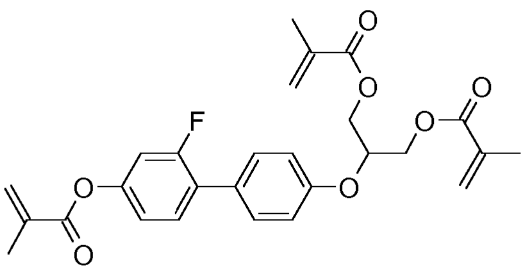

(continued)

RM-117

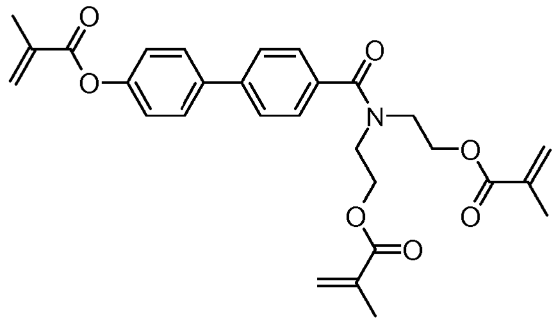

RM-118

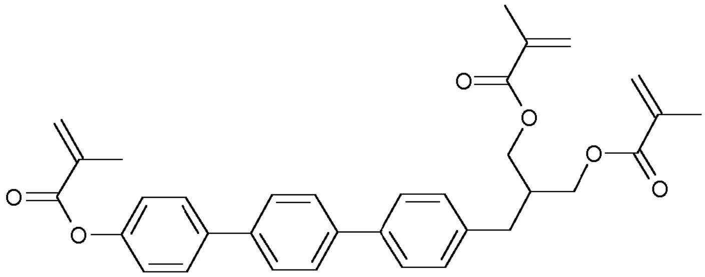

RM-119

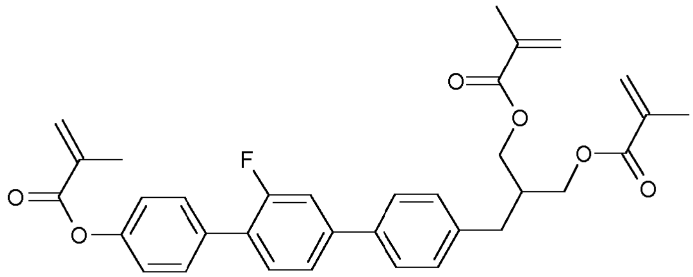

RM-120

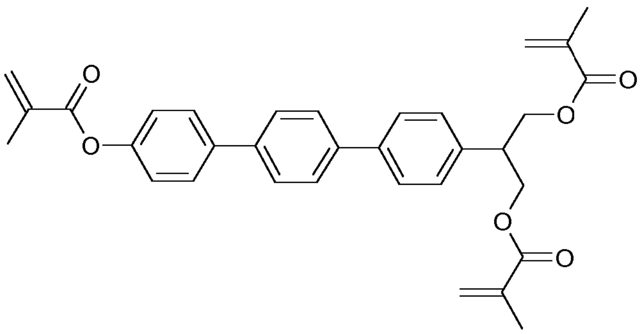

RM-121

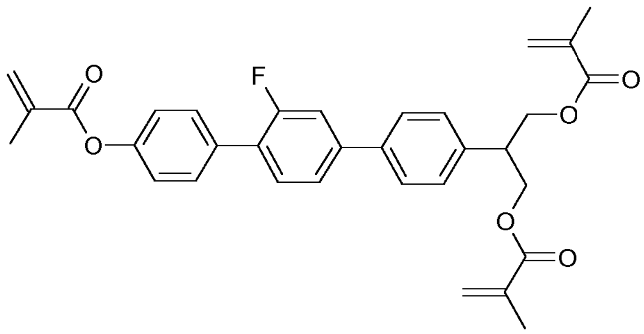

(continued)

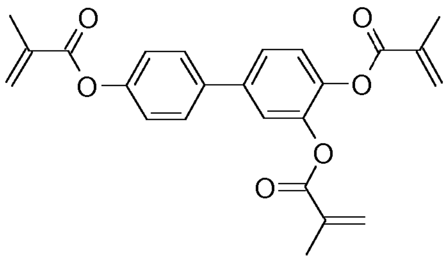

RM-122

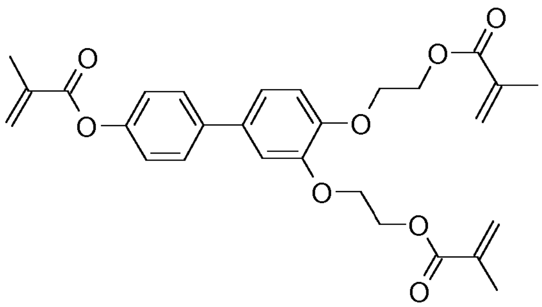

RM-123

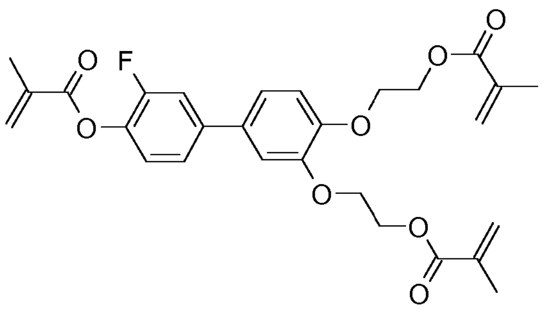

RM-124

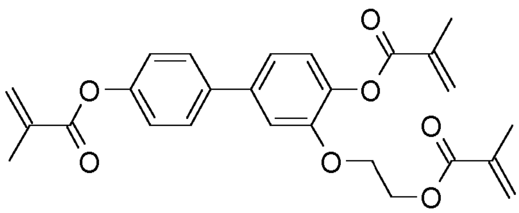

RM-125

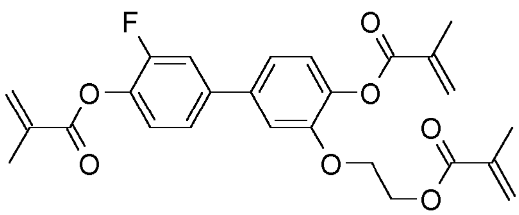

RM-126

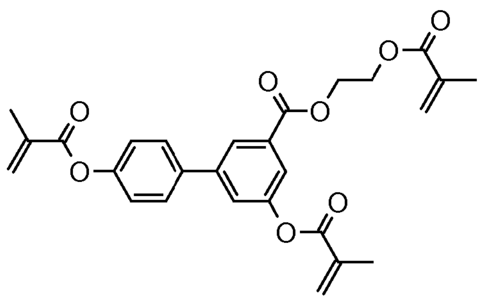

RM-127

(continued)

RM-128

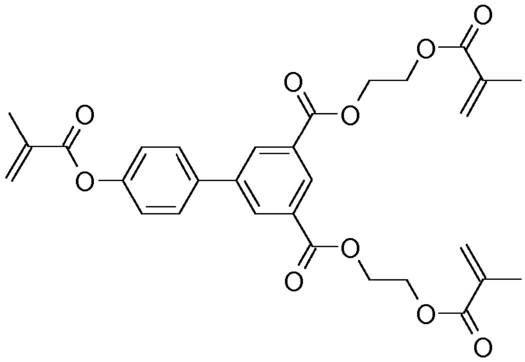

RM-129

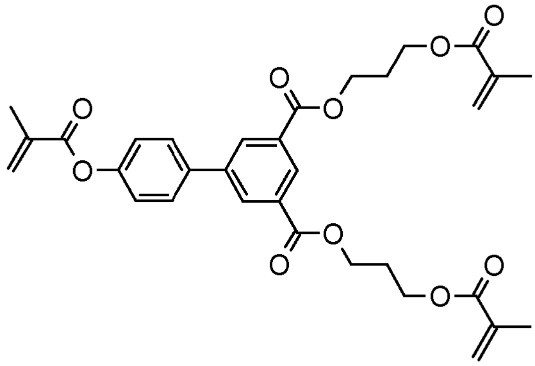

RM-130

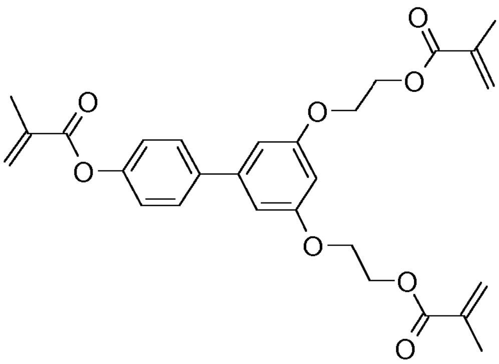

RM-131

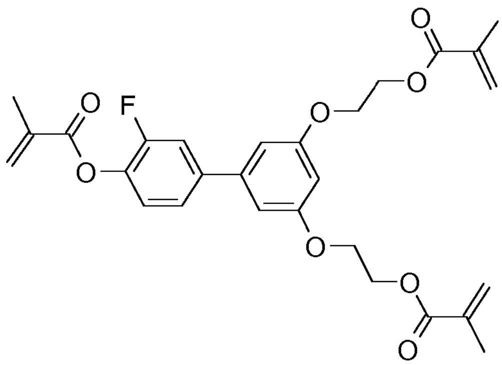

(continued)

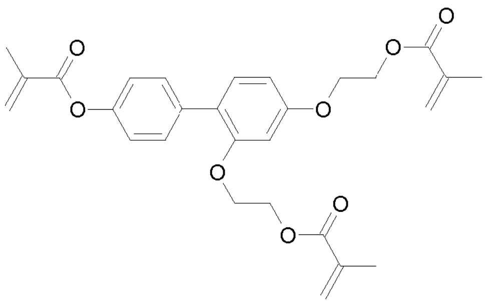

RM-132

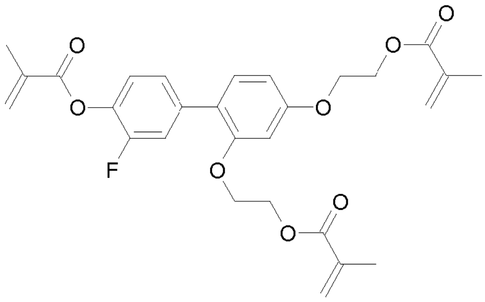

RM-133

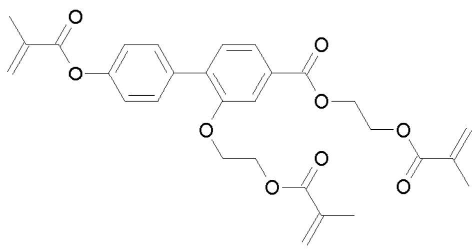

RM-134

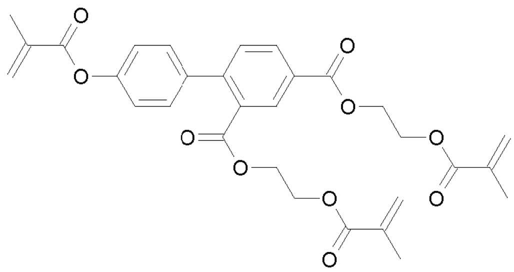

RM-135

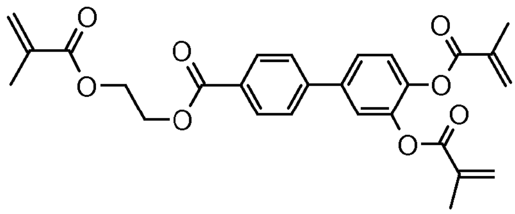

RM-136

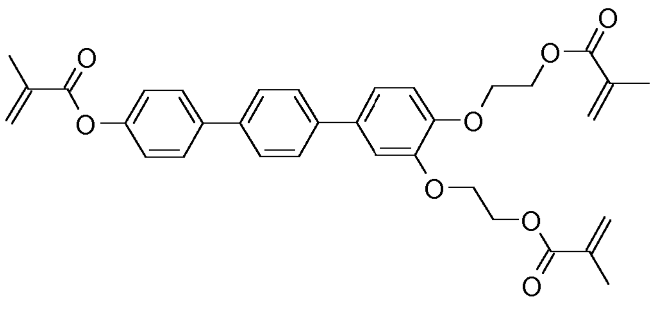

RM-137

(continued)

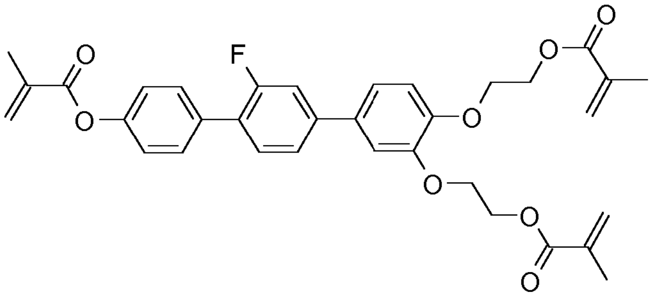

RM-138

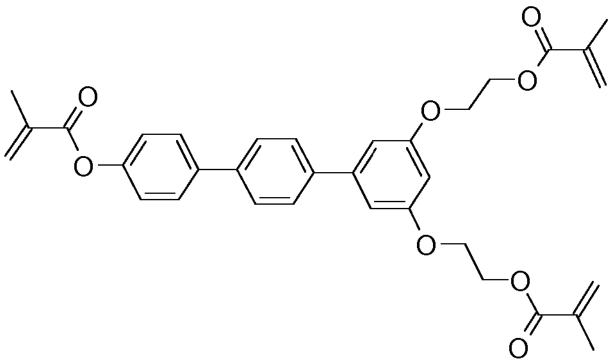

RM-139

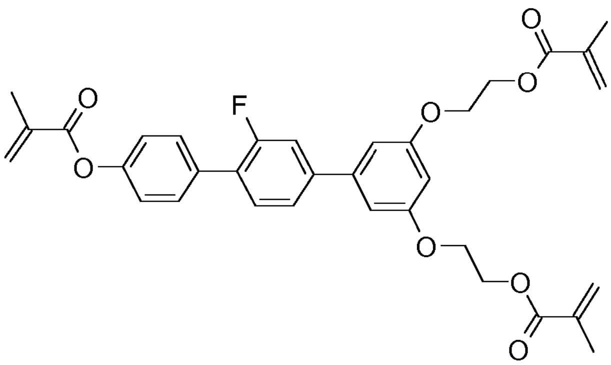

RM-140

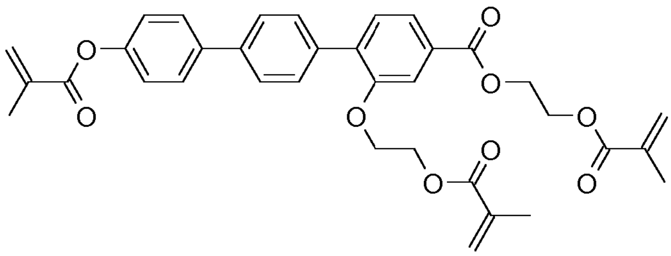

RM-141

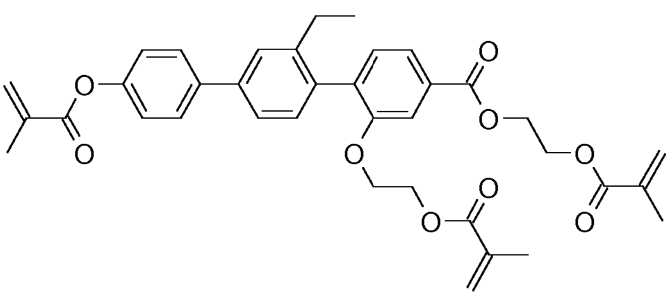

RM-142

(continued)

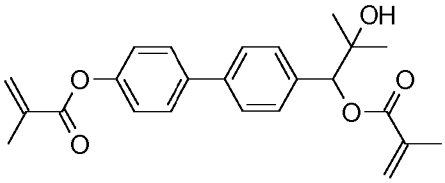

RM-143

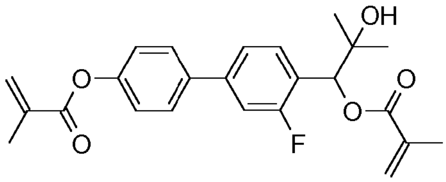

RM-144

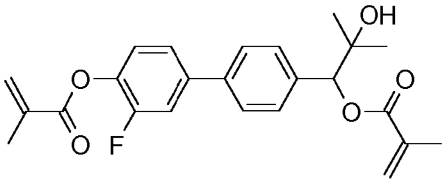

RM-145

In a preferred embodiment, the mixtures according to the invention comprise one or more polymerizable compounds, preferably selected from the polymerizable compounds of the formulae RM-1 to RM-140. Of these, compounds RM-1, RM-4, RM-8, RM-17, RM-19, RM-35, RM-37, RM-39, RM-40, RM-41, RM-42, RM-50, RM-53, RM-54, RM-56, RM-59, RM-66, RM-76, RM-78, RM-90, RM-93, RM-104, RM-105, RM-111, RM-119, RM-122, RM-123 and RM-124 are particularly preferred.

Table E

Table E shows self-alignment additives for vertical alignment which can be used in LC media for SA-VA and SA-FFS displays according to the present invention together with the polymerizable compounds of formula I:

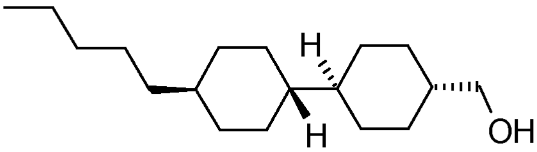

SA-1

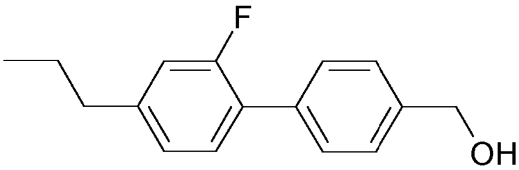

SA-2

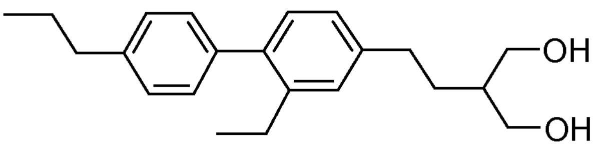

SA-3

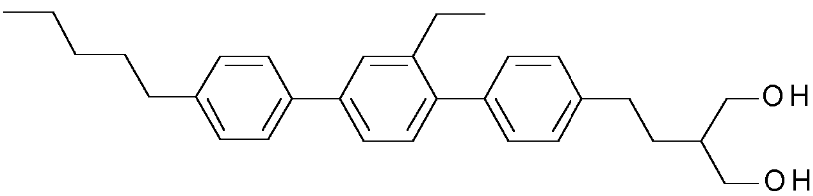

SA-4

(continued)

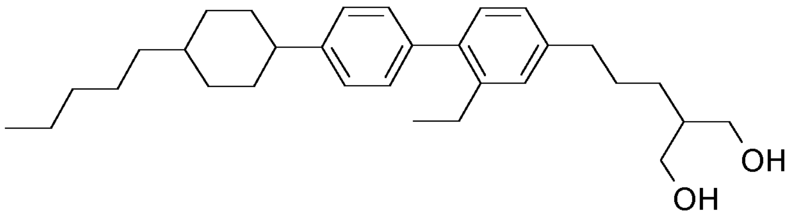

SA-5

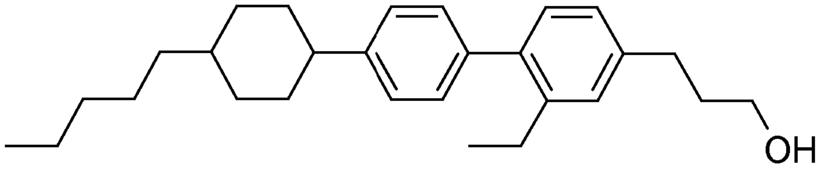

SA-6

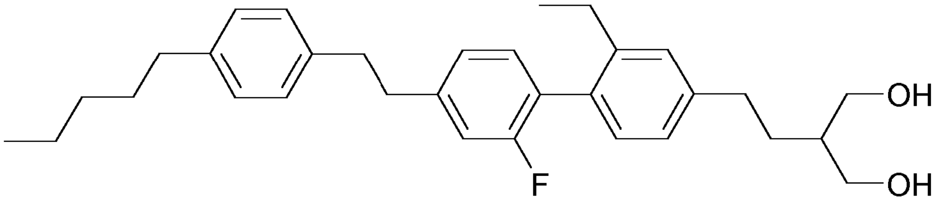

SA-7

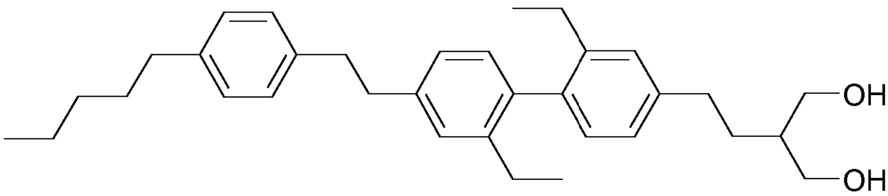

SA-8

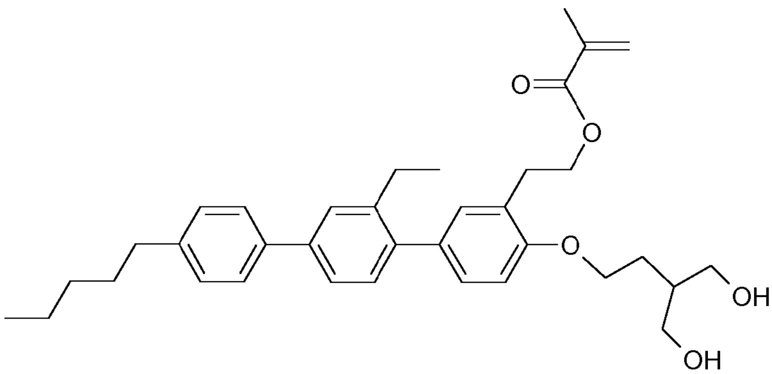

SA-9

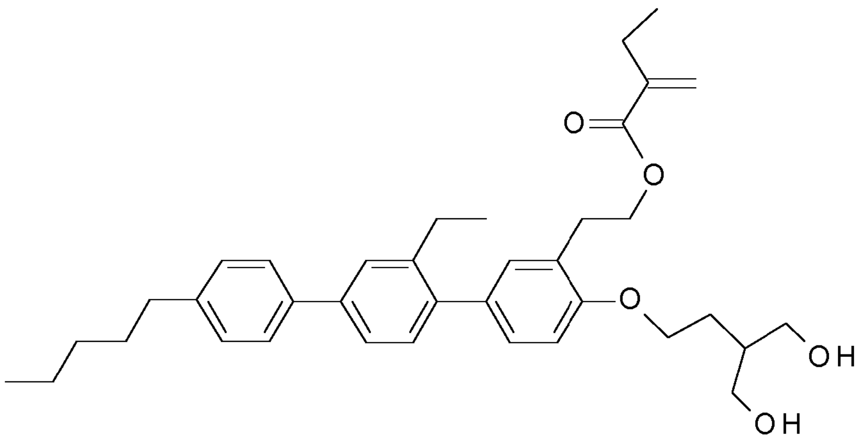

SA-10

(continued)

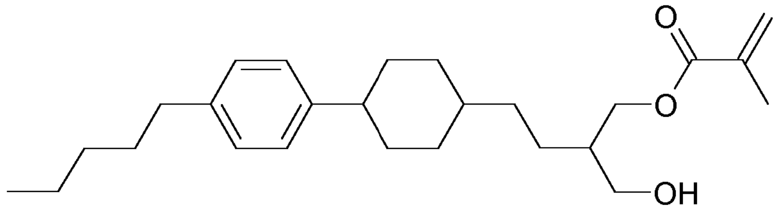

SA-11

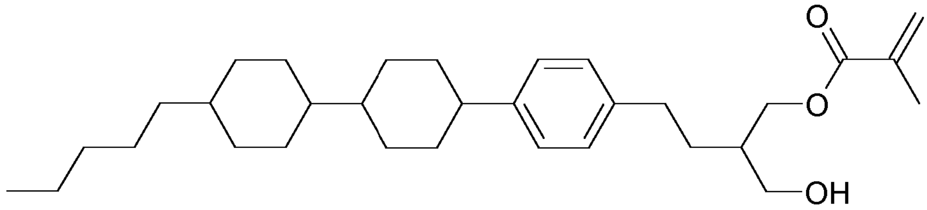

SA-12

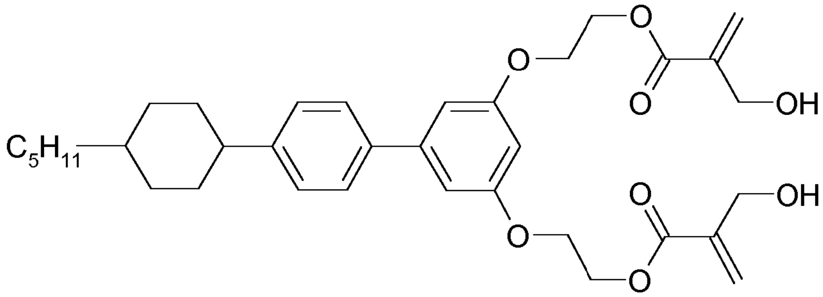

SA-13

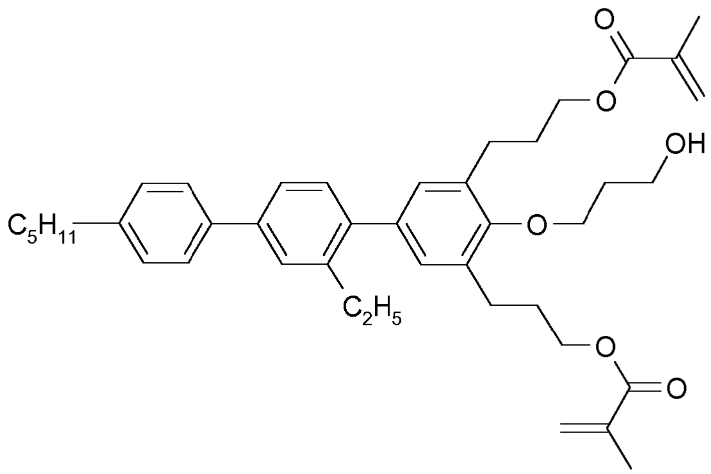

SA-14

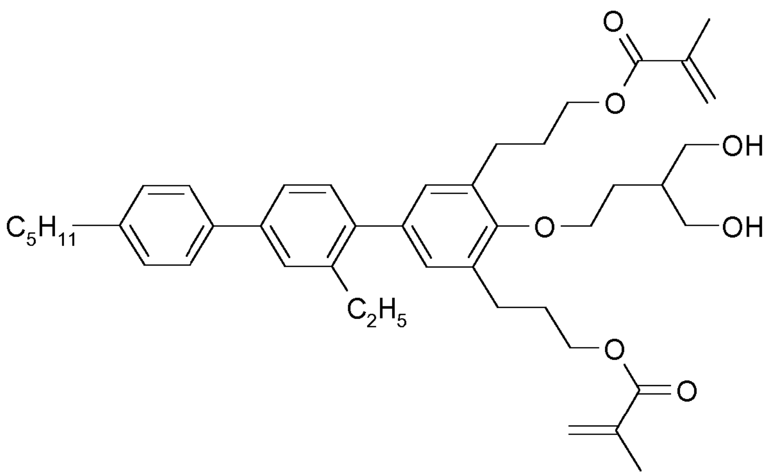

SA-15

(continued)

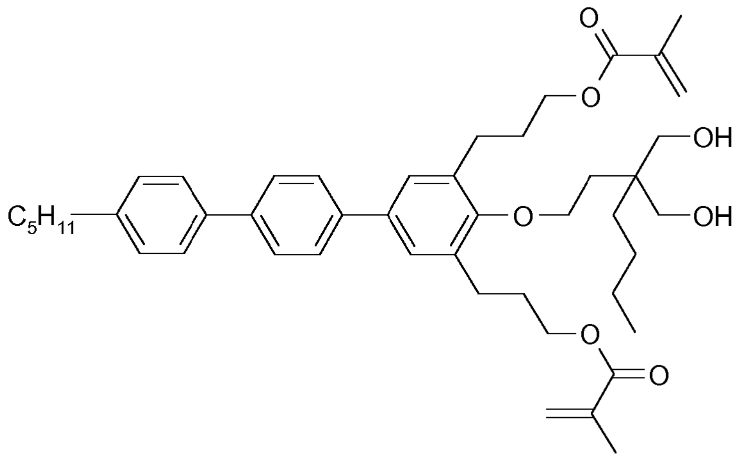

SA-16

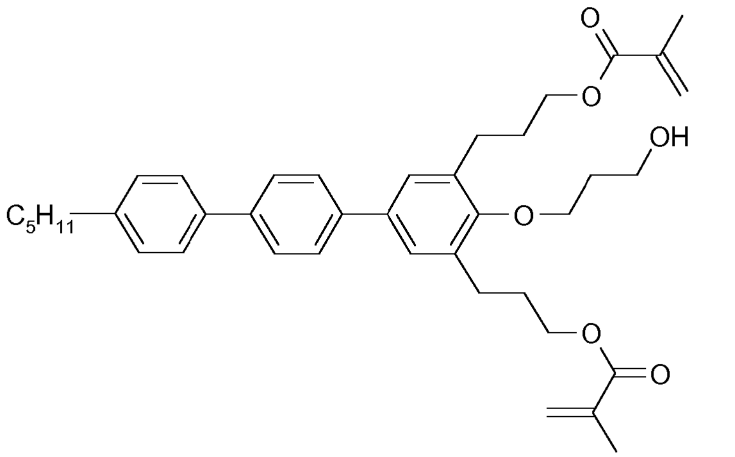

SA-17

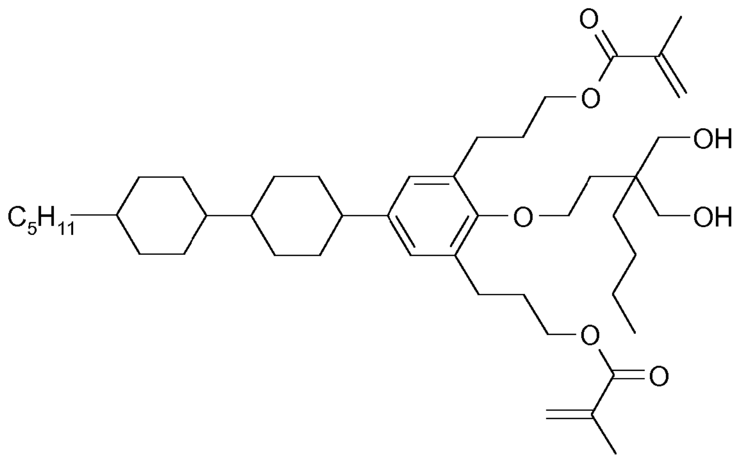

SA-18

(continued)

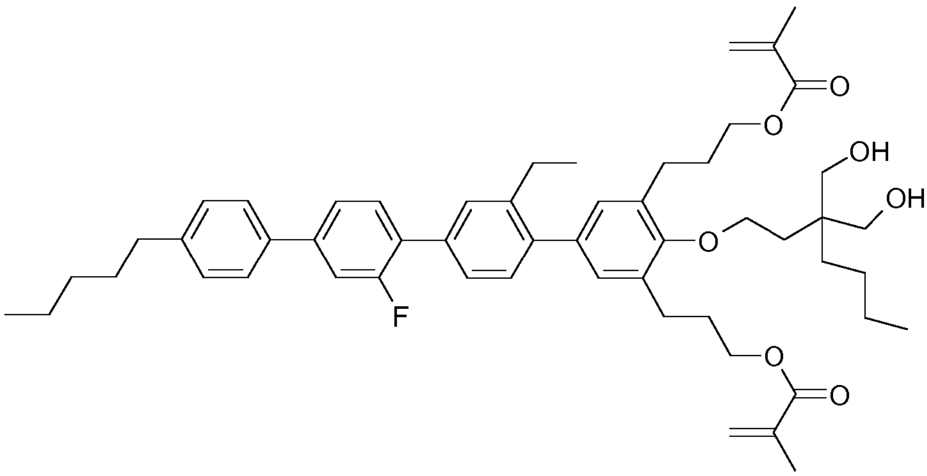
SA-19

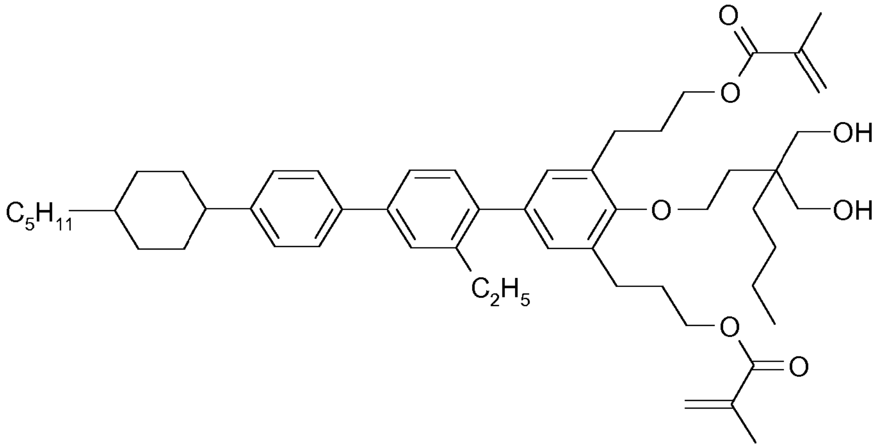
SA-20

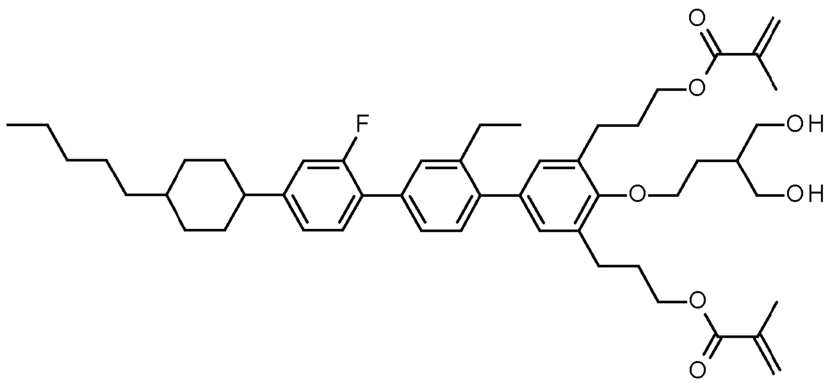
SA-21

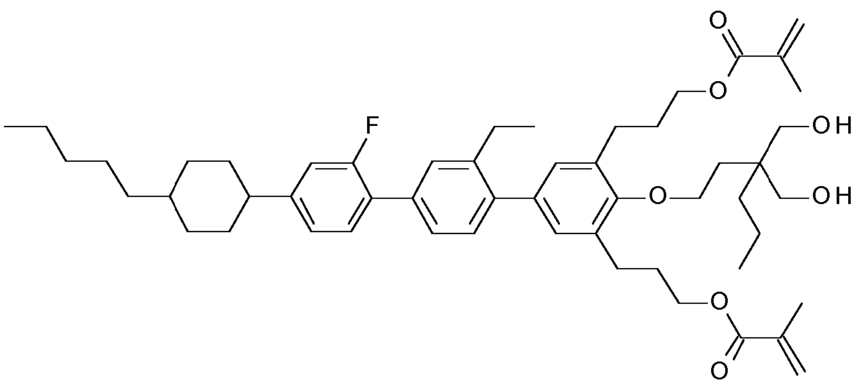
SA-22

(continued)

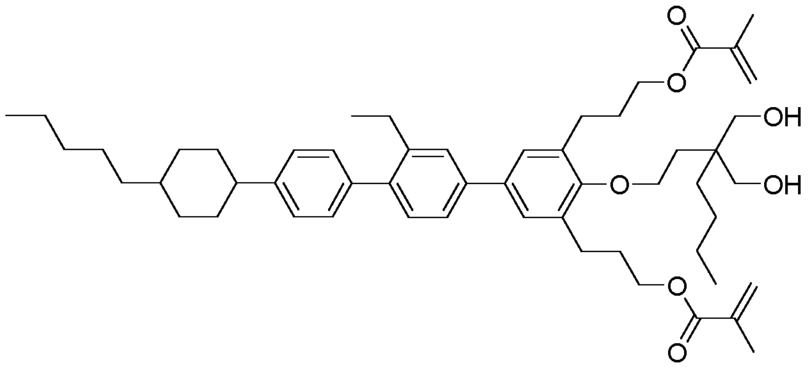

SA-23

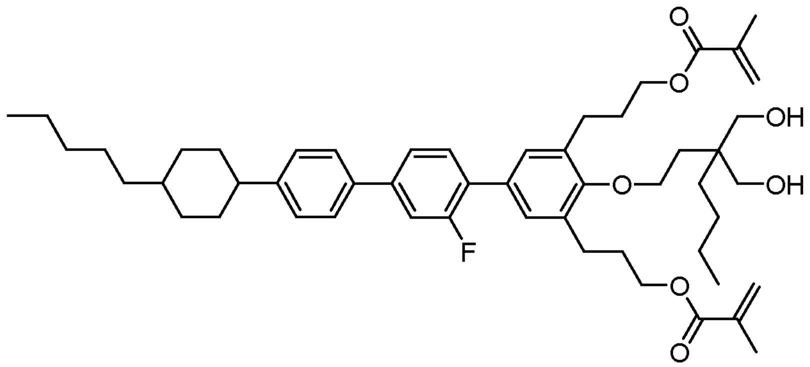

SA-24

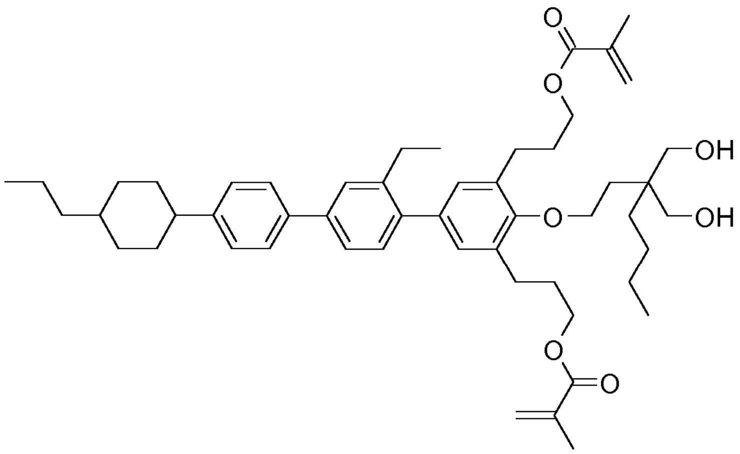

SA-25

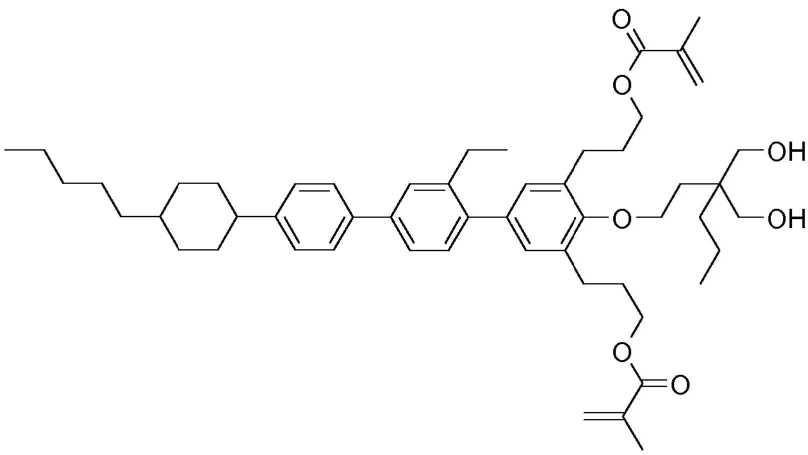

SA-26

(continued)

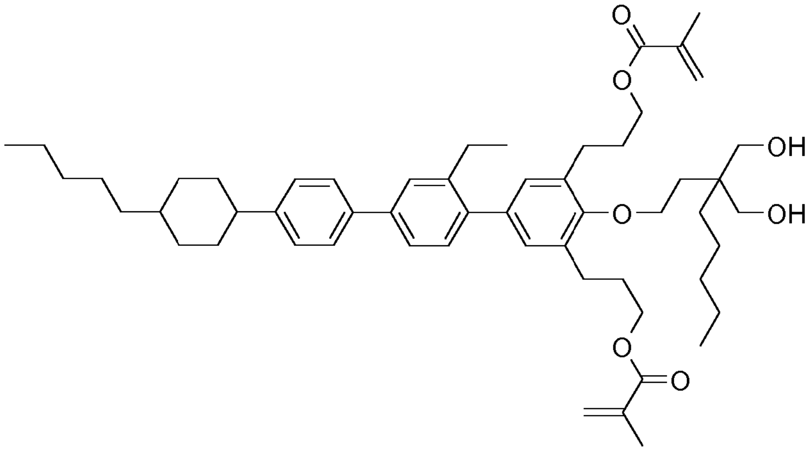

SA-27

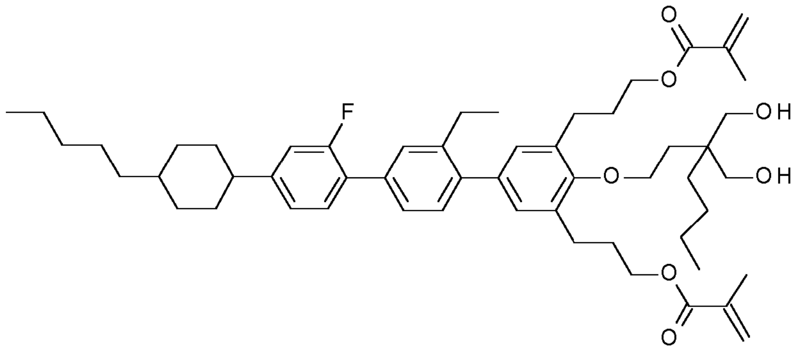

SA-28

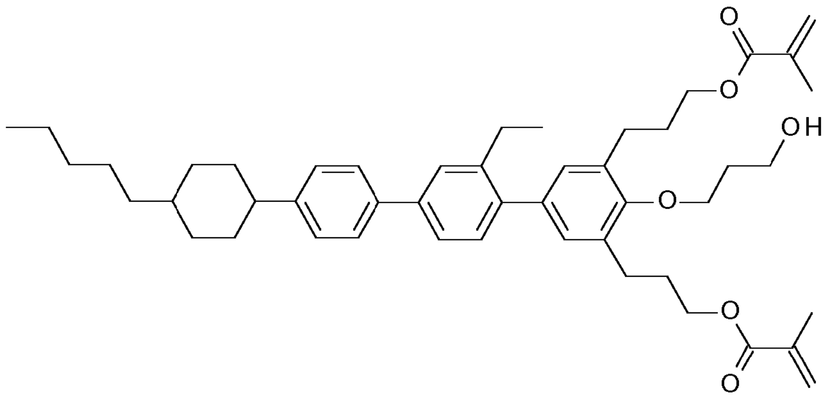

SA-29

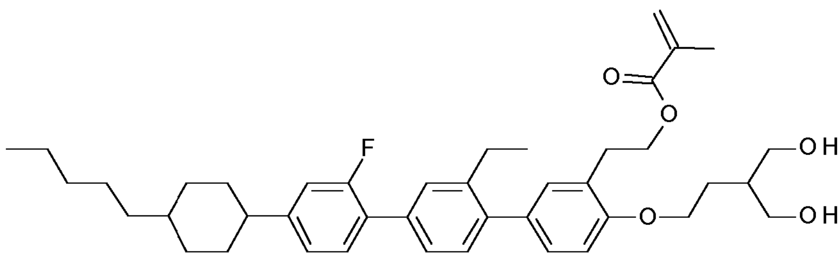

SA-30

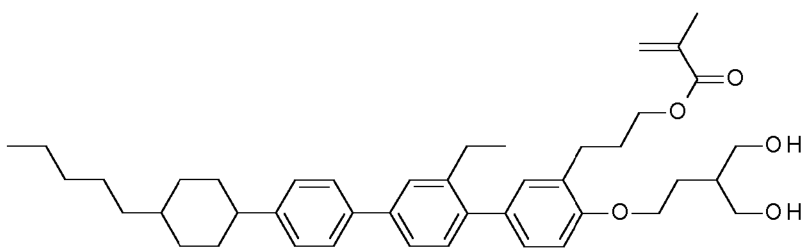

SA-31

(continued)

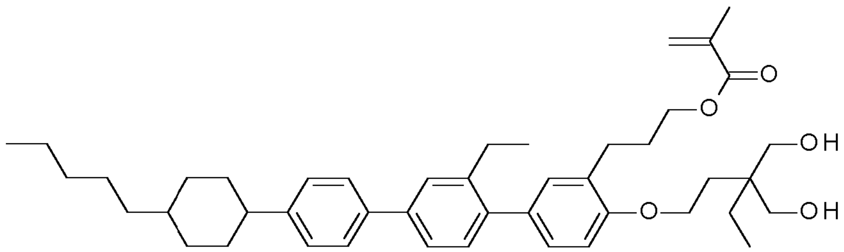

SA-32

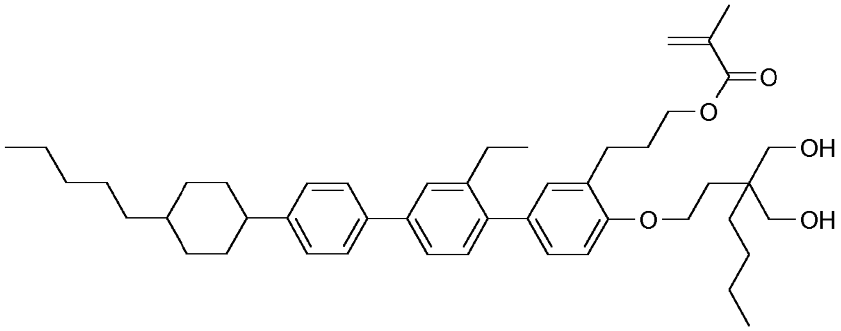

SA-33

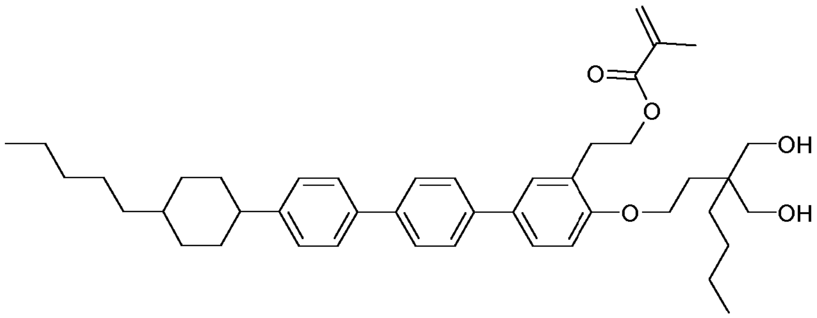

SA-34

In a preferred embodiment, the LC media, SA-VA and SA-FFS displays according to the present invention comprise one or more SA additives selected from formulae SA-1 to SA-34.

In addition, the following abbreviations and symbols are used:

| | |
|---|---|
| $V_0$ | threshold voltage, capacitive [V] at 20°C, |
| $n_e$ | extraordinary refractive index at 20°C and 589 nm, |
| $n_o$ | ordinary refractive index at 20°C and 589 nm, |
| $\Delta n$ | optical anisotropy at 20°C and 589 nm, |
| $\varepsilon\perp$ | dielectric permittivity perpendicular to the director at 20°C and 1 kHz, |
| $\varepsilon\|\|$ | dielectric permittivity parallel to the director at 20°C and 1 kHz, |
| $\Delta\varepsilon$ | dielectric anisotropy at 20°C and 1 kHz, |
| cl.p., T(N,I) | clearing point [°C], |
| $\gamma_1$ | rotational viscosity at 20°C [mPa·s], |
| $K_1$ | elastic constant, "splay" deformation at 20°C [pN], |
| $K_2$ | elastic constant, "twist" deformation at 20°C [pN], |
| $K_3$ | elastic constant, "bend" deformation at 20°C [pN]. |

Unless explicitly noted otherwise, all concentrations in the present application are quoted in per cent by weight and relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical

Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold ($V_0$), also known as the Freedericks threshold, unless explicitly indicated otherwise. In the examples, the optical threshold may also, as generally usual, be quoted for 10% relative contrast ($V_{10}$).

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

## Examples

Unless stated otherwise, the process of polymerising the polymerisable compounds in the PSA displays as described above and below is carried out at a temperature where the LC medium exhibits a liquid crystal phase, preferably a nematic phase, and most preferably is carried out at room temperature (also abbreviated as "RT").

Unless stated otherwise, methods of preparing test cells and measuring their electrooptical and other properties are carried out by the methods as described hereinafter or in analogy thereto.

The display used for measurement of the capacitive threshold voltage consists of two plane-parallel glass outer plates at a separation of 25 μm, each of which has on the inside an electrode layer and an unrubbed polyimide alignment layer on top, which effect a homeotropic edge alignment of the liquid-crystal molecules.

The display or test cell used for measurement of the tilt angles consists of two plane-parallel glass outer plates at a separation of 4 μm, each of which has on the inside an electrode layer and a polyimide alignment layer on top, where the two polyimide layers are rubbed antiparallel to one another and effect a homeotropic edge alignment of the liquid-crystal molecules.

The polymerisable compounds are polymerised in the display or test cell by irradiation with UVA light of defined intensity for a prespecified time, with a voltage simultaneously being applied to the display (usually 10 V to 30 V alternating current, 1 kHz). In the examples, unless indicated otherwise, a metal halide lamp and an intensity of 50 $mW/cm^2$ is used for polymerisation. The intensity is measured using a standard UVA meter (Hoenle UV-meter high end with UVA sensor).

The tilt angle is determined by crystal rotation experiment (Autronic-Melchers TBA-105). A low value (i.e. a large deviation from the 90° angle) corresponds to a large tilt here.

The VHR value is measured as follows: 0.35% of a polymerisable monomeric compound is added to the LC host mixture, and the resultant mixture is introduced into VA-VHR test cells which comprise an unrubbed VA-polyimide alignment layer. The LC-layer thickness d is approx. 6 μm, unless stated othewise. The VHR value is determined before and after UV exposure at 1 V, 60 Hz, 64 μs pulse (measuring instrument: Autronic-Melchers VHRM-105).

## Example 1

The nematic LC host mixture N1 is formulated as follows.

| | | | |
|---|---|---|---|
| BCH-32 | 5.00% | cl.p. | 74.4 °C |
| CC-3-V1 | 6.00% | Δn | 0.1093 |
| CCH-301 | 1.00% | Δε | -3.1 |
| CCH-34 | 8.00% | $\varepsilon_{\|\|}$ | 3.6 |
| CCH-35 | 8.00% | $\gamma_1$ | 108 mPa s |
| CCP-3-1 | 8.00% | $K_1$ | 13.5 |
| CCP-3-3 | 5.00% | $K_3$ | 16.5 |
| CCY-3-O2 | 7.00% | $K_3/K_1$ | 1.22 |
| CPY-3-02 | 9.50% | | |
| CY-3-O2 | 11.50% | | |
| PCH-301 | 12.00% | | |
| PY-1-O2 | 8.00% | | |
| PY-3-O2 | 6.00% | | |
| CLY-3-O2 | 1.00% | | |
| B(S)-2O-O5 | 4.00% | | |

The mixture contains 4% of a compound of formula B (B(S)-2O-O5) and 1% of a compound of formula CLY

(CLY-3-O2).

Comparison Example C1

The nematic LC host mixture C1 is formulated as follows.

| | | | |
|---|---|---|---|
| BCH-32 | 8.00% | cl.p. | 74.2 °C |
| CC-3-V1 | 9.00% | $\Delta n$ | 0.1091 |
| CCH-301 | 2.00% | $\Delta\varepsilon$ | -3.1 |
| CCH-34 | 8.00% | $\varepsilon_{\parallel}$ | 3.6 |
| CCH-35 | 7.00% | $\gamma_1$ | 108 mPa s |
| CCP-3-1 | 8.00% | $K_1$ | 14.5 |
| CCP-V2-1 | 5.00% | $K_3$ | 16.5 |
| CCY-3-O2 | 10.50% | $K_3/K_1$ | 1.14 |
| CPY-3-O2 | 2.50% | | |
| CY-3-O2 | 11.50% | | |
| PCH-301 | 5.50% | | |
| PY-3-O2 | 18.00% | | |
| CLY-3-O2 | 1.00% | | |
| B-2O-O5 | 4.00% | | |

The mixture contains 1% of a compound of formula CLY (CLY-3-O2), and 4% of a compound of formula BO (B-2O-O5), but no compound of formula B.

Comparison Example C2

The nematic LC host mixture C2 is formulated as follows.

| | | | |
|---|---|---|---|
| BCH-32 | 8.00% | cl.p. | 74.7 °C |
| CC-3-V1 | 6.00% | $\Delta n$ | 0.1094 |
| CCH-301 | 1.00% | $\Delta\varepsilon$ | -3.1 |
| CCH-34 | 8.00% | $\varepsilon_{\parallel}$ | 3.6 |
| CCH-35 | 8.00% | $\gamma_1$ | 113 mPa s |
| CCP-3-1 | 8.00% | $K_1$ | 13.5 |
| CCY-3-O2 | 10.50% | $K_3$ | 16.5 |
| CPY-2-O2 | 1.00% | $K_3/K_1$ | 1.23 |
| CPY-3-O2 | 10.50% | | |
| CY-3-O2 | 15.00% | | |
| PCH-301 | 10.00% | | |
| PY-1-O2 | 8.00% | | |
| PY-2-O2 | 6.00% | | |

The mixture does neither contain a compound of formula CLY nor a compound of formula B.

Comparison Example C3

The nematic LC host mixture C3 is formulated as follows.

| | | | |
|---|---|---|---|
| BCH-32 | 9.00% | cl.p. | 74.3 °C |
| CC-3-V1 | 6.00% | $\Delta n$ | 0.1090 |
| CCH-301 | 1.50% | $\Delta\varepsilon$ | -3.1 |
| CCH-34 | 8.00% | $\varepsilon_{\parallel}$ | 3.6 |
| CCH-35 | 8.00% | $\gamma_1$ | 112 mPa s |

(continued)

| | | | |
|---|---|---|---|
| CCP-3-1 | 6.50% | $K_1$ | 13.3 |
| CCY-3-O2 | 10.50% | $K_3$ | 16.4 |
| CPY-3-O2 | 10.50% | $K_3/K_1$ | 1.23 |
| CY-3-O2 | 15.00% | | |
| PCH-301 | 10.00% | | |
| PY-1-O2 | 8.00% | | |
| PY-2-O2 | 6.00% | | |
| CLY-3-O2 | 1.00% | | |

The mixture contains 1% of a compound of formula CLY (CLY-3-02), but does not contain a compound of formula B.

Comparison Example C4

The nematic LC host mixture C4 is formulated as follows.

| | | | |
|---|---|---|---|
| BCH-32 | 5.50% | cl.p. | 74.1 °C |
| CC-3-V1 | 6.00% | $\Delta n$ | 0.1088 |
| CCH-301 | 1.50% | $\Delta\varepsilon$ | -3.1 |
| CCH-34 | 7.50% | $\varepsilon_{\parallel}$ | 3.6 |
| CCH-35 | 8.00% | $\gamma_1$ | 108 mPa s |
| CCP-3-1 | 8.00% | $K_1$ | 13.5 |
| CCP-3-3 | 4.50% | $K_3$ | 16.4 |
| CCY-3-O2 | 9.00% | $K_3/K_1$ | 1.21 |
| CPY-3-O2 | 8.50% | | |
| CY-3-O2 | 11.50% | | |
| PCH-301 | 12.00% | | |
| PY-1-O2 | 8.00% | | |
| PY-2-O2 | 6.00% | | |
| B(S)-2O-O5 | 4.00% | | |

The mixture contains 4% of a compound of formula B (B(S)-2O-O5), but does not contain a compound of formula CLY.

Example 2

The nematic LC host mixture N2 is formulated as follows.

| | | | |
|---|---|---|---|
| BCH-32 | 5.00% | cl.p. | 74.7 °C |
| CC-3-V1 | 6.00% | $\Delta n$ | 0.1024 |
| CCH-34 | 9.00% | $\Delta\varepsilon$ | -3.2 |
| CCH-35 | 9.00% | $\varepsilon_{\parallel}$ | 3.6 |
| CCP-3-1 | 8.00% | $\gamma_1$ | 109 mPa s |
| CCY-3-O1 | 6.50% | $K_1$ | 13.5 |
| CCY-3-O2 | 9.00% | $K_3$ | 16.5 |
| CPY-3-O2 | 4.50% | $K_3/K_1$ | 1.22 |
| CY-3-O2 | 13.00% | | |
| PCH-301 | 15.00% | | |
| PY-1-O2 | 8.00% | | |
| PY-2-O2 | 2.00% | | |
| CLY-3-O2 | 1.00% | | |
| B(S)-2O-O5 | 4.00% | | |

The mixture contains 4% of a compound of formula B (B(S)-2O-O5) and 1% of a compound of formula CLY (CLY-3-O2).

Comparison Example C5

The nematic LC host mixture C5 is formulated as follows.

| | | | |
|---|---|---|---|
| CC-3-V1 | 6.00% | cl.p. | 74.5 °C |
| CCH-301 | 4.00% | $\Delta n$ | 0.1022 |
| CCH-303 | 1.00% | $\Delta\varepsilon$ | -3.2 |
| CCH-34 | 9.00% | $\varepsilon_{\|\|}$ | 3.6 |
| CCH-35 | 9.00% | $\gamma_1$ | 108 mPa s |
| CCP-3-1 | 8.00% | $K_1$ | 13.9 |
| CCY-3-O1 | 7.00% | $K_3$ | 16.5 |
| CCY-3-O2 | 10.50% | $K_3/K_1$ | 1.19 |
| CPY-3-O2 | 8.00% | | |
| CY-3-O2 | 4.00% | | |
| PCH-301 | 15.00% | | |
| PY-1-O2 | 10.00% | | |
| PY-2-O2 | 4.50% | | |
| B(S)-2O-O5 | 4.00% | | |

The mixture contains 4% of a compound of formula B (B(S)-2O-O5), but does not contain a compound of formula CLY.

Example 3

The nematic LC host mixture N3 is formulated as follows.

| | | | |
|---|---|---|---|
| CC-3-V1 | 6.00% | cl.p. | 74.4 °C |
| CCH-34 | 9.00% | $\Delta n$ | 0.1024 |
| CCH-35 | 9.00% | $\Delta\varepsilon$ | -3.2 |
| CCP-3-1 | 9.00% | $\varepsilon_{\|\|}$ | 3.6 |
| CCP-3-3 | 4.00% | $\gamma_1$ | 108 mPa s |
| CCY-3-O2 | 10.50% | $K_1$ | 13.5 |
| CPY-3-O2 | 7.50% | $K_3$ | 16.7 |
| CY-3-O2 | 11.00% | $K_3/K_1$ | 1.24 |
| PCH-301 | 15.00% | | |
| PY-1-O2 | 3.00% | | |
| PY-2-O2 | 9.00% | | |
| CLY-3-O2 | 3.00% | | |
| B(S)-2O-O5 | 4.00% | | |

The mixture contains 4% of a compound of formula B (B(S)-2O-O5) and 3% of a compound of formula CLY (CLY-3-O2).

Example 4 (Comparison Example)

The nematic LC host mixture N4 is formulated as follows.

| | | | |
|---|---|---|---|
| BCH-32 | 2.50% | cl.p. | 75.0 °C |
| CC-3-V1 | 6.00% | $\Delta n$ | 0.1027 |
| CCH-34 | 8.50% | $\Delta\varepsilon$ | -3.2 |
| CCH-35 | 9.00% | $\varepsilon_{\|\|}$ | 3.6 |

(continued)

| | | | |
|---|---|---|---|
| CCP-3-1 | 8.50% | $\gamma_1$ | 107 mPa s |
| CCP-3-3 | 2.00% | $K_1$ | 13.6 |
| CCY-3-O2 | 10.50% | $K_3$ | 16.5 |
| CPY-3-O2 | 6.00% | $K_3/K_1$ | 1.21 |
| CY-3-O2 | 12.00% | | |
| PCH-301 | 15.50% | | |
| PY-2-O2 | 10.50% | | |
| CLY-3-O2 | 5.00% | | |
| B(S)-2O-O5 | 4.00% | | |

The mixture contains 4% of a compound of formula B (B(S)-2O-O5) and 5% of a compound of formula CLY (CLY-3-O2).

Example 5 (Comparison Example)

The nematic LC host mixture N5 is formulated as follows.

| | | | |
|---|---|---|---|
| BCH-32 | 4.00% | cl.p. | 74.4 °C |
| CC-3-V1 | 6.00% | $\Delta n$ | 0.1027 |
| CCH-34 | 8.00% | $\Delta\varepsilon$ | -3.2 |
| CCH-35 | 8.50% | $\varepsilon_{\parallel}$ | 3.6 |
| CCP-3-1 | 8.00% | $\gamma_1$ | 108 mPa s |
| CCP-3-3 | 2.50% | $K_1$ | 13.8 |
| CCY-3-O2 | 7.00% | $K_3$ | 16.6 |
| CPY-3-O2 | 2.50% | $K_3/K_1$ | 1.20 |
| CY-3-O2 | 14.50% | | |
| PCH-301 | 15.50% | | |
| PY-1-O2 | 3.50% | | |
| PY-2-O2 | 6.00% | | |
| CLY-3-O2 | 10.00% | | |
| B(S)-2O-O5 | 4.00% | | |

The mixture contains 4% of a compound of formula B (B(S)-2O-O5) and 10% of a compound of formula CLY (CLY-3-O2).

Comparison Example C6

The nematic LC host mixture C6 is formulated as follows.

| | | | |
|---|---|---|---|
| BCH-32 | 3.00% | cl.p. | 74.3 °C |
| CC-3-V1 | 6.00% | $\Delta n$ | 0.1026 |
| CCH-34 | 9.00% | $\Delta\varepsilon$ | -3.2 |
| CCH-35 | 7.00% | $\varepsilon_{\parallel}$ | 3.6 |
| CCP-3-1 | 8.00% | $\gamma_1$ | 107 mPa s |
| CCP-3-3 | 6.00% | $K_1$ | 13.5 |
| CCY-3-O2 | 10.00% | $K_3$ | 16.4 |
| CPY-3-O2 | 5.00% | $K_3/K_1$ | 1.21 |
| CY-3-O2 | 15.00% | | |
| PCH-301 | 16.00% | | |
| PY-1-O2 | 4.00% | | |
| PY-2-O2 | 3.00% | | |
| CLY-3-O2 | 1.00% | | |

(continued)

| | |
|---|---|
| B(S)-2O-O5 | 7.00% |

The mixture contains 7% of a compound of formula B (B(S)-2O-O5) and 1% of a compound of formula CLY (CLY-3-O2).

Comparison Example C7

The nematic LC host mixture C7 is formulated as follows.

| | | | |
|---|---|---|---|
| BCH-32 | 4.50% | cl.p. | 74.8 °C |
| CC-3-V1 | 6.00% | $\Delta n$ | 0.1026 |
| CCH-34 | 4.00% | $\Delta\varepsilon$ | -3.2 |
| CCH-35 | 9.00% | $\varepsilon_{\|\|}$ | 3.6 |
| CCP-3-1 | 8.00% | $\gamma_1$ | 110 mPa s |
| CCP-3-3 | 6.00% | $K_1$ | 13.6 |
| CCY-3-1 | 6.00% | $K_3$ | 16.4 |
| CCY-3-O2 | 8.50% | $K_3/K_1$ | 1.21 |
| CY-3-O2 | 15.00% | | |
| PCH-301 | 15.00% | | |
| PY-2-O2 | 8.00% | | |
| CLY-3-O2 | 3.00% | | |
| B(S)-2O-O5 | 7.00% | | |

The mixture contains 7% of a compound of formula B (B(S)-2O-O5) and 3% of a compound of formula CLY (CLY-3-O2).

Comparison Example C8

The nematic LC host mixture C8 is formulated as follows.

| | | | |
|---|---|---|---|
| BCH-32 | 4.50% | cl.p. | 74.0 °C |
| CC-3-V1 | 6.00% | $\Delta n$ | 0.1027 |
| CCH-34 | 6.50% | $\Delta\varepsilon$ | -3.2 |
| CCH-35 | 8.50% | $\varepsilon_{\|\|}$ | 3.6 |
| CCP-3-1 | 8.00% | $\gamma_1$ | 107 mPa s |
| CCP-3-3 | 6.00% | $K_1$ | 14.0 |
| CCY-3-1 | 6.00% | $K_3$ | 16.3 |
| CCY-3-O2 | 7.00% | $K_3/K_1$ | 1.16 |
| CY-3-O2 | 15.00% | | |
| PCH-301 | 15.50% | | |
| PY-1-O2 | 6.00% | | |
| CLY-3-O2 | 1.00% | | |
| B(S)-2O-O5 | 10.00% | | |

The mixture contains 10% of a compound of formula B (B(S)-2O-O5) and 1% of a compound of formula CLY (CLY-3-O2).

Comparison Example C9

The nematic LC host mixture C9 is formulated as follows.

| | | | |
|---|---|---|---|
| BCH-32 | 7.00% | cl.p. | 75.2 °C |

(continued)

| | | | |
|---|---|---|---|
| CC-3-V1 | 6.00% | $\Delta n$ | 0.1026 |
| CCH-34 | 5.00% | $\Delta\varepsilon$ | -3.2 |
| CCH-35 | 9.50% | $\varepsilon_{\parallel}$ | 3.5 |
| CCP-3-1 | 8.00% | $\gamma_1$ | 108 mPa s |
| CCP-3-3 | 7.00% | $K_1$ | 14.3 |
| CY-3-O2 | 16.00% | $K_3$ | 16.0 |
| CY-3-O4 | 5.50% | $K_3/K_1$ | 1.12 |
| PCH-301 | 15.00% | | |
| PY-1-O2 | 1.00% | | |
| CLY-3-O2 | 10.00% | | |
| B(S)-2O-O5 | 10.00% | | |

The mixture contains 10% of a compound of formula B (B(S)-2O-O5) and 10% of a compound of formula CLY (CLY-3-O2).

Use Example 1

Comparison polymerisable LC media CP1, CP2, CP3 and CP4 are prepared by adding to each of nematic LC host mixtures C1, C2, C3 and C4, respectively, the reactive mesogen RM-1 at a concentration of 0.35% by weight and the stabiliser S1 at a concentration of 0.005% by weight (i.e. polymerisable mixture CP1 is prepared by adding RM-1 and S1 to the host mixture C1, polymerisable mixture CP2 is prepared by adding RM-1 and S1 to the host mixture C2 etc.).

Polymerisable LC medium P1 according to the invention is prepared by adding to the nematic LC host mixture N1 the reactive mesogen RM-1 at a concentration of 0.35% by weight and the stabiliser S1 at a concentration of 0.005% by weight.

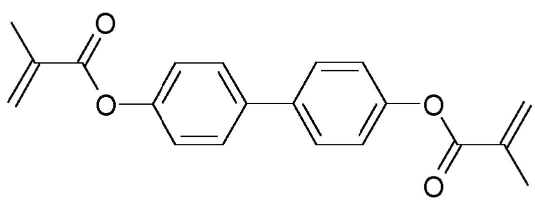

RM-1

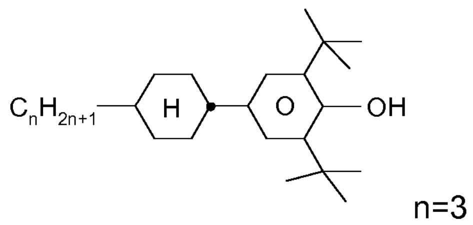

S1

1.1 Rotational Viscosity

Table 1 shows the rotational viscosity of the LC host mixtures C1-C4 and N1.

Table 1 - Rotational Viscosity

| Host Mixture | C1 | C2 | C3 | C4 | N1 |
|---|---|---|---|---|---|
| Rot. Viscosity $\gamma_1$ (mPa s) | 108 | 113 | 112 | 108 | 108 |

It can be seen that the mixtures C1, C4 and N1, which contain a compound of formula BO or B, have a lower rotational viscosity than mixtures C2 and C3 which do not contain a compound of formula BO or B.

Polymerisable mixtures based on the host mixtures C1, C4 and N1 with low rotational viscosity are thus especially

suitable for PSA displays with fast response times.

1.2 VHR values

The VHR values of polymerisable mixtures CP1-CP4 and P1 are measured at 60°C in VA-VHR test cells before and after UV exposure for 80 min and 120 min at RT using a fluorescent UV lamp type C (305nm ~ 355nm). The results are shown in Table 2.

Table 2 - VHR values

| | CP1 | CP2 | CP3 | CP4 | P1 |
|---|---|---|---|---|---|
| VHR at 60°C (%) | VHR/% | | | | |
| Initial | 99.5 | 99.5 | 99.4 | 99.5 | 99.4 |
| After 80 min UV | 98.7 | 99.1 | 99.1 | 98.0 | 99.1 |
| After 120min UV | 98.2 | 99.2 | 99.2 | 97.5 | 99.2 |

From Table 2 it can be seen that the initial VHR value of poymerisable mixtures CP1-CP4 and P1 is approximately at the same level. However, after UV exposure the mixtures CP1 and CP4 show a decrease of the VHR, compared to the mixtures CP2, CP3 and P1 which maintain a high VHR.

The mixtures CP2, CP3 and P1 with higher VHR after UV exposure are thus especially suitable for PSA displays with high reliability and UV stability.

1.3 Pretilt Angle

Each of polymerisable mixtures CP1-CP4 and P1 is inserted into a VA e/o test cell. The test cells comprise a VA-polyimide alignment layer (JALS-2096-R1) which is rubbed antiparallel. The LC-layer thickness d is approx. 4 μm.

The pretilt angle is determined after UV irradiation with 50mW/cm$^2$ for 120s (6J) by a crystal rotation experiment (Autronic-Melchers TBA-105). The results are shown in Table 3.

Table 3 - Pretilt angles

| | CP1 | CP2 | CP3 | CP4 | P1 |
|---|---|---|---|---|---|
| Pretilt angle (°) | 86.5 | 87.2 | 87.2 | 85.7 | 86.7 |

From Table 3 it can be seen that all mixtures show good tilt angle generation.

1.4 Residual RM amount

In order to determine the polymerisation rate, the residual content of the unpolymerised reactive mesogen RM-1 (in % by weight) in the test cells is measured by HPLC after polymerisation in the test cell by UV exposure for 80 and 120 min at 60°C using a fluorescent UV lamp type C (305nm ~ 355nm). For this purpose the polymerised mixture is then rinsed out of the test cell using MEK (methyl ethyl ketone) and measured.

The residual concentration of unpolymerised RM-1 in the mixture after 80 and 120 min UV irradiation is shown in Table 4.

Table 4 - Residual RM content

| RM (%) | CP1 | CP2 | CP3 | CP4 | P1 |
|---|---|---|---|---|---|
| 80 min UV | 0.0106 | 0.0107 | 0.0163 | 0.0026 | 0.0062 |
| 120 min UV | 0.0046 | 0.0044 | 0.0078 | 0.0008 | 0.0027 |

From Table 4 it can be seen that the mixtures CP4 and P1 with a compound of formula B show quicker polymerisation with a lower amount of residual RM compared to the mixtures CP1-CP3 which do not contain a compound of formula B.

1.5 Overall Properties

The properties determined in 1.1-1.4 above are summarized in Table 5.

Table 5 - Summary

| Property | CP1 | CP2 | CP3 | CP4 | P1 |
|---|---|---|---|---|---|
| Rot. visc. $\gamma_1$ of LC host (mPa·s) | 108 | 113 | 112 | 108 | 108 |
| VH R after 120min UV | 98.2 | 99.2 | 99.2 | 97.5 | 99.2 |
| Pretilt angle (°) | 86.5 | 87.2 | 87.2 | 85.7 | 86.7 |
| Residual RM after 80 min UV | 0.0106 | 0.0107 | 0.0163 | 0.0026 | 0.0062 |

It can be seen that mixture P1, which contains a compound of formula CLY and a compound of formula B, shows the best overall properties without any drawback, as it combines a low viscosity, high VHR after UV exposure, good pretilt angle generation, and a good and quick polymerisation with low amount of residual RM.

It can also be seen that the replacement of a compound of formula BO as in mixture CP1 by a compound of formula B as in mixture P1 leads to higher VHR and quicker polymerisation.

Use Example 2

Comparison polymerisable LC media CP5 is prepared by adding to the nematic LC host mixture C5 the reactive mesogen RM-1 at a concentration of 0.35% by weight and the stabiliser S1 at a concentration of 0.005% by weight.

Polymerisable LC medium P2 according to the invention is prepared by adding to the nematic LC host mixture N2 the reactive mesogen RM-1 at a concentration of 0.35% by weight and the stabiliser S1 at a concentration of 0.005% by weight.

The VHR values of the polymerisable mixtures are measured as described in Use Example 1 above. The results are shown in Table 6.

Table 6 - VHR values

| | CP5 | P2 |
|---|---|---|
| VHR at 60°C (%) | VHR/% | |
| Initial | 99.3 | 99.5 |
| After 80 min UV | 98.1 | 98.8 |
| After 120min UV | 97.6 | 98.8 |

From Table 6 it can be seen that the initial VHR value of the polymerisable mixtures is approximately the same. However, after UV exposure the mixture CP5 shows a larger decrease of the VHR compared to mixture P2.

The mixture P2 is therefore especially suitable for PSA displays with high reliability and UV stability.

Use Example 3

Comparison polymerisable LC media CP6-CP9 are prepared by adding to each of nematic LC host mixtures C6-C9, respectively, the reactive mesogen RM-1 at a concentration of 0.35% by weight, and the stabiliser S1 at a concentration of 0.005% by weight i.e. polymerisable mixture CP6 is prepared by adding RM-1 and S1 to the host mixture C6, etc.). Polymerisable LC media P3-P5 according to the invention are prepared by adding to each of nematic LC host mixtures N3-N5, respectively, the reactive mesogen RM-1 at a concentration of 0.35% by weight, and the stabiliser S1 at a concentration of 0.005% by weight (i.e. polymerisable mixture P3 is prepared by adding RM-1 and S1 to the host mixture N3, etc.).

The VHR values of the polymerisable mixtures are measured as described in Use Example 1 above.

Table 7 shows the VHR values for mixtures P2-P5, wherein P4 and P5 are not according to the invention, and CP6-C9, together with the proportion of the compounds of formula B and formula CLY in the respective host mixture.

Table 7 - VHR values

| | P2 | P3 | P4 | P5 | CP6 | CP7 | CP8 | CP9 |
|---|---|---|---|---|---|---|---|---|
| Cpd. B (wt.%) | 4 | 4 | 4 | 4 | 7 | 7 | 10 | 10 |
| Cpd. CLY (wt.%) | 1 | 3 | 5 | 10 | 1 | 3 | 1 | 10 |
| VHR, 60°C (%) | | | | | | | | |
| Initial | 99.5 | 99.4 | 99.4 | 99.3 | 99.4 | 99.4 | 99.4 | 99.5 |
| 80 min UV | 98.8 | 98.6 | 98.6 | 98.2 | 97.0 | 97.8 | 96.6 | 96.9 |
| 120min UV | 98.8 | 98.4 | 98.4 | 98.2 | 96.7 | 97.5 | 96.1 | 96.1 |

From Table 6 it can be seen that the initial VHR value of all poymerisable mixtures is approximately the same. However, after UV exposure the mixtures CP6-CP9 which contain a higher amount (>5%) of compounds of formula B show a larger decrease of the VHR compared to the mixtures P2-P5 which contain a lower amount (<5%) of compounds of formula B.

The mixtures P2-P5 are therefore especially suitable for PSA displays with high reliability and UV stability.

## Claims

**1.** A liquid crystal (LC) medium comprising a polymerisable component A) comprising, preferably consisting of, one or more polymerisable compounds selected of formula I

$$R^a\text{-}B^1\text{-}(Z^b\text{-}B^2)_m\text{-}R^b \qquad \text{I}$$

in which the individual radicals, on each occurrence identically or differently, and each, independently of one another, have the following meaning:

$R^a$ and $R^b$ P, P-Sp-, H, F, Cl, Br, I, -CN, $-NO_2$, -NCO, -NCS, -OCN, -SCN, SFs or straight-chain or branched alkyl having 1 to 25 C atoms, in which, in addition, one or more non-adjacent $CH_2$ groups may each be replaced, independently of one another, by $-C(R^0)=C(R^{00})-$, -C≡C-, $-N(R^{00})-$, -O-, -S-, -CO-, -CO- O-, -O-CO-, -O-CO-O- in such a way that O and/or S atoms are not linked directly to one another, and in which, in addition, one or more H atoms may be replaced by F, Cl, Br, I, CN, P or P-Sp-, where, if $B^1$ and/or $B^2$ contain a saturated C atom, $R^a$ and/or $R^b$ may also denote a radical which is spiro-linked to this saturated C atom, wherein at least one of the radicals $R^a$ and $R^b$ denotes or contains a group P or P-Sp-,

P a polymerisable group selected from the group consisting of vinyloxy, acrylate, methacrylate, fluoroacrylate, chloro-acrylate, oxetane and epoxide,

Sp a spacer group or a single bond,

$B^1$ and $B^2$ an aromatic, heteroaromatic, alicyclic or heterocyclic group having 4 to 25 ring atoms, which may also contain fused rings, and which is unsubstituted, or mono- or polysubstituted by L,

$Z^b$ -O-, -S-, -CO-, -CO-O-, -OCO-, -O-CO-O-, $-OCH_2-$, $-CH_2O-$, - $SCH_2-$, $-CH_2S-$, $-CF_2O-$, $-OCF_2-$, $-CF_2S-$, $-SCF_2-$, $-(CH_2)_{n1}-$, - $CF_2CH_2-$, $-CH_2CF_2-$, $-(CF_2)_{n1}-$ , -CH=CH-, -CF=CF-, -C≡C-, - CH=CH-COO-, -OCO-CH=CH-, $CR^0R^{00}$ or a single bond,

$R^0$ and $R^{00}$ H or alkyl having 1 to 12 C atoms,

m 0, 1, 2, 3 or 4,

n1 1, 2, 3 or 4,

L P, P-Sp-, OH, $CH_2OH$, F, Cl, Br, I, -CN, $-NO_2$, -NCO, -NCS, - OCN, -SCN, $-C(=O)N(R^x)2$, $-C(=O)Y^1$, $-C(=O)R^x$, $-N(R^x)_2$, optionally substituted silyl, optionally substituted aryl having 6 to 20 C atoms, or straight-chain or branched alkyl, alkoxy, alkylcarbonyl, alkoxycarbonyl, alkylcarbonyloxy or alkoxy-carbonyloxy having 1 to 25 C atoms, in which, in addition, one or more H atoms may be replaced by F, Cl, P or P-Sp-,

$Y^1$ halogen,

$R^x$ P, P-Sp-, H, halogen, straight-chain, branched or cyclic alkyl having 1 to 25 C atoms, in which, in addition, one or more non-adjacent $CH_2$ groups may be replaced by -O-, -S-, -CO-, -CO-O-, -O-CO-, -O-CO-O- in such a way that O and/or S atoms are not linked directly to one another, and in which, in addition, one or more H atoms may be replaced by F, Cl, P or P-Sp-, an optionally substituted aryl or aryloxy group having 6 to 40 C atoms, or an optionally substituted heteroaryl or heteroaryloxy group having 2 to 40 C atoms,

and
a liquid-crystalline component B), hereinafter also referred to as "LC host mixture", comprising, preferably consisting of, one or more mesogenic or liquid-crystalline compounds,
wherein component B) comprises one or more compounds of formula B1 and one or more compounds of formula CLY1 as defined above and below, and
wherein the proportion of compounds of formula B1 in component B) of the LC medium is from >0 to ≤5% by weight, and the proportion of compounds of formula CLY1 in component B) of the LC medium is from 0.1 to 3% by weight,

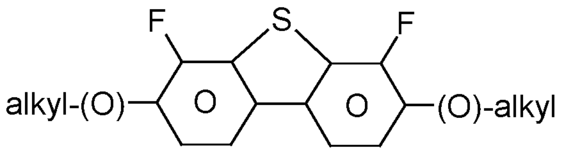
B1

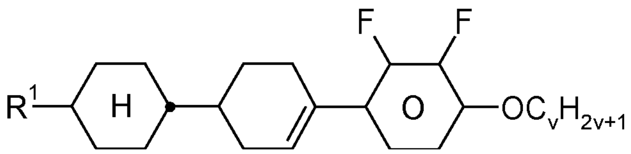
CLY1

wherein alkyl denotes a straight-chain alkyl radical having 1-6 C atoms, and (O) denotes an oxygen atom or a single bond, $R^1$ is alkyl, alkoxy, oxaalkyl or alkoxyalkyl having 1 to 9 C atoms or alkenyl or alkenyloxy having 2 to 9 C atoms, all of which are optionally fluorinated, and v is 1, 2, 3, 4, 5 or 6.

2. The LC medium according to Claim 1, **characterized in that** the proportion of compounds of formula B in component B) is from 0.1 to 4% by weight.

3. The LC medium according to one or more of Claims 1 to 2, **characterized in that** the proportion of compounds of formula CLY1 in component B) is from 0.1 to 1.5% by weight.

4. The LC medium according to one or more of Claims 1 to 3, **characterized in that** in the polymerisable compounds of formula I $B^1$ and $B^2$ each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent $CH_2$ groups may be replaced by O and/or S, 1,4-cyclohexenylene, bicycle[1.1.1]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined in claim 1.

5. The LC medium according to one or more of Claims 1 to 4, **characterized in that** the polymerisable compounds are selected from the following formulae:

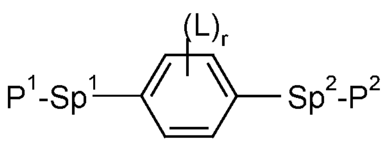
M1

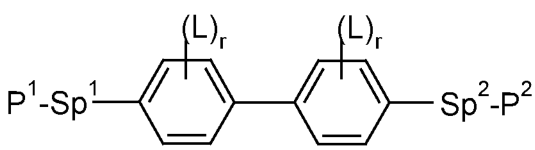
M2

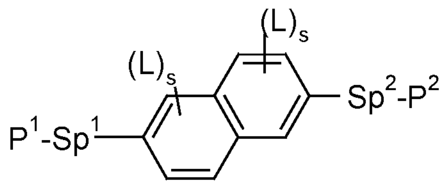

M3

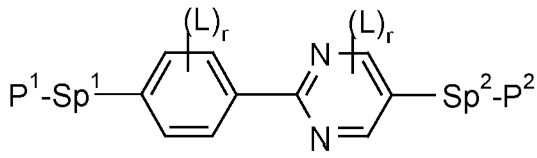

M4

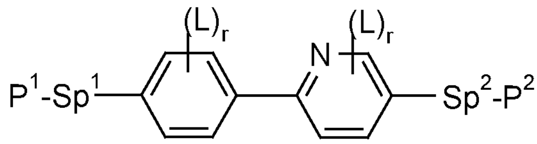

M5

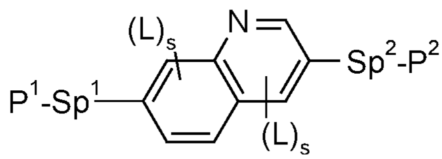

M6

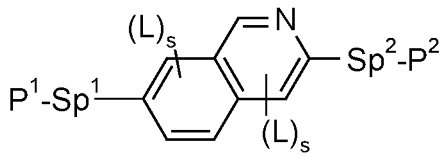

M7

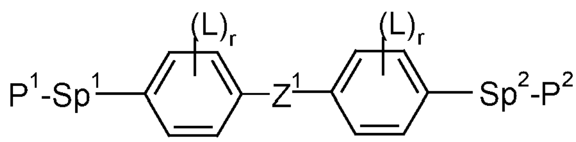

M8

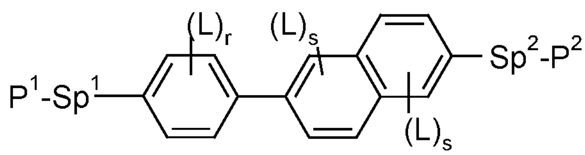

M9

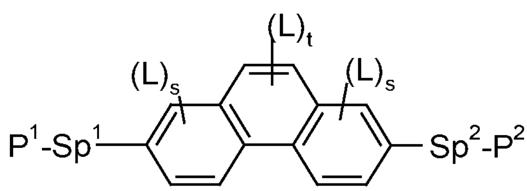

M10

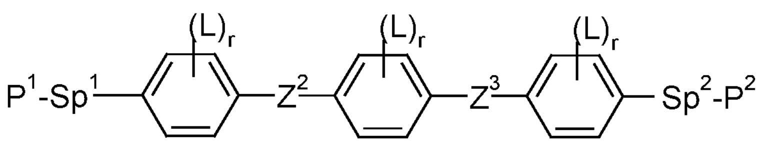

M11

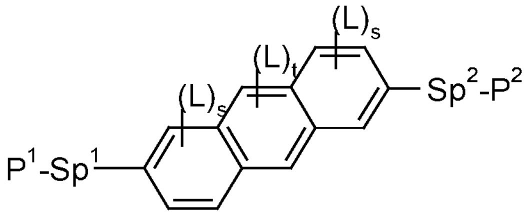

M12

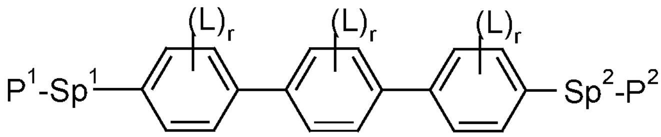

M13

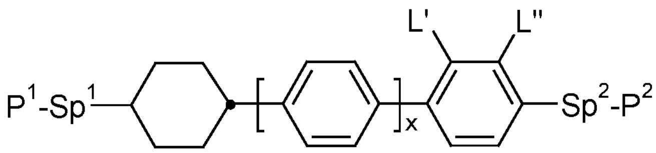

M14

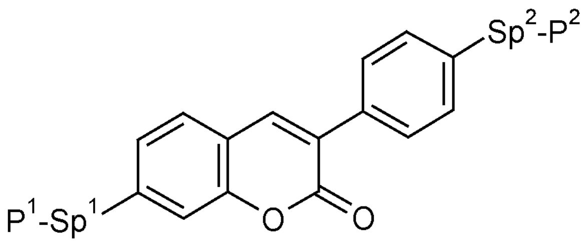

M15

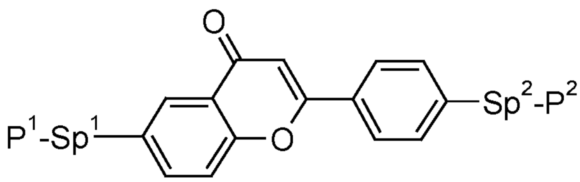

M16

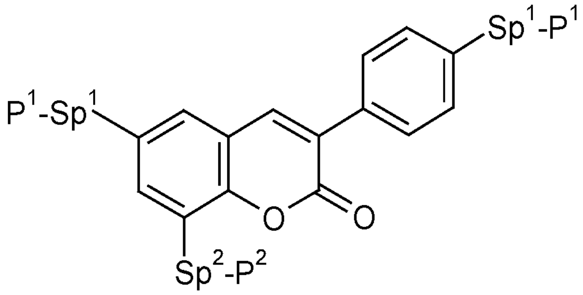

M17

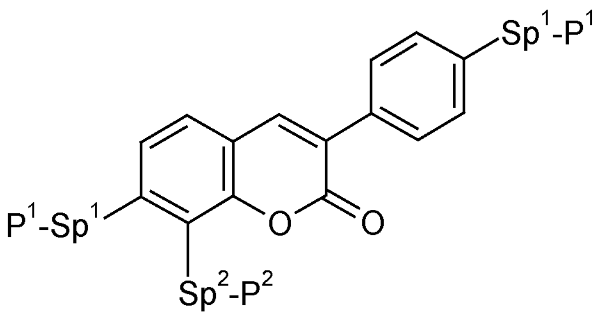

M18

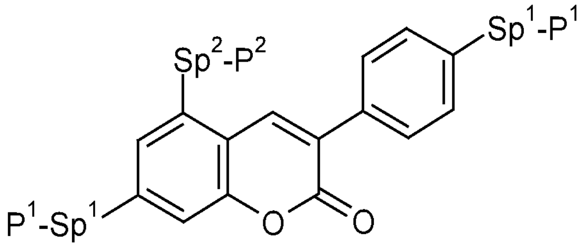

M19

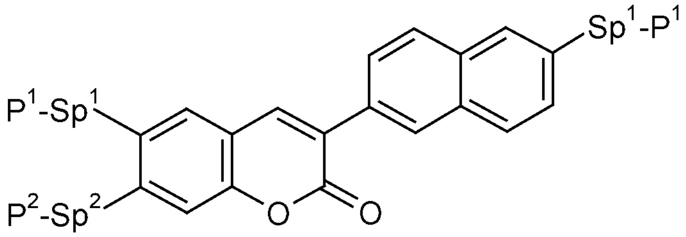

M20

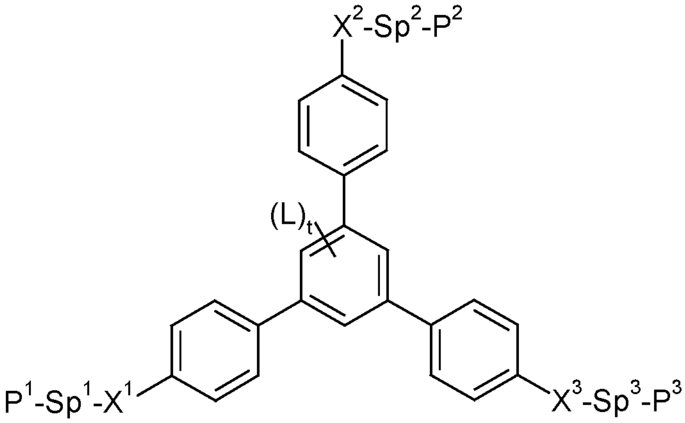

M21

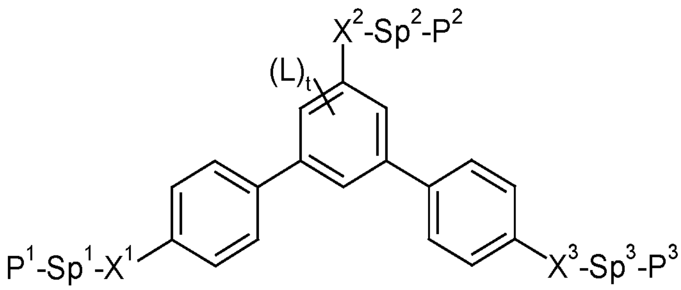

M22

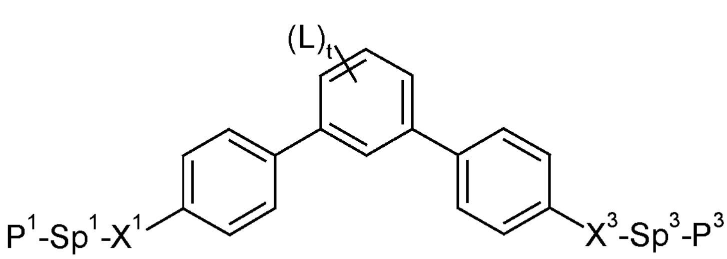

M23

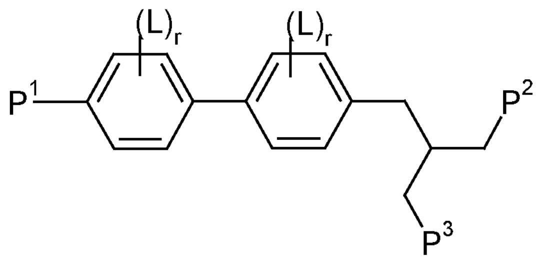

M24

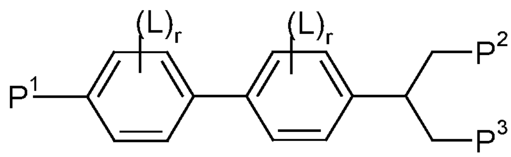

M25

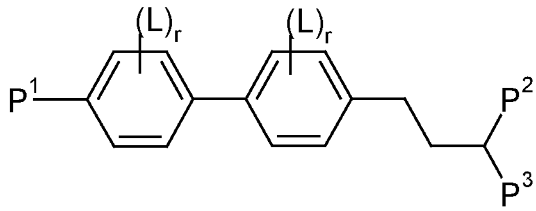

M26

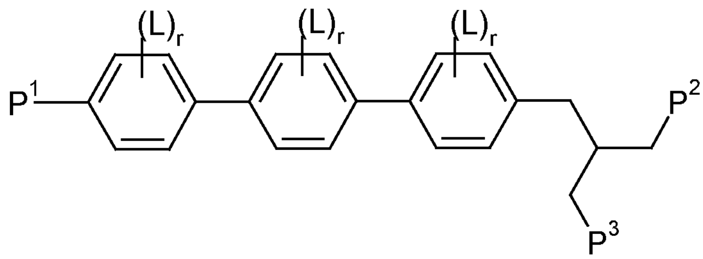

M27

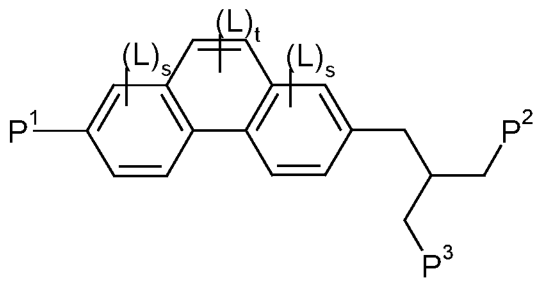

M28

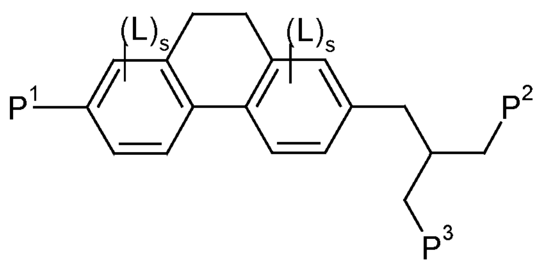

M29

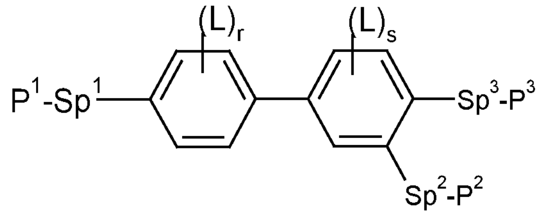

M30

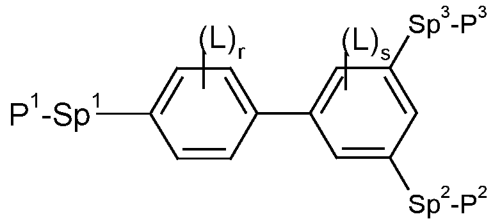

M31

in which the individual radicals, on each occurrence identically or differently, and each, independently of one another, have the following meaning:

$P^1$, $P^2$, $P^3$ a vinyloxy, acrylate, methacrylate, fluoroacrylate, chloroacrylate, oxetane or epoxy group,
$Sp^1$, $Sp^2$, $Sp^3$ a single bond or a spacer group where, in addition, one or more of the radicals $P^1$-$Sp^1$-, $P^1$-$Sp^2$- and $P^3$-$Sp^3$- may also denote $R^{aa}$, with the proviso that at least one of the radicals $P^1$-$Sp^1$-, $P^2$-$Sp^2$ and $P^3$-$Sp^3$- present is different from $R^{aa}$,
$R^{aa}$ H, F, Cl, CN or straight-chain or branched alkyl having 1 to 25 C atoms, in which, in addition, one or more non-adjacent $CH_2$ groups may each be replaced, independently of one another, by -C($R^0$)=C($R^{00}$)-, -C≡C-, -N($R^0$)-, -O-, -S-, -CO-, -CO-O-, -O-CO-, -O-CO-O- in such a way that O and/or S atoms are not linked directly to one another, and in which, in addition, one or more H atoms may be replaced by F, Cl, CN or $P^1$-$Sp^1$-,
$R^0$, $R^{00}$ H or alkyl having 1 to 12 C atoms,
$R^y$ and $R^z$ H, F, $CH_3$ or $CF_3$,
$X^1$, $X^2$, $X^3$ -CO-O-, -O-CO- or a single bond,
$Z^1$ -O-, -CO-, -C($R^yR^z$)- or -$CF_2CF_2$-,
$Z^2$, $Z^3$ -CO-O-, -O-CO-, -$CH_2$O-, -O$CH_2$-, -$CF_2$O-, -O$CF_2$- or -$(CH_2)$n- where n is 2, 3 or 4,
L F, Cl, CN or straight-chain or branched, optionally mono- or polyfluorinated alkyl, alkoxy, alkenyl, alkynyl, alkylcarbonyl, alkoxycarbonyl, alkylcarbonyloxy or alkoxycarbonyloxy having 1 to 12 C atoms,
L', L" H, For Cl,
r 0, 1, 2, 3 or 4,
s 0, 1, 2 or 3,
t 0, 1 or 2,
x 0 or 1.

6. The LC medium according to one or more of Claims 1 to 5, **characterized in that** it comprises one or more compounds selected from the formulae AN and AY:

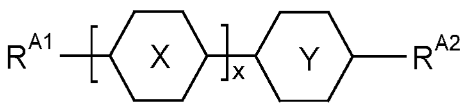

AN

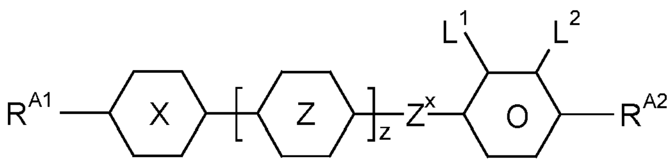

AY

in which the individual radicals, on each occurrence identically or differently, and each, independently of one another, have the following meaning:

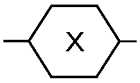 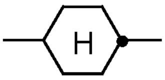 , 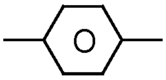 , 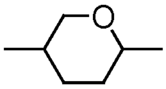 , 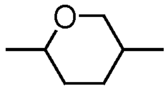 ,

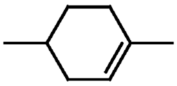 or 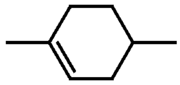 ,

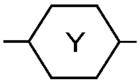 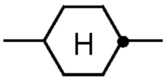 , 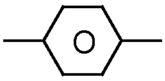 , 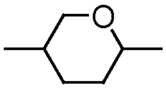 , 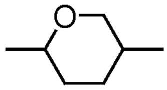 ,

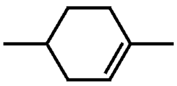 or 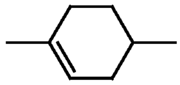 ,

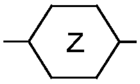 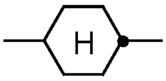 , 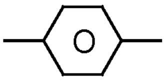 , 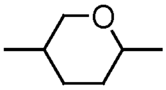 , 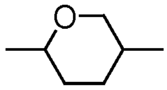 ,

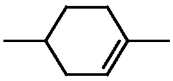 , 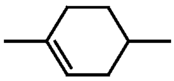 or 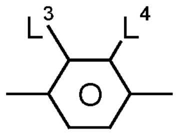

$R^{A1}$ alkenyl having 2 to 9 C atoms or, if at least one of the rings X, Y and Z denotes cyclohexenyl, also one of the meanings of $R^{A2}$,
$R^{A2}$ alkyl having 1 to 12 C atoms, in which, in addition, one or two non-adjacent $CH_2$ groups may be replaced by -O-, -CH=CH-, -CO-, -OCO- or -COO- in such a way that O atoms are not linked directly to one another,
$Z^x$ -$CH_2CH_2$-, -CH=CH-, -$CF_2O$-, -$OCF_2$-, -$CH_2O$-, -$OCH_2$-, -CO-O-, -O-CO-, -$C_2F_4$-, -CF=CF-, -CH=CH-$CH_2O$-, or a single bond,
$L^{1-4}$ H, F, Cl, $OCF_3$, $CF_3$, $CH_3$, $CH_2F$ or $CHF_2H$,
x 1 or 2,
z 0 or 1.

**7.** The LC medium according to one or more of Claims 1 to 6, **characterized in that** it comprises one or more compounds selected from the formulae CY and PY:

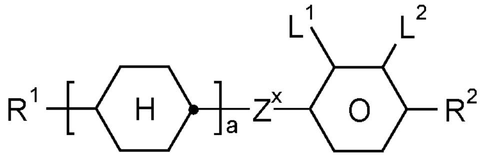 CY

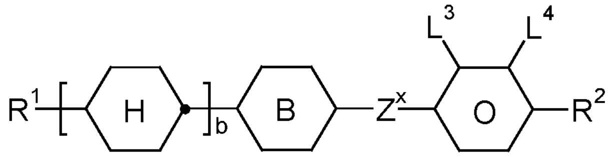 PY

in which the individual radicals have the following meanings:

a denotes 1 or 2,
b denotes 0 or 1,

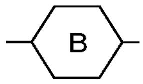

denotes

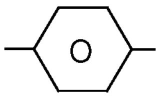 or 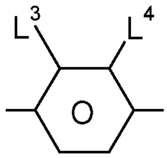

$R^1$ and $R^2$ each, independently of one another, denote alkyl having 1 to 12 C atoms, where, in addition, one or two non-adjacent $CH_2$ groups may be replaced by -O-, -CH=CH-, -CO-, -O-CO- or-CO-O- in such a way that O atoms are not linked directly to one another,

$Z^x$ denotes -CH=CH-, $-CH_2O-$, $-OCH_2-$, $-CF_2O-$, $-OCF_2-$, -O-, $-CH_2-$, $-CH_2CH_2-$ or a single bond,

$L^{1-4}$ each, independently of one another, denote F, Cl, $OCF_3$, $CF_3$, $CH_3$, $CH_2F$, $CHF_2$.

8. The LC medium according to one or more of Claims 1 to 7, **characterized in that** it comprises one or more compounds selected from formulae ZK and DK:

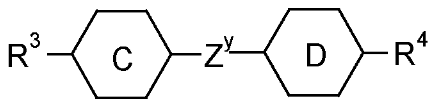 ZK

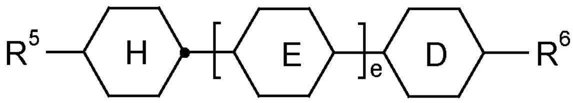 DK

in which the individual radicals on each occurrence, identically or differently, have the following meanings:

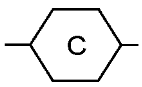

denotes -

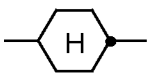, 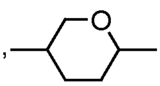 or 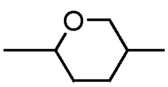,

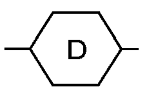

denotes

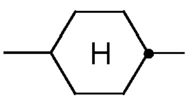 or 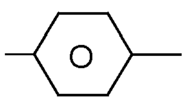,

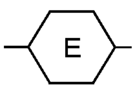

denotes

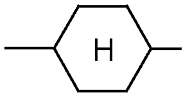, 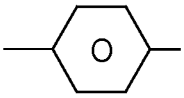 or 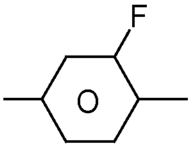 ,

and

$R^3$ and $R^4$ each, independently of one another, denote alkyl having 1 to 12 C atoms, in which, in addition, one or two non-adjacent $CH_2$ groups may be replaced by -O-, -CH=CH-, -CO-, -O-CO-or -CO-O- in such a way that O atoms are not linked directly to one another,

$Z^y$ denotes $-CH_2CH_2-$, -CH=CH-, $-CF_2O-$, $-OCF_2-$, $-CH_2O-$, $-OCH_2-$, -COO-, -OCO-, $-C_2F_4-$, -CF=CF- or a single bond,

$R^5$ and $R^6$ each, independently of one another, denote alkyl having 1 to 12 C atoms, where, in addition, one or two non-adjacent $CH_2$ groups may be replaced by -O-, -CH=CH-, -CO-, -OCO- or-COO- in such a way that O atoms are not linked directly to one another, preferably alkyl or alkoxy having 1 to 6 C atoms,

e denotes 1 or 2.

**9.** The LC medium according to one or more of Claims 1 to 8, **characterized in that** the polymerisable compounds are polymerised.

**10.** An LC display comprising an LC medium as defined in one or more of Claims 1 to 9.

**11.** The LC display of Claim 10, which is a PSA type display.

**12.** The LC display of Claim 11, which is a PS-VA, PS-IPS or PS-UB-FFS display.

**13.** The LC display of Claim 11 or 12, **characterized in that** it comprises two substrates, at least one which is transparent to light, an electrode provided on each substrate or two electrodes provided on only one of the substrates, and located between the substrates a layer of an LC medium as defined in one or more of Claims 1 to 7, wherein the polymerisable compounds are polymerised between the substrates of the display.

**14.** A process for the production of an LC display according to Claim 13, comprising the steps of providing an LC medium as defined in one or more of Claims 1 to 8 between the substrates of the display, and polymerising the polymerisable compounds.

**15.** A process of preparing an LC medium according to one or more of Claims 1 to 8, comprising the steps of mixing one or more compounds of formula B1 as defined Claim 1 with one or more compounds of formula CLY1 as defined in Claim 1 and one or more polymerisable compounds as defined in one or more of Claims 1 and 4 or 5, and optionally with further LC compounds and/or additives.

## Patentansprüche

**1.** Flüssigkristall(FK)-Medium enthaltend eine polymerisierbare Komponente A), die eine oder mehrere polymerisierbare Verbindungen, die ausgewählt sind aus der Formel I

$$R^a\text{-}B^1\text{-}(Z^b\text{-}B^2)_m\text{-}R^b \qquad \text{I}$$

enthält, vorzugsweise daraus besteht, worin die einzelnen Reste, bei jedem Auftreten gleich oder verschieden und jeweils unabhängig voneinander, die folgende Bedeutung besitzen:

$P^a$ und $R^b$ P, P-Sp-, H, F, Cl, Br, I, -CN, $-NO_2$, -NCO, -NCS, -OCN, -SCN, $SF_5$ oder geradkettiges oder verzweigtes Alkyl mit 1 bis 25 C-Atomen, worin zusätzlich eine oder mehrere nicht benachbarte $CH_2$-Gruppen jeweils unabhängig voneinander so durch $-C(R^0)=C(R^{00})-$, -C≡C-, $-N(R^{00})-$, -O-, -S-, -CO-, -CO-O-, -O-CO-, -O-CO-O-

ersetzt sein können, dass O- und/oder S-Atome nicht direkt miteinander verknüpft sind, und worin zusätzlich ein oder mehrere H-Atome durch F, Cl, Br, I, CN, P oder P-Sp- ersetzt sein können, wobei, wenn $B^1$ und/oder $B^2$ ein gesättigtes C-Atom enthalten, $R^a$ und/oder $R^b$ auch einen Rest bedeuten können, der mit diesem gesättigten C-Atom spiro-verknüpft ist, bei denen mindestens einer der Reste $R^a$ und $R^b$ eine Gruppe P oder P-Sp- bedeutet oder enthält,

P eine polymerisierbare Gruppe, die ausgewählt ist aus der Gruppe bestehend aus Vinyloxy, Acrylat, Methacrylat, Fluoracrylat, Chloracrylat, Oxetan und Epoxid,

Sp eine Spacergruppe oder eine Einfachbindung,

$B^1$ und $B^2$ eine aromatische, heteroaromatische, alicyclische oder heterocyclische Gruppe mit 4 bis 25 Ringatomen, die auch anellierte Ringe enthalten kann und die unsubstituiert oder ein- oder mehrfach durch L substituiert ist,

$Z^b$ -O-, -S-, -CO-, -CO-O-, -OCO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -C≡C-, -CH=CH-COO-, -OCO-CH=CH-, $CR^0R^{00}$ oder eine Einfachbindung,

$R^0$ und $R^{00}$ H oder Alkyl mit 1 bis 12 C-Atomen,

m 0, 1, 2, 3 oder 4,

n1 1, 2, 3 oder 4,

L P, P-Sp-, OH, $CH_2OH$, F, Cl, Br, I, -CN, $-NO_2$, -NCO, -NCS, -OCN, -SCN, $-C(=O)N(R^x)_2$, $-C(=O)Y^1$, $-C(=O)R^x$, $-N(R^x)_2$, gegebenenfalls substituiertes Silyl, gegebenenfalls substituiertes Aryl mit 6 bis 20 C-Atomen oder geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin zusätzlich ein oder mehrere H-Atome durch F, Cl, P oder P-Sp- ersetzt sein können,

$Y^1$ Halogen,

$R^x$ P, P-Sp-, H, Halogen, geradkettiges, verzweigtes oder cyclisches Alkyl mit 1 bis 25 C-Atomen, worin zusätzlich eine oder mehrere nicht benachbarte $CH_2$-Gruppen so durch -O-, -S-, -CO-, -CO-O-, -O-CO-, -O-CO-O- ersetzt sein können, dass O- und/oder S-Atome nicht direkt miteinander verknüpft sind, und worin zusätzlich ein oder mehrere H-Atome durch F, Cl, P oder P-Sp- ersetzt sein können, eine gegebenenfalls substituierte Aryl- oder Aryloxygruppe mit 6 bis 40 C-Atomen oder eine gegebenenfalls substituierte Heteroaryl- oder Heteroaryloxygruppe mit 2 bis 40 C-Atomen,

und

eine flüssigkristalline Komponente B), in Folgenden auch als "FK-Hostmischung" bezeichnet, die eine oder mehrere mesogene oder flüssigkristalline Verbindungen enthält, vorzugsweise daraus besteht,

wobei die Komponente B) eine oder mehrere Verbindungen der Formel B1 und eine oder mehrere Verbindungen der Formel CLY1 wie vor- und nachstehend definiert enthält, und

wobei der Anteil der Verbindungen der Formel B1 in der Komponente B) des FK-Mediums >0 bis ≤5 Gew.-% beträgt und der Anteil der Verbindungen der Formel CLY1 in der Komponente B) des FK-Mediums 0,1 bis 3 Gew.-% beträgt,

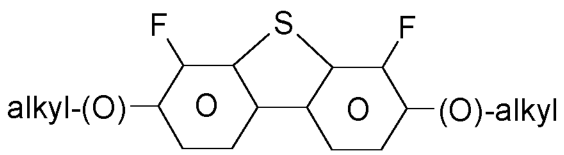

B1

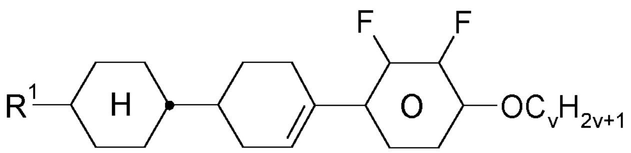

CLY1

wobei alkyl einen geradkettigen Alkylrest mit 1-6 C-Atomen bedeutet und (O) ein Sauerstoffatom oder eine Einfachbindung bedeutet, $R^1$ Alkyl, Alkoxy, Oxaalkyl oder Alkoxyalkyl mit 1 bis 9 C-Atomen oder Alkenyl oder Alkenyloxy mit 2 bis 9 C-Atomen ist, die alle gegebenenfalls fluoriert sind, und v 1, 2, 3, 4, 5 oder 6 ist.

2. FK-Medium nach Anspruch 1, **dadurch gekennzeichnet, dass** der Anteil der Verbindungen der Formel B in der Komponente B) 0,1 bis 4 Gew.-% beträgt.

3. FK-Medium nach einem oder mehreren der Ansprüche 1 bis 2, **dadurch gekennzeichnet, dass** der Anteil der

Verbindungen der Formel CLY1 in der Komponente B) 0,1 bis 1,5 Gew.-% beträgt.

**4.** FK-Medium nach einem oder mehreren der Ansprüche 1 bis 3, **dadurch gekennzeichnet, dass** in den polymerisierbaren Verbindungen der Formel I $B^1$ und $B^2$ jeweils unabhängig voneinander 1,4-Phenylen, 1,3-Phenylen, Naphthalin-1,4-diyl, Naphthalin-2,6-diyl, Phenanthren-2,7-diyl, 9,10-Dihydrophenanthren-2,7-diyl, Anthracen-2,7-diyl, Fluoren-2,7-diyl, Cumarin, Flavon, wobei zusätzlich eine oder mehrere CH-Gruppen in diesen Gruppen durch N ersetzt sein können, Cyclohexan-1,4-diyl, worin zusätzlich eine oder mehrere nicht benachbarte $CH_2$-Gruppen durch O und/oder S ersetzt sein können, 1,4-Cyclohexenylen, Bicyclo-[1.1.1]pentan-1,3-diyl, Bicyclo[2.2.2]octan-1,4-diyl, Spiro[3.3]heptan-2,6-diyl, Piperidin-1,4-diyl, Decahydronaphthalin-2,6-diyl, 1,2,3,4-Tetrahydronaphthalin-2,6-diyl, Indan-2,5-diyl oder Octahydro-4,7-methanoindan-2,5-diyl bedeuten, wobei alle diese Gruppen unsubstituiert oder ein- oder mehrfach durch L wie in Anspruch 1 definiert substituiert sein können.

**5.** FK-Medium nach einem oder mehreren der Ansprüche 1 bis 4, **dadurch gekennzeichnet, dass** die polymerisierbaren Verbindungen ausgewählt sind aus den folgenden Formeln:

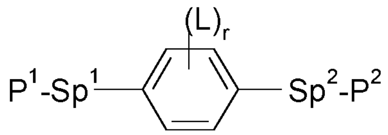

M1

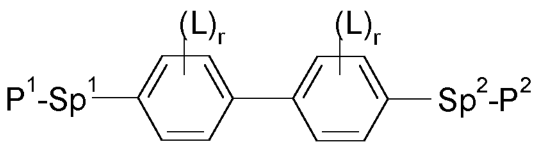

M2

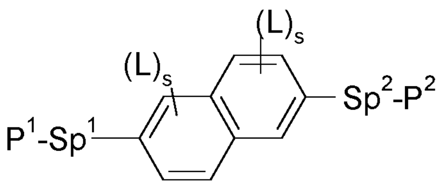

M3

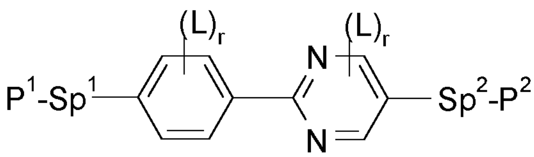

M4

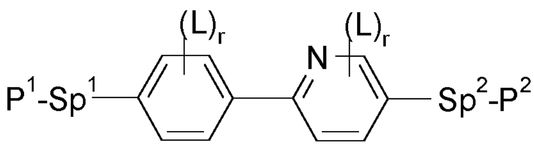

M5

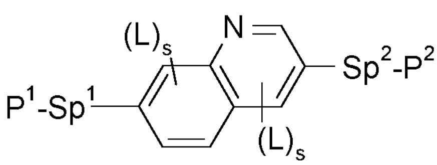

M6

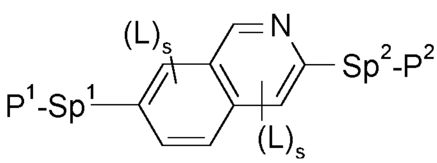

M7

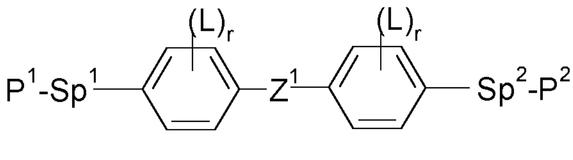

M8

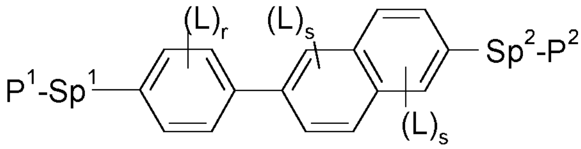

M9

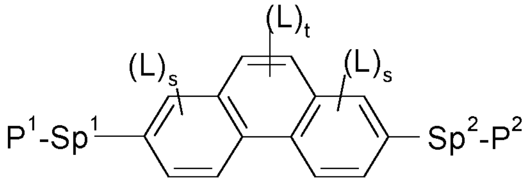

M10

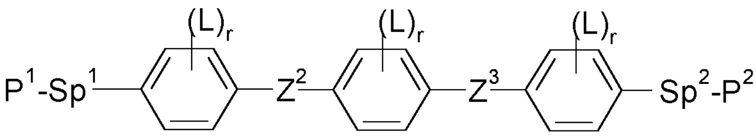

M11

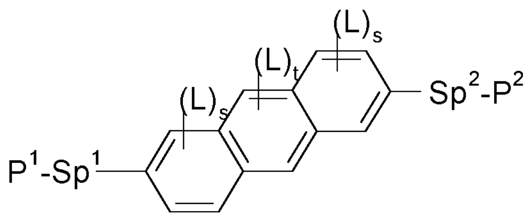

M12

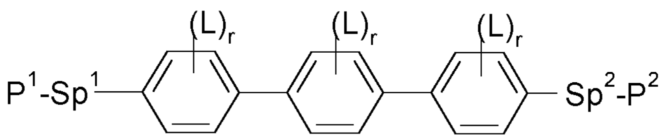

M13

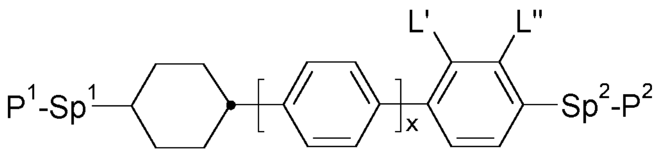

M14

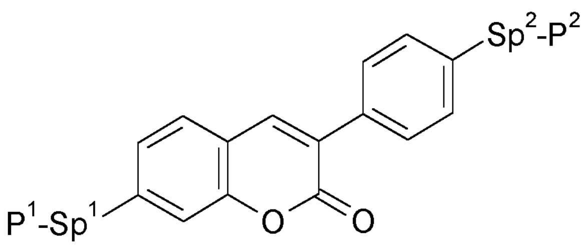

M15

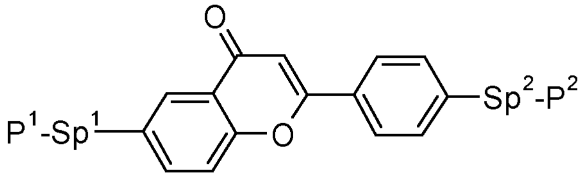

M16

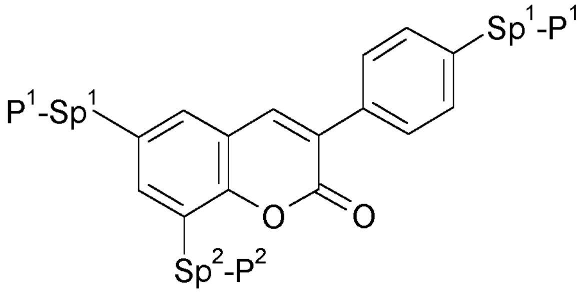

M17

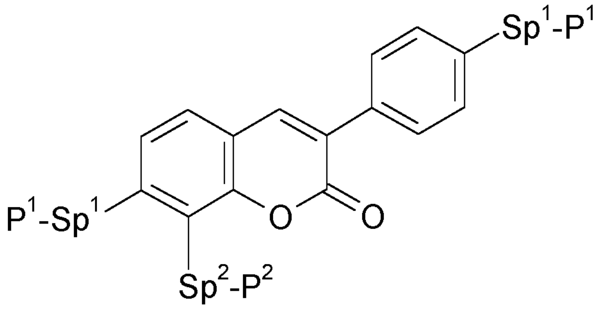

M18

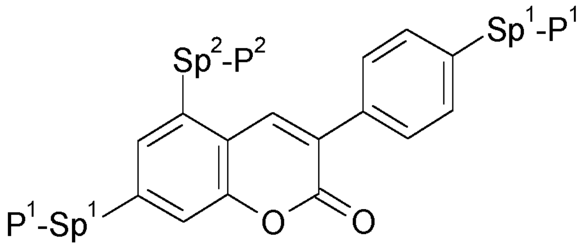

M19

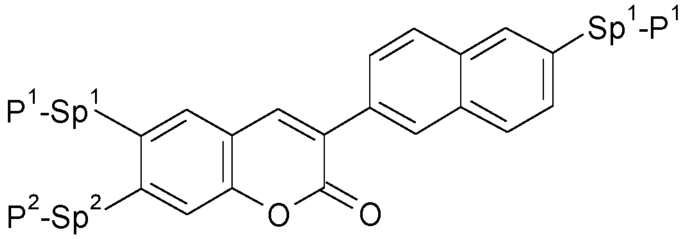

M20

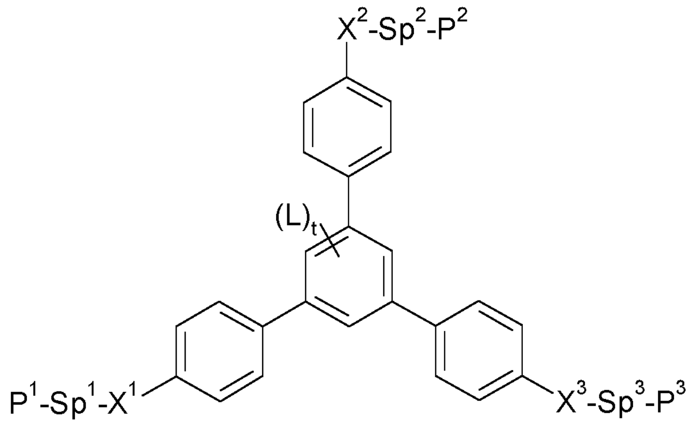

M21

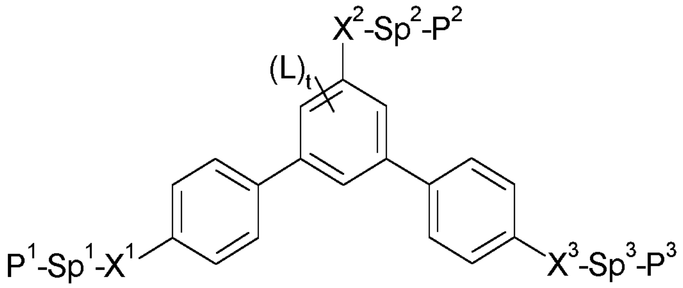

M22

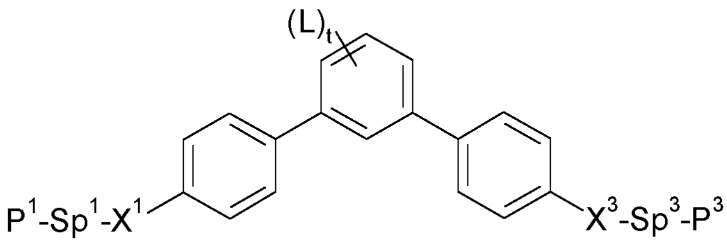

M23

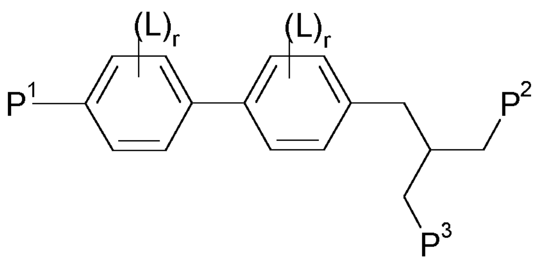

M24

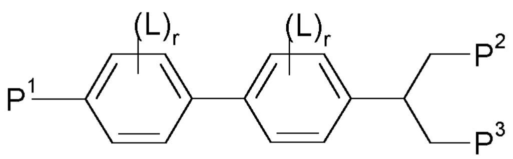

M25

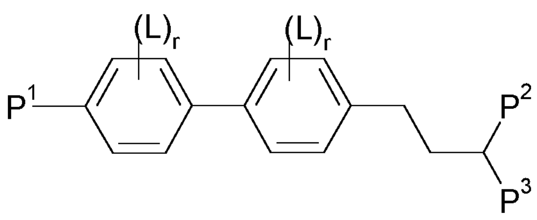

M26

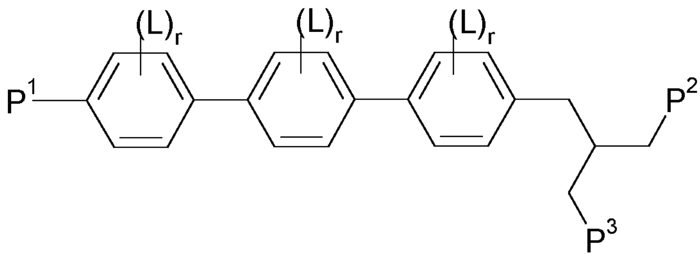

M27

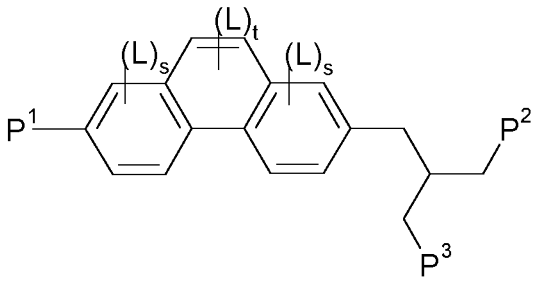

M28

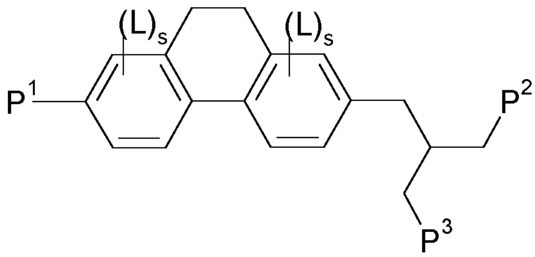

M29

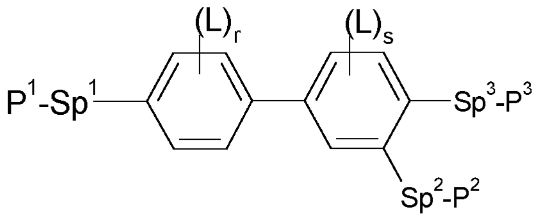

M30

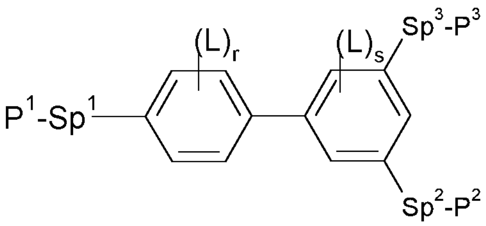

M31

worin die einzelnen Reste, bei jedem Auftreten gleich oder verschieden und jeweils unabhängig voneinander, die folgende Bedeutung besitzen:

$P^1$, $P^2$, $P^3$ eine Vinyloxy-, Acrylat-, Methacrylat-, Fluoracrylat-, Chloracrylat-, Oxetan- oder Epoxgruppe,
$Sp^1$, $Sp^2$, $Sp^3$ eine Einfachbindung oder eine Spacergruppe, wobei zusätzlich einer oder mehrere der Reste $P^1$-$Sp^1$-, $P^2$-$Sp^2$- und $P^3$-$Sp^3$- auch $R^{aa}$ bedeuten können, mit der Maßgabe, dass mindestens einer der vorhandenen Reste $P^1$-$Sp^1$-, $P^2$-$Sp^2$ und $P^3$-$Sp^3$- von $R^{aa}$ verschieden ist,
$R^{aa}$ H, F, Cl, CN oder geradkettiges oder verzweigtes Alkyl mit 1 bis 25 C-Atomen, worin zusätzlich eine oder mehrere nicht benachbarte $CH_2$-Gruppen jeweils unabhängig voneinander so durch -C($R^0$)=C($R^{00}$)-, -C≡C-, -N($R^0$)-, -O-, -S-, -CO-, -CO-O-, -O-CO-, -O-CO-O-ersetzt sein können, dass O- und/oder S-Atome nicht direkt miteinander verknüpft sind, und worin zusätzlich ein oder mehrere H-Atome durch F, Cl, CN oder $P^1$-$Sp^1$- ersetzt

sein können,

$R^0$, $R^{00}$ H oder Alkyl mit 1 bis 12 C-Atomen,

$R^y$ und $R^z$ H, F, $CH_3$ oder $CF_3$,

$X^1$, $X^2$, $X^3$ -CO-O-, -O-CO- oder eine Einfachbindung,

$Z^1$ -O-, -CO-, -C($R^yR^z$)- oder $-CF_2CF_2-$,

$Z^2$, $Z^3$ -CO-O, O-CO-, $-CH_2O-$, $-OCH_2-$, $-CF_2O-$, $-OCF_2-$ oder $-(CH_2)_n-$, wobei n 2, 3 oder 4 ist,

L F, Cl, CN oder geradkettiges oder verzweigtes, gegebenenfalls ein- oder mehrfach fluoriertes Alkyl, Alkoxy, Alkenyl, Alkinyl, Alkylcarbonyl, Alkoxycarbonyl, Alkylcarbonyloxy oder Alkoxycarbonyloxy mit 1 bis 12 C-Atomen,

L', L" H, F oder Cl,

r 0, 1, 2, 3 oder 4,

s 0, 1, 2 oder 3,

t 0, 1 oder 2,

x 0 oder 1.

**6.** FK-Medium nach einem oder mehreren der Ansprüche 1 bis 5, **dadurch gekennzeichnet, dass** es eine oder mehrere Verbindungen enthält, die aus den Formeln AN und AY ausgewählt sind:

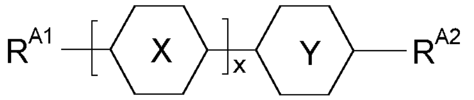 AN

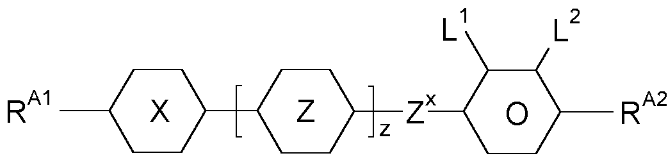 AY

worin die einzelnen Reste, bei jedem Auftreten gleich oder verschieden und jeweils unabhängig voneinander, die folgende Bedeutung besitzen:

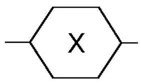 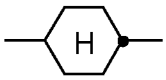, 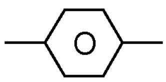, 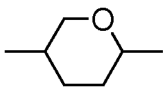, 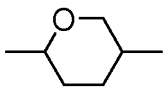,

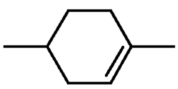 oder 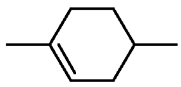,

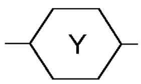 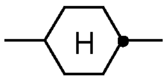, 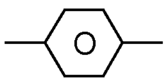, 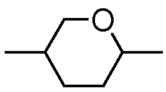, 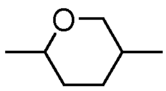,

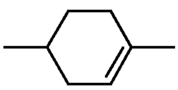 oder 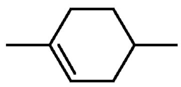,

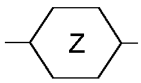 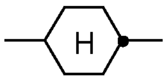, 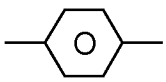, 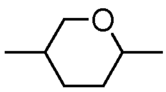, 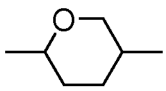,

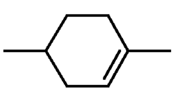, 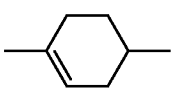 oder 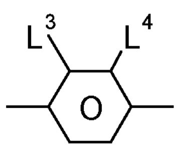

$R^{A1}$ Alkenyl mit 2 bis 9 C-Atomen oder, wenn mindestens einer der Ringe X, Y und Z Cyclohexenyl bedeutet,

auch eine der Bedeutungen von $R^{A2}$,
$R^{A2}$ Alkyl mit 1 bis 12 C-Atomen, worin zusätzlich eine oder zwei nicht benachbarte $CH_2$-Gruppen so durch -O-, -CH=CH-, -CO-, -OCO- oder -COO- ersetzt sein können, dass O-Atome nicht direkt miteinander verknüpft sind,
$Z^x$ $-CH_2CH_2-$, -CH=CH-, $-CF_2O-$, $-OCF_2-$, $-CH_2O-$, $-OCH_2-$, -CO-O-, -O-CO-, $-C_2F_4-$, -CF=CF-, $-CH=CH-CH_2O-$ oder eine Einfachbindung,
$L^{1-4}$ H, F, Cl, $OCF_3$, $CF_3$, $CH_3$, $CH_2F$ oder $CHF_2H$,
x 1 oder 2,
z 0 oder 1.

**7.** FK-Medium nach einem oder mehreren der Ansprüche 1 bis 6, **dadurch gekennzeichnet, dass** es eine oder mehrere Verbindungen enthält, die aus den Formeln CY und PY ausgewählt sind:

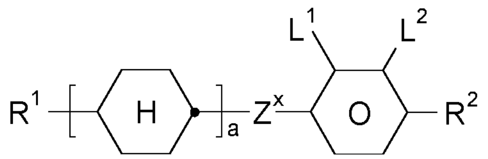

CY

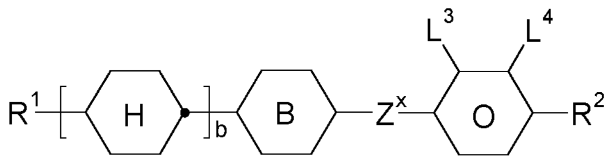

PY

worin die einzelnen Reste die folgenden Bedeutungen besitzen:

a bedeutet 1 oder 2,
b bedeutet 0 oder 1,

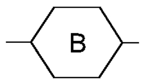 bedeutet 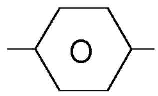 oder 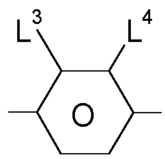

$R^1$ und $R^2$ bedeuten jeweils unabhängig voneinander Alkyl mit 1 bis 12 C-Atomen, wobei zusätzlich eine oder zwei nicht benachbarte $CH_2$-Gruppen so durch -O-, -CH=CH-, -CO-, -O-CO- oder -CO-O- ersetzt sein können, dass O-Atome nicht direkt miteinander verknüpft sind,
$Z^x$ bedeutet -CH=CH-, $-CH_2O-$, $-OCH_2-$, $-CF_2O-$, $-OCF_2-$, -O-, $-CH_2-$, $-CH_2CH_2-$ oder eine Einfachbindung,
$L^{1-4}$ bedeuten jeweils unabhängig voneinander F, Cl, $OCF_3$, $CF_3$, $CH_3$, $CH_2F$, $CHF_2$.

**8.** FK-Medium nach einem oder mehreren der Ansprüche 1 bis 7, **dadurch gekennzeichnet, dass** es eine oder mehrere Verbindungen enthält, die aus den Formeln ZK und DK ausgewählt sind:

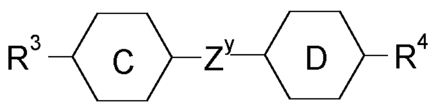

ZK

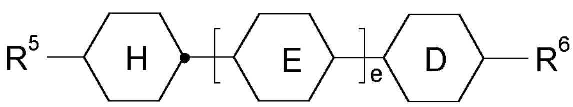

DK

worin die einzelnen Reste bei jedem Auftreten gleich oder verschieden die folgenden Bedeutungen besitzen:

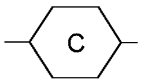

bedeutet

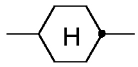, 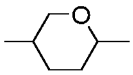 oder 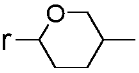,

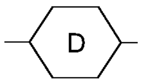

bedeutet

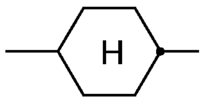 oder 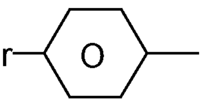,

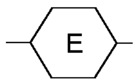

bedeutet

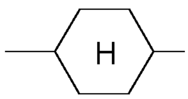, 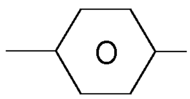 oder 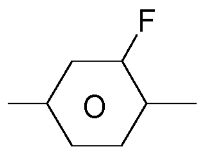 und

$R^3$ und $R^4$ bedeuten jeweils unabhängig voneinander Alkyl mit 1 bis 12 C-Atomen, worin zusätzlich eine oder zwei nicht benachbarte $CH_2$-Gruppen so durch -O-, -CH=CH-, -CO-, -O-CO- oder -CO-O- ersetzt sein können, dass O-Atome nicht direkt miteinander verknüpft sind,

$Z^y$ bedeutet $-CH_2CH_2-$, -CH=CH-, $-CF_2O-$, $-OCF_2-$, $-CH_2O-$, $-OCH_2-$, -COO-, -OCO-, $-C_2F_4-$, -CF=CF- oder eine Einfachbindung,

$R^5$ und $R^6$ bedeuten jeweils unabhängig voneinander Alkyl mit 1 bis 12 C-Atomen, wobei zusätzlich eine oder zwei nicht benachbarte $CH_2$-Gruppen so durch -O-, -CH=CH-, -CO-, -OCO- oder -COO- ersetzt sein können, dass O-Atome nicht direkt miteinander verknüpft sind, vorzugsweise Alkyl oder Alkoxy mit 1 bis 6 C-Atomen,

e bedeutet 1 oder 2.

**9.** FK-Medium nach einem oder mehreren der Ansprüche 1 bis 8, **dadurch gekennzeichnet, dass** die polymerisierbaren Verbindungen polymerisiert werden.

**10.** FK-Anzeige enthaltend ein FK-Medium wie in einem oder mehreren der Ansprüche 1 bis 9 definiert.

**11.** FK-Anzeige des Anspruchs 10, bei der es sich um eine Anzeige des PSA-Typs handelt.

**12.** FK-Anzeige des Anspruchs 11, bei der es sich um eine PS-VA-, PS-IPS- oder PS-UB-FFS-Anzeige handelt.

**13.** FK-Anzeige des Anspruchs 11 oder 12, **dadurch gekennzeichnet, dass** sie zwei Substrate, von denen mindestens eines lichtdurchlässig ist, eine auf jedem Substrat vorgesehene Elektrode oder zwei auf nur einem der Substrate vorgesehene Elektroden und zwischen den Substraten angeordnet eine Schicht eines FK-Mediums wie in einem oder mehreren der Ansprüche 1 bis 7 definiert enthält, wobei die polymerisierbaren Verbindungen zwischen den Substraten der Anzeige polymerisiert werden.

**14.** Verfahren zur Herstellung einer FK-Anzeige nach Anspruch 13, umfassend die Schritte des Bereitstellens eines FK-Mediums wie in einem oder mehreren der Ansprüche 1 bis 8 definiert zwischen den Substraten der Anzeige und Polymerisieren der polymerisierbaren Verbindungen.

**15.** Verfahren zur Herstellung eines FK-Mediums nach einem oder mehreren der Ansprüche 1 bis 8, umfassend die Schritte Mischen einer oder mehrerer Verbindungen der Formel B1 wie in Anspruch 1 definiert mit einer oder mehreren Verbindungen der Formeln CLY1 wie in Anspruch 1 definiert und einer oder mehreren polymerisierbaren Verbindungen wie in einem oder mehreren der Ansprüche 1 und 4 oder 5 definiert und gegebenenfalls mit weiteren FK-Verbindungen und/oder Zusatzstoffen.

## Revendications

**1.** Milieu cristallin liquide (LC) comprenant
un composant polymérisable A) qui comprend, de préférence qui est constitué par, un ou plusieurs composé(s) polymérisable(s) qui est/sont sélectionné(s) parmi la formule I

$$R^a\text{-}B^1\text{-}(Z^b\text{-}B^2)_m\text{-}R^b \qquad \text{I}$$

dans laquelle les radicaux individuels, pour chaque occurrence de manière identique ou différente, et chacun de manière indépendante des autres, présentent les significations qui suivent :

$R^a$ et $R^b$ P, P-Sp-, H, F, Cl, Br, I, -CN, $-NO_2$, -NCO, -NCS, -OCN, -SCN, $SF_5$ ou alkyle en chaîne droite ou ramifié qui comporte de 1 à 25 atome(s) de C, où, en outre, un ou plusieurs groupe(s) $CH_2$ non adjacents peut/peuvent chacun être remplacé(s), de manière indépendante les uns des autres, par $-C(R^0)=C(R^{00})-$, -C≡C-, $-N(R^{00})-$, -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, Cl, Br, I, CN, P ou P-Sp-, où, si $B^1$ et/ou $B^2$ contiennent/contient un atome de C saturé, $R^a$ et/ou $R^b$ peuvent/peut également représenter un radical qui est spiro-lié sur cet atome de C saturé, dans lequel au moins l'un des radicaux $R^a$ et $R^b$ représente ou contient un groupe P ou P-Sp-,
P un groupe polymérisable qui est sélectionné parmi le groupe qui est constitué par vinyloxy, acrylate, méthacrylate, fluoroacrylate, chloroacrylate, oxétane et époxyde,
Sp un groupe d'espaceur ou une liaison simple,
$B^1$ et $B^2$ un groupe aromatique, hétéroaromatique, alicyclique ou hétérocyclique qui comporte de 4 à 25 atomes de cycle, lequel peut également contenir des cycles fusionnés, et lequel est non substitué, ou mono- ou polysubstitué par L,
$Z^b$ -O-, -S-, -CO-, -CO-O-, -OCO-, -O-CO-O-, $-OCH_2-$, $-CH_2O-$, $-SCH_2-$, $-CH_2S-$, $-CF_2O-$, $-OCF_2-$, $-CF_2S-$, $-SCF_2-$, $-(CH_2)_{n1}-$, $-CF_2CH_2-$, $-CH_2CF_2-$, $-(CF_2)_{n1}-$, -CH=CH-, -CF=CF-, -C≡C-, -CH=CH-COO-, -OCO-CH=CH-, $CR^0R^{00}$ ou une liaison simple,
$R^0$ et $R^{00}$ H ou alkyle qui comporte de 1 à 12 atome(s) de C,
m 0, 1, 2, 3 ou 4,
n1 1, 2, 3 ou 4,
L P, P-Sp-, OH, $CH_2OH$, F, Cl, Br, I, -CN, $-NO_2$, -NCO, -NCS, -OCN, -SCN, $-C(=O)N(R^x)_2$, $-C(=O)Y^1$, $-C(=O)R^x$, $-N(R^x)_2$, silyle en option substitué, aryle en option substitué qui comporte de 6 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F, Cl, P ou P-Sp-,
$Y^1$ halogène,
$R^x$ P, P-Sp-, H, halogène, alkyle en chaîne droite, ramifié ou cyclique qui comporte de 1 à 25 atome(s) de C, où, en outre, un ou plusieurs groupe(s) $CH_2$ non adjacents peut/peuvent être remplacé(s) par -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, Cl, P ou P-Sp-, un groupe aryle ou aryloxy en option substitué qui comporte de 6 à 40 atomes de C, ou un groupe hétéroaryle ou hétéroaryloxy en option substitué qui comporte de 2 à 40 atomes de C,

et
un composant cristallin liquide B), ci-après également appelé "mélange hôte LC", qui comprend, qui est de préférence constitué par, un ou plusieurs composé(s) mésogène(s) ou cristallin(s) liquide(s),

dans lequel le composant B) comprend un ou plusieurs composé(s) de la formule B1 et un ou plusieurs composé(s) de la formule CLY comme il a été défini ci-avant et comme il est défini ci-après, et
dans lequel la proportion de composés de la formule B1 dans le composant B) du milieu LC va de > 0 % à ≤ 5 % en poids, et la proportion de composés de la formule CLY1 dans le composant B) du milieu LC va de 0,1 % à 3 % en poids,

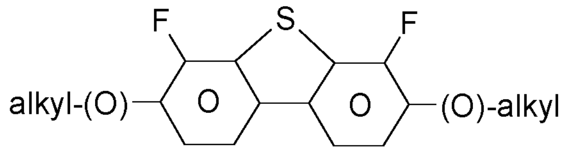

B1

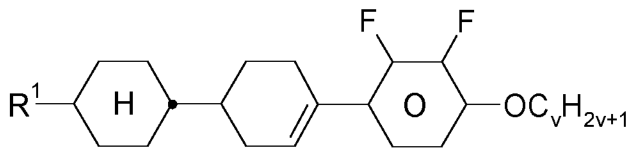

CLY1

dans lesquelles alkyl représente un radical alkyle en chaîne droite qui comporte de 1 à 6 atome(s) de C, et (O) représente un atome d'oxygène ou une liaison simple, $R^1$ est alkyle, alcoxy, oxaalkyle ou alcoxyalkyle qui comporte de 1 à 9 atome(s) de C ou alkényle ou alkényloxy qui comporte de 2 à 9 atomes de C, donc tous sont en option fluorés, et v est 1, 2, 3, 4, 5 ou 6.

2. Milieu LC selon la revendication 1, **caractérisé en ce que** la proportion de composés de la formule B dans le composant B) va de 0,1 % à 4 % en poids.

3. Milieu LC selon une ou plusieurs des revendications 1 et 2, **caractérisé en ce que** la proportion de composés de la formule CLY1 dans le composant B) va de 0,1 % à 1,5 % en poids.

4. Milieu LC selon une ou plusieurs des revendications 1 à 3, **caractérisé en ce que** les composés polymérisables des formules $B^1$ et $B^2$ représentent chacun, de manière indépendante les uns des autres, 1,4-phénylène, 1,3-phénylène, naphtalène-1,4-diyle, naphtalène-2,6-diyle, phénanthrène-2,7-diyle, 9,10-dihydro-phénanthrène-2,7-diyle, anthracène-2,7-diyle, fluorène-2,7-diyle, coumarine, flavone, où, en outre, un ou plusieurs groupe(s) CH dans ces groupes peut/peuvent être remplacé(s) par N, cyclohexane-1,4-diyle, où, en outre, un ou plusieurs groupe(s) $CH_2$ non adjacents peut /peuvent être remplacé(s) par O et/ou S, 1,4-cyclohexénylène, bicyclo[1.1.1]pentane-1,3-diyle, bicyclo[2.2.2]octane-1,4-diyle, spiro[3.3]heptane-2,6-diyle, pipéridine-1,4-diyle, décahydronaphtalène-2,6-diyle, 1,2,3,4-tétrahydronaphtalène-2,6-diyle, indane-2,5-diyle ou octahydro-4,7-méthanoindane-2,5-diyle, où tous ces groupes peuvent être non substitués ou mono- ou polysubstitués par L comme il a été défini selon la revendication 1.

5. Milieu LC selon une ou plusieurs des revendications 1 à 4, **caractérisé en ce que** les composés polymérisables sont sélectionnés parmi les formules qui suivent :

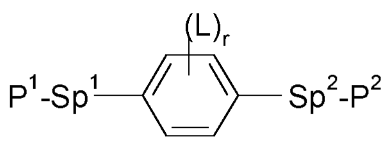

M1

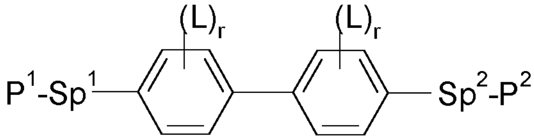

M2

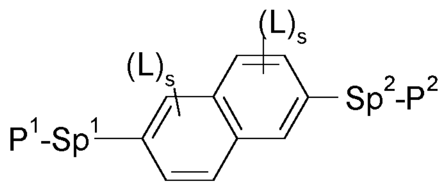
M3

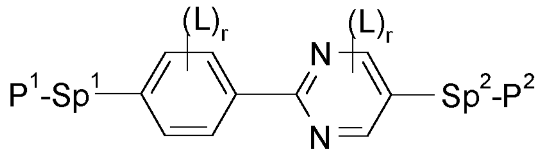
M4

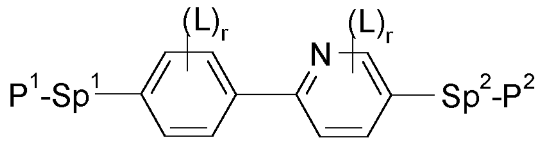
M5

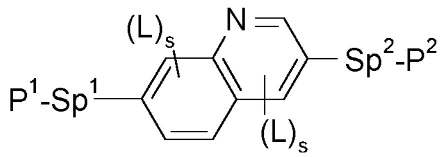
M6

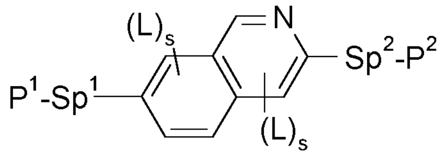
M7

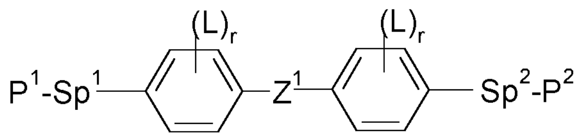
M8

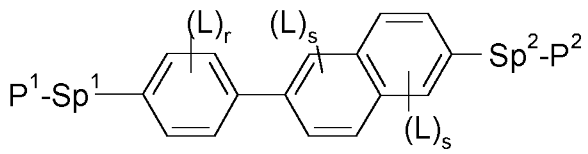
M9

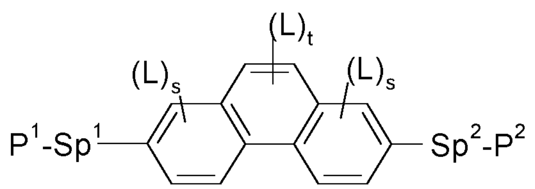
M10

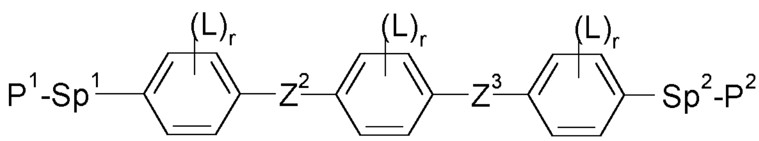
M11

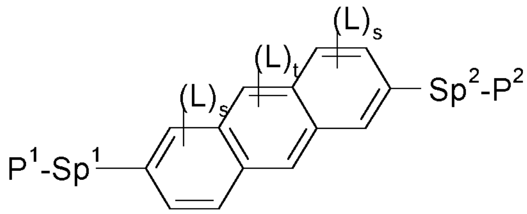

M12

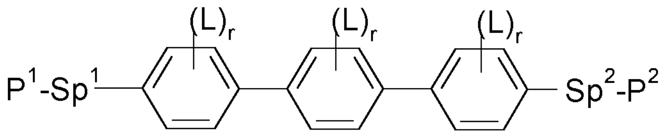

M13

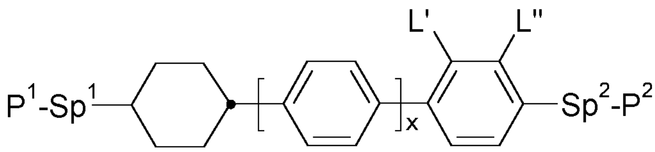

M14

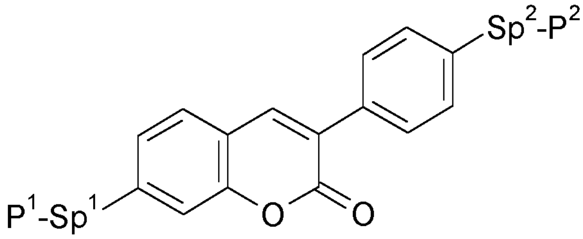

M15

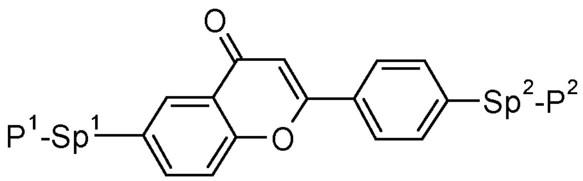

M16

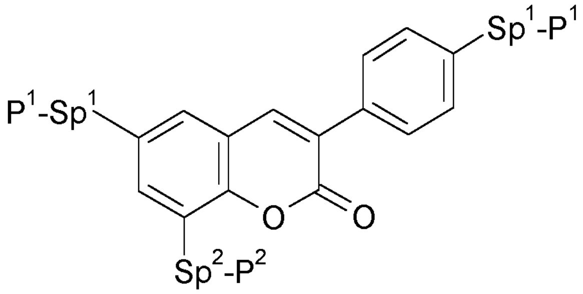

M17

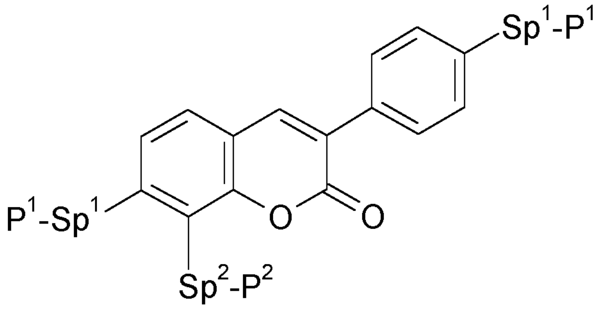

M18

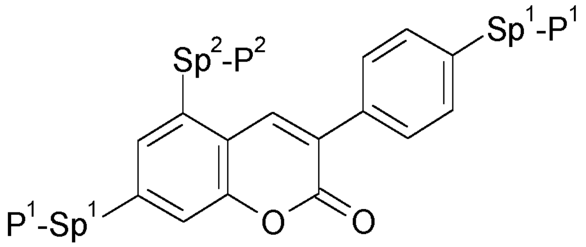

M19

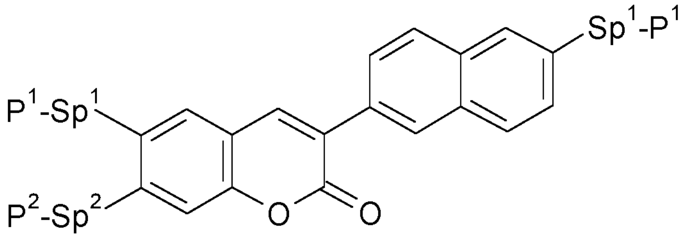

M20

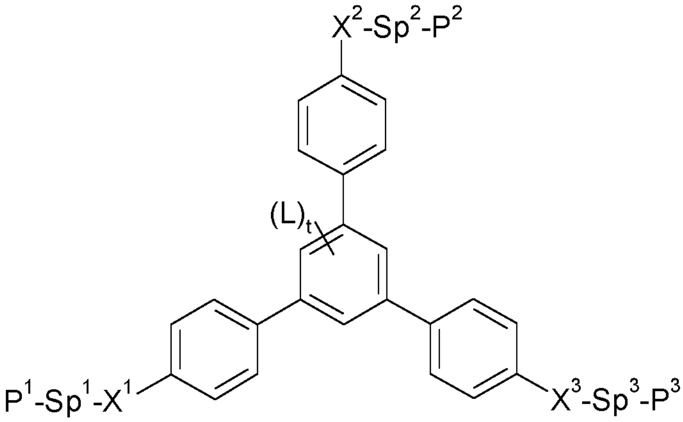

M21

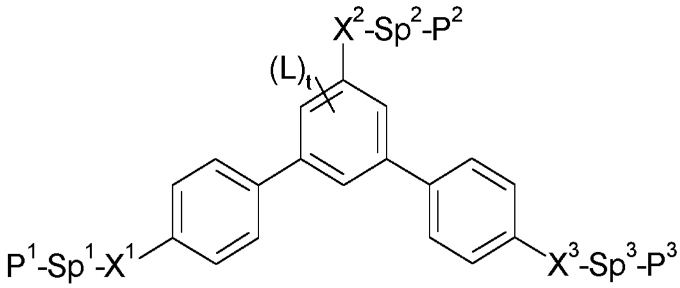

M22

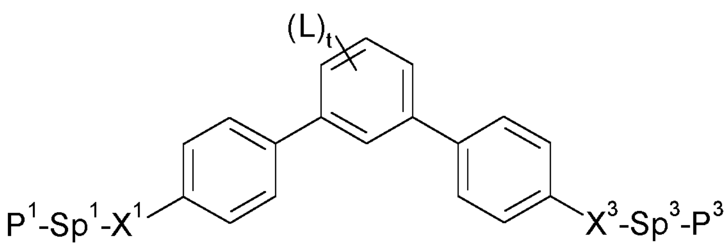

M23

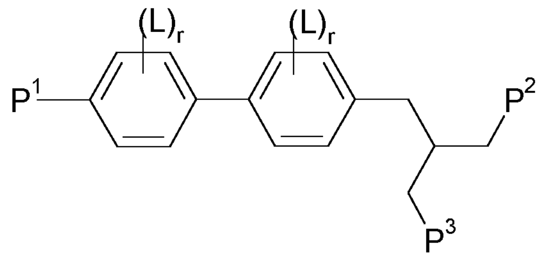

M24

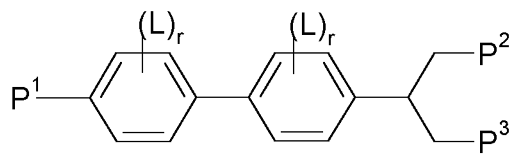

M25

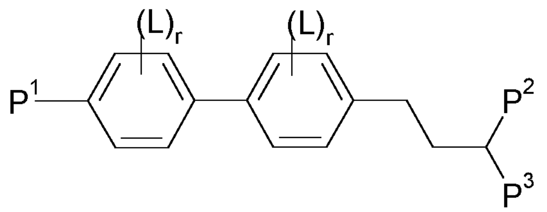

M26

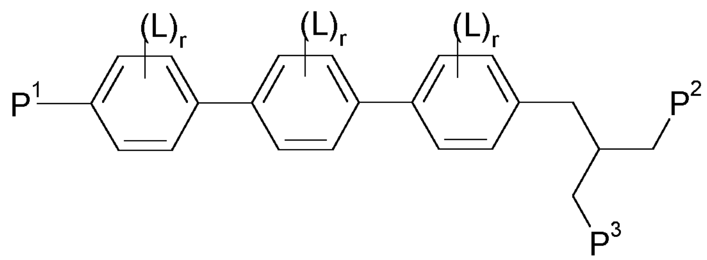

M27

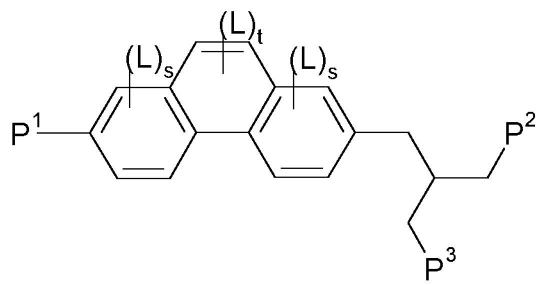

M28

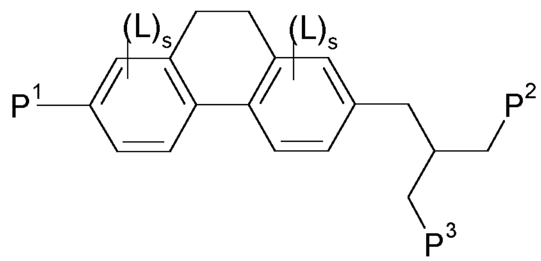

M29

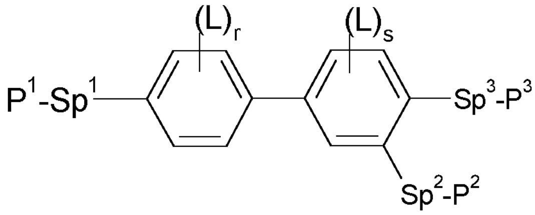

M30

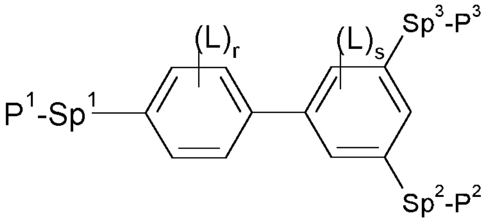

M31

dans lesquelles les radicaux individuels, pour chaque occurrence de manière identique ou différente, et chacun de manière indépendante des autres, présentent les significations qui suivent :

$P^1$, $P^2$, $P^3$ un groupe vinyloxy, acrylate, méthacrylate, fluoroacrylate, chloroacrylate, oxétane ou époxy,
$Sp^1$, $Sp^2$, $Sp^3$ une liaison simple ou un groupe d'espaceur où, en outre, un ou plusieurs des radicaux $P^1$-$Sp^1$-, $P^2$-$Sp^2$- et $P^3$-$Sp^3$- peut/peuvent également représenter $R^{aa}$, étant entendu qu'au moins l'un des radicaux $P^1$-$Sp^1$-, $P^2$-$Sp^2$ et $P^3$-$Sp^3$- qui est/sont présent(s) est différent de $R^{aa}$,
$R^{aa}$ H, F, Cl, CN ou alkyle en chaîne droite ou ramifié qui comporte de 1 à 25 atome(s) de C, où, en outre, un ou plusieurs groupe(s) $CH_2$ non adjacents peut/peuvent chacun être remplacé(s), de manière indépendante les uns des autres, par $-C(R^0)=C(R^{00})-$, -C≡C-, $-N(R^0)-$, -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, Cl, CN ou $P^1$-$Sp^1$-,
$R^0$, $R^{00}$ H ou alkyle qui comporte de 1 à 12 atome(s) de C,
$R^y$ et $R^z$ H, F, $CH_3$ ou $CF_3$,
$X^1$, $X^2$, $X^3$ -CO-O-, -O-CO- ou une liaison simple,
$Z^1$ -O-, -CO-, $-C(R^yR^z)-$ ou $-CF_2CF_2-$,
$Z^2$, $Z^3$ -CO-O-, -O-CO-, $-CH_2O-$, $-OCH_2-$, $-CF_2O-$, $-OCF_2-$ ou $-(CH_2)_n-$, où n est 2, 3 ou 4,
L F, Cl, CN ou alkyle, alcoxy, alkényle, alkynyle, alkylcarbonyle, alcoxycarbonyle, alkylcarbonyloxy ou alcoxycarbonyloxy en chaîne droite ou ramifié, en option mono- ou polyfluoré qui comporte de 1 à 12 atome(s) de C,
L', L" H, F ou Cl,
r 0, 1, 2, 3 ou 4,
s 0, 1, 2 ou 3,
t 0, 1 ou 2,
x 0 ou 1.

6. Milieu LC selon une ou plusieurs des revendications 1 à 5, **caractérisé en ce qu'**il comprend un ou plusieurs composé(s) qui est/sont sélectionné(s) parmi les formules AN et AY :

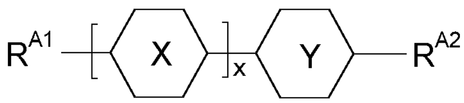

AN

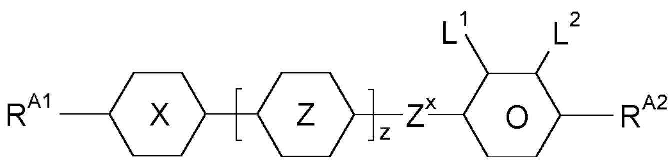

AY

dans lesquelles les radicaux individuels, pour chaque occurrence de manière identique ou différente, et chacun de manière indépendante des autres, présentent les significations qui suivent :

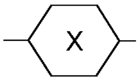 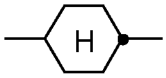 , 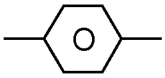 , 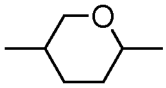 , 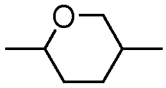 ,

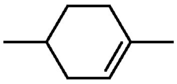 ou 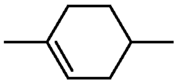 ,

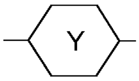 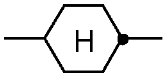 , 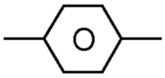 , 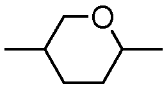 , 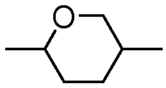 ,

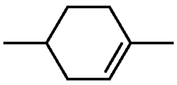 ou 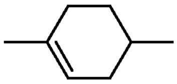 ,

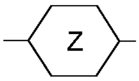 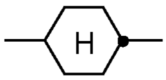 , 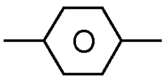 , 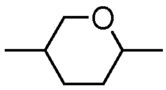 , 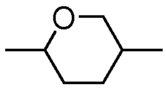 ,

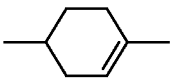 , 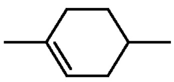 ou 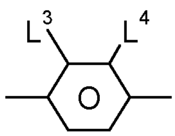

$R^{A1}$ alkényle qui comporte de 2 à 9 atomes de C ou, si au moins l'un des cycles X, Y et Z représente cyclohexényle, également l'une des significations de $R^{A2}$,
$R^{A2}$ alkyle qui comporte de 1 à 12 atome(s) de C, où, en outre, un ou deux groupe(s) $CH_2$ non adjacents peut/peuvent être remplacé(s) par -O-, -CH=CH-, -CO-, -OCO- ou -COO- de telle sorte que des atomes de O ne soient pas liés directement les uns aux autres,
$Z^x$ -$CH_2CH_2$-, -CH=CH-, -$CF_2O$-, -$OCF_2$-, -$CH_2O$-, -$OCH_2$-, -CO-O-, -O-CO-, -$C_2F_4$-, -CF=CF-, -CH=CH-$CH_2O$-, ou une liaison simple,
$L^{1-4}$ H, F, Cl, $OCF_3$, $CF_3$, $CH_3$, $CH_2F$ ou $CHF_2H$,
x 1 ou 2,
z 0 ou 1.

7. Milieu LC selon une ou plusieurs des revendications 1 à 6, **caractérisé en ce qu'**il comprend un ou plusieurs composé(s) qui est/sont sélectionné(s) parmi les formules CY et PY :

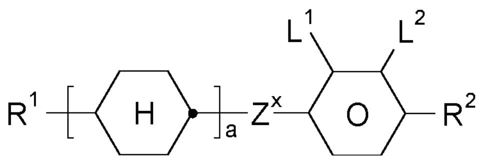

CY

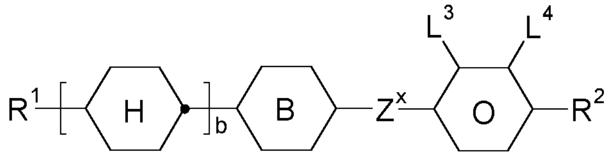

PY

dans lesquelles les radicaux individuels présentent les significations qui suivent :

a représente 1 ou 2,
b représente 0 ou 1,

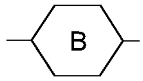

représente

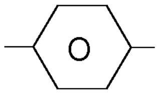 ou 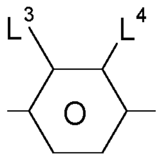

$R^1$ et $R^2$ représentent chacun, de manière indépendante l'un de l'autre, alkyle qui comporte de 1 à 12 atome(s) de C, où, en outre, un ou deux groupe(s) $CH_2$ non adjacents peut/peuvent être remplacé(s) par -O-, -CH=CH-, -CO-, -O-CO- ou -CO-O- de telle sorte que des atomes de O ne soient pas liés directement les uns aux autres,
$Z^x$ représente -CH=CH-, $-CH_2O-$, $-OCH_2-$, $-CF_2O-$, $-OCF_2-$, -O-, $-CH_2-$, $-CH_2CH_2-$ ou une liaison simple,
$L^{1-4}$ représentent chacun, de manière indépendante les uns des autres, F, Cl, $OCF_3$, $CF_3$, $CH_3$, $CH_2F$, $CHF_2$.

**8.** Milieu LC selon une ou plusieurs des revendications 1 à 7, **caractérisé en ce qu'**il comprend un ou plusieurs composé(s) qui est/sont sélectionné(s) parmi les formules ZK et DK :

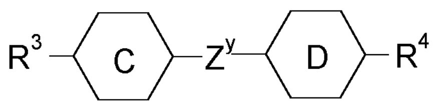 ZK

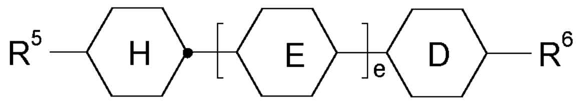 DK

dans lesquelles les radicaux individuels présentent, pour chaque occurrence, de manière identique ou différente, les significations qui suivent :

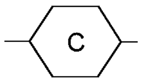

représente

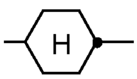, 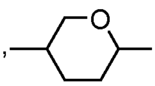 ou 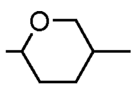,

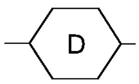

représente

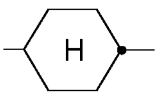 ou 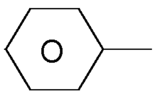,

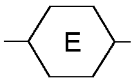

représente

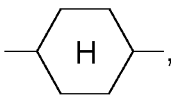, 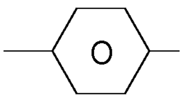 ou 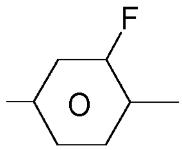, et

$R^3$ et $R^4$ représentent chacun, de manière indépendante l'un de l'autre, alkyle qui comporte de 1 à 12 atome(s) de C, où, en outre, un ou deux groupe(s) $CH_2$ non adjacents peut/peuvent être remplacé(s) par -O-, -CH=CH-, -CO-, -O-CO- ou -CO-O- de telle sorte que des atomes de O ne soient pas liés directement les uns aux autres,
$Z^y$ représente $-CH_2CH_2-$, -CH=CH-, $-CF_2O-$, $-OCF_2-$, $-CH_2O-$, $-OCH_2-$, -COO-, -OCO-, $-C_2F_4-$, -CF=CF- ou une liaison simple,
$R^5$ et $R^6$ représentent chacun, de manière indépendante l'un de l'autre, alkyle qui comporte de 1 à 12 atome(s) de C, où, en outre, un ou deux groupe(s) $CH_2$ non adjacents peut/peuvent être remplacé(s) par -O-, -CH=CH-, -CO-, -OCO- ou -COO- de telle sorte que des atomes de O ne soient pas liés directement les uns aux autres, de préférence alkyle ou alcoxy qui comporte de 1 à 6 atome(s) de C,
e représente 1 ou 2.

**9.** Milieu LC selon une ou plusieurs des revendications 1 à 8, **caractérisé en ce que** les composés polymérisables sont polymérisés.

**10.** Affichage LC comprenant un milieu LC tel que défini selon une ou plusieurs des revendications 1 à 9.

**11.** Affichage LC selon la revendication 10, lequel est un affichage du type PSA.

**12.** Affichage LC selon la revendication 11, lequel est un affichage PS-VA, PS-IPS ou PS-UB-FFS.

**13.** Affichage LC selon la revendication 11 ou 12, **caractérisé en ce qu'**il comprend deux substrats dont au moins l'un est transparent vis-à-vis de la lumière, une électrode qui est prévue sur chaque substrat ou deux électrodes qui sont prévues sur seulement l'un des substrats, et, localisée entre les substrats, une couche en un milieu LC tel que défini selon une ou plusieurs des revendications 1 à 7, dans lequel les composés polymérisables sont polymérisés entre les substrats de l'affichage.

**14.** Procédé pour la fabrication d'un affichage LC selon la revendication 13, comprenant les étapes constituées par la mise en place d'un milieu LC tel que défini selon une ou plusieurs des revendications 1 à 8 entre les substrats de l'affichage, et par la polymérisation des composés polymérisables.

**15.** Procédé de préparation d'un milieu LC selon une ou plusieurs des revendications 1 à 8, comprenant les étapes constituées par le mélange d'un ou de plusieurs composé(s) de la formule B1 telle que définie selon la revendication 1 avec un ou plusieurs composé(s) de la formule CLY1 telle que définie selon la revendication 1 et un ou plusieurs composé(s) polymérisable(s) tel(s) que défini(s) selon une ou plusieurs des revendications 1 et 4 ou 5, et en option avec d'autres composés LC et/ou additifs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1170626 A2
- US 6861107 B
- US 7169449 B
- US 20040191428 A1
- US 20060066793 A1
- US 20060103804 A1
- US 6177972 B
- EP 3284803 A1
- WO 2016146245 A1
- DE 2209127 A
- DE 2240864
- DE 2321632
- DE 2338281
- DE 2450088
- DE 2637430
- DE 2853728
- EP 0364538 A
- DE 2636684 A
- DE 3321373 A
- DE 3022818


### Non-patent literature cited in the description


- **T.-J-CHEN et al.** *Jpn. J. Appl. Phys.,* 2006, vol. 45, 2702-2704
- **S. H. KIM ; L.-C-CHIEN.** *Jpn. J. Appl. Phys.,* 2004, vol. 43, 7643-7647
- *Appl. Phys. Lett.,* 1999, vol. 75 (21), 3264
- *Optics Express,* 2004, vol. 12 (7), 1221
- *Pure Appl. Chem.,* 2001, vol. 73 (5), 888
- **C. TSCHIERSKE ; G. PELZL ; S. DIELE.** *Angew. Chem.,* 2004, vol. 116, 6340-6368
- **HALLER et al.** *Mol. Cryst. Liq. Cryst.,* 1973, vol. 24, 249-258
- **C.H. GOOCH ; H.A. TARRY.** *Electron. Lett.,* 1974, vol. 10, 2-4
- **C.H. GOOCH ; H.A. TARRY.** *Appl. Phys.,* 1975, vol. 8, 1575-1584
- Merck Liquid Crystals, Physical Properties of Liquid Crystals. Merck KGaA, November 1997